(19) Europäisches Patentamt
European Patent Office
Office européen des brevets

(11) EP 2 530 111 A1

(12) **EUROPEAN PATENT APPLICATION**
published in accordance with Art. 153(4) EPC

(43) Date of publication:
**05.12.2012 Bulletin 2012/49**

(21) Application number: **11737187.2**

(22) Date of filing: **25.01.2011**

(51) Int Cl.:
***C08J 5/18*** *(2006.01)*

(86) International application number:
**PCT/JP2011/051843**

(87) International publication number:
**WO 2011/093478 (04.08.2011 Gazette 2011/31)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:
**27.01.2010 JP 2010015360**
**11.03.2010 JP 2010054611**
**28.04.2010 JP 2010103588**
**28.04.2010 JP 2010103587**
**28.05.2010 JP 2010122751**
**07.06.2010 JP 2010129969**
**07.06.2010 JP 2010129972**
**07.06.2010 JP 2010129971**
**07.06.2010 JP 2010129970**
**15.06.2010 JP 2010136131**
**15.06.2010 JP 2010136126**
**16.06.2010 JP 2010137324**
**16.06.2010 JP 2010137325**

(71) Applicant: **Teijin Limited**
**Osaka-shi, Osaka 541-0054 (JP)**

(72) Inventors:
- **OYA, Taro**
  **Anpachi-gun**
  **Gifu 503-0123 (JP)**
- **SHOJI, Shinichiro**
  **Iwakuni-shi**
  **Yamaguchi 740-0014 (JP)**
- **UCHIYAMA, Akihiko**
  **Tokyo 100-0013 (JP)**
- **ONO, Yuhei**
  **Hino-shi**
  **Tokyo 191-0065 (JP)**
- **ENDO, Kohei**
  **Iwakuni-shi**
  **Yamaguchi 740-0014 (JP)**
- **NAKASHIMA, Hiroshi**
  **Iwakuni-shi**
  **Yamaguchi 740-0014 (JP)**

(74) Representative: **Hallybone, Huw George**
**Carpmaels & Ransford**
**One Southampton Row**
**London**
**WC1B 5HA (GB)**

(54) **FILM**

(57) Provided is a film made of a composition obtained by mixing a compound at least having a ring structure containing one carbodiimide group, the first nitrogen and second nitrogen thereof being linked together through a linking group, with a polymer compound having an acidic group. A film which has improved hydrolysis resistance and from which no free isocyanate compounds are produced can be provided.

Fig. 1

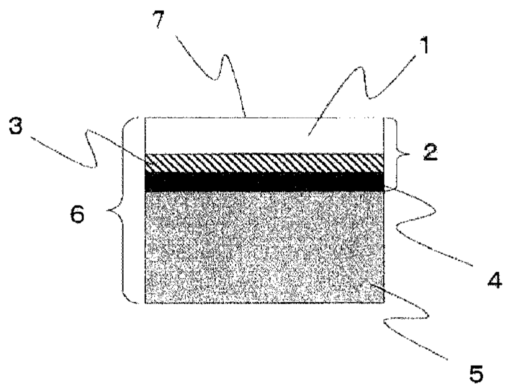


EP 2 530 111 A1

## Description

### Technical Field

The present invention relates to a film made of a composition having a polymer compound end-capped with a carbodiimide compound.

### Background Art

It has already been proposed to use a carbodiimide compound as an end-capping agent for a polymer compound terminated with acidic groups, such as carboxyl groups, thereby inhibiting the hydrolysis of the polymer compound (Patent Document 1). The carbodiimide compound used in this proposal is a linear carbodiimide compound. When a linear carbodiimide compound is used as an end-capping agent for a polymer compound, upon the reaction that attaches the linear carbodiimide compound to the ends of the polymer compound, an isocyanate-group-containing compound is released. This results in the generation of the characteristic odor of an isocyanate compound, causing a problem in that the working environment is deteriorated.

[Patent Document 1] JP-A-2008-50584
[Patent Document 2] JP-A-2005-2174

### Disclosure of the Invention

An object of the inveniton is to provide a film made of a composition having a polymer compound end-capped with a carbodiimide compound which has a specific structure and from which an isocyanate compound is not released.

### Means for Solving the Problems

The present inventors conducted extensive research on capping agents whose reaction with an acidic group, such as a carboxyl group, does not causes the release of an isocyanate compound. As a result, they found that a carbodiimide compound having a ring structure does not causes the release of an isocyanate compound upon reaction with an acidic group, whereby a good working environment can be maintained. The invention was thus accomplished.
That is, the invention includes the following inventions.

1. A film containing a composition obtained by mixing:

   a compound at least having a ring structure containing one carbodiimide group, with the first nitrogen and second nitrogen thereof being linked together through a linking group; with
   a polymer compound having an acidic group.

2. The film according to 1 above, wherein in the compound at least having a ring structure, the number of atoms forming the ring structure is 8 to 50.

3. The film according to 1 above, wherein the ring structure is represented by the following formula (1):

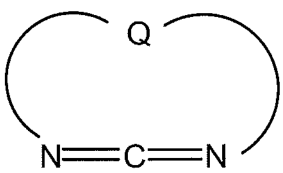

(1)

wherein Q is a divalent to tetravalent linking group that is an aliphatic group, an alicyclic group, an aromatic group, or a combination thereof and optionally contains a heteroatom.

4. The film according to 3 above, wherein Q is a divalent to tetravalent linking group represented by the following formula (1-1), (1-2), or (1-3):

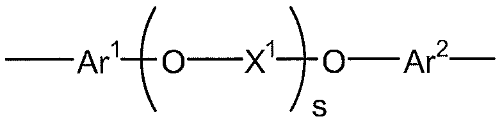

(1-1)

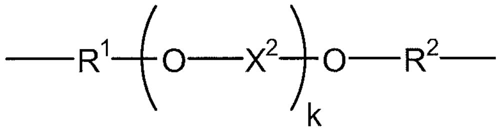

(1-2)

$-X^3-$ (1-3)

wherein

$Ar^1$ and $Ar^2$ are each independently a divalent to tetravalent aromatic group having 5 to 15 carbon atoms,
$R^1$ and $R^2$ are each independently a divalent to tetravalent aliphatic group having 1 to 20 carbon atoms, a divalent to tetravalent alicyclic group having 3 to 20 carbon atoms, a combination thereof, or a combination of the aliphatic or alicyclic group with a divalent to tetravalent aromatic group having 5 to 15 carbon atoms,
$X^1$ and $X^2$ are each independently a divalent to tetravalent aliphatic group having 1 to 20 carbon atoms, a divalent to tetravalent alicyclic group having 3 to 20 carbon atoms, a divalent to tetravalent aromatic group having 5 to 15 carbon atoms, or a combination thereof,
s is an integer of 0 to 10 and k is an integer of 0 to 10, with the proviso that when s or k is 2 or more, $X^1$ or $X^2$ as a repeating unit may be different from the other $X^1$ or $X^2$, and
$X^3$ is a divalent to tetravalent aliphatic group having 1 to 20 carbon atoms, a divalent to tetravalent alicyclic group having 3 to 20 carbon atoms, a divalent to tetravalent aromatic group having 5 to 15 carbon atoms, or a combination thereof,
with the proviso that
$Ar^1$, $Ar^2$, $R^1$, $R^2$, $X^1$, $X^2$, and $X^3$ optionally contain a heteroatom,
when Q is a divalent linking group, $Ar^1$, $Ar^2$, $R^1$, $R^2$, $X^1$, $X^2$, and $X^3$ are all divalent groups,
when Q is a trivalent linking group, one of $Ar^1$, $Ar^2$, $R^1$, $R^2$, $X^1$, $X^2$, and $X^3$ is a trivalent group, and
when Q is a tetravalent linking group, one of $Ar^1$, $Ar^2$, $R^1$, $R^2$, $X^1$, $X^2$, and $X^3$ is a tetravalent group or two of $Ar^1$, $Ar^2$, $R^1$, $R^2$, $X^1$, $X^2$, and $X^3$ are trivalent groups.

5. The film according to 4 above, wherein the compound having a ring structure is represented by the following formula (2) :

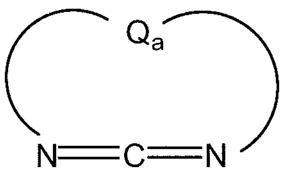

(2)

wherein $Q_a$ is a divalent linking group that is an aliphatic group, an alicyclic group, an aromatic group, or a combination thereof and optionally contains a heteroatom.

6. The film according to 5 above, wherein Qa is a divalent linking group represented by the following formula (2-1), (2-2), or (2-3):

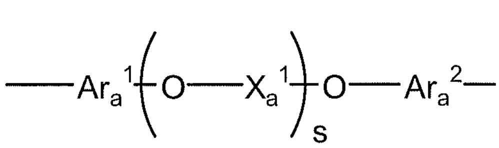

(2-1)

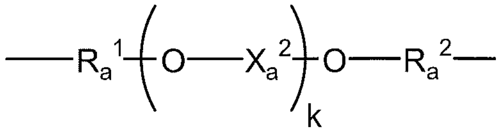

(2-2)

$-X_a^3-$ (2-3)

wherein $Ar_a^1$, $Ar_a^2$, $R_a^1$, $R_a^2$, $X_a^1$, $X_a^2$, $X_a^3$, s, and k are as defined for $Ar^1$, $Ar^2$, $R^1$, $R^2$, $X^1$, $X^2$, $X^3$, s, and k of formulae (1-1) to (1-3), respectively.

7. The film according to 1 above, wherein the compound having a ring structure is represented by the following formula (3):

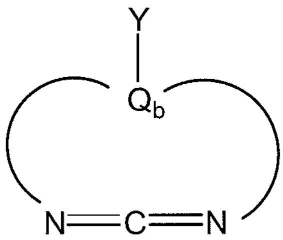

(3)

wherein

$Q_b$ is a trivalent linking group that is an aliphatic group, an alicyclic group, an aromatic group, or a combination thereof and optionally contains a heteroatom, and
Y is a carrier that supports the ring structure.

8. The film according to 7 above, wherein $Q_b$ is a trivalent linking group represented by the following formula (3-1), (3-2), or (3-3):

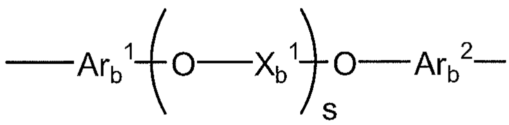

(3-1)

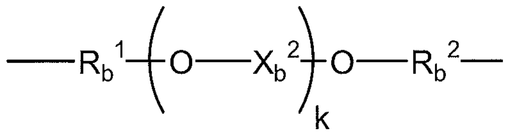

(3-2)

$-X_b^3-$ (3-3)

wherein $Ar_b^1$, $Ar_b^2$, $R_b^1$, $R_b^2$, $X_b^1$, $X_b^2$, $X_b^3$, s, and k are as defined for $Ar^1$, $Ar^2$, $R^1$, $R^2$, $X^1$, $X^2$, $X^3$, s, and k of formulae (1-1) to (1-3), respectively, with the proviso that one of the groups is a trivalent group.

9. The film according to 7 above, wherein Y is a single bond, a double bond, an atom, an atomic group, or a polymer.

10. The film according to 1 above, wherein the compound having a ring structure is represented by the following formula (4):

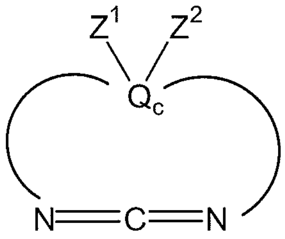

(4)

wherein

$Q_c$ is a tetravalent linking group that is an aliphatic group, an aromatic group, an alicyclic group, or a combination thereof and optionally contains a heteroatom, and
$Z^1$ and $Z^2$ are carriers that support the ring structure.

11. The film according to 10 above, wherein Qc is a tetravalent linking group represented by the following formula (4-1), (4-2), or (4-3):

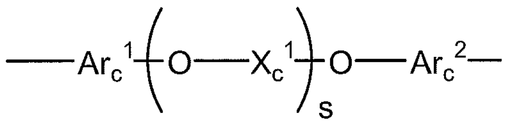

(4-1)

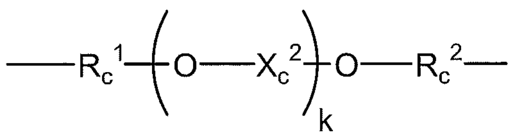

(4-2)

$-X_c^3-$ (4-3)

wherein $Ar_c^1$, $Ar_c^2$, $R_c^1$, $R_c^2$, $X_c^1$, $X_c^2$, $X_c^3$ , s, and k are as defined for $Ar^1$, $Ar^2$, $R^1$, $R^2$, $X^1$, $X^2$, $X^3$, s, and k of formulae (1-1) to (1-3), respectively, with the proviso that one of the groups is a tetravalent group or two of the groups are trivalent groups.

12. The film according to 10 above, wherein $Z^1$ and $Z^2$ are each independently a single bond, a double bond, an atom, an atomic group, or a polymer.

13. The film according to 1 above, wherein the polymer compound having an acidic group is at least one member selected from the group consisting of aromatic polyesters, aliphatic polyesters, polyamides, polyamide polyimides, and polyester amides.

14. The film according to 13 above, wherein the aromatic polyester contains as a main repeating unit at least one member selected from the group consisting of butylene terephthalate, ethylene terephthalate, trimethylene terephthalate, ethylene naphthalene dicarboxylate, and butylene naphthalene dicarboxylate.

15. The film according to 13 above, wherein the aliphatic polyester is polylactic acid.

16. The film according to 15 above, wherein the polylactic acid forms a stereocomplex crystal.

Advantage of the Invention

The inveniton enables the provision of a film made of a composition having a polymer compound end-capped with a carbodiimide compound without the release of an isocyanate compound. As a result, the generation of an offensive odor due to a free isocyanate compound can be suppressed. Therefore, the generation of an offensive odor due to a free isocyanate compound can be suppressed during film formation or during the remelting (recycling) of cut ends produced when a formed film is cut to the product width, for example, whereby the working environment can be improved.

Brief Description of the Drawings

Fig. 1 is a schematic diagram showing one embodiment of an application of the film of the invention (decorated molded article).
Fig. 2 is a schematic diagram showing one embodiment of an application of the film of the invention (decorated molded article).
Fig. 3 is a schematic diagram showing the shape of a resin molded body to be decorated in an Example showing one embodiment of an application of the film of the invention (decorated molded article).
Fig. 4 is a schematic diagram showing the shape of a resin molded body to be decorated in an Example showing one embodiment of an application of the film of the invention (decorated molded article).

Mode for Carrying Out the Invention

The invention will be described in detail hereinafter.

<Ring Structure>

In the invention, a carbodiimide compound has a ring structure (hereinafter, the carbodiimide compound is sometimes simply referred to as "cyclic carbodiimide compound"). The cyclic carbodiimide compound may have a plurality of ring structures.
The ring structure has one carbodiimide group (-N=C=N-), and the first nitrogen and second nitrogen thereof are linked together through a linking group. One ring structure has only one carbodiimide group. However, in the case where a plurality of ring structures are present in the molecule, such as the case of spiro rings, as long as each of the ring structures connected to the spiro atom has one carbodiimide group, the compound itself may have a plurality of carbodiimide groups, of course. The number of atoms in the ring structure is preferably 8 to 50, more preferably 10 to 30, still more preferably 10 to 20, and particularly preferably 10 to 15.
The number of atoms in the ring structure herein means the number of atoms directly forming the ring structure. For example, in the case of an 8-membered ring, it is 8, and in the case of a 50-membered ring, it is 50. This is because when the number of atoms in the ring structure is less than 8, the cyclic carbodiimide compound has reduced stability and may be difficult to store or use. This is also because although there is no particular upper limit on the number of ring members in terms of reactivity, when the number of atoms is more than 50, such a cyclic carbodiimide compound is difficult to synthesize, and this may greatly increase the cost. From such a point of view, the number of atoms in the ring structure is preferably within a range of 10 to 30, more preferably 10 to 20, and particularly preferably 10 to 15.
It is preferable that the ring structure is a structure represented by the following formula (1).

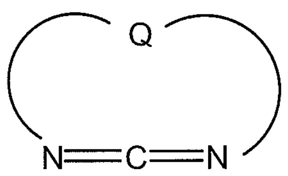

(1)

In the formula, Q is a divalent to tetravalent linking group that is an aliphatic group, an alicyclic group, an aromatic group, or a combination thereof, each optionally containing a heteroatom and a substituent. Heteroatoms herein include O, N, S, and P.
Of the valences of the linking group, two valences are used to form the ring structure. In the case where Q is a trivalent or tetravalent linking group, it is linked to a polymer or another ring structure via a single bond, a double bond, an atom, or an atomic group.
The linking group is a divalent to tetravalent aliphatic group having 1 to 20 carbon atoms, a divalent to tetravalent alicyclic group having 3 to 20 carbon atoms, a divalent to tetravalent aromatic group having 5 to 15 carbon atoms, or a combination thereof, each optionally containing a heteroatom and a substituent. A linking group having the required number of carbon atoms for forming the ring structure specified above is selected. As an example of the combination, the structure like an alkylene-arylene group, in which an alkylene group and an arylene group are linked together, is mentioned.
It is preferable that the linking group (Q) is a divalent to tetravalent linking group represented by the following formula (1-1), (1-2), or (1-3).

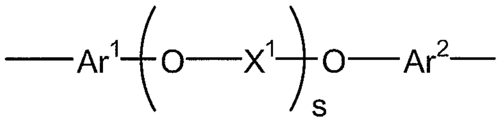

(1-1)

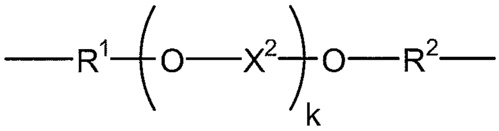

(1-2)

$-X^3-$ (1-3)

In the formula, $Ar^1$ and $Ar^2$ are each independently a divalent to tetravalent aromatic group having 5 to 15 carbon atoms and optionally containing a heteroatom and a substituent. Examples of aromatic groups include $C_{5-15}$ arylene groups, $C_{5-15}$ arenetriyl groups, and $C_{5-15}$ arenetetrayl groups, each optionally containing a heteroatom and having a heterocyclic structure. Examples of arylene groups (divalent) include a phenylene group and a naphthalenediyl group. Examples of arenetriyl groups (trivalent) include a benzenetriyl group and a naphthalenetriyl group. Examples of arenetetrayl groups (tetravalent) include a benzenetetrayl group and a naphthalenetetrayl group. These aromatic groups may be substituted. Examples of substituents include a $C_{1-20}$ alkyl group, a $C_{6-15}$ aryl group, a halogen atom, a nitro group, an amide group, a hydroxyl group, an ester group, an ether group, and an aldehyde group.

$R^1$ and $R^2$ are each independently a divalent to tetravalent aliphatic group having 1 to 20 carbon atoms, a divalent to tetravalent alicyclic group having 3 to 20 carbon atoms, a combination thereof, or a combination of the aliphatic or alicyclic group with a divalent to tetravalent aromatic group having 5 to 15 carbon atoms, each optionally containing a heteroatom and a substituent.

Examples of aliphatic groups include $C_{1-20}$ alkylene groups, $C_{1-20}$ alkanetriyl groups, and $C_{1-20}$ alkanetetrayl groups. Examples of alkylene groups include a methylene group, an ethylene group, a propylene group, a butylene group, a pentylene group, a hexylene group, a heptylene group, an octylene group, a nonylene group, a decylene group, a dodecylene group, and a hexadecylene group. Examples of alkanetriyl groups include a methanetriyl group, an ethanetriyl group, a propanetriyl group, a butanetriyl group, a pentanetriyl group, a hexanetriyl group, a heptanetriyl group, an octanetriyl group, a nonanetriyl group, a decanetriyl group, a dodecanetriyl group, and a hexadecanetriyl group. Examples of alkanetetrayl groups include a methanetetrayl group, an ethanetetrayl group, a propanetetrayl group, a butanetetrayl group, a pentanetetrayl group, a hexanetetrayl group, a heptanetetrayl group, an octanetetrayl group, a nonanetetrayl group, a decanetetrayl group, a dodecanetetrayl group, and a hexadecanetetrayl group. These aliphatic groups may be substituted. Examples of substituents include a $C_{1-20}$ alkyl group, a $C_{6-15}$ aryl group, a halogen atom, a nitro group, an amide group, a hydroxyl group, an ester group, an ether group, and an aldehyde group.

Examples of alicyclic groups include $C_{3-20}$ cycloalkylene groups, $C_{3-20}$ cycloalkanetriyl groups, and $C_{3-20}$ cycloalkanetetrayl groups. Examples of cycloalkylene groups include a cyclopropylene group, a cyclobutylene group, a cyclopentylene group, a cyclohexylene group, a cycloheptylene group, a cyclooctylene group, a cyclononylene group, a cyclodecylene group, a cyclododecylene group, and a cyclohexadecylene group. Examples of alkanetriyl groups include a cyclopropanetriyl group, a cyclobutanetriyl group, a cyclopentanetriyl group, a cyclohexanetriyl group, a cycloheptanetriyl group, a cyclooctanetriyl group, a cyclononanetriyl group, a cyclodecanetriyl group, a cyclododecanetriyl group, and a cyclohexadecanetriyl group. Examples of alkanetetrayl groups include a cyclopropanetetrayl group, a cyclobutanetetrayl group, a cyclopentanetetrayl group, a cyclohexanetetrayl group, a cycloheptanetetrayl group, a cyclooctanetetrayl group, a cyclononanetetrayl group, a cyclodecanetetrayl group, a cyclododecanetetrayl group, and a cyclohexadecanetetrayl group. These alicyclic groups may be substituted. Examples of substituents include a $C_{1-20}$ alkyl group, a $C_{6-15}$ aryl group, a halogen atom, a nitro group, an amide group, a hydroxyl group, an ester group, an ether group, and an aldehyde group.

Examples of aromatic groups include $C_{5-15}$ arylene groups, $C_{5-15}$ arenetriyl groups, and $C_{5-15}$ arenetetrayl groups, each optionally containing a heteroatom and having a heterocyclic structure. Examples of arylene groups include a phenylene group and a naphthalenediyl group. Examples of arenetriyl groups (trivalent) include a benzenetriyl group and a naphthalenetriyl group. Examples of arenetetrayl groups (tetravalent) include a benzenetetrayl group and a naphthalenetetrayl group. These aromatic groups may be substituted. Examples of substituents include a $C_{1-20}$ alkyl group, a $C_{6-15}$ aryl group, a halogen atom, a nitro group, an amide group, a hydroxyl group, an ester group, an ether group, and an aldehyde group.

In the above formulae (1-1) and (1-2), $X^1$ and $X^2$ are each independently a divalent to tetravalent aliphatic group having 1 to 20 carbon atoms, a divalent to tetravalent alicyclic group having 3 to 20 carbon atoms, a divalent to tetravalent

aromatic group having 5 to 15 carbon atoms, or a combination thereof, each optionally containing a heteroatom and a substituent.

Examples of aliphatic groups include $C_{1-20}$ alkylene groups, $C_{1-20}$ alkanetriyl groups, and $C_{1-20}$ alkanetetrayl groups. Examples of alkylene groups include a methylene group, an ethylene group, a propylene group, a butylene group, a pentylene group, a hexylene group, a heptylene group, an octylene group, a nonylene group, a decylene group, a dodecylene group, and a hexadecylene group. Examples of alkanetriyl groups include a methanetriyl group, an ethanetriyl group, a propanetriyl group, a butanetriyl group, a pentanetriyl group, a hexanetriyl group, a heptanetriyl group, an octanetriyl group, a nonanetriyl group, a decanetriyl group, a dodecanetriyl group, and a hexadecanetriyl group. Examples of alkanetetrayl groups include a methanetetrayl group, an ethanetetrayl group, a propanetetrayl group, a butanetetrayl group, a pentanetetrayl group, a hexanetetrayl group, a heptanetetrayl group, an octanetetrayl group, a nonanetetrayl group, a decanetetrayl group, a dodecanetetrayl group, and a hexadecanetetrayl group. These aliphatic groups may be substituted. Examples of substituents include a $C_{1-20}$ alkyl group, a $C_{6-15}$ aryl group, a halogen atom, a nitro group, an amide group, a hydroxyl group, an ester group, an ether group, and an aldehyde group.

Examples of alicyclic groups include $C_{3-20}$ cycloalkylene groups, $C_{3-20}$ cycloalkanetriyl groups, and $C_{3-20}$ cycloalkanetetrayl groups. Examples of cycloalkylene groups include a cyclopropylene group, a cyclobutylene group, a cyclopentylene group, a cyclohexylene group, a cycloheptylene group, a cyclooctylene group, a cyclononylene group, a cyclodecylene group, a cyclododecylene group, and a cyclohexadecylene group. Examples of alkanetriyl groups include a cyclopropanetriyl group, a cyclobutanetriyl group, a cyclopentanetriyl group, a cyclohexanetriyl group, a cycloheptanetriyl group, a cyclooctanetriyl group, a cyclononanetriyl group, a cyclodecanetriyl group, a cyclododecanetriyl group, and a cyclohexadecanetriyl group. Examples of alkanetetrayl groups include a cyclopropanetetrayl group, a cyclobutanetetrayl group, a cyclopentanetetrayl group, a cyclohexanetetrayl group, a cycloheptanetetrayl group, a cyclooctanetetrayl group, a cyclononanetetrayl group, a cyclodecanetetrayl group, a cyclododecanetetrayl group, and a cyclohexadecanetetrayl group. These alicyclic groups may be substituted. Examples of substituents include a $C_{1-20}$ alkyl group, a $C_{6-15}$ aryl group, a halogen atom, a nitro group, an amide group, a hydroxyl group, an ester group, an ether group, and an aldehyde group.

Examples of aromatic groups include $C_{5-15}$ arylene groups, $C_{5-15}$ arenetriyl groups, and $C_{5-15}$ arenetetrayl groups, each optionally containing a heteroatom and having a heterocyclic structure. Examples of arylene groups include a phenylene group and a naphthalenediyl group. Examples of arenetriyl groups (trivalent) include a benzenetriyl group and a naphthalenetriyl group. Examples of arenetetrayl groups (tetravalent) include a benzenetetrayl group and a naphthalenetetrayl group. These aromatic groups may be substituted. Examples of substituents include a $C_{1-20}$ alkyl group, a $C_{6-15}$ aryl group, a halogen atom, a nitro group, an amide group, a hydroxyl group, an ester group, an ether group, and an aldehyde group.

In the above formulae (1-1) and (1-2), s and k are an integer of 0 to 10, preferably an integer of 0 to 3, and more preferably an integer of 0 to 1. This is because when s and k are more than 10, such a cyclic carbodiimide compound is difficult to synthesize, and this may greatly increase the cost. From such a point of view, the integer is preferably within a range of 0 to 3. Incidentally, when s or k is 2 or more, $X^1$ or $X^2$ as a repeating unit may be different from the other $X^1$ or $X^2$.

In the above formula (1-3), $X^3$ is a divalent to tetravalent aliphatic group having 1 to 20 carbon atoms, a divalent to tetravalent alicyclic group having 3 to 20 carbon atoms, a divalent to tetravalent aromatic group having 5 to 15 carbon atoms, or a combination thereof, each optionally containing a heteroatom and a substituent.

Examples of aliphatic groups include $C_{1-20}$ alkylene groups, $C_{1-20}$ alkanetriyl groups, and $C_{1-20}$ alkanetetrayl groups. Examples of alkylene groups include a methylene group, an ethylene group, a propylene group, a butylene group, a pentylene group, a hexylene group, a heptylene group, an octylene group, a nonylene group, a decylene group, a dodecylene group, and a hexadecylene group. Examples of alkanetriyl groups include a methanetriyl group, an ethanetriyl group, a propanetriyl group, a butanetriyl group, a pentanetriyl group, a hexanetriyl group, a heptanetriyl group, an octanetriyl group, a nonanetriyl group, a decanetriyl group, a dodecanetriyl group, and a hexadecanetriyl group. Examples of alkanetetrayl groups include a methanetetrayl group, an ethanetetrayl group, a propanetetrayl group, a butanetetrayl group, a pentanetetrayl group, a hexanetetrayl group, a heptanetetrayl group, an octanetetrayl group, a nonanetetrayl group, a decanetetrayl group, a dodecanetetrayl group, and a hexadecanetetrayl group. These aliphatic groups may contain a substituent. Examples of substituents include a $C_{1-20}$ alkyl group, a $C_{6-15}$ aryl group, a halogen atom, a nitro group, an amide group, a hydroxyl group, an ester group, an ether group, and an aldehyde group.

Examples of alicyclic groups include $C_{3-20}$ cycloalkylene groups, $C_{3-20}$ cycloalkanetriyl groups, and $C_{3-20}$ cycloalkanetetrayl groups. Examples of cycloalkylene groups include a cyclopropylene group, a cyclobutylene group, a cyclopentylene group, a cyclohexylene group, a cycloheptylene group, a cyclooctylene group, a cyclononylene group, a cyclodecylene group, a cyclododecylene group, and a cyclohexadecylene group. Examples of alkanetriyl groups include a cyclopropanetriyl group, a cyclobutanetriyl group, a cyclopentanetriyl group, a cyclohexanetriyl group, a cycloheptanetriyl group, a cyclooctanetriyl group, a cyclononanetriyl group, a cyclodecanetriyl group, a cyclododecanetriyl group, and a cyclohexadecanetriyl group. Examples of alkanetetrayl groups include a cyclopropanetetrayl group, a cyclobutanetetrayl group, a cyclopentanetetrayl group, a cyclohexanetetrayl group, a cycloheptanetetrayl group, a cyclooctanetetrayl group, a cyclononanetetrayl group, a cyclodecanetetrayl group, a cyclododecanetetrayl group, and a cyclohexadecanetetrayl group. These alicyclic groups may contain a substituent. Examples of substituents include a $C_{1-20}$ alkyl group, a $C_{6-15}$ arylene group, a halogen atom, a nitro group, an amide group, a hydroxyl group, an ester group, an ether group, and an aldehyde group.

Examples of aromatic groups include $C_{5-15}$ arylene groups, $C_{5-15}$ arenetriyl groups, and $C_{5-15}$ arenetetrayl groups, each optionally containing a heteroatom and having a heterocyclic structure. Examples of arylene groups include a phenylene group and a naphthalenediyl group. Examples of arenetriyl groups (trivalent) include a benzenetriyl group and a naphthalenetriyl group. Examples of arenetetrayl groups (tetravalent) include a benzenetetrayl group and a naphthalenetetrayl group. These aromatic groups may be substituted. Examples of substituents include a $C_{1-20}$ alkyl group, a $C_{6-15}$ aryl group, a halogen atom, a nitro group, an amide group, a hydroxyl group, an ester group, an ether group, and an aldehyde group.

$Ar^1$, $Ar^2$, $R^1$, $R^2$, $X^1$, $X^2$, and $X^3$ optionally contain a heteroatom. When Q is a divalent linking group, $Ar^1$, $Ar^2$, $R^1$, $R^2$, $X^1$,$X^2$, and $X^3$ are all divalent groups. When Q is a trivalent linking group, one of $Ar^1$, $Ar^2$, $R^1$, $R^2$, $X^1$, $X^2$, and $X^3$ is a trivalent group. When Q is a tetravalent linking group, one of $Ar^1$, $Ar^2$ , $R^1$, $R^2$, $X^1$, $X^2$, and $X^3$ is a tetravalent group or two of $Ar^1$, $Ar^2$, $R^1$, $R^2$, $X^1$, $X^2$, and $X^3$ are trivalent groups.

As cyclic carbodiimide compounds for use in the invention, compounds represented by the following (a) to (c) are mentioned.

<Cyclic Carbodiimide Compound (a)>

As the cyclic carbodiimide compound for use in the invention, a compound represented by the following formula (2) (hereinafter sometimes referred to as "cyclic carbodiimide compound (a)") can be mentioned.

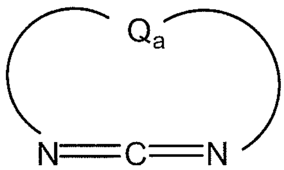

(2)

In the formula, $Q_a$ is a divalent linking group that is an aliphatic group, an alicyclic group, an aromatic group, or a combination thereof and optionally contains a heteroatom. The aliphatic group, the alicyclic group, and the aromatic group are as defined with respect to formula (1). However, in the compound of formula (2), the aliphatic group, the alicyclic group, and the aromatic group are all divalent. It is preferable that $Q_a$ is a divalent linking group represented by the following formula (2-1), (2-2), or (2-3).

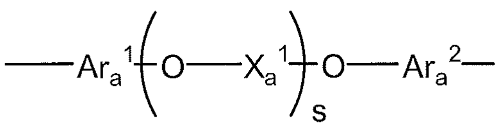

(2-1)

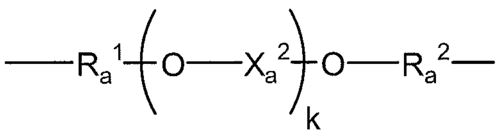

(2-2)

$-X_a^3-$ (2-3)

In the formulae, $Ar_a^1$, $Ar_a^2$, $R_a^1$, $R_a^2$, $X_a^1$, $X_a^2$ , $X_a^3$, s, and k are as defined for $Ar^1$, $Ar^2$, $R^1$, $R^2$, $X^1$, $X^2$, $X^3$, s, and k in formulae (1-1) to (1-3), respectively. However, they are all divalent.

Examples of such cyclic carbodiimide compounds (a) include the following compounds.

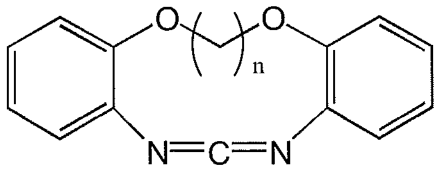

(n = an integer of 1 to 6)

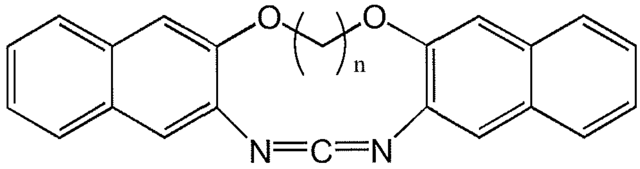

(n = an integer of 1 to 6)

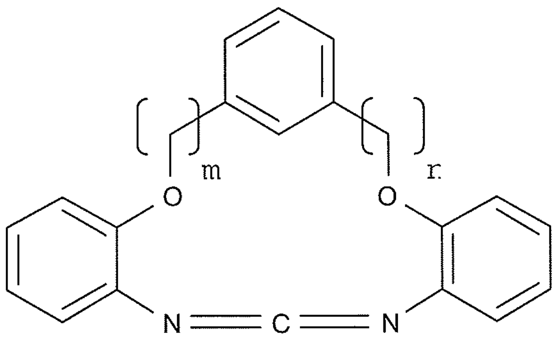

(m = an integer of 0 to 3, n = an integer of 0 to 3)

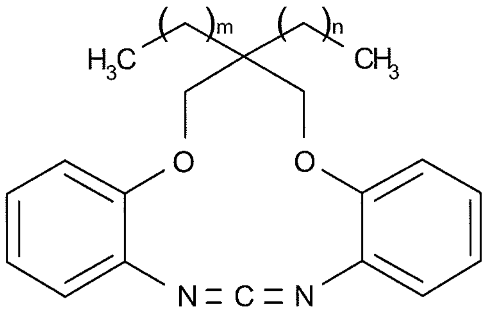

(m = an integer of 0 to 5, n = an integer of 0 to 5)

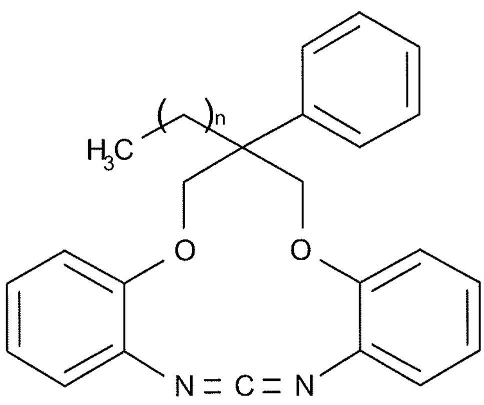

(n = an integer of 0 to 5)

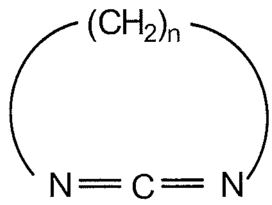

(n = an integer of 5 to 20)

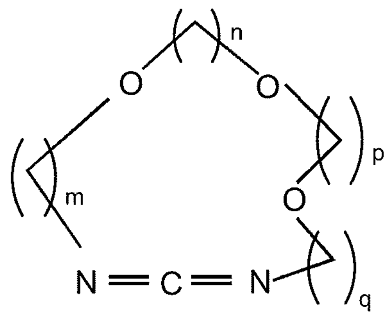

(m, n, p, q = an integer of 1 to 6)

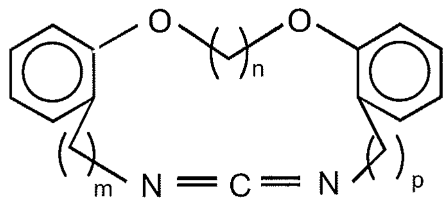

(m, n, p, q = an integer of 1 to 6)

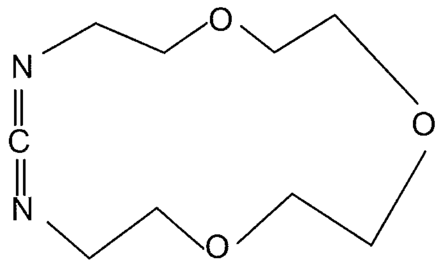

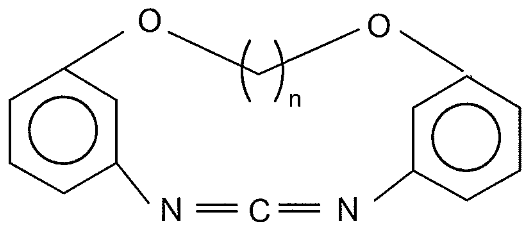

(n = an integer of 1 to 6)

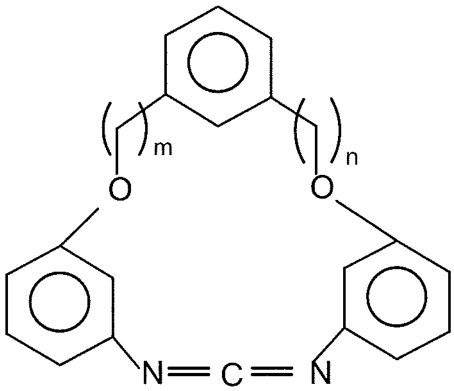

(m, n = an integer of 0 to 3)

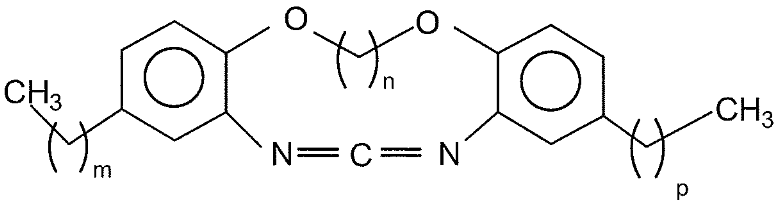

(m, p = an integer of 1 to 5, n = an integer of 1 to 6)

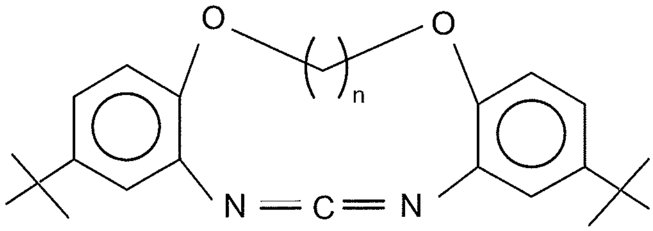

(n = an integer of 1 to 6)

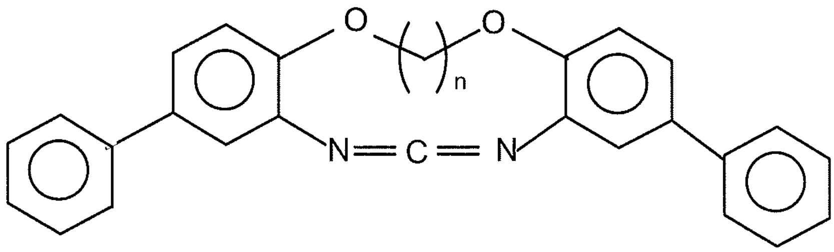

(n = an integer of 1 to 6)

<Cyclic Carbodiimide Compound (b)>

Further, as the cyclic carbodiimide compound for use in the invention, a compound represented by the following formula (3) (hereinafter sometimes referred to as "cyclic carbodiimide compound (b)") can be mentioned.

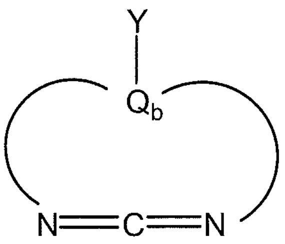

(3)

In the formula, $Q_b$ is a trivalent linking group that is an aliphatic group, an alicyclic group, an aromatic group, or a combination thereof and optionally contains a heteroatom. Y is a carrier that supports the ring structure. The aliphatic group, the alicyclic group, and the aromatic group are as defined with respect to formula (1). However, in the compound of formula (3), one of the groups forming $Q_b$ is trivalent.

It is preferable that $Q_b$ is a trivalent linking group represented by the following formula (3-1), (3-2), or (3-3).

$$-Ar_b^1-\left(O-X_b^1\right)_s-O-Ar_b^2- \quad (3\text{-}1)$$

$$-R_b^1-\left(O-X_b^2\right)_k-O-R_b^2- \quad (3\text{-}2)$$

$$-X_b^3- \quad (3\text{-}3)$$

In the formulae, $Ar_b^1$, $Ar_b^2$, $R_b^1$, $R_b^2$, $X_b^1$, $X_b^2$, $X_b^3$, s, and k are as defined for $Ar^1$, $Ar^2$, $R^1$, $R^2$, $X^1$, $X^2$, $X^3$, s, and k of formulae (1-1) to (1-3), respectively. However, one of them is a trivalent group. It is preferable that Y is a single bond, a double bond, an atom, an atomic group, or a polymer. Y is a linking site, and a plurality of ring structures are linked together through Y, forming the structure represented by formula (3).

Examples of such cyclic carbodiimide compounds (b) include the following compounds.

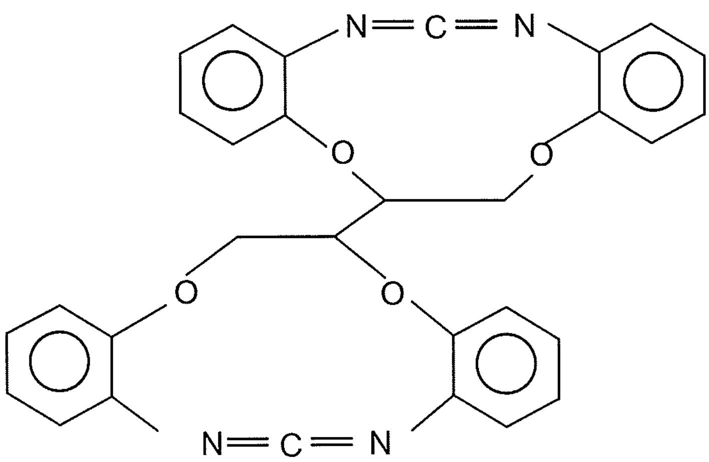

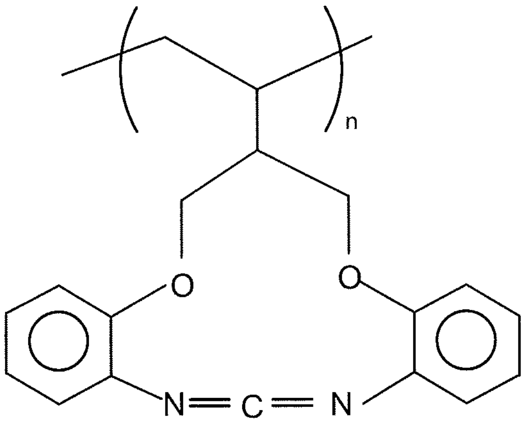

(n is a repeating unit)

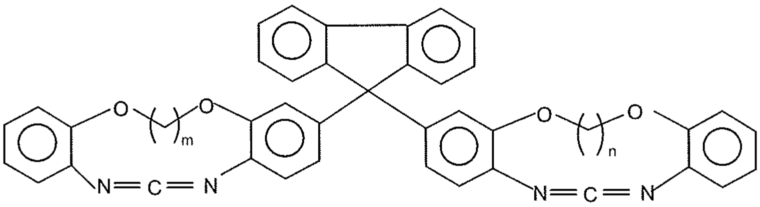

(m, n = an integer of 1 to 6)

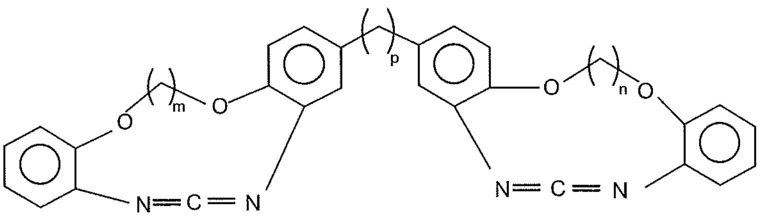

(p, m, n = an integer of 1 to 6)

<Cyclic Carbodiimide Compound (c)>

As the cyclic carbodiimide compound for use in the invention, a compound represented by the following formula (4) (hereinafter sometimes referred to as "cyclic carbodiimide compound (c)") can be mentioned.

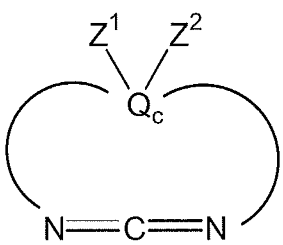

(4)

In the formula, $Q_c$ is a tetravalent linking group that is an aliphatic group, an alicyclic group, an aromatic group, or a combination thereof and optionally contains a heteroatom. $Z^1$ and $Z^2$ are carriers that support the ring structure. $Z^1$ and $Z^2$ may be joined together to form a ring structure.

The aliphatic group, the alicyclic group, and the aromatic group are as defined with respect to formula (1). However, in the compound of formula (4), Qc is tetravalent. Therefore, one of these groups is a tetravalent group or two of them are trivalent groups.

It is preferable that $Q_c$ is a tetravalent linking group represented by the following formula (4-1), (4-2), or (4-3).

$$-Ar_c^1\left(O-X_c^1\right)_s O-Ar_c^2- \qquad (4\text{-}1)$$

$$-R_c^1\left(O-X_c^2\right)_k O-R_c^2- \qquad (4\text{-}2)$$

$-X_c^3-$ (4-3)

In the formulae, $Ar_c^1$, $Ar_c^2$, $R_c^1$, $R_c^2$, $X_c^1$, $X_c^2$, $X_c^3$, s, and k are as defined for $Ar^1$, $Ar^2$, $R^1$, $R^2$, $X^1$, $X^2$, $X^3$, s, and k in formulae (1-1) to (1-3), respectively. However, with respect to $Ar_c^1$, $Ar_c^2$, $R_c^1$, $R_c^2$, $X_c^1$, $X_c^2$ and $X_c^3$, one of them is a tetravalent group or two of them are trivalent groups. It is preferable that $Z^1$ and $Z^2$ are each independently a single bond, a double bond, an atom, an atomic group, or a polymer. $Z^1$ and $Z^2$ are linking sites. A plurality of ring structures are linked together through $Z^1$ and $Z^2$, forming the structure represented by formula (4).

Examples of such cyclic carbodiimide compounds (c) include the following compounds.

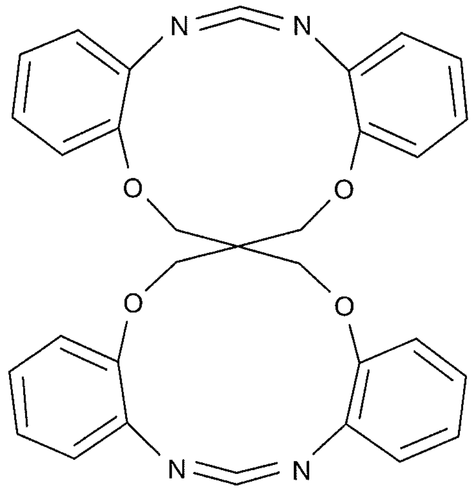

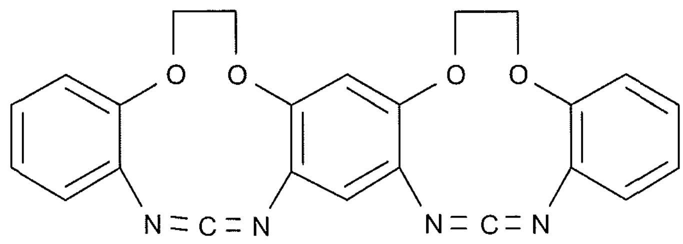

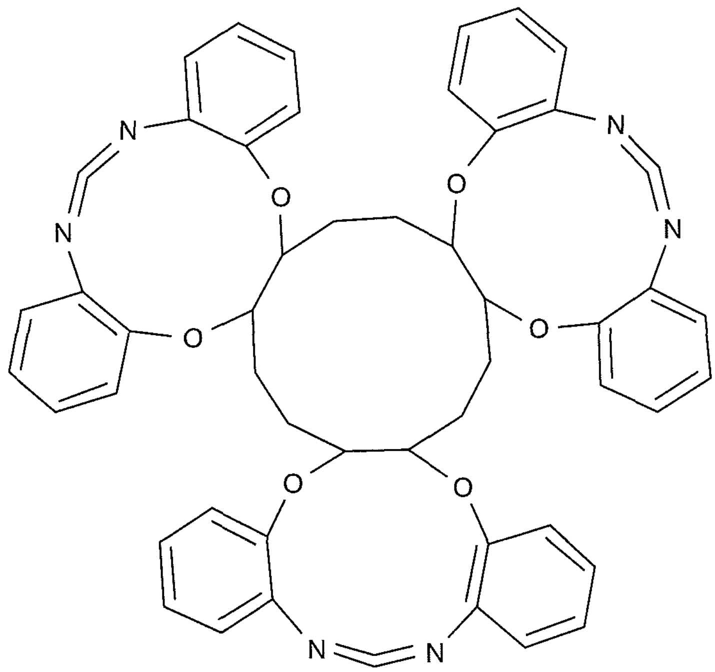

<Polymer Compound>

In the invention, a polymer compound to which the cyclic carbodiimide compound is applied has an acidic group. As the acidic group, at least one member selected from the group consisting of a carboxyl group, a sulfonic acid group, a sulfinic acid group, a phosphonic acid group, and a phosphinic acid group is mentioned.

As the polymer compound, at least one member selected from the group consisting of polyesters, polyamides, polyamide polyimides, and polyester amides is mentioned.

Examples of polyesters include polymers and copolymers obtained by the polycondensation of at least one member selected from dicarboxylic acids or ester-forming derivatives thereof with diols or ester-forming derivatives thereof, hydroxycarboxylic acids or ester-forming derivatives thereof, and lactones. A thermoplastic polyester resin is preferable, for example.

For moldability, etc., such a thermoplastic polyester resin may have a crosslinked structure formed by treatment with a radical-generating source, such as energy active radiation, an oxidizing agent, or the like.

Examples of the dicarboxylic acids and ester-forming derivatives thereof mentioned above include aromatic dicarboxylic acids such as terephthalic acid, isophthalic acid, phthalic acid, 2,6-naphthalenedicarboxylic acid, 1,5-naphthalenedicarboxylic acid, bis(p-carboxyphenyl) methane, anthracenedicarboxylic acid, 4,4'-diphenyl ether dicarboxylic acid, 5-tetrabutylphosphonium isophthalic acid, and 5-sodium sulfoisophthalic acid; aliphatic dicarboxylic acids such as oxalic acid, succinic acid, adipic acid, sebacic acid, azelaic acid, dodecanedioic acid, malonic acid, glutaric acid, and dimer acid; alicyclic dicarboxylic acid units such as 1,3-cyclohexanedicarboxylic acid and 1,4-cyclohexanedicarboxylic acid; and ester-forming derivatives thereof.

Examples of the diols and ester-forming derivatives thereof mentioned above include $C_{2-20}$ aliphatic glycols, i.e., ethylene glycol, propylene glycol, 1,3-butanediol, 1,4-butanediol, neopentyl glycol, 1,5-pentanediol, 1,6-hexanediol, decamethylene glycol, cyclohexane dimethanol, cyclohexanediol, dimer diol, etc.; long-chain glycols having a molecular weight of 200 to 100,000, i.e., polyethylene glycol, poly-1,3-propylene glycol, poly-1,2-propylene glycol, polytetramethylene glycol, etc.; aromatic dioxy compounds, i.e., 4,4'-dihydroxybiphenyl, hydroquinone, tert-butyl hydroquinone, bisphenol-A, bisphenol-S, bisphenol-F, etc.; and ester-forming derivatives thereof.

Examples of the hydroxycarboxylic acids mentioned above include glycolic acid, lactic acid, hydroxypropionic acid, hydroxybutyric acid, hydroxyvaleric acid, hydroxycaproic acid, hydroxybenzoic acid, p-hydroxybenzoic acid, and 6-hydroxy-2-naphthoic acid, as well as ester-forming derivatives thereof. Examples of the lactones mentioned above include caprolactone, valerolactone, propiolactone, undecalactone, and 1,5-oxepan-2-one.

Specific examples of polymers and copolymers thereof are as follows. Examples of aromatic polyesters obtained by the polycondensation of, as main components, an aromatic dicarboxylic acid or an ester-forming derivative thereof and an aliphatic diol or an ester-forming derivative thereof include polymers obtained by the polycondensation of, as main components, an aromatic carboxylic acid or an ester-forming derivative thereof, preferably terephthalic acid, naphthalene 2,6-dicarboxylic acid, or an ester-forming derivative thereof, and an aliphatic diol selected from ethylene glycol,

propylene glycol, 1,3-butanediol, and butanediol or an ester-forming derivative thereof.

Specific preferred examples thereof include polyethylene terephthalate, polyethylene naphthalate, polytrimethylene terephthalate, polypropylene naphthalate, polybutylene terephthalate, polybutylene naphthalate, polyethylene (terephthalate/isophthalate), polytrimethylene(terephthalate/isophthalate), polybutylene(terephthalate/isophthalate), polyethylene terephthalate-polyethylene glycol, polytrimethylene terephthalate-polyethylene glycol, polybutylene terephthalate-polyethylene glycol, polybutylene naphthalate-polyethylene glycol, polyethylene terephthalate-poly(tetramethylene oxide) glycol, polytrimethylene terephthalate-poly(tetramethylene oxide) glycol, polybutylene terephthalate-poly(tetramethylene oxide) glycol, polybutylene naphthalate-poly(tetramethylene oxide) glycol, polyethylene(terephthalate/isophthalate)-poly(tetramethylene oxide) glycol, polytrimethylene(terephthalate/isophthalate)-poly(tetramethylene oxide) glycol, polybutylene(terephthalate/isophthalate)-poly(tetramethylene oxide) glycol, polybutylene(terephthalate/succinate), polyethylene(terephthalate/succinate), polybutylene(terephthalate/adipate), and polyethylene(terephthalate/adipate).

Examples of aliphatic polyester resins include polymers containing an aliphatic hydroxycarboxylic acid as a main component, polymers obtained by the polycondensation of an aliphatic polycarboxylic acid or an ester-forming derivative thereof and an aliphatic polyalcohol as main components, and copolymers thereof.

Examples of polymers containing an aliphatic hydroxycarboxylic acid as a main component include polycondensates of glycolic acid, lactic acid, hydroxypropionic acid, hydroxybutyric acid, hydroxyvaleric acid, hydroxycaproic acid, and the like, as well as copolymers thereof. In particular, polyglycolic acid, polylactic acid, poly(3-hydroxycarboxybutyric acid), poly(4-hydroxybutyric acid), poly(3-hydroxyhexanoic acid), polycaprolactone, copolymers thereof, and the like are mentioned, and poly(L-lactic acid), poly(D-lactic acid), stereocomplex polylactic acid that forms a stereocomplex crystal, and racemic polylactic acid are particularly suitable.

As polylactic acid, one whose main repeating unit is L-lactic acid and/or D-lactic acid may be used, and it is particularly preferable to use polylactic acid having a melting point of 150°C or more ("main" herein means that the component occupies at least 50% of the total). In the case where the melting point is less than 150°C, it is impossible to provide a film with high dimensional stability, high-temperature mechanical properties, etc.

The melting point of the polylactic acid is preferably 170°C or more, and still more preferably 200°C or more. Melting point herein means the peak temperature of the melting peak measured by DSC. In particular, in order to impart heat resistance, it is preferable that the polylactic acid forms a stereocomplex crystal. Stereocomplex polylactic acid herein is a eutectic crystal formed by a poly(L-lactic acid) segment and a poly(D-lactic acid) segment.

Stereocomplex crystals usually have a higher melting point than crystals formed by poly(L-lactic acid) or poly (D-lactic acid) alone, and, therefore, the presence of even a small amount is expected to have a heat-resistance-improving effect. Such an effect is particularly prominent when the amount of stereocomplex crystals is large relative to the total amount of crystals. The stereocomplex crystallinity (S) according to the following equation is preferably 95% or more, and still more preferably 100%:

$$(S) = [\Delta Hm_s/(\Delta Hm_h + \Delta Hm_s)] \times 100\ (\%)$$

wherein $\Delta Hm_s$ is the melting enthalpy of stereocomplex-phase crystal, and $\Delta Hm_h$ is the melting enthalpy of homo-phase polylactic acid crystal.

As a technique to stably and highly promote the formation of stereocomplex polylactic acid crystals, it is preferable to incorporate specific additives.

That is, a technique in which a phosphoric acid ester metal salt represented by the following formulae is added as a stereocomplex crystallization promoter is mentioned as an example.

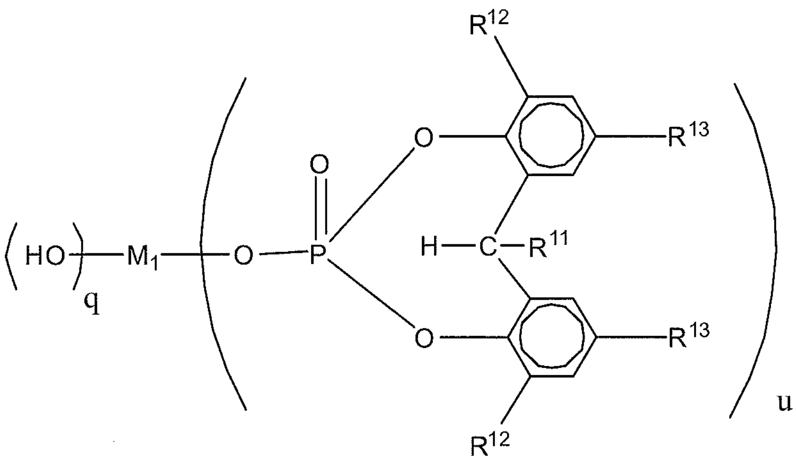

In the formula, $R^{11}$ represents a hydrogen atom or a $C_{1-4}$ alkyl group, $R^{12}$ and $R^{13}$ each independently represent a hydrogen atom or a $C_{1-12}$ alkyl group, $M_1$ represents an alkali metal atom, an alkaline-earth metal atom, a zinc atom, or an aluminum atom, u represents 1 or 2, and q represents 0 when $M_1$ is an alkali metal atom, an alkaline-earth metal atom, or a zinc atom, and represents 1 or 2 when $M_1$ is an aluminum atom.

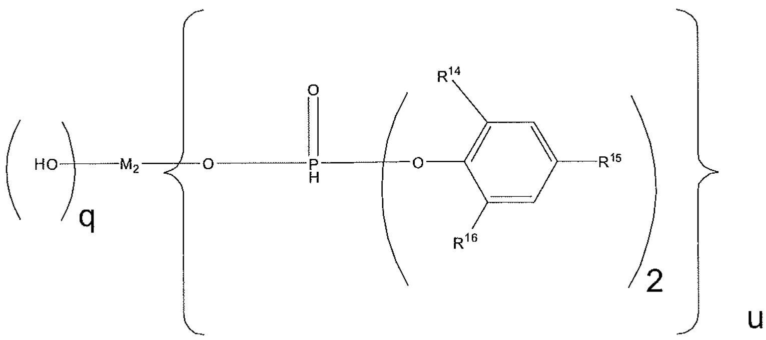

In the formula, $R^{14}$, $R^{15}$, and $R^{16}$ each independently represent a hydrogen atom or a $C_{1-12}$ alkyl group, $M_2$ represents an alkali metal atom, an alkaline-earth metal atom, a zinc atom, or an aluminum atom, u represents 1 or 2, and q represents 0 when $M_2$ is an alkali metal atom, an alkaline-earth metal atom, or a zinc atom, and represents 1 or 2 when $M_2$ is an aluminum atom.

As $M_1$ and $M_2$ of phosphoric acid ester metal salts represented by the above two formulae, Na, K, A1, Mg, Ca, and Li, particularly K, Na, A1, and Li, are preferable. In particular, Li and Al are the most suitable. As examples of such phosphoric acid ester metal salts, those available from ADEKA under trade names "ADEKASTAB" NA-11 and "ADEKASTAB" NA-71, etc., are mentioned as preferred agents.

It is preferable that the phosphoric acid ester metal salt is used in an amount of 0.001 to 2 wt%, preferably 0.005 to 1 wt%, more preferably 0.01 to 0.5 wt%, and still more preferably 0.02 to 0.3 wt% relative to the polylactic acid. In the case where the amount is too small, the effectiveness in improving the stereocomplex crystallinity (S) is low, while when the amount is too large, the stereocomplex crystal melting point is lowered, and this is thus undesirable.

Further, if desired, known crystallization nucleators may be used together in order to enhance the function of the phosphoric acid ester metal salt. In particular, calcium silicate, talc, kaolinite, and montmorillonite are preferably selected.

Such a crystallization nucleator is used in an amount within a range of 0.05 wt% to 5 wt%, more preferably 0.06 wt% to 2 wt%, and still more preferably 0.06 wt% to 1 wt% relative to the polylactic acid.

The polylactic acid may be obtained by any method. Examples of methods for producing polylactic acid include a two-stage lactide method in which lactide, a cyclic dimer, is once produced from L-lactic acid and/or D-lactic acid as a raw material, followed by ring-opening polymerization, and a single-stage direct polymerization method in which L-lactic acid and/or D-lactic acid as a raw material is directly dehydrated and condensed in a solvent; the polylactic acid can be suitably obtained by such a commonly known polymerization method.

In the production, carboxylic acid groups are sometimes incorporated into the polylactic acid. With respect to the amount of such carboxylic acid groups contained, the smaller the better. For this reason, for example, it is preferable to use a product obtained by the ring-opening polymerization of lactide using an initiator other than water, or use a

polymer that has undergone chemical treatment after polymerization and thus has a reduced amount of carboxylic acid groups.

The weight average molecular weight of the polylactic acid is usually at least 50,000, preferably at least 100,000, and preferably 100,000 to 300,000. An average molecular weight of less than 50,000 reduces the strength physical properties of the film and thus is undesirable. In the case where it is more than 300,000, this may result in melt viscosity so high that it is difficult to perform melt film formation.

The polylactic acid in the invention may be a polylactic acid copolymer obtained by copolymerizing other ester-forming components in addition to L-lactic acid and D-lactic acid. Examples of copolymerizable components include hydroxycarboxylic acids such as glycolic acid, 3-hydroxybutyric acid, 4-hydroxybutyric acid, 4-hydroxyvaleric acid, and 6-hydroxycaproic acid; compounds having a plurality of hydroxyl groups in the molecule, such as ethylene glycol, propylene glycol, butanediol, neopentyl glycol, polyethylene glycol, glycerin, and pentaerythritol, as well as derivatives thereof; and compounds having a plurality of carboxylic acid groups in the molecule, such as adipic acid, sebacic acid, and fumaric acid, as well as derivatives thereof. However, in order to maintain the high melting point and not to lose film strength, in this case, it is preferable that the lactic acid unit proportion is 70 mol% or more based on the polylactic acid copolymer.

It is preferable that a film made of the thus-obtained polylactic acid has a tensile strength of 50 MPa or more and a carboxyl group end concentration [COOH] of 0 to 20 eq/ton. A tensile strength of less than 50 MPa leads to a decrease in product strength and thus is undesirable.

The tensile strength of the film is more preferably 70 MPa or more, and still more preferably 100 MPa or more. Meanwhile, when a film having a strength of more than 200 MPa is to be obtained, the elongation of the film significantly decreases, and thus production may be difficult.

Further, it is preferable that the carboxyl group end concentration [COOH] is 0 to 20 eq/ton. In the case where the carboxyl group end concentration is more than 20 eq/ton, the degree of hydrolysis is high, and this may cause a significant decrease in the strength of the film. In terms of retaining of strength, the carboxyl group end concentration is preferably 10 eq/ton or less, and most preferably 6 eq/ton or less. The lower the carboxyl group end group concentration the better.

An example of a polymer containing an aliphatic polycarboxylic acid and an aliphatic polyalcohol as main components is a condensate whose main components are an aliphatic dicarboxylic acid, such as oxalic acid, succinic acid, adipic acid, sebacic acid, azelaic acid, dodecanedioic acid, malonic acid, glutaric acid, or dimer acid, or an alicyclic dicarboxylic acid unit, such as 1,3-cyclohexanedicarboxylic acid or 1,4-cyclohexanedicarboxylic acid, as a polycarboxylic acid or an ester derivative thereof and, as a diol component, a $C_{2-20}$ aliphatic glycol, i.e., ethylene glycol, propylene glycol, 1,4-butanediol, neopentyl glycol, 1,5-pentanediol, 1,6-hexanediol, decamethylene glycol, cyclohexane dimethanol, cyclohexanediol, dimerdiol, etc., or a long-chain glycol having a molecular weight of 200 to 100,000, i.e., polyethylene glycol, poly-1,3-propylene glycol, poly-1,2-propylene glycol, or polytetramethylene glycol. Specific examples thereof include polyethylene adipate, polyethylene succinate, polybutylene adipate, and polybutylene succinate, as well as copolymers thereof.

Further, examples of wholly aromatic polyesters include polymers obtained by the polycondensation of, as main components, an aromatic carboxylic acid or an ester-forming derivative thereof, preferably terephthalic acid, naphthalene-2,6-dicarboxylic acid, or an ester-forming derivative thereof, and an aromatic polyhydroxy compound or an ester-forming derivative thereof.

Specifically, poly(4-oxyphenylene-2,2-propylidene-4-oxyphenylene-terephthaloyl-co-isophthaloyl) is mentioned as an example. Such a polyester has, as carbodiimide-reactive components, terminal carboxyl and/or hydroxyl groups at its molecular ends in an amount of 1 to 50 eq/ton. Such end groups, especially carboxyl groups, reduce the stability of the polyester, and thus are preferably capped with a cyclic carbodiimide compound.

In the capping of carboxyl end groups with a carbodiimide compound, the application of the cyclic carbodiimide compound of the invention allows the carboxyl groups to be capped without producing toxic, free isocyanates. This is greatly advantageous.

The above polyesters can be produced by a well known method (e.g., described in *"Howa-Poriesuteru-Jushi Handobukku* (Handbook of Saturated Polyester Resin)" (written by Kazuo YUKI, Nikkan Kogyo Shimbun (published on December 22, 1989), etc.).

Examples of polyesters of the invention further include, in addition to the above polyesters, unsaturated polyester resins obtained by the copolymerization of unsaturated polycarboxylic acids or ester-forming derivatives thereof and also polyester elastomers containing a low-melting-point polymer segment.

Examples of unsaturated polycarboxylic acids include maleic anhydride, tetrahydromaleic anhydride, fumaric acid, and endomethylene tetrahydromaleic anhydride. Various monomers are added to such an unsaturated polyester in order to control curing properties, and subjected to curing/molding by heat curing, radical curing, or a curing treatment with active energy such as light or an electron beam. The control of carboxyl groups in such an unsaturated resin is an important technical problem related to rheological properties such as thixotropy, resin durability, and the like. However,

the cyclic carbodiimide compound allows the carboxyl groups to be capped and controlled without producing toxic, free isocyanates, and also increases the molecular weight more effectively. These advantages are of great industrial significance.

<Polyester Elastomer>

Further, in the invention, the polyester may also be a polyester elastomer obtained by the copolymerization of soft components. A polyester elastomer is a copolymer containing a high-melting-point hard polyester segment and a low-melting-point polymer segment having a molecular weight of 400 to 6,000, as described in a known document, for example, JP-A-11-92636. It is a thermoplastic polyester block copolymer whose components are such that in the case where a high polymer is made solely of the high-melting-point polyester segment component, the melting point thereof is 150°C or more, while in the case where only the low-melting-point polymer segment component which contains, for example, an aliphatic polyester produced from a polyalkylene glycol or a $C_{2-12}$ aliphatic dicarboxylic acid and a $C_{2-10}$ aliphatic glycol is subjected to measurement, the melting point or softening point thereof is 80°C or less. Such an elastomer has a problem with hydrolytic stability. However, the cyclic carbodiimide compound allows the carboxyl groups to be controlled without any safety problem, which is of great significance, and also allows the molecular weight to be prevented from decreasing or to increase, which is of great industrial significance.

<Polyamide>

The polyamide of the invention is a thermoplastic polymer having an amide bond and obtained from an amino acid, a lactam, or a diamine and a dicarboxylic acid or an amide-forming derivative thereof as main raw materials.

As polyamides in the invention, polycondensates obtained by the condensation of a diamine and a dicarboxylic acid or an acyl activator thereof, polymers obtained by the polycondensation of an aminocarboxylic acid, a lactam, or an amino acid, and copolymers thereof are usable.

Examples of diamines include aliphatic diamines and aromatic diamines. Examples of aliphatic diamines include tetramethylenediamine, hexamethylenediamine, undecamethylenediamine, dodecamethylenediamine, 2,2,4-trimethylhexamethylenediamine, 2,4,4-trimethylhexamethylenediamine, 5-methylnonamethylenediamine, 2,4-dimethyloctamethylenediamine, meta-xylylenediamine, paraxylylenediamine, 1,3-bis(aminomethyl)cyclohexane, 1-amino-3-aminomethyl-3,5,5-trimethylcyclohexane, 3,8-bis(aminomethyl)tricyclodecane, bis(4-aminocyclohexyl)methane, bis(3-methyl-4-aminocyclohexyl)methane, 2,2-bis(4-aminocyclohexyl)propane, bis(aminopropyl)piperazine, and aminoethylpiperazine. Examples of aromatic diamines include p-phenylenediamine, m-phenylenediamine, 2,6-naphthalenediamine, 4,4'-diphenyldiamine, 3,4'-diphenyldiamine, 4,4'-diaminodiphenyl ether, 3,4'-diaminodiphenyl ether, 4,4'-sulfone, 3,4'-diaminodiphenyl sulfone, 4,4'-diaminodiphenyl ketone, 3,4'-diaminodiphenyl ketone, and 2,2-bis(4-aminophenyl)propane.

Examples of dicarboxylic acids include adipic acid, suberic acid, azelaic acid, sebacic acid, dodecanoic acid, terephthalic acid, isophthalic acid, naphthalenedicarboxylic acid, 2-chloroterephthalic acid, 2-methylterephthalic acid, 5-methylisophthalic acid, 5-sodium sulfoisophthalic acid, hexahydroterephthalic acid, hexahydroisophthalic acid, and diglycolic acid. Specific examples of polyamides include aliphatic polyamides such as polycaproamide (Nylon 6), polytetramethylene adipamide (Nylon 46), polyhexamethylene adipamide (Nylon 66), polyhexamethylene sebacamide (Nylon 610), polyhexamethylene dodecamide (Nylon 612), polyundecamethylene adipamide (Nylon 116), polyundecanamide (Nylon 11), and polydodecanamide (Nylon 12); aliphatic-aromatic polyamides such as polytrimethylhexamethylene terephthalamide, polyhexamethylene isophthalamide (Nylon 6I), polyhexamethylene terephthal/isophthalamide (Nylon 6T/6I), polybis(4-aminocyclohexyl)methane dodecamide (Nylon PACM12), polybis(3-methyl-4-aminocyclohexyl)methane dodecamide, (Nylon Dimethyl PACM12), polymetaxylylene adipamide (Nylon MXD6), polyundecamethylene terephthalamide (Nylon 11 T), and polyundecamethylene hexahydroterephthalamide (Nylon 11T(H)) , as well as copolyamides thereof; and copolymers and mixtures thereof. Examples further include poly(p-phenylene terephthalamide) and poly (p-phenylene terephthalamide-co-isophthalamide).

Examples of amino acids include ω-aminocaproic acid, ω-aminoenanthic acid, ω-aminocaprylic acid, ω-aminopergonic acid, ω-aminocapric acid, 11-aminoundecanoic acid, 12-aminododecanoic acid, and para-aminomethylbenzoic acid. Examples of lactams include ω-caprolactam, ω-enantholactam, ω-capryllactam, and ω-laurolactam.

The molecular weight of such a polyamide resin is not particularly limited. However, it is preferable that its relative viscosity measured at 25°C in a 98% concentrated sulfuric acid solution having a polyamide resin concentration of 1 wt% is within a range of 2.0 to 4.0.

These amide resins can be produced according to a well known method, for example, "*Poriamido-Jusi* Handobukku (Polyamide Resin Handbook)" (written by Osamu FUKUMOTO, Nikkan Kogyo Shimbun (published on January 30, 1988)), etc.

Polyamides of the invention further include polyamides known as polyamide elastomers. Examples of such polyamides include graft and block copolymers obtained by a reaction of a polyamide-forming component having 6 or

more carbon atoms with a poly(alkylene oxide) glycol. The linkage between the polyamide-forming component having 6 or more carbon atoms and the poly(alkylene oxide) glycol component is usually an ester bond or an amide bond. However, the linkage is not particularly limited thereto, and it is also possible to use a third component, such as a dicarboxylic acid or a diamine, as a reaction component for the two. Examples of poly(alkylene oxide) glycols include block and random copolymers of polyethylene oxide glycol, poly(1,2-propylene oxide) glycol, poly(1,3-propylene oxide) glycol, poly(tetramethylene oxide) glycol, poly(hexamethylene oxide) glycol, ethylene oxide, and propylene oxide and block and random copolymers of ethylene oxide and tetrahydrofuran. In terms of polymerizability and rigidity, the poly (alkylene oxide) glycol preferably has a number average molecular weight of 200 to 6,000, and more preferably 300 to 4,000.

As the polyamide elastomer for use in the invention, a polyamide elastomer obtained by the polymerization of caprolactam, polyethylene glycol, and terephthalic acid is preferable. As can be easily understood from the raw materials, such a polyamide resin has carboxyl groups in an amount of 30 to 100 eq/ton and amino groups in an amount of 30 to 100 eq/ton, approximately. It is well known that carboxyl groups have an unfavorable effect on the stability of a polyamide.

A composition in which the carboxyl groups are controlled to 20 eq/ton or less or to 10 eq/ton or less, or preferably further to a lower degree, by the cyclic carbodiimide compound of the invention without any safety problems, whereby the molecular weight is more effectively prevented from decreasing, is of great importance.

<Polyamide-Imide>

A polyamide-imide resin for use in the invention has a main repeating structural unit represented by the following formula (I):

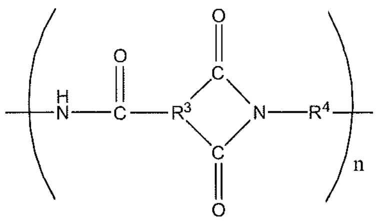

(I)

wherein $R^3$ represents a trivalent organic group, $R^4$ represents a divalent organic group, and n represents a positive integer.

Examples of typical methods for synthesizing such a polyamide-imide resin include (1) a method in which a diisocyanate reacts with a tribasic acid anhydride, (2) a method in which a diamine reacts with a tribasic acid anhydride, and (3) a method in which a diamine reacts with a tribasic acid anhydride chloride. However, the method for synthesizing a polyamide-imide resin for use in the invention is not limited to these methods. The following are typical compounds used in the above synthesizing methods.

First, preferred examples of diisocyanates include 4,4'-diphenylmethane diisocyanate, xylylene diisocyanate, 3,3'-diphenylmethane diisocyanate, 4,4'-diphenylether diisocyanate, 3,3'-diphenylether diisocyanate, and paraphenylene diisocyanate.

Preferred examples of diamines include 4,4'-diaminodiphenyl sulfone, 3,3'-diaminodiphenyl sulfone, 4,4'-diaminodiphenyl ether, 3,3'-diaminodiphenyl ether, 4,4'-diaminodiphenylmethane, 3,3'-diaminodiphenylmethane, xylylenediamine, and phenylenediamine. Among these, 4,4'-diphenylmethane diisocyanate, 3,3'-diphenylmethane diisocyanate, 4,4'-diphenylether diisocyanate, 3,3'-diphenylether diisocyanate, 4,4'-diaminodiphenyl ether, 3,3'-diaminodiphenyl ether, 4,4'-diaminodiphenylmethane, and 3,3'-diaminodiphenylmethane are more preferable.

Preferred examples of tribasic acid anhydrides include trimellitic anhydride, and examples of tribasic acid anhydride chlorides include trimellitic anhydride chloride.

In the synthesis of a polyamide-imide resin, a dicarboxylic acid, a tetracarboxylic dianhydride, or the like may be simultaneously subjected to the reaction without impairing the properties of the polyamide-imide resin. Examples of dicarboxylic acids include terephthalic acid, isophthalic acid, and adipic acid. Examples of tetracarboxylic dianhydrides include pyromellitic dianhydride, benzophenone tetracarboxylic dianhydride, and biphenyl tetracarboxylic dianhydride. It is preferable that they are used in an amount of 50 eq% or less based on the total acid components.

The durability of a polyamide-imide resin may decrease depending on the concentration of carboxyl groups in the polymer. Therefore, it is preferable that the concentration of carboxyl groups is controlled preferably to 1 to 10 eq/ton or less. The cyclic carbodiimide compound of the invention allows the above carboxyl group concentration range to be suitably achieved.

<Polyimide>

A polyimide resin of the invention is not particularly limited and may be a known polyimide resin. However, it is particularly preferable to select a thermoplastic polyimide resin.

Examples of such polyimide resins include polyimides containing the following diamine component and the following tetracarboxylic acid:

$$H_2N\text{-}R^5\text{-}NH_2$$

wherein $R^5$ is (i) a single bond; (ii) a $C_{2-12}$ aliphatic hydrocarbon group; (iii) a $C_{4-30}$ alicyclic group; (iv) a $C_6$-$_{30}$ aromatic group; (v) a -Ph-O-$R^6$-O-Ph- group ($R^6$ represents a phenylene group or a -Ph-X-Ph- group wherein X represents a single bond, a $C_{1-4}$ alkylene group optionally substituted with a halogen atom, a -O-Ph-O-group, -O-, -CO-, -S-, -SO-, or a -$SO_2$- group); or (v) a - $R^7$-($SiR^8{}_2$-O)m-$SiR^8{}_2$-$R^7$- group ($R^7$ represents -(CH2)$_s$-, - $(CH_2)_s$-Ph-, -$(CH_2)_s$-O-Ph-, or -Ph- wherein m is an integer of 1 to 100, s represents an integer of 1 to 4, and $R^8$ represents a $C_{1-6}$ alkyl group, a phenyl group, or a $C_{1-6}$ alkylphenyl group);

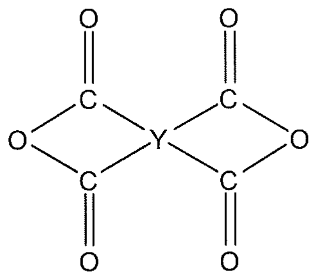

wherein Y is a $C_2$-$_{12}$ tetravalent aliphatic group, a $C_{4-8}$ tetravalent alicyclic group, a $C_6$-$_{14}$ monocyclic or fused-ring polycyclic tetravalent aromatic group, or a >Ph-X-Ph< group (X represents a single bond, a $C_{1-4}$ alkylene group optionally substituted with a halogen atom, -O-Ph-O-, -O-, -CO-, -S-, -SO-, or a -$SO_2$- group).

Specific examples of tetracarboxylic anhydrides for use in the production of a polyamide acid include, but are not limited to, pyromellitic anhydride (PMDA), 4,4'-oxydiphthalic anhydride (ODPA), biphenyl-3,3',4,4'-tetracarboxylic anhydride (BPDA), benzophenone-3,3',4,4'-tetracarboxylic anhydride (BTDA), ethylenetetracarboxylic anhydride, butanetetracarboxylic anhydride, cyclopentanetetracarboxylic anhydride, benzophenone-2,2',3,3'-tetracarboxylic anhydride, biphenyl-2,2',3,3'-tetracarboxylic anhydride, 2,2-bis(3,4-dicarboxyphenyl)propane anhydride, 2,2-bis(2,3-dicarboxyphenyl)propane anhydride, bis(3,4-dicarboxyphenyl)ether anhydride, bis(3,4-dicarboxyphenyl)sulfone anhydride, 1,1-bis (2,3-dicarboxyphenyl)ethane anhydride, bis(2,3-dicarboxyphenyl)methane anhydride, bis(3,4-dicarboxyphenyl)methane anhydride, 4,4'-(p-phenylenedioxy)diphthalic anhydride, 4,4'-(m-phenylenedioxy)diphthalic anhydride, naphthalene-2,3,6,7-tetracarboxylic anhydride, naphthalene-1,4,5,8-tetracarboxylic anhydride, naphthalene-1,2,5,6-tetracarboxylic anhydride, benzene-1,2,3,4-tetracarboxylic anhydride, perylene-3,4,9,10-tetracarboxylic anhydride, anthracene-2,3,6,7-tetracarboxylic anhydride, and phenanthrene-1,2,7,8-tetracarboxylic anhydride. These dicarboxylic anhydrides may be used alone, and it is also possible to use a mixture of two or more kinds. Among them, it is preferable to use pyromellitic anhydride (PMDA), 4,4'-oxydiphthalic anhydride (ODPA), biphenyl-3,3',4,4'-tetracarboxylic anhydride (BPDA), benzophenone-3,3',4,4'-tetracarboxylic anhydride, and biphenylsulfone-3,3',4,4'-tetracarboxylic anhydride (DSDA).

In the invention, specific example of diamines for use in the production of a polyimide include, but are not limited to, 4,4'-diaminodiphenyl ether, 4,4'-diaminodiphenylmethane, 4,4'-diaminodiphenyl sulfone, 4,4'-diaminodiphenyl thioether, 4,4'-di(meta-aminophenoxy)diphenyl sulfone, 4,4'-di(para-aminophenoxy)diphenyl sulfone, o-phenylenediamine, m-phenylenediamine, p-phenylenediamine, benzidine, 2,2'-diaminobenzophenone, 4,4'-diaminobenzophenone, 4,4'-diaminodiphenyl-2,2'-propane, 1,5-diaminonaphthalene, 1,8-diaminonaphthalene, trimethylenediamine, tetramethylenediamine, hexamethylenediamine, 4,4-dimethylheptamethylenediamine, 2,11-dodecadiamine, di(para-aminophenoxy)dimethylsilane, 1,4-di(3-aminopropyldiaminosilane)benzene, 1,4-diaminocyclohexane, ortho-tolyldiamine, meta-tolyldiamine, acetoguanamine, benzoguanamine, 1,3-bis(3-aminophenoxy)benzene (APB), bis[4-(3-aminophenoxy) phenyl] methane, 1,1-bis[4-(3-aminophenoxy)phenyl]ethane, 1,2-bis[4-(3-aminophenoxy)phenyl]ethane, 2,2-bis[4-(3-aminophenoxy)phenyl]ethane, 2,2-bis[4-(3-aminophenoxy)phenyl]propane, 2,2-bis[4-(3-aminophenoxy)phenyl]butane, 2,2-bis[4-(3-aminophenoxy)phenyl]-1,1,1,3,3,3-hexafluoropropane, 4,4'-di(3-aminophenoxy)biphenyl, di[4-(3-aminophenoxy)phenyl]ketone, di[4-(3-aminophenoxy)phenyl]sulfide, di[4-(3-aminophenoxy)phenyl]sulfoxide, di[4-(3-aminophenoxy)phenyl]sulfone, and di(4-(3-amionohpenoxy)phenyl)ether. The above diamines may be used alone, and it is also possible to use a mixture of a large number of them.

Examples of thermoplastic polyimides include polyimide resins containing a tetracarboxylic anhydride as shown

below and a known diamine such as p-phenylenediamine, cyclohexanediamine, or hydrogenated-bisphenol-A-type diamine, as well as those commercially available from General Electric under the trade name "Ultem", such as "Ultem" 1000, "Ultem" 1010, "Ultem" CRS5001, and "Ultem" XH6050, and "AURUM" 250AM manufactured by Mitsui Chemicals.

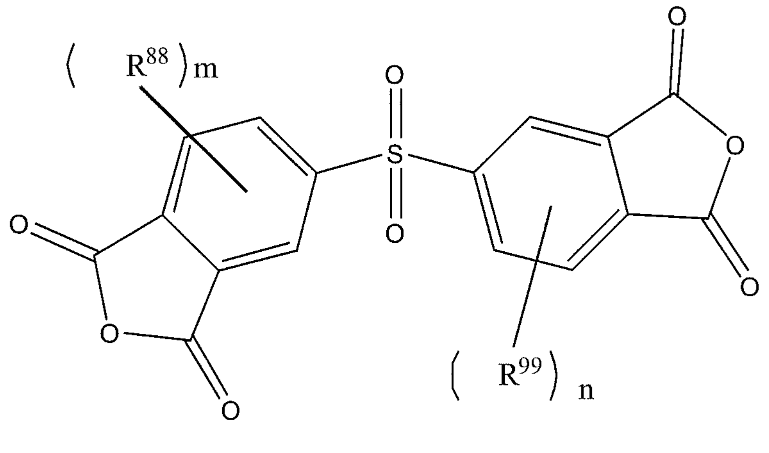

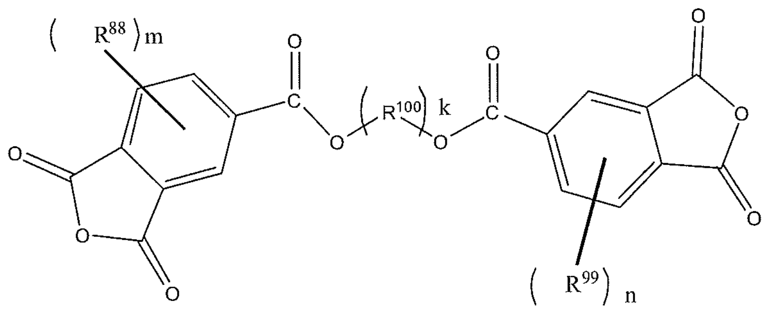

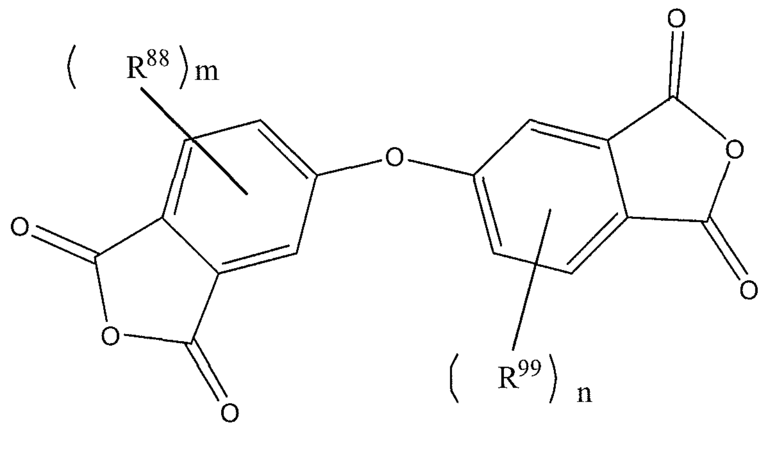

In the formulae, $R^{88}$ and $R^{99}$ each independently represent a hydrogen atom, a linear or branched $C_{1-10}$ alkyl group, or an aryl group, $R^{100}$ represents a $C_{6-30}$ arylene group or a $C_{2-20}$ alkylene group, m and n are each an integer of 0 to 5, and k is an integer of 1 to 3.

<Polyester Amide>

Examples of polyester amide resins of the invention include, but are not particularly limited to, known polyester amide resins obtained by the copolymerization of a polyester component and a polyamide component. In particular, a thermoplastic polyester amide resin is preferably selected.

The polyester amide resin of the invention can be synthesized by a known method, etc. For example, the polyamide component is first subjected to a polycondensation reaction so as to synthesize a polyamide terminated with functional groups, and then the polyester component is polymerized in the presence of the polyamide; the synthesis is possible by such a method. This polycondensation reaction is usually implemented by allowing an amidation reaction

to proceed in the first stage and then an esterification reaction to proceed in the second stage.

The polyester component is preferably selected from the polyester components mentioned above. The polyamide component is preferably selected from the polyamide components mentioned above.

To these polymer components to which the cyclic carbodiimide compound is applied, any known additives and fillers may be added as long as the cyclic carbodiimide compound does not react with them to lose its effects. As additives, for example, in order to reduce melt viscosity, aliphatic polyester polymers such as polycaprolactone, polybutylene succinate, and polyethylene succinate and aliphatic polyether polymers such as polyethylene glycol, polypropylene glycol, and poly(ethylene-propylene) glycol may be added as internal plasticizers or external plasticizers. Further, inorganic fine particles and organic compounds are optionally added as delusterants, deodorants, flame retardants, friction-reducing agents, antioxidants, coloring pigments, etc.

<Method for Mixing Polymer Compound with Cyclic Carbodiimide Compound>

In the invention, a cyclic carbodiimide compound is mixed and reacted with a polymer compound having an acidic group, whereby the acidic groups can be capped. The method for adding and mixing the cyclic carbodiimide compound into the polymer compound is not particularly limited, and may be a known method. It is possible to employ a method in which the cyclic carbodiimide compound is added in the form of a solution, a melt, or a masterbatch of the polymer to be applied, a method in which the polymer compound in solid state is brought into contact with a liquid having dissolved, dispersed, or melted therein the cyclic carbodiimide compound, thereby impregnating the polymer compound with the cyclic carbodiimide compound, or the like.

In the case where a method in which the cyclic carbodiimide compound is added in the form of a solution, a melt, or a masterbatch of the polymer compound to be applied is employed, a known kneading apparatus may be used for addition. For kneading, kneading in the form of a solution or kneading in the form of a melt is preferable in terms of uniform kneading. The kneading apparatus is not particularly limited, and may be a known vertical reactor, mixing tank, or kneading tank, or a single-screw or multi-screw horizontal kneading apparatus, such as a single-screw or multi-screw extruder or kneader, for example. The period of time for mixing with a polymer compound is not particularly limited. Although this depends on the mixing apparatus and the mixing temperature, it is 0.1 minutes to 2 hours, preferably 0.2 minutes to 60 minutes, and more preferably 1 minute to 30 minutes.

As the solvent, those inert to the polymer compound and the cyclic carbodiimide compound are usable. In particular, a solvent having affinity for both of them, which at least partially dissolves both of them or is at least partially dissolved in both of them, is preferable.

As the solvents, for example, hydrocarbon-based solvents, ketone-based solvents, ester-based solvents, ether-based solvents, halogen-based solvents, amide-based solvents, and the like are usable.

Examples of hydrocarbon-based solvents include hexane, cyclohexane, benzene, toluene, xylene, heptane, and decane.

Examples of ketone-based solvents include acetone, methyl ethyl ketone, diethyl ketone, cyclohexanone, and isophorone.

Examples of ester-based solvents include ethyl acetate, methyl acetate, ethyl succinate, methyl carbonate, ethyl benzoate, and diethylene glycol diacetate.

Examples of ether-based solvents include diethyl ether, dibutyl ether, tetrahydrofuran, dioxane, diethylene glycol dimethyl ether, triethylene glycol diethyl ether, and diphenyl ether.

Examples of halogen-based solvents include dichloromethane, chloroform, tetrachloromethane, dichloroethane, 1,1',2,2'-tetrachloroethane, chlorobenzene, and dichlorobenzene.

Examples of amide-based solvents include formamide, dimethylformamide, dimethylacetamide, and N-methylpyrrolidone.

These solvents may be used alone. If desired, they may also be used as a mixed solvent.

In the invention, the solvent is used in an amount within a range of 1 to 1,000 wt% based on 100 wt% of the total of the polymer compound and the cyclic carbodiimide compound. When the amount is less than 1 wt%, the application of the solvent has no significance. There is no particular upper limit on the amount of the solvent to be used. However, in terms of operativity and reaction efficiency, the upper limit is about 1,000 wt%.

In the case where a method in which the polymer compound in solid state is brought into contact with a liquid having dissolved, dispersed, or melted therein the cyclic carbodiimide compound, thereby impregnating the polymer compound with the cyclic carbodiimide compound, is employed, a method in which the polymer compound in solid state is brought into contact with the cyclic carbodiimide compound dissolved in the solvent, a method in which the polymer compound in solid state is brought into contact with an emulsion of the cyclic carbodiimide compound, or the like may be employed. As a method of contact, a method in which the polymer compound is immersed, a method in which the cyclic carbodiimide compound is applied or sprayed to the polymer compound, or the like is preferably employed.

The capping reaction of the cyclic carbodiimide compound of the invention can take place at room temperature

(25°C) to about 300°C. However, in terms of reaction efficiency, the temperature is preferably within a range of 50 to 250°C, more preferably 80 to 200°C, whereby the reaction is further promoted. The reaction easily proceeds at a temperature where the polymer compound is molten. However, in order to prevent the cyclic carbodiimide compound from sublimation, decomposition, or the like, it is preferable to carry out the reaction at a temperature of less than 300°C. The application of the solvent is also effective in reducing the polymer melting temperature and increasing the stirring efficiency.

Although the reaction proceeds rapidly enough in the absence of a catalyst, it is also possible to use a catalyst to promote the reaction. As the catalyst, catalysts used for conventional linear carbodiimide compounds are usable. Examples thereof include alkali metal compounds, alkaline-earth metal compounds, tertiary amine compounds, imidazole compounds, quaternary ammonium salts, phosphine compounds, phosphonium salts, phosphoric acid esters, organic acids, and Lewis acid. They may be used alone, and it is also possible to use two or more kinds. The amount of the catalyst to be added is not particularly limited, but is preferably 0.001 to 1 wt%, more preferably 0.01 to 0.1 wt%, and most preferably 0.02 to 0.1 wt% based on 100 wt% of the total of the polymer compound and the cyclic carbodiimide compound.

The amount of the cyclic carbodiimide compound to be applied is selected such that the amount of carbodiimide groups contained in the cyclic carbodiimide compound is within a range of 0.5 equivalents to 100 equivalents per equivalent of acidic groups. When the amount is less than 0.5 equivalents, the application of the cyclic carbodiimide compound may have no significance. When the amount is more than 100 equivalents, the properties of the substrate may change. From such a point of view, based on the above basis, the amount is preferably within a range of 0.6 to 100 equivalents, more preferably 0.65 to 70 equivalents, still more preferably 0.7 to 50 equivalents, and particularly preferably 0.7 to 30 equivalents.

<Composition Obtained by Mixing Polymer Compound with Cyclic Carbodiimide Compound>

A composition obtained by mixing according to the method mentioned above can basically have the following modes depending on the ratio between the two, the reaction time, and the like.

(1) The composition is made of the following three components:

(a) a compound at least having a ring structure containing one carbodiimide group, with the first nitrogen and second nitrogen thereof being linked together through a linking group;
(b) a polymer compound having an acidic group; and
(c) a polymer compound whose acidic groups are capped with a compound at least having a ring structure containing one carbodiimide group, with the first nitrogen and second nitrogen thereof being linked together through a linking group.

(2) The composition is made of the following two components:

(a) a compound at least having a ring structure containing one carbodiimide group, with the first nitrogen and second nitrogen thereof being linked together through a linking group; and
(c) a polymer compound whose acidic groups are capped with a compound at least having a ring structure containing one carbodiimide group, with the first nitrogen and second nitrogen thereof being linked together through a linking group.

(3) The composition is made of the following component:

(c) a polymer compound whose acidic groups are capped with a compound at least having a ring structure containing one carbodiimide group, with the first nitrogen and second nitrogen thereof being linked together through a linking group.

Here, (3) is not a composition but is a modified polymer compound. However, for convenience, it is referred to as "composition" in the invention.

Each mode is preferable. However, in the case where any unreacted cyclic carbodiimide compound is present in the composition, when the polymer compound undergoes chain scission at the time of melt molding due to some factors, such as the creation of a wet-heat atmosphere, the unreacted cyclic carbodiimide compound reacts with chain ends resulting from the scission, whereby the acidic group concentration can be kept low. Therefore, this mode is particularly preferable.

Incidentally, in the invention, the descriptions "three components", "two components", and "one component"

merely indicate the possible modes of the polymer compound having an acidic group and the cyclic carbodiimide compound in the composition. Needless to say, as long as the object of the invention is not impaired, the addition of any known additives and fillers is not excluded. For example, stabilizers and UV absorbers may be contained.

As stabilizers, those used as stabilizers for ordinary thermoplastic resins are usable. Examples thereof include antioxidants and light stabilizers. By incorporating such agents, a multilayer film having excellent mechanical properties, moldability, heat resistance, and durability can be obtained.

Examples of antioxidants include hindered phenol compounds, hindered amine compounds, phosphite compounds, and thioether compounds.

Examples of hindered phenol compounds include n-octadecyl-3-(3',5'-di-tert-butyl-4'-hydroxyphenyl)-propionate, n-octadecyl-3-(3'-methyl-5'-tert-butyl-4'-hydroxyphenyl)-propionate, n-tetradecyl-3-(3',5'-di-tert-butyl-4'-hydroxyphenyl)-propionate, 1,6-hexanediol-bis[3-(3,5-di-tert-butyl-4-hydroxyphenyl)-propionate], 1,4-butanediol-bis[3-(3,5-di-tert-butyl-4-hydroxyphenyl)-propionate], 2,2'-methylene-bis(4-methyl-tert-butylphenol), triethylene glycol-bis[3-(3-tert-butyl-5-methyl-4-hydroxyphenyl)-propionate], tetrakis[methylene-3-(3',5'-di-tert-butyl-4-hydroxyphenyl)propionate] methane, and 3,9-bis[2-{3-(3-tert-butyl-4-hydroxy-5-methylphenyl)propionyloxy}-1,1-dimethylethyl]2,4,8,10-tetraoxaspiro(5,5)undecane.

Examples of hindered amine compounds include N,N'-bis-3-(3',5'-di-tert-butyl-4'-hydroxyphenyl)propionyl hexamethylenediamine, N,N'-tetramethylene-bis[3-(3'-methyl-5'-tert-butyl-4'-hydroxyphenyl)propionyl]diamine, N,N'-bis [3-(3,5-di-tert-butyl-4-hydroxyphenyl)-propionyl]hydrazine, N-salicyloyl-N'-salicylidenehydrazine, 3-(N-salicyloyl)amino-1,2,4-triazole, and N,N'-bis[2-{3-(3,5-di-tert-butyl-4-hydroxyphenyl)propionyloxy}ethyl]oxyamide. Triethylene glycol-bis [3-{3-tert-butyl-5-methyl-4-hydroxyphenyl)-propionate] and tetrakis[methylene-3-(3',5'-di-tert-butyl-4-hydroxyphenyl) propionate]methane are preferable.

As phosphite compounds, those having at least one P-O bond to an aromatic group are preferable, specific examples thereof including tris(2,6-di-tert-butylphenyl)phosphite, tetrakis(2,6-di-tert-butylphenyl)4,4'-biphenylenephosphite, bis(2,6-di-tert-butyl-4-methylphenyl)pentaerythritol-di-phosphite, 2,2-methylenebis(4,6-di-tert-butylphenyl)octyl phosphite, 4,4'-butylidene-bis(3-methyl-6-tert-butylphenyl-ditridecyl)phosphite, 1,1,3-tris(2-methyl-4-ditridecylphosphite-5-tert-butylphenyl)butane, tris(mixed mono- and di-nonylphenyl)phosphite, tris(nonylphenyl)phosphite, and 4,4'-isopropylidenebis(phenyl-dialkyl phosphite).

In particular, tris(2,6-di-tert-butylphenyl)phosphite, 2,2-methylenebis(4,6-di-tert-butylphenyl)octylphosphite, bis (2,6-di-tert-butyl-4-methylphenyl)pentaerythritol-diphosphite, tetrakis(2,6-di-tert-butylphenyl)4,4'-biphenylenephosphite, and the like can be suitably used.

Specific examples of thioether compounds include dilauryl thiodipropionate, ditridecyl thiodipropionate, dimyristyl thiodipropionate, distearyl thiodipropionate, pentaerythritol-tetrakis(3-laurylthiopropionate), pentaerythritol-tetrakis (3-dodecylthiopropionate), pentaerythritol-tetrakis(3-octadecylthiopropionate), pentaerythritol-tetrakis(3-myristylthiopropionate), and pentaerythritol-tetrakis(3-stearylthiopropionate).

Examples of light stabilizers include oxybenzophenone compounds, cyclic iminoester compounds, benzotriazole compounds, salicylic acid ester compounds, benzophenone compounds, cyanoacrylate compounds, hindered amine compounds, and nickel complex compounds. As a light stabilizer, it is also possible to use a combination of a UV absorber and one that scavenges radicals formed during photo-oxidation.

As UV absorbers, cyclic iminoester compounds, benzophenone compounds, and benzotriazole compounds are preferable because the absorption of visible light can thereby be minimized.

Specific example of useful benzotriazole UV absorbers include, but are not limited to, 2-(2'-hydroxy-5'-methylphenyl)benzotriazole, 2-(2'-hydroxy-3',5'-di-tert-butylphenyl)benzotriazole, 2-(2'-hydroxy-3'-tert-butyl-5'-methylphenyl)benzotriazole, 2-(2'-hydroxy-3',5'-di-tert-butylphenyl)-5-chlorobenzotriazole, 2-(2'-hydroxy-3'-(3",4",5",6"-tetrahydrophthalimidomethyl)-5'-methylphenyl)benzotriazole, 2,2-methylenebis(4-(1,1,3,3-tetramethylbutyl)-6-(2H-benzotriazol-2-yl)phenol), 2-(2'-hydroxy-3'-tert-butyl-5'-methylphenyl)-5-chlorobenzotriazole, 2-(2H-benzotriazol-2-yl)-6-(linear and branched dodecyl)-4-methyl phenol, and a mixture of octyl-3-{3-tert-butyl-4-hydroxy-5-(chloro-2H-benzotriazol-2-yl)phenyl}propionate and 2-ethylhexyl-3-{3-tert-butyl-4-hydroxy-5-(5-chloro-2H-benzotriazol-2-yl)phenyl}propionate. In addition, as commercially available products, TINUVIN 109, TINUVIN 171, TINUVIN 326, and TINUVIN 328 (all manufactured by Ciba Specialty Chemicals) can be suitably used.

Specific examples of cyclic iminoester compounds include 2,2'-bis(3,1-benzoxazin-4-one), 2,2'-p-phenylenebis (3,1-benzoxazin-4-one), 2,2'-m-phenylenebis(3,1-benzoxazin-4-one), 2,2'-(4,4'-diphenylene)bis(3,1-benzoxazin-4-one), 2,2'-(2,6-naphthalene)bis(3,1-benzoxazin-4-one), 2,2'-(1,5-naphthalene)bis(3,1-benzoxazin-4-one), 2,2'-(2-methyl-p-phenylene)bis(3,1-benzoxazin-4-one), 2,2'-(2-nitro-p-phenylene)bis(3,1-benzoxazin-4-one), and 2,2'-(2-chloro-p-phenylene)bis(3,1-benzoxazin-4-one). Among them, 2,2'-p-phenylenebis(3,1-benzoxazin-4-one), 2,2'-(4,4'-diphenylene)bis(3,1-benzoxazin-4-one), and 2,2'-(2,6-naphthalene)bis(3,1-benzoxazin-4-one) are preferable, and 2,2'-p-phenylenebis(3,1-benzoxazin-4-one) is particularly preferable. Cyclic iminoesters may be used alone, and it is also possible to use two or more kinds together.

Such a cyclic iminoester can be produced by various methods disclosed in WO 03/035735, pamphlet. That is,

a method in which an isatoic anhydride is used as a raw material (particularly a method in which a recrystallized isatoic anhydride is used) and a method in which anthranilic acid is used are both usable. Such an acid compounds is allowed to react with a carboxylic acid chloride compound, whereby a cyclic iminoester compound can be obtained. As disclosed in JP-B-62-31027, the product may be subjected to a recrystallization treatment. Such compounds are commercially available as CEi-P (trade name) from Takemoto Oil & Fat and also as CYASORB UV-3638 (trade name) from CYTEC, and easily accessible.

Examples of benzophenone compounds include benzophenone, 2,4-dihydroxybenzophenone, 2,2'-dihydroxybenzophenone, 2,2',4,4'-tetrahydroxybenzophenone, 2-hydroxy-4-methoxybenzophenone, 2,2'-dihydroxy-4,4'-dimethoxybenzophenone, 2,2'-dihydroxy-4,4'-dimethoxy-5-sulfobenzophenone, 2-hydroxy-4-octoxybenzophenone, 2-hydroxy-4-dodecyloxybenzophenone, 2-hydroxy-4-octoxybenzophenone, 2-hydroxy-4-methoxy-5-sulfobenzophenone, 5-chloro-2-hydroxybenzophenone, 2-hydroxy-4-octoxybenzophenone, 2-hydroxy-4-methoxy-2'-carboxybenzophenone, 2-hydroxy-4-(2-hydroxy-3-methyl-acryloxyisopropoxy)benzophenone, 2-hydroxy-4-methoxybenzophenone-5-sulfonic acid hydrate, 2-hydroxy-4-octyloxybenzophenone, 4-benzyloxy-2-hydroxybenzophenone, and 1,4-bis(4-benzoyl-3-hydroxyphenoxy)-butane.

Such compounds are commercially available as SEESORB 107 and SEESORB 106 from Shipro Kasei Kaisha, and easily accessible.

Incidentally, in the case where an aliphatic polyester is employed as the polymer compound having an acidic group, for example, it is preferable that a UV absorber having a maximum absorption at a wavelength of 260 to 320 nm is contained, whereby strength reduction and yellowing after UV irradiation can be simultaneously suppressed. From such a point of view, it is preferable that the UV absorber has a maximum absorption at a wavelength of 270 to 300 nm.

Generally, in many cases, a UV absorber absorbs at a wavelength of 340 to 380 nm. However, when such a UV absorber is used, it is difficult to simultaneously effectively suppress the deterioration of the aliphatic polyester, such as strength reduction and yellowing.

Incidentally, it is possible to use a UV absorber that absorbs at a wavelength of 260 to 320 nm and also absorbs at 340 to 380 nm, and it is also possible to use a UV absorber that absorbs at a wavelength of 260 to 320 nm together with an ordinary UV absorber that absorbs at 340 to 380 nm.

The UV absorber content affects the UV resistance, transparency, and the like of the aliphatic polyester film. When the UV absorber content is too high, the original transparency and the like of the aliphatic polyester film may decrease, and this is thus undesirable. In addition, when the content is too low, the UV resistance effect is not sufficiently exhibited, and the suppressing effects on strength reduction and yellowing tend to decrease. From such a point of view, the UV absorber content is preferably 0.001 to 5 wt%, still more preferably 0.01 to 2 wt%, based on the weight of the film.

Examples of such UV absorbers include salicylic acid derivatives such as phenyl salicylate and p-tert-butylphenyl salicylate; benzophenones such as 2,4-dihydroxybenzophenone, 2-hydroxy-4-methoxybenzophenone, 2,2'-dihydroxy-4-methoxybenzophenone, 2,2'-dihydroxy-4,4'-dimethoxybenzophenone, 2-hydroxy-4-methoxy-2'-carboxybenzophenone, 2-hydroxy-4-n-octoxybenzophenone, 2,2',4,4'-tetrahydroxybenzophenone, 4-dodecyloxy-2-hydroxybenzophenone, and bis(5-benzoyl-4-hydroxy-2-methoxypheny)methane; benzotriazoles such as 2-(2'-hydroxy-5'-methylphenyl) benzotriazole, 2-(2'-hydroxy-3',5'-di-tert-butylphenyl)benzotriazole, 2-(2'-hydroxy-3'-tert-butyl-5'-methylphenyl)-5-chlorobenzotriazole, 2-(2'-hydroxy-3',5'-di-tert-butylphenyl)-5-chlorobenzotriazole, 2-(2'-hydroxy-5'-tert-octylphenyl)benzotriazole, 2-(2'-hydroxy-3',5'-di-tert-amylphenyl)benzotriazole, 2-[2'-hydroxy-3'-(3",4",5",6"-tetrahydrophthalimidomethyl)-5'-methylphenyl]benzotriazole, and 2,2'-methylenebis[4-(1,1,3,3-tetramethylbutyl)-6-(2H-benzotriazol-2-yl)phenol]; and oxanilide derivatives known under the trade names Sanduvor EPU, Sanduvor VSU, etc. Examples also include 2-ethoxy-5-tert-butyl-2'-ethyloxalic acid bisanilide, 2-ethoxy-2-ethyloxalic acid bisanilide, 2,4-di-tert-butylphenyl-3,5-di-tert-butyl-4-hydroxybenzoate, 2-ethylhexyl-2-cyano-3,3-diphenyl acrylate, 1,3-bis-(4-benzoyl-3-hydroxyphenoxy)-2-propyl acrylate, 1,3-bis-(4-benzoyl-3-hydroxyphenoxy)-2-propyl methacrylate, 2-hydroxy-4-methoxybenzophenone-5-sulfonic acid, methyl o-benzoylbenzoate, ethyl-2-cyano-3,3-diphenyl acrylate, 2-hydroxy-4-benzyloxy benzophenone, nickel dibutyldithiocarbamate, nickel-thiobisphenol composites, nickel-containing organic light stabilizers, barium-, sodium-, or phosphorus-containing organic/inorganic composites, semicarbazone light stabilizers, zinc oxide UV stabilizers and synergizing agents known under the trade name Sanshade, etc., and hindered amines such as bis(2,2,6,6-tetramethyl-4-piperidyl)sebacate, bis(1,2,2,6,6-pentamethyl-4-piperidyl)sebacate, 1-[2-{3-(3,5-di-tert-4-hydroxy-phenyl)propionyloxy}ethyl]-4-{3-(3,5-di-tert-butyl-4-hydroxyphenyl)propionyloxy}-2,2,6,6-tetramethylpiperidine, 8-benzyl-7,7,9,9-tetramethyl-3-octyl-1,2,3-triazaspiro[4,5]undecane-2,4-dione, 4-benzoyloxy-2,2,6,6-tetramethylpiperidine, dimethyl succinate-1-(2-hydroxyethyl)-4-hydroxy-2,2,6,6-tetramethylpiperidine polycondensates, poly[6-(1,1,3,3-tetramethylbutyl)imino-1,3,5-triazine-2,4-diyl][(2,2,6,6-tetramethyl-4-piperidyl)imino]hexamethylene[(2,2,6,6-tetramethyl-4-piperidyl)imino]], 2-(3,5-di-tert-butyl-4-hydroxybenzyl)-2-n-butylmalonic acid bis(1,2,2,6,6-pentamethyl-4-piperidyl), tetrakis(2,2,6,6-tetramethyl-4-piperidyl)1,2,3,4-butanetetracarboxylate, condensates of 1,2,3,4-butanetetracarboxylic acid, 1,2,2,6,6-pentamethyl-4-piperidinol, and tridecyl alcohol, condensates of 1,2,3,4-butanetetracarboxylic acid, 2,2,6,6-tetramethyl-4-piperidinol, and tridecyl alcohol, condensates of 1,2,3,4-butanetetracarboxylic acid, 1,2,2,6,6-pentamethyl-4-piperidinol, and (β,β,β',β-tetramethyl-3,9-(2,4,8,10-tetraoxaspiro[5,5]undecane)diethanol, condensates of 1,2,3,4-butanetetracarboxylic acid, 2,2,6,6-tetramethyl-4-piperidinol, and (β,β,β', (β'-tetramethyl-3,9-(2,4,8,10-tetraoxaspiro[5,5]undecane)diethanol, 1,2,2,6,6-pentamethyl-4-piperidyl methacrylate, and 2,2,6,6-tetramethyl-4-piperidyl methacrylate. Among them, hydroxybenzophenones such as "Uvinul" 3050 and "Uvinul" 3049 and triazines such as "TINUVIN" 1577F and "ADEKASTAB" LA-46 are particularly preferable in terms of strength retention and coloring after UV irradiation.

In addition, in order to provide a film having excellent transparency while ensuring scratch resistance, it is also preferable that lubricant particles having a refractive index N of 1.40 to 1.55 are added. When lubricant particles having a refractive index within the above range are added, excellent handleability and scratch resistance can be achieved without impairing transparency as an optical base film. Thus, for example, an optical aliphatic polyester film suitable as an optical film of a touch panel or the like can be provided. When the refractive index is less than 1.40 or more than 1.55, the refractive index difference from the refractive index of the aliphatic polyester resin increases, whereby transparency decreases. The range of the refractive index N is preferably 1.42 to 1.53, and still more preferably 1.45 to 1.50.

Examples of usable lubricant particles having a refractive index N of 1.40 to 1.55 include inorganic lubricant particles such as calcium carbonate, magnesium carbonate, calcium oxide, zinc oxide, magnesium oxide, silicon oxide, sodium silicate, aluminum oxide, iron oxide, zirconium oxide, barium sulfate, titanium oxide, tin oxide, antimony trioxide, carbon black, and molybdenum disulfide; and organic lubricant particles such as crosslinked acrylic polymers, crosslinked styrene polymers, silicone resins, fluorocarbon resins, benzoguanamine resins, phenolic resins, and nylon resins. Among them, in terms of refractive index, handleability, and scratch resistance, it is preferable that the lubricant particles are at least one kind selected from the group consisting of spherical silica particles, bulk porous silica particles, spherical silicone particles, and crosslinked polymer particles.

It is preferable that the lubricant particles have an average particle size of 0.001 to 5 μm. The average particle size is preferably within a range of 0.01 μm to 2 μm, still more preferably 0.05 to 1 μm, and particularly preferably 0.1 to 0.3 μm. When such an average particle size is employed, the improving effects on handleability and scratch resistance can be enhanced. In addition, it is preferable that the lubricant particle content is 0.001 wt% to 1.0 wt% based on the weight of the film. The lubricant particle content is preferably 0.001 wt% to 0.5 wt%, and preferably 0.005 to 0.2 wt%. When such an average particle size is employed, the improving effects on handleability and scratch resistance can be enhanced. When the average particle size of the lubricant particles is less than 0.01 μm or their content is less than 0.001 wt%, the improving effect on film windability is insufficient. Meanwhile, when the average particle size of the lubricant particles is more than 5 μm or their content is more than 10 wt%, the lubricant particles cause significant deterioration in optical properties, and the improving effect on film transparency tends to decrease. Incidentally, it is preferable that the film has a light transmittance of 70% or more. When the light transmittance is lower, the performance is insufficient for optical applications.

In terms of balancing the slidability and optical properties of the film, it is preferable that the lubricant particles are spherical particles in which the ratio between the major-axis size and minor-axis size thereof is 1.2 or less, and still more preferably 1.1 or less (hereinafter sometimes referred to as perfectly spherical particles). In addition, it is preferable that the inert particles have a sharp particle size distribution with, for example, a relative standard deviation of less than 0.3, and still more preferably less than 0.2.

When particles having a large relative standard deviation are used, the frequency of coarse particles increases, which may cause optical defects. Here, the average particle size, particle size ratio, and relative standard deviation of inert particles are calculated as follows. First, an extremely thin metal layer is sputtered on the particle surface to impart electrical conductivity. The major-axis size, minor-axis size, and area-equivalent circle diameter are determined from an image enlarged 10,000 to 30,000 times under an electron microscope, and the values are then inserted into the following equations.

Average particle size = the total area-equivalent circle diameter of measured particles/the number of measured particles

Particle size ratio = the average major-axis size of particles/the average minor-axis size of the particles

In the invention, the above lubricant particles may be used alone, and it is also possible to use two or more kinds.

<Film Containing Composition Obtained by Mixing Polymer Compound with Cyclic Carbodiimide Compound>

The film of the invention at least contains the above composition obtained by mixing a polymer compound with a cyclic carbodiimide compound. Here, the content of the composition in the film is not particularly limited as long as the composition is contained. The content may be suitably selected according to the use to which the film is to be put, the kind of polymer, the kinds of other components containing no cyclic carbodiimide compound, etc. The content may usually be 10 wt% or more, preferably 50 wt% or more, and particularly 95 wt% or more. In the formation of a film, a molding technique such as extrusion molding or cast molding may be used. For example, an extruder or the like equipped with an I-die, a T-die, a circular die, or the like may be used to form an unstretched film by extrusion molding.

In the case where a molded article is obtained by extrusion molding, a molded article is produced by extruding a molten film onto a cooling drum, and then bringing the film into close contact with the rotating cooling drum for cooling.

At this time, as a method for bringing a molten film into close contact with a cooling drum, the temperature of a casting drum may be raised to cause sticking, and it is also possible to use nipping with rollers, electrostatic adhesion, or like technology. In the case where electrostatic adhesion is used, an electrostatic adhesion agent such as quaternary phosphonium sulfonate is incorporated, and an electrical charge is easily applied to the molten surface of a film from an electrode in a non-contact manner, thereby bringing the film into close contact with a rotating cooling drum. As a result, an unstretched film having few surface defects can be obtained.

It is also possible to prepare a solution using a solvent that dissolves a resin composition, such as chloroform or methylene dichloride, followed by cast drying and solidification, thereby forming an unstretched film by cast molding.

The unstretched film can be longitudinally uniaxially stretched in the machine flow direction (hereinafter sometimes abbreviated as length direction, longitudinal direction, or MD) and transversely uniaxially stretched in the direction perpendicular to the machine flow direction (hereinafter sometimes abbreviated as width direction, transverse direction, and TD). It is also possible to perform stretching by a successive biaxial stretching method using roll stretching and tenter stretching, a simultaneous biaxial stretching method using tenter stretching, a biaxial stretching method using tubular stretching, or the like, thereby forming a biaxially stretched film.

It is preferable that the draw ratio is 0.1% or more and 1,000% or less in at least one direction, still more preferably 0.2% or more and 600% or less, and particularly preferably 0.3% or more and 300% or less. When designed within this range, a stretched film that is preferable in terms of birefringence, heat resistance, and strength is obtained.

Provided that Tm represents the crystal melting temperature of stereocomplex-phase polylactic acid, when the film after stretching is heat-treated at a temperature lower than Tm, the thermal shrinkage rate can be suitably reduced.

It is more preferable that heat setting during film formation is performed at a temperature as high as possible because the thermal shrinkage rate at 90°C can thereby be reduced to 1% or less. The heat treatment temperature is preferably within a range of 90 to Tm (°C), still more preferably 100 to (Tm - 10) (°C), and more preferably 120 to (Tm - 20) (°C).

If desired, the thus-obtained stretched film may be subjected to a surface activation treatment by a conventionally known method, such as plasma treatment, amine treatment, or corona treatment.

Films having improved wet heat resistance obtained by the invention are useful as polarizing plate protection films for use in liquid crystal displays and the like, other optical films, films for solar cell back surface protection films, films for electrical insulation, multifilms for agriculture, films for labels, films for wrapping, films for capacitors (e.g., films having a thickness of 3 μm or less), films for printer ribbons (e.g., films having a thickness of about 5 μm), films for thermal mimeographing, magnetic recording films (e.g., for QIC tapes: 1/4-inch film tapes for computer recording), non-glare films (e.g., films having a thickness of 50 μm or less), antireflection films, reflection films, light diffusion films, retardation films, transparent conductive films, brightness-improving films, protection films, release films, gas barrier films, water-vapor barrier films, films for dry photoresists, etc. Hereinafter, some of these applications will be described in further detail as examples.

<Film for a Solar Cell Back Surface Protection Film>

In the case where the film of the invention is used as a solar cell back surface protection film, it is preferable that a polyester containing an aromatic dicarboxylic acid component and a diol component is used as the polymer compound having an acidic group.

Examples of aromatic dicarboxylic acids include terephthalic acid, isophthalic acid, 2,6-naphthalenedicarboxylic acid, and 4,4'-diphenyldicarboxylic acid. Examples of diol components include ethylene glycol, 1,4-butanediol, 1,4-cyclohexanedimethanol, and 1,6-hexanediol.

Particularly preferred examples of polyesters include polyethylene terephthalate and polyethylene-2,6-naphthalenedicarboxylate. The polyester may be a homopolymer, and, as long as the object of the inveniton is not impaired, may also be a copolymer or a blend thereof.

The cyclic carbodiimide compound content of the film in the invention is preferably such that the cyclic carbodiimide compound is contained in an amount of 0.001 to 5 wt% based on the weight of the polyester. When the content is within this range, the stability of the film to moisture and hydrolysis can be suitably increased. In addition, the heat-resistance-improving effect can be enhanced. From such a point of view, the cyclic carbodiimide compound content is more preferably within a range of 0.01 to 5 wt%, and still more preferably 0.1 to 4 wt%. When the content is lower than this range, the effect of the cyclic carbodiimide compound may not be effectively observed, while even when a large amount exceeding this range is applied, no further improvement of stability to hydrolysis is expected.

The carboxyl group concentration of the polyester composition is preferably within a range of 0 to 30 eq/ton, more preferably 0 to 10 eq/ton, still more preferably 0 to 5 eq/ton, and particularly preferably 0 to 1 eq/ton based on the polyester. The carboxyl group concentration can be easily reduced by the use of a cyclic carbodiimide compound.

In the invention, as long as the object of the invention is not impaired, the polyester composition may contain other resin components in addition to the polyester and the cyclic carbodiimide compound.

Specific examples of other resin components include polyolefins such as polyethylene and polypropylene, styrene resins such as polystyrene and styrene-acrylonitrile copolymers, thermoplastic resins such as polyamides, polyphenylene sulfide resins, polyetheretherketone resins, polyesters, polysulfone, polyphenylene oxide, polyimides, polyetherimide, and polyacetal, and thermosetting resins such as phenolic resins, melamine resins, silicone resins, and epoxy resins. One or more kinds thereof may be added.

Further, as long as the effect of the invention is not significantly impaired, any additives may be incorporated into the polyester composition in the invention according to each purpose. Kinds of additives are not particularly limited as long as they are additives generally incorporated into resins or rubber-like polymers.

Examples of additives include inorganic fillers and pigments such as iron oxide. Examples also include lubricants such as stearic acid, behenic acid, zinc stearate, calcium stearate, magnesium stearate, and ethylene bis stearamide; release agents; softeners and plasticizers such as paraffinic process oil, naphthenic process oil, aromatic process oil, paraffin, organic polysiloxane, and mineral oil; and antioxidants such as hindered phenol antioxidants and phosphorus heat stabilizers. Examples also include hindered amine light stabilizers, benzotriazole UV absorbers, benzophenone UV absorbers, cyclic iminoester UV absorbers, triazine UV absorbers, flame retardants, and antistatic agents.

Examples further include reinforcing agents such as organic fibers, glass fibers, carbon fibers, and metal whiskers, colorants, and electrostatic adhesion improvers. Mixtures thereof are also mentioned.

The polyester composition in the invention can be produced by a known method. For example, a polyester, a cyclic carbodiimide compound, and optionally other components mentioned above are added and melt-kneaded using a melt-kneader such as single-screw extruder, twin-screw extruder, Banbury mixer, Brabender, or like kneader, whereby the polyester composition can be produced. Among them, in the invention, it is preferable that the polyester composition is obtained by melt-kneading a polyester and a cyclic carbodiimide compound at a temperature at which the polyester melts. The melt-kneading temperature is 200 to 300°C, for example. During melt-kneading, for example, it is possible to employ a method in which the components are mixed in a tumbler mixer or a Henschel mixer and then the components are kneaded using an extruder or a roll. Incidentally, the cyclic carbodiimide compound may also be added to the molten polyester at the final stage of polyester polymerization to thereby obtain the polyester composition.

In addition, a film for a solar cell back surface protection film can be produced as follows. That is, the polyester composition containing a cyclic carbodiimide compound is melt-extruded to form a film, and cooled and solidified on a casting drum to form an unstretched film. The unstretched film is stretched at a temperature from Tg to (Tg + 60)°C (Tg is the glass transition temperature of the polyester composition) in MD at once or in two or more separate stages to a total draw ratio of 3 to 6, and then stretched at a temperature from Tg to (Tg + 60)°C in TD to a draw ratio of 3 to 5, optionally followed by a heat treatment at 180°C to 255°C for 1 to 60 seconds; the film can thus be obtained.

Stretching in MD and TD may be sequential biaxial stretching or simultaneous biaxial stretching. In order to increase dimensional stability during heating, it is possible to use the method shown in JP-A-57-57628 in which a film is shrunk in the longitudinal direction in a heat treatment process, for example, or the method shown in JP-A-1-275031 in which a hanging film is subjected to a relaxation heat treatment, for example. The thickness of the resulting biaxially oriented film is preferably 25 to 300 μm, and still more preferably 50 to 250 μm.

Incidentally, the film for a solar cell back surface protection film may include a highly adhesive coating film. The highly adhesive coating film can be provided by applying, to a stretchable polyester film, an aqueous liquid containing a component that forms a film of a crosslinking-component-containing acrylic resin or polyester resin, followed by drying, stretching, and heat-treating. In the case where a coating film is provided, it is preferable that the coating film has a thickness of 0.01 to 1 μm.

If desired, the thus-obtained film may be subjected to a surface activation treatment by a conventionally known method, such as plasma treatment, amine treatment, or corona treatment.

The intrinsic viscosity (measured using o-chlorophenol at a temperature of 35°C) of the obtained film for a solar cell back surface protection film is preferably within a range of 0.60 to 1.00 dl/g, and still more preferably 0.70 to 0.90 dl/g. When the intrinsic viscosity is less than 0.60 dl/g, mechanical properties deteriorate. In addition, the durability-improving effect as a film for a solar cell back surface protection film tends to decrease. Meanwhile, when the intrinsic viscosity is more than 1.00 dl/g, the melt extrusion load increases, and productivity decreases.

In addition, in terms of maintaining excellent hydrolysis resistance, the plane orientation coefficient fn of the film for a solar cell back surface protection film is preferably 0.15 to 0.30, still more preferably 0.16 to 0.25. When fn is less than 0.15, the durability-improving effect of the film tends to decrease, leading to a significant reduction in the life of the solar cell back surface protection film. Meanwhile, when fn is more than 0.30, the film-forming properties become unstable, and this is thus industrially impractical. Incidentally, the plane orientation coefficient fn is a numerical value calculated from the refractive index of a film measured using an Abbe refractometer as mentioned below.

A plane orientation coefficient within the above range can be achieved by controlling the film draw ratio in the length or width direction, the stretching temperature, and the stretching rate, as well as the heat treatment temperature and the heat treatment time.

It is preferable that the film for a solar cell back surface protection film has an elongation retention of 50% or

more after aging for 3000 hours in an environment with a temperature of 85°C and a humidity of 85% RH. Aging for 3000 hours in an environment with a temperature of 85°C and a humidity of 85% RH is one of accelerated tests to check hydrolyzability corresponding nearly to 30-year outdoor exposure. When the elongation retention is 50% or more, deterioration due to the lack of hydrolysis resistance is unlikely to occur. Such a film can be used for a long period of time as a solar cell back surface protection film, and thus is preferable. An elongation retention of 50% or more can be achieved when the composition of the resin forming the film and also the film-forming conditions, intrinsic viscosity, and plane orientation coefficient of the film are within the ranges of the invention.

It is preferable that the film for a solar cell back surface protection film has an elongation-at-break retention of 50% or more after a heat treatment at 180°C for 500 hours. This mode indicates that heat resistance is excellent. When used for a solar cell back surface protection film, such a film can be used over a long period of time even in a high-temperature environment and thus is preferable.

In addition, it is preferable that the film for a solar cell back surface protection film is a white film because such a film can reflect sunlight to increase the efficiency of power generation.

The white film is preferably a film having a reflectance of 30% or more at a wavelength $\lambda$ of 550 nm, more preferably a reflectance of 40% or more, and still more preferably a reflectance of 50% or more. Reflectance herein is a value of reflectance to light having a wavelength of 550 nm measured using a spectrophotometer ("U-4000" manufactured by Hitachi Instruments Service) equipped with an integrating sphere (barium sulfate white plate is taken as 100%).

In the case where the film is colored white, preferably, particles of titanium oxide, silica, alumina, calcium carbonate, barium sulfate, or the like (white additive) may be added in an amount of, for example, preferably 3 to 45 wt%, more preferably 5 to 20 wt%, based on the weight of the polyester film. Further, in order to increase whiteness, it is effective to use a fluorescent brightener such as thiophenediyl. As another technique, it is also possible to form microbubbles inside the film.

It is preferable that such particles have an average particle size of 0.1 μm or more and 5 μm or less. The average particle size is more preferably 0.3 μm or more, and still more preferably 0.6 μm or more, while more preferably 3 μm or less, and still more preferably 1.4 μm or less. When the average particle size is too small, it is difficult to obtain a white film. Meanwhile, when it is too large, breakage is likely to occur during film formation, or the particles are likely to fall down during processing or the like. As a result, defects such as process contamination tend to occur.

In addition, for the improvement of hiding properties or in terms of design, the film may also be colored black or other colors, for example. For this purpose, a dye and/or a pigment may also be added.

The film for a solar cell back surface protection film may be a single-layer film. Alternatively, it is also possible that the film is laminated with other layers or that the films of the invention are laminated together, forming a laminate film.

The laminate film may be, for example, a two-layer laminate film of A/B, a three-layer laminate film of A/B/A, or a laminate film including still more layers.

In the case where the film for a solar cell back surface protection film is a laminate film, it is not necessarily required that each layer satisfies the conditions of the invention, and it is neccessary that any of the layers satisfies the conditions.

The film for a solar cell back surface protection film alone, or alternatively two or more such films laminated together, may be used as a solar cell back surface protection film. The film may also be laminated to a different transparent polyester film in order to improve insulation properties, laminated to a highly reflective white film in order to increase the efficiency of electric power conversion in the element, or laminated to a film made of a weather-resistant resin such as polyvinyl fluoride in order to improve weatherability, for example, and thus used as a solar cell back surface protection film.

In the application as a solar cell back surface protection film, it is preferable that a water-vapor barrier layer is laminated to impart water-vapor barrier properties. It is preferable that the solar cell back surface protection film with such a configuration has a water vapor permeability of 5 g/($m^2$/24 h) or less as measured in accordance with JIS Z0208-1973.

As such a water-vapor barrier layer, a film or foil having water-vapor barrier properties may be used. Examples of films include polyvinylidene chloride films, films coated with polyvinylidene chloride, films coated with polyvinylidene fluoride, silicon oxide deposition films, aluminum oxide deposition films, and aluminum deposition films. Examples of foils include aluminum foils and copper foils.

The film or foil may be used in such a state that it is laminated to the other side of the film for a solar cell back surface protection film of the invention opposite to the surface having EVA (ethylene-vinyl acetate copolymer) adhering thereto, or another film is further laminated to the outer side thereof to sandwich the film or foil between films.

<White Film (with Filler)>

In the case where the film of the invention is used as a white film, it is possible to employ a technique in which a filler is added to the film.

Examples of fillers include organic fine powders and inorganic fine powders. As an organic fine powder, it is

preferable to use at least one member selected from cellulose powders such as wood powder and pulp powder, polymer beads, polymer hollow particles, and the like. As an inorganic fine powder, it is preferable to use at least one member selected from calcium carbonate, magnesium carbonate, barium carbonate, magnesium sulfate, barium sulfate, calcium sulfate, zinc oxide, magnesium oxide, calcium oxide, titanium oxide, alumina, aluminum hydroxide, hydroxyapatite, silica, mica, talc, kaolin, clay, glass powder, asbestos powder, zeolite, silicic acid, white clay, and the like. In terms of enhancing the reflectance-improving effect of the resulting film, those having a large refractive index difference from the composition forming the film are preferable, that is, inorganic fine powders are preferable. As inorganic fine powders, those having a high refractive index are preferable. Specifically, for example, in the case where an aliphatic polyester resin is used, it is still more preferable to use at least one member selected from the group consisting of calcium carbonate, barium sulfate, titanium oxide, and zinc oxide and having a refractive index of 1.6 or more. Among these, it is particularly preferable to use titanium oxide. When titanium oxide is used, high reflective performance can be imparted to the film with a smaller loading, and also a film that is thin but has high reflective performance can be obtained.

Of titanium oxides, it is particularly preferable to use high-purity titanium oxide having high purity. High-purity titanium oxide herein is titanium oxide having low visible-light absorption capability and containing small amounts of coloring elements such as vanadium, iron, niobium, copper, and manganese. As used herein, titanium oxide having a vanadium content of 5 ppm or less is referred to as high-purity titanium oxide. In terms of reducing the light absorption capability of high-purity titanium oxide, it is preferable that the amounts of coloring elements such as iron, niobium, copper, and manganese contained in the titanium oxide are also small.

As titanium oxide, crystalline titanium oxide such as anatase-type titanium oxide or rutile-type titanium dioxide is mentioned, for example. In terms of increasing the refractive index difference from a polymer, it is preferable that titanium oxide has a refractive index of 2.7 or more. For example, it is preferable to use titanium oxide having a rutile-type crystal form.

It is also possible to use a combination of an inorganic fine powder and an organic fine powder as a filler. In addition, several kinds of fillers may be used together. For example, it is possible to use titanium oxide together with a different filler or use high-purity titanium oxide together with a different filler.

In addition, in order to improve the dispersibility of the filler in a polymer, it is possible to use a filler surface-treated with a silicone compound, a polyalcohol compound, an amine compound, fatty acid, a fatty acid ester, or the like. For example, titanium oxide may be surface-treated to improve the dispersibility of the titanium oxide in an aliphatic polyester resin and also to suppress the photocatalytic activity of the titanium oxide. As a surface-treating agent, for example, it is possible to use at least one kind of inorganic compound selected from the group consisting of alumina, silica, zirconia, and the like or at least one kind of organic compound selected from the group consisting of siloxane compounds, silane coupling agents, polyols, and polyethylene glycols. In addition, it is also possible to use a combination of such an inorganic compound and such an organic compound.

The average particle size of the filler is preferably 0.05 μm or more and 15 μm or less, and more preferably 0.1 μm or more and 10 μm or less. When the filler has an average particle size of 0.05 μm or more, dispersibility in the film is excellent, and a homogeneous film can be obtained. In addition, when the average particle size is 15 μm or less, coarse voids are not formed, and the reflectance-improving effect can be enhanced.

In addition, the average particle size of high-purity titanium oxide is preferably 0.1 μm or more and 1 μm or less, and still more preferably 0.2 μm or more and 0.5 μm or less. When the average particle size of high-purity titanium oxide is 0.1 μm or more, dispersibility in a composition is excellent, and a homogeneous film can be obtained. In addition, when the average particle size of high-purity titanium oxide is 1 μm or less, a dense interface is formed between an aliphatic polyester resin and titanium oxide, whereby the reflectance-improving effect can be enhanced.

It is preferable that the filler is dispersed and incorporated into an aliphatic polyester resin. In terms of enhancing the reflectance-improving effect of the film and also increasing mechanical physical properties, productivity, etc., the filler content of the white film is preferably 10 wt% or more and 60 wt% or less, still more preferably 10 wt% or more and less than 55 wt%, and particularly preferably 20 wt% or more and 50 wt% or less based on the below-mentioned resin composition for forming a white film. When the filler content is 10 wt% or more, the area of the interface between the aliphatic polyester resin and the filler can be sufficiently ensured, and the reflectance-improving effect can be enhanced. In addition, when the filler content is 60 wt% or less, mechanical properties necessary for the film can be ensured.

It is preferable that a composition for forming the white film of the invention contains an aliphatic polyester resin, a filler, and a cyclic carbodiimide compound as components.

In addition, it is preferable that polylactic acid, particularly polylactic acid forming a stereocomplex-phase crystal, is used as the aliphatic polyester resin, and it is also preferable that the stereocomplex crystallinity (S) of the resin composition measured by DSC is 80% or more. When the stereocomplex crystallinity is 80% or more, the thermal shrinkage rate of the resulting film at 90°C or 120°C can be reduced. In addition, the heat-resistance-improving effect can be enhanced. The stereocomplex crystallinity of the resin composition is more preferably 90% or more, and still more preferably 95% or more. It is particularly preferable that the stereocomplex crystallinity is 100%.

In the invention, it is preferable that the cyclic carbodiimide compound content of the resin composition is 0.001

to 5 wt% based on the weight of the aliphatic polyester resin. When the content is within this range, the stability of the resin composition and a film made thereof to moisture and hydrolysis can be suitably increased. In addition, heat resistance can be increased. In particular, resistance to thermal degradation over a long period of time can be increased. From such a point of view, the cyclic carbodiimide compound content is more preferably within a range of 0.01 to 5 wt%, and still more preferably 0.1 to 4 wt%. When the content is lower than this range, the effect of the cyclic carbodiimide compound may not be effectively observed, while even when a large amount exceeding this range is applied, no further improvement of effects on stability to hydrolysis, etc., is expected.

In the case where the aliphatic polyester resin contains polylactic acid, the lactide content thereof is preferably within a range of 0 to 1,000 ppm, more preferably 0 to 200 ppm, and still more preferably 0 to 100 ppm based on the weight of the aliphatic polyester resin. A lower lactide content is more desirable in terms of the physical properties of the resin composition, such as hue and stability. However, the application of excessive reduction is not expected to improve the physical properties any further, and may be undesirable in terms of cost.

In addition, the carboxyl group concentration of the resin composition is preferably within a range of 0 to 30 eq/ton, more preferably 0 to 10 eq/ton, still more preferably 0 to 5 eq/ton, and particularly preferably 0 to 1 eq/ton based on the weight of the aliphatic polyester resin. The carboxyl group concentration can be easily reduced by the use of a cyclic carbodiimide compound.

In addition, as long as the object of the invention is not impaired, the resin composition may contain other resin components in addition to the aliphatic polyester resin, the filler, and the cyclic carbodiimide compound.

Specific examples of other resin components include acrylic resins, polyolefins such as polyethylene and polypropylene, styrene resins such as polystyrene and styrene-acrylonitrile copolymers, thermoplastic resins such as polyamides, polyphenylene sulfide resins, polyetheretherketone resins, polyesters, polysulfone, polyphenylene oxide, polyimides, polyetherimide, and polyacetal, and thermosetting resins such as phenolic resins, melamine resins, silicone resins, and epoxy resins. One or more kinds thereof may be added.

Further, as long as the effect of the invention is not impaired, any additives may be incorporated into the resin composition according to each purpose. Kinds of additives are not particularly limited as long as they are additives generally incorporated into resins or rubber-like polymers.

Examples of additives include inorganic fillers and pigments such as iron oxide. Examples also include lubricants such as stearic acid, behenic acid, zinc stearate, calcium stearate, magnesium stearate, and ethylene bis stearamide; release agents; softeners and plasticizers such as paraffinic process oil, naphthenic process oil, aromatic process oil, paraffin, organic polysiloxane, and mineral oil; and antioxidants such as hindered phenol antioxidants and phosphorus heat stabilizers. Examples also include hindered amine light stabilizers, benzotriazole UV absorbers, benzophenone UV absorbers, cyclic iminoester UV absorbers, triazine UV absorbers, flame retardants, and antistatic agents.

Examples further include reinforcing agents such as organic fibers, glass fibers, carbon fibers, and metal whiskers, colorants, and electrostatic adhesion improvers. Mixtures thereof are also mentioned.

The resin composition can be produced by a known method. For example, an aliphatic polyester resin, a filler, a cyclic carbodiimide compound, and optionally other components mentioned above are added and melt-kneaded using a melt-kneader such as single-screw extruder, twin-screw extruder, Banbury mixer, Brabender, or like kneader, whereby the resin composition can be produced.

Incidentally, it is preferable to blend an aliphatic polyester resin and a cyclic carbodiimide compound first, and then blend the mixture and a filler. This is because the hydrolysis resistance of the aliphatic polyester resin can thereby be improved at an early stage.

Hereinafter, an example of a method for producing a white film will be described, but the method is not limited thereto.

A white film is obtained by shaping the resin composition mentioned above into a film. For such shaping, for example, it is possible to employ a molding technique such as extrusion molding using an extruder or the like equipped with a T-die, a circular die, or the like, cast molding, etc. In the invention, it is preferable to obtain an unstretched film by extrusion molding.

In the case where an unstretched film is obtained by extrusion molding, it is possible to feed a material, which is previously obtained by melt-kneading an aliphatic polyester resin, a filler, and a cyclic carbodiimide compound, into an extruder. It is also possible to feed each component into an extruder, followed by melt-kneading during extrusion molding.

An unstretched film can be produced by extruding a molten film onto a cooling drum, and then bringing the film into close contact with the rotating cooling drum for cooling. At this time, it is preferable that an electrostatic adhesion agent such as quaternary phosphonium sulfonate is incorporated into the molten film, and an electrical charge is applied to the film from an electrode in a non-contact manner, thereby bringing the molten film into close contact with the rotating cooling drum. As a result, an unstretched film having few surface defects can be obtained.

It is also preferable that the white film is a biaxially stretched film. The method for biaxial stretching is not particularly limited, but it is preferable to employ the following method.

That is, the unstretched film obtained above is heated by roll heating, infrared heating, or the like, and longitudinally stretched in MD to form a longitudinally stretched film. It is preferable that this stretching is performed utilizing the difference in peripheral speed between two or more rolls. It is preferable that the longitudinal stretching temperature is from the glass transition temperature (Tg) of the aliphatic polyester resin to (Tg + 70)°C. Although this depends on the characteristics required by the intended use, the longitudinal draw ratio is preferably 2.2 to 4.0, and still more preferably 2.3 to 3.9. When such stretching conditions are employed, moderate voids are formed in the film, whereby the reflectance-improving effect can be enhanced. When the draw ratio is less than 2.2, the film has an increased variation in thickness, and an excellent film cannot be obtained, while when it is more than 4.0, breakage is likely to occur during film formation; therefore, this is undesirable.

Subsequently, the film after longitudinal stretching is transversely stretched in TD, and then successively subjected to a heat treatment (heat setting) and a heat relaxation treatment to form a biaxially oriented film. These treatments may be performed while running the film. The transverse stretching treatment is started at a temperature higher than the glass transition temperature (Tg) of the aliphatic polyester resin. The treatment is then continued while raising the temperature to a temperature that is (5 to 70)°C higher than Tg. The temperature rise in the transverse stretching process may be continuous or stepwise (sequential), but the temperature is usually raised sequentially. For example, the transverse stretching zone of a tenter is divided into several sections along the film running direction, and a heating medium having a predetermined temperature is poured into each zone to raise the temperature. Although this depends on the characteristics required by the intended use, the transverse draw ratio is preferably 2.5 to 4.5, and still more preferably 2.8 to 3.9. When such stretching conditions are employed, moderate voids are formed in the film, whereby the reflectance-improving effect can be enhanced. When the draw ratio is less than 2.5, the film has an increased variation in thickness, and an excellent film cannot be obtained, while when it is more than 4.5, breakage is likely to occur during film formation.

It is preferable that the film after transverse stretching is, while holding both ends, heat-treated at a temperature of (Tm - 100) to (Tm - 20)°C, preferably at a temperature of (Tm - 80) to (Tm - 20), at a constant width or under 10% or less width reduction, thereby reducing the thermal shrinkage rate. Tm herein is the melting point (°C) of the aliphatic polyester resin. A temperature higher than this range provides a film with poor flatness and a great variation in thickness, and thus is undesirable. In addition, a heat treatment temperature of less than (Tm - 100)°C may lead to a large thermal shrinkage rate. In addition, by such a heat treatment, moderate voids are formed in the film, whereby the reflectance-improving effect can be enhanced.

In addition, after heat setting, in the course of bringing the film temperature back to room temperature (25°C), in order to adjust the amount of thermal shrinkage in the longitudinal direction in a temperature range around (Tm - 100) to (Tm - 20)°C, for example, the held ends of the film may be cut off in the above temperature range to adjust the take-up rate in the longitudinal direction of the film, thereby relaxing the film in the longitudinal direction (longitudinal relaxation). As a specific relaxation method, the speed of the rolls on the exit side of the tenter is adjusted relative to the film line speed of the tenter. The percentage of relaxation herein (longitudinal relaxation rate, unit: %) is determined as "difference in film speed before and after relaxation/film speed before relaxation x 100", and is preferably 0.1 to 1.5%, still more preferably 0.2 to 1.2%, and particularly preferably 0.3 to 1.0%. When the speed on the exit side of the tenter is reduced relative to the film line speed of the tenter, the thermal shrinkage rate in the longitudinal direction tends to decrease.

In addition, with respect to the film transverse direction, in the process before the film ends are cut off, the width of the clip holding the film may be increased or decreased to adjust the thermal shrinkage rate in the transverse direction. Here, by reducing the clip width to relax the film in the transverse direction (transverse relaxation), the thermal shrinkage rate in the transverse direction can be reduced. The percentage of relaxation herein (transverse relaxation rate, unit: %) is determined as "difference in film width before and after relaxation/film width before relaxation x 100", and is preferably 0 to 5%, and still more preferably 1 to 3%, whereby the thermal shrinkage rate in the transverse direction at a temperature around or lower than the transverse relaxation treatment temperature can be reduced. When the film width after relaxation is reduced relative to the film width before relaxation, the thermal shrinkage rate in the transverse direction tends to decrease.

Although the case where the film is stretched by a sequential biaxial stretching method has been herein described in detail as an example, the film may be stretched by a sequential biaxial stretching method or a simultaneous biaxial stretching method.

If desired, the thus-obtained film may be subjected to a surface activation treatment by a conventionally known method, such as plasma treatment, amine treatment, or corona treatment.

It is preferable that the white film containing an aliphatic polyester resin has a stereocomplex-phase polylactic acid crystal melting peak of 190°C or more as measured by DSC. Further, it is preferable that the stereocomplex crystallinity (S) defined by the following equation using the crystal melting peak intensity measured by DSC is 80% or more, more preferably 90 to 100%, still more preferably 97 to 100%, and particularly preferably 100%. In such a mode, the improving effects on heat resistance and thermal dimensional stability can be enhanced.

That is, in the film of the invention, it is preferable that the stereocomplex phase is fully formed in polylactic acid.

The thickness of the film is not particularly limited, and is usually 30 to 500 μm. Considering practical handle-

ability, it is preferable that the thickness is within a range of about 50 to 500 μm. In particular, as a reflection film for applications to small-sized, thin reflection plates, it is preferable that the thickness is 30 to 100 μm. Use of a reflection film with such a thickness allows for applications to small-sized, thin liquid crystal displays for laptop computers, mobile phones, and the like, for example. In addition, the reflection film of the invention may have a single-layer structure and may also have a multilayer structure including a laminate of two or more layers.

It is preferable that the film has a thermal shrinkage rate of 10% or less in the longitudinal and transverse directions after holding at 120°C x 5 min. This is because of the following reasons. That is, car navigation systems for automobiles, small-sized televisions for use in vehicles, and the like in the car are exposed to high temperatures in the hot summer sun. In addition, when a liquid crystal display is used for a long period of time, the area surrounding the light source lamp is exposed to a high temperature. Accordingly, a reflection film for these applications is particularly required to have a heat resistance of at least about 110°C. From such a point of view, the thermal shrinkage rate of the film in the longitudinal and transverse directions after standing at a temperature of 120°C for 5 minutes is preferably 10% or less, still more preferably 5% or less, and particularly preferably 3% or less. When the film has a thermal shrinkage rate of more than 10%, such a film may shrink with time when used at high temperatures. Thus, in the case where the reflection film is on a steel plate or the like, it may happen that only the film deforms. In order to suppress thermal shrinkage, it is preferable that the film is crystallized, for example. It is also possible to subject the film to the relaxation treatment mentioned above. In addition, in a mode where polylactic acid forms a stereocomplex-phase crystal, the thermal dimensional stability tends to be excellent.

It is also preferable that the film has a thermal shrinkage rate of more than 0% and less than 2.0% in the longitudinal direction and -0.1% to 1.5% in the transverse direction after holding at 90°C x 30 min. This is because of the following reasons. That is, in recent years, there is a growing demand for larger-sized liquid crystal displays and the like, and thus larger-sized reflection films have also been demanded. For example, in the case where a reflection film is incorporated in a large-screen liquid crystal television or the like, the film is used for a long period of time under exposure to the light source. Accordingly, the reflection film is required to undergo little dimensional change during a long period of use. In addition, even in the case of a medium- or small-sized, edge-light-type display, when the ends are controlled during use, a film that undergoes little dimensional change is demanded.

From such a point of view, it is preferable that the thermal shrinkage rate after holding at 90°C for 30 minutes is such that the shrinkage rate in the longitudinal direction is more than 0% and less than 2.0% and the shrinkage rate in the transverse direction is - 0.1% to 1.5%. When the thermal shrinkage rate is within such a range, even in the case where the film is used as a reflection film in a large-sized liquid crystal television or the like, deformation with time can be prevented, whereby the flatness of the film can be maintained. With respect to such a thermal shrinkage rate, the thermal shrinkage rate of the film can be set within the above range by, after stretching, successively subjecting the film to a relaxation treatment at the tenter exit to impart a predetermined amount of relaxation, for example. In addition, when polylactic acid is used as the aliphatic polyester, in a mode where a stereocomplex-phase crystal is formed, the thermal dimensional stability tends to be excellent.

It is preferable that the film has an average reflectance of 90% or more in a light wavelength range of 400 to 700 nm, still more preferably 95% or more, and particularly preferably 98% or more. When the film surface has an average reflectance of 90% or more, excellent reflection properties are exhibited, and, in the case where such a film is used for a reflection plate in a liquid crystal display or the like, the screen can also be provided with sufficient brightness. Incidentally, the average reflectance can be achieved by employing the preferred mode of the filler mentioned above or employing the preferred film-forming conditions mentioned above.

Further, an aliphatic polyester resin contains no aromatic ring in the molecular chain and thus does not cause UV absorption. Therefore, in this case, the film does not deteriorate or yellow due to UV light from the light source of a liquid crystal display or the like, and the light reflectivity does not decrease. Accordingly, the film has an advantage in that the excellent average reflectance can be maintained even after UV exposure.

It is preferable that the above film has an elongation-at-break retention of 50% or more after a heat treatment at 85°C for 500 hours. This mode indicates that heat resistance is excellent. In reflection plate applications, during use in a high-temperature environment over a long period of time, such a film is not deflected due to heat, and does not cause variations in brightness or the like in the liquid crystal display; this is thus preferable.

It is preferable that the above film has a breaking strength retention of 50% or more after a wet heat treatment in an environment of 60°C and 85% RH for 500 hours. This mode indicates that hydrolysis resistance is excellent. In reflection plate applications, during use in a wet heat environment over a long period of time, such a film is not deflected due to heat, and does not cause variations in brightness or the like in the liquid crystal display; this is thus preferable.

Using the white film, a reflection plate for liquid crystal displays and the like can be formed. For example, a reflection plate can be formed by covering a metal plate or a resin plate with the above film. This reflection plate is useful as a reflection plate for liquid crystal displays, lighting devices, lighting signs, and the like. Examples of methods for covering a metal plate or a resin plate with the white film include, but are not particularly limited to, a method that uses an adhesive, a method that performs heat-sealing without using an adhesive, a method that performs adhesion via an

adhesive sheet, and a method that performs extrusion coating. For example, it is possible to apply an adhesive such as a polyester adhesive, a polyurethane adhesive, or an epoxy adhesive to the surface of a metal plate or a resin plate to which the reflection film is to be laminated, and then laminate the reflection film thereto. In this method, to the surface of a metal plate or the like to which the reflection film is to be laminated, an adhesive is applied to form an adhesive film with a thickness after drying of about 2 to 4 μm using a commonly used coating system such as a reverse roll coater or a kiss roll coater. The coated surface is then dried and heated with an infrared heater and a hot-air heating furnace, and, while maintaining the plate surface at a predetermined temperature, the reflection film is directly applied using a roll laminator, followed by cooling. A reflection plate can be thus obtained. In this case, it is preferable that the surface of the metal plate or the like is maintained at 210°C or less because the light reflectivity of the reflection plate can thereby be maintained high.

<White Film (with Incompatible Thermoplastic Resin)>

In the case where the film of the invention is used as a white film, it is possible to employ a technique in which an incompatible thermoplastic resin is added to the film.

Specifically, a composition containing an aliphatic polyester resin and an incompatible thermoplastic resin whose glass transition temperature is at least 15°C higher than the glass transition temperature of the aliphatic polyester resin is formed into a film. "Incompatible" herein means to be incompatible with the aliphatic polyester resin. When this configuration is employed, during stretching or heat setting, voids are formed at the interface between the incompatible thermoplastic resin and the aliphatic polyester resin, whereby high reflectance can be achieved. In addition, heat resistance can be imparted to the film. From such a point of view, it is preferable that the glass transition temperature of the incompatible thermoplastic resin is at least 25°C higher than the glass transition temperature of the aliphatic polyester resin. In terms of heat resistance, it is preferable that the difference between the two in glass transition temperature is still greater. The glass transition temperature of the incompatible thermoplastic resin is preferably at least 50°C, still more preferably at least 80°C, higher than the glass transition temperature of the aliphatic polyester resin. There is no particular upper limit on the glass transition temperature difference. However, in the case where the incompatible thermoplastic resin content is particularly high, in terms of extrudability and film-forming properties, a temperature of 300°C or less is practically preferable.

In the above mode, the incompatible thermoplastic resin is not particularly limited as long as it is meltable. Among such resins, preferred examples are aromatic polycarbonates and aromatic polyesters. When at least one member selected from the group consisting of them is used, the reflectance-improving effect can be enhanced.

Aromatic polycarbonates are not particularly limited, and various kinds are usable. It is usually possible to use an aromatic polycarbonate resin produced by a reaction between a dihydric phenol and a carbonate precursor.

Various examples can be mentioned as dihydric phenols. In particular, 2,2-bis(4-hydroxyphenyl)propane {bisphenol A}, bis(4-hydroxyphenyl)methane, 1,1-bis(4-hydroxyphenyl)ethane, 2,2-bis(4-hydroxy-3,5-dimethylphenyl)propane, 4,4'-dihydroxydiphenyl, bis(4-hydroxyphenyl)cycloalkanes, bis(4-hydroxyphenyl)oxide, bis(4-hydroxyphenyl) sulfide, bis(4-hydroxyphenyl)sulfone, bis(4-hydroxyphenyl)sulfoxide, bis(4-hydroxyphenyl)ether, bis(4-hydroxyphenyl) ketone, and the like can be mentioned. Preferred examples of dihydric phenols include bis(hydroxyphenyl)alkanes, particularly bisphenol A.

Examples of carbonate precursors include carbonyl halides, haloformates, and carbonic acid esters. Specific examples thereof include phosgene, dihaloformates of dihydric phenols, diphenyl carbonate, dimethyl carbonate, and diethyl carbonate.

The aromatic polycarbonate may have a branched structure. A branched structure can be introduced using a branching agent. For example, it is possible to use a compound having three or more functional groups, such as 1,1,1-tris(4-hydroxyphenyl)ethane, α,α',α''-tris(4-hydroxyphenyl)-1,3,5-triisopropylbenzene, 1-{α-methyl-α-(4'-hydroxyphenyl)ethyl}-4-{α', α'-bis(4''-hydroxyphenyl)ethyl}benzene, phloroglucin, trimellitic acid, and isatin-bis(o-cresol).

In terms of the physical properties of the resin composition, the viscosity average molecular weight of the aromatic polycarbonate is preferably 9,000 to 40,000, and still more preferably 15,000 to 30,000.

An aromatic polyester can be obtained by a reaction between an aromatic dicarboxylic acid or an ester-forming derivative thereof and a low-molecular-weight aliphatic diol or a high-molecular-weight diol.

Examples of aromatic dicarboxylic acids and ester-forming derivatives thereof include terephthalic acid, isophthalic acid, orthophthalic acid, naphthalene dicarboxylic acid, paraphenylene dicarboxylic acid, dimethyl terephthalate, dimethyl isophthalate, dimethyl orthophthalate, dimethyl naphthalenedicarboxylate, and dimethyl paraphenylenedicarboxylate. They may be used alone, and it is also possible to use two or more kinds together.

Examples of low-molecular-weight aliphatic diols include ethylene glycol, 1,2-propanediol, 1,3-propanediol, 1,3-butanediol, 1,4-butanediol, neopentyl glycol, 1,5-pentanediol, 1,6-hexanediol, and 1,4-cyclohexanedimethanol. They may be used alone, and it is also possible to use two or more kinds together.

Examples of high-molecular-weight diols include polyethylene glycol, polypropylene glycol, polytetramethylene

glycol, and polyhexamethylene glycol. They may be used alone, and it is also possible to use two or more kinds together.

Examples of crystalline aromatic polyesters made of the above components include polyethylene terephthalate, polybutylene terephthalate, polyhexamethylene terephthalate, polyethylene naphthalate, polybutylene naphthalate, and butanediol terephthalate-polytetramethylene glycol copolymers. They may be used alone, and it is also possible to use two or more kinds together.

Among them, in terms of the aliphatic polyester extrusion temperature, copolyesters having a melting point of 170 to 240°C are preferable. When the melting point is within a range of 170 to 240°C, copolymerization can be carried out with any copolymer components selected from isophthalic acid, naphthalenedicarboxylic acid, dimer acid and like long-chain fatty acids, butanediol, propanediol, polyethylene glycol, polyoxyalkylene glycols, and the like. However, in order to simultaneously enhance the improving effects on dispersibility, hiding properties, and reflectivity, it is preferable to use polyethylene terephthalate copolymerized with 5 to 30 mol%, preferably 8 to 15 mol%, of naphthalenedicarboxylic acid based on 100 mol% of the acid component. As the naphthalenedicarboxylic acid, 2,6-naphthalenedicarboxylic acid is preferable.

In terms of enhancing the reflectance-improving effect of the film and also increasing mechanical physical properties, productivity, etc., the incompatible thermoplastic resin content of the white film is preferably 10 wt% or more and 60 wt% or less, still more preferably 10 wt% or more and less than 55 wt%, and particularly preferably 20 wt% or more and 50 wt% or less based on the below-mentioned resin composition for forming a white film. When the incompatible thermoplastic resin content is 10 wt% or more, the area of the interface between the aliphatic polyester resin and the incompatible thermoplastic resin can be sufficiently ensured, and the reflectance-improving effect can be enhanced. In addition, when the incompatible thermoplastic resin content is 60 wt% or less, mechanical properties necessary for the film can be ensured.

A resin composition for forming the white film contains an aliphatic polyester resin, an incompatible thermoplastic resin, and a cyclic carbodiimide compound as components.

As the aliphatic polyester resin, it is preferable to use polylactic acid forming a stereocomplex-phase crystal. It is also preferable that the stereocomplex crystallinity (S) of such a resin composition measured by DSC is 80% or more. When the stereocomplex crystallinity is 80% or more, the thermal shrinkage rate of the resulting film at 90°C or 120°C can be reduced. In addition, the heat-resistance-improving effect can be enhanced. The stereocomplex crystallinity of the resin composition is more preferably 90% or more, and still more preferably 95% or more. It is particularly preferable that the stereocomplex crystallinity is 100%.

In the invention, it is preferable that the cyclic carbodiimide compound content of the resin composition is 0.001 to 5 wt% based on the weight of the aliphatic polyester resin. When the content is within this range, the stability of the resin composition and a film made thereof to moisture and hydrolysis can be suitably increased. In addition, heat resistance can be increased. In particular, resistance to thermal degradation over a long period of time can be increased. From such a point of view, the cyclic carbodiimide compound content is more preferably within a range of 0.01 to 5 wt%, and still more preferably 0.1 to 4 wt%. When the content is lower than this range, the effect of the cyclic carbodiimide compound may not be effectively observed, while even when a large amount exceeding this range is applied, no further improvement of effects on stability to hydrolysis, etc., is expected.

In the case where the aliphatic polyester resin contains polylactic acid, the lactide content thereof is preferably within a range of 0 to 1,000 ppm, more preferably 0 to 200 ppm, and still more preferably 0 to 100 ppm based on the weight of the aliphatic polyester resin. A lower lactide content is more desirable in terms of the physical properties of the resin composition, such as hue and stability. However, the application of excessive reduction is not expected to improve the physical properties any further, and may be undesirable in terms of cost.

In addition, the carboxyl group concentration of the resin composition is preferably within a range of 0 to 30 eq/ton, more preferably 0 to 10 eq/ton, still more preferably 0 to 5 eq/ton, and particularly preferably 0 to 1 eq/ton based on the weight of the aliphatic polyester resin. The carboxyl group concentration can be easily reduced by the use of a cyclic carbodiimide compound.

In addition, as long as the object of the invention is not impaired, the resin composition may contain other resin components in addition to the aliphatic polyester resin, the incompatible thermoplastic resin, and the cyclic carbodiimide compound.

Specific examples of other resin components include acrylic resins, polyolefins such as polyethylene and polypropylene, styrene resins such as polystyrene and styrene-acrylonitrile copolymers, thermoplastic resins such as polyamides, polyphenylene sulfide resins, polyetheretherketone resins, polyesters other than the incompatible thermoplastic resin, polysulfone, polyphenylene oxide, polyimides, polyetherimide, and polyacetal, and thermosetting resins such as phenolic resins, melamine resins, silicone resins, and epoxy resins. One or more kinds thereof may be added.

Further, as long as the effect of the invention is not impaired, any additives may be incorporated into the resin composition according to each purpose. Kinds of additives are not particularly limited as long as they are additives generally incorporated into resins or rubber-like polymers.

Examples of additives include inorganic fillers and pigments such as iron oxide. Examples also include lubricants

such as stearic acid, behenic acid, zinc stearate, calcium stearate, magnesium stearate, and ethylene bis stearamide; release agents; softeners and plasticizers such as paraffinic process oil, naphthenic process oil, aromatic process oil, paraffin, organic polysiloxane, and mineral oil; and antioxidants such as hindered phenol antioxidants and phosphorus heat stabilizers. Examples also include hindered amine light stabilizers, benzotriazole UV absorbers, benzophenone UV absorbers, cyclic iminoester UV absorbers, triazine UV absorbers, flame retardants, and antistatic agents.

Examples further include reinforcing agents such as organic fibers, glass fibers, carbon fibers, and metal whiskers, colorants, and electrostatic adhesion improvers. Mixtures thereof are also mentioned.

The resin composition can be produced by a known method. For example, an aliphatic polyester resin, an incompatible thermoplastic resin, a cyclic carbodiimide compound, and optionally other components mentioned above are added and melt-kneaded using a melt-kneader such as single-screw extruder, twin-screw extruder, Banbury mixer, Brabender, or like kneader, whereby the resin composition can be produced.

Incidentally, it is preferable to blend an aliphatic polyester resin and a cyclic carbodiimide compound first, and then blend the mixture and an incompatible thermoplastic resin. This is because the hydrolysis resistance of the aliphatic polyester resin can thereby be improved at an early stage.

Hereinafter, an example of a method for producing the above film will be described, but the method is not limited to the following production method.

The above film is obtained by shaping the resin composition mentioned above into a film. For such shaping, for example, it is possible to employ a molding technique such as extrusion molding using an extruder or the like equipped with a T-die, a circular die, or the like, cast molding, etc. In the invention, it is preferable to obtain an unstretched film by extrusion molding.

In the case where an unstretched film is obtained by extrusion molding, it is possible to feed a material, which is previously obtained by melt-kneading an aliphatic polyester resin, an incompatible thermoplastic resin, and a cyclic carbodiimide compound, into an extruder. It is also possible to feed each component into an extruder, followed by melt-kneading during extrusion molding.

An unstretched film can be produced by extruding a molten film onto a cooling drum, and then bringing the film into close contact with the rotating cooling drum for cooling. At this time, it is preferable that an electrostatic adhesion agent such as quaternary phosphonium sulfonate is incorporated into the molten film, and an electrical charge is applied to the film from an electrode in a non-contact manner, thereby bringing the molten film into close contact with the rotating cooling drum. As a result, an unstretched film having few surface defects can be obtained.

It is also preferable that the above film is a biaxially stretched film. The method for biaxial stretching is not particularly limited. However, in this invention, it is preferable to employ the following method.

That is, the unstretched film obtained above is heated by roll heating, infrared heating, or the like, and longitudinally stretched in MD to form a longitudinally stretched film. It is preferable that this stretching is performed utilizing the difference in peripheral speed between two or more rolls. It is preferable that the longitudinal stretching temperature is from the glass transition temperature (Tg) of the aliphatic polyester resin to (Tg + 70)°C. Although this depends on the characteristics required by the intended use, the longitudinal draw ratio is preferably 2.2 to 4.0, and still more preferably 2.3 to 3.9. When such stretching conditions are employed, moderate voids (microbubbles) are formed in the film, whereby the reflectance-improving effect can be enhanced. When the draw ratio is less than 2.2, the film has an increased variation in thickness, and an excellent film cannot be obtained, while when it is more than 4.0, breakage is likely to occur during film formation; therefore, this is undesirable.

Subsequently, the film after longitudinal stretching is transversely stretched in TD, and then successively subjected to a heat treatment (heat setting) and a heat relaxation treatment to form a biaxially oriented film. These treatments may be performed while running the film. The transverse stretching treatment is started at a temperature higher than the glass transition temperature (Tg) of the aliphatic polyester resin. The treatment is then continued while raising the temperature to a temperature that is (5 to 70)°C higher than Tg. The temperature rise in the transverse stretching process may be continuous or stepwise (sequential), but the temperature is usually raised sequentially. For example, the transverse stretching zone of a tenter is divided into several sections along the film running direction, and a heating medium having a predetermined temperature is poured into each zone to raise the temperature. Although this depends on the characteristics required by the intended use, the transverse draw ratio is preferably 2.5 to 4.5, and still more preferably 2.8 to 3.9. When such stretching conditions are employed, moderate voids are formed in the film, whereby the reflectance-improving effect can be enhanced. When the draw ratio is less than 2.5, the film has an increased variation in thickness, and an excellent film cannot be obtained, while when it is more than 4.5, breakage is likely to occur during film formation.

It is preferable that the film after transverse stretching is, while holding both ends, heat-treated at a temperature of (Tm - 100) to (Tm - 20) °C, preferably at a temperature of (Tm - 80) to (Tm - 20), at a constant width or under 10% or less width reduction, thereby reducing the thermal shrinkage rate. Tm herein is the melting point (°C) of the aliphatic polyester resin. A temperature higher than this range provides a film with poor flatness and a great variation in thickness, and thus is undesirable. In addition, a heat treatment temperature of less than (Tm - 100)°C may lead to a large thermal shrinkage rate. In addition, by such a heat treatment, moderate voids are formed in the film, whereby the reflectance-improving effect can be enhanced.

In addition, after heat setting, in the course of bringing the film temperature back to room temperature (25°C), in order to adjust the amount of thermal shrinkage in the longitudinal direction in a temperature range around (Tm - 100) to (Tm - 20)°C, for example, the held ends of the film may be cut off in the above temperature range to adjust the take-up rate in the longitudinal direction of the film, thereby relaxing the film in the longitudinal direction (longitudinal relaxation). As a specific relaxation method, the speed of the rolls on the exit side of the tenter is adjusted relative to the film line speed of the tenter. The percentage of relaxation herein (longitudinal relaxation rate, unit: %) is determined as "difference in film speed before and after relaxation/film speed before relaxation x 100", and is preferably 0.1 to 1.5%, still more preferably 0.2 to 1.2%, and particularly preferably 0.3 to 1.0%. When the speed on the exit side of the tenter is reduced relative to the film line speed of the tenter, the thermal shrinkage rate in the longitudinal direction tends to decrease.

In addition, with respect to the film transverse direction, in the process before the film ends are cut off, the width of the clip holding the film may be increased or decreased to adjust the thermal shrinkage rate in the transverse direction. Here, by reducing the clip width to relax the film in the transverse direction (transverse relaxation), the thermal shrinkage rate in the transverse direction can be reduced. The percentage of relaxation herein (transverse relaxation rate, unit: %) is determined as "difference in film width before and after relaxation/film width before relaxation x 100", and is preferably 0 to 5%, and still more preferably 1 to 3%, whereby the thermal shrinkage rate in the transverse direction at a temperature around or lower than the transverse relaxation treatment temperature can be reduced. When the film width after relaxation is reduced relative to the film width before relaxation, the thermal shrinkage rate in the transverse direction tends to decrease.

Although the case where the film is stretched by a sequential biaxial stretching method has been herein described in detail as an example, the film may be stretched by a sequential biaxial stretching method or a simultaneous biaxial stretching method.

If desired, the thus-obtained film may be subjected to a surface activation treatment by a conventionally known method, such as plasma treatment, amine treatment, or corona treatment.

When the above film made of polylactic acid, it is preferable that the film has a stereocomplex-phase polylactic acid crystal melting peak of 190°C or more as measured by DSC. Further, it is preferable that the stereocomplex crystallinity (S) defined by the following equation using the crystal melting peak intensity measured by DSC is 80% or more, more preferably 90 to 100%, still more preferably 97 to 100%, and particularly preferably 100%. In such a mode, the improving effects on heat resistance and thermal dimensional stability can be enhanced. That is, it is preferable that the stereocomplex phase is fully formed in polylactic acid.

The thickness of the film is not particularly limited, and is usually 30 to 500 μm. Considering practical handle-ability, it is preferable that the thickness is within a range of about 50 to 500 μm. In particular, as a reflection film for applications to small-sized, thin reflection plates, it is preferable that the thickness is 30 to 100 μm. Use of a reflection film with such a thickness allows for applications to small-sized, thin liquid crystal displays for laptop computers, mobile phones, and the like, for example. The reflection film may have a single-layer structure and may also have a multilayer structure including a laminate of two or more layers.

It is preferable that the film has a thermal shrinkage rate of 10% or less in the longitudinal and transverse directions at 120°C x 5 min. This is because of the following reasons. That is, car navigation systems for automobiles, small-sized televisions for use in vehicles, and the like in the car are exposed to high temperatures in the hot summer sun. In addition, when a liquid crystal display is used for a long period of time, the area surrounding the light source lamp is exposed to a high temperature. Accordingly, a reflection film for these applications is particularly required to have a heat resistance of at least about 110°C. From such a point of view, the thermal shrinkage rate of the film in the longitudinal and transverse directions after standing at a temperature of 120°C for 5 minutes is preferably 10% or less, still more preferably 5% or less, and particularly preferably 3% or less. When the film has a thermal shrinkage rate of more than 10%, such a film may shrink with time when used at high temperatures. Thus, in the case where the reflection film is stacked on a steel plate or the like, it may happen that only the film deforms. In order to suppress thermal shrinkage, it is preferable that the film is crystallized, for example. It is also possible to subject the film to the relaxation treatment mentioned above. In addition, in a mode where polylactic acid forms a stereocomplex-phase crystal, the thermal dimensional stability tends to be excellent.

It is also preferable that the film of the invention has a thermal shrinkage rate of more than 0% and less than 2.0% in the longitudinal direction and -0.1% to 1.5% in the transverse direction at 90°C x 30 min. This is because of the following reasons. That is, in recent years, there is a growing demand for larger-sized liquid crystal displays and the like, and thus larger-sized reflection films have also been demanded. For example, in the case where a reflection film is incorporated in a large-screen liquid crystal television or the like, the film is used for a long period of time under exposure to the light source. Accordingly, the reflection film is required to undergo little dimensional change during a long period of use. In addition, even in the case of a medium- or small-sized, edge-light-type display, when the ends are controlled during use, a film that undergoes little dimensional change is demanded.

From such a point of view, it is preferable that the thermal shrinkage rate after holding at 90°C for 30 minutes

is such that the shrinkage rate in the longitudinal direction is more than 0% and less than 2.0% and the shrinkage rate in the transverse direction is - 0.1% to 1.5%. When the thermal shrinkage rate is within such a range, even in the case where the film is used on the back of a large-sized liquid crystal television or the like, deformation with time can be prevented, whereby the flatness of the film can be maintained.

With respect to such a thermal shrinkage rate, the thermal shrinkage rate of the film can be set within the above range by, after stretching, successively subjecting the film to a relaxation treatment at the tenter exit to impart a predetermined amount of relaxation, for example. In addition, in a mode where polylactic acid forms a stereocomplex-phase crystal, the thermal dimensional stability tends to be excellent.

It is preferable that the film has an average reflectance of 90% or more in a light wavelength range of 400 to 700 nm, still more preferably 95% or more, and particularly preferably 98% or more. When the film surface has an average reflectance of 90% or more, excellent reflection properties are exhibited, and, in the case where such a film is used for a reflection plate in a liquid crystal display or the like, the screen can also be provided with sufficient brightness. Incidentally, the average reflectance can be achieved by employing the preferred mode of the incompatible thermoplastic resin mentioned above or employing the preferred film-forming conditions of the invention.

Further, an aliphatic polyester resin contains no aromatic ring in the molecular chain and thus does not cause UV absorption. Therefore, the film does not deteriorate or yellow due to UV light from the light source of a liquid crystal display or the like, and the light reflectivity does not decrease. Accordingly, in the film of the invention, the excellent average reflectance can be maintained even after UV exposure.

It is preferable that the above film has an elongation-at-break retention of 50% or more after a heat treatment at 85°C for 500 hours. This mode indicates that heat resistance is excellent. In reflection plate applications, during use in a high-temperature environment over a long period of time, such a film is not deflected due to heat, and does not cause variations in brightness or the like in the liquid crystal display; this is thus preferable.

The above film has a breaking strength retention of 50% or more after a wet heat treatment in an environment of 60°C and 85% RH for 500 hours. This mode indicates that hydrolysis resistance is excellent. In reflection plate applications, during use in a wet heat environment over a long period of time, such a film is not deflected due to heat, and does not cause variations in brightness or the like in the liquid crystal display; this is thus preferable.

Using the above film, a reflection plate for liquid crystal displays and the like can be formed. For example, a reflection plate can be formed by covering a metal plate or a resin plate with the above film. This reflection plate is useful as a reflection plate for liquid crystal displays, lighting devices, lighting signs, and the like. Examples of methods for covering a metal plate or a resin plate with the white film include, but are not particularly limited to, a method that uses an adhesive, a method that performs heat-sealing without using an adhesive, a method that performs adhesion via an adhesive sheet, and a method that performs extrusion coating. For example, it is possible to apply an adhesive such as a polyester, polyurethane, or epoxy adhesive to the surface of a metal plate or a resin plate to which the reflection film is to be laminated, and then laminate the reflection film thereto. In this method, to the surface of a metal plate or the like to which the reflection film is to be laminated, an adhesive is applied to form an adhesive film with a thickness after drying of about 2 to 4 μm using a commonly used coating system such as a reverse roll coater or a kiss roll coater. The coated surface is then dried and heated with an infrared heater and a hot-air heating furnace, and, while maintaining the plate surface at a predetermined temperature, the reflection film is directly applied using a roll laminator, followed by cooling. A reflection plate can be thus obtained. In this case, it is preferable that the surface of the metal plate or the like is maintained at 210°C or less because the light reflectivity of the reflection plate can thereby be maintained high.

<Optical Film>

When the film of the invention is used as an optical film such as a polarizing plate protection film or a retardation film, not only transparency but also higher optical properties are required, including a small birefringence, a small photoelastic coefficient, etc. This can be achieved, for example, by a film containing an acrylic resin in addition to an aliphatic polyester resin as the polymer compound having an acidic group and the cyclic carbodiimide compound.

An acrylic resin herein is obtained by the polymerization of one or more kinds of monomers selected from methacrylic acid esters, such as cyclohexyl methacrylate, 4-tert-butyl cyclohexyl methacrylate, and methyl methacrylate, and acrylic acid esters, such as methyl acrylate, ethyl acrylate, butyl acrylate, isopropyl acrylate, and 2-ethylhexyl acrylate. These monomers may be used alone, and it is also possible to use a mixture of two or more kinds. Among them, methyl methacrylate homopolymers and copolymers with other monomers are preferable.

Examples of monomers copolymerizable with methyl methacrylate include other methacrylic acid alkyl esters, acrylic acid alkyl esters, aromatic vinyl compounds such as styrene, vinyl toluene, and α-methyl styrene, vinyl cyanides such as acrylonitrile and methacrylonitrile, maleimides such as N-phenylmaleimide and N-cyclohexylmaleimide, unsaturated carboxylic anhydrides such as maleic anhydride, and unsaturated acids such as acrylic acid, methacrylic acid, and maleic acid. Among these monomers copolymerizable with methyl methacrylate, in particular, acrylic acid alkyl esters have excellent thermal decomposition resistance. In addition, a methacrylic resin obtained by copolymerization

with an acrylic acid alkyl ester has high fluidity during shaping and thus is preferable.

In the case where an acrylic acid alkyl ester is copolymerized with methyl methacrylate, the amount of the acrylic acid alkyl ester used is preferably 0.1 wt% or more in terms of thermal decomposition resistance, and preferably 15 wt% or less in terms of heat resistance. The amount is still more preferably 0.2 wt% or more and 14 wt% or less, and particularly preferably 1 wt% or more and 12 wt% or less.

In particular, among these acrylic acid alkyl esters, in the case where methyl acrylate or ethyl acrylate is copolymerized with methyl methacrylate, even when the amount thereof is small, the above improving effects are significant; they are thus most preferable. The monomers copolymerizable with methyl methacrylate mentioned above may be used alone, and it is also possible to use a combination of two or more kinds.

It is preferable that the acrylic resin has a weight average molecular weight of 50,000 to 200,000. The weight average molecular weight is preferably 50,000 or more in terms of the strength of the molded article, and is preferably 200,000 or less in terms of shaping properties and fluidity. A still more preferred range is 70,000 to 150,000. In addition, in the invention, it is also possible to simultaneously use an isotactic polymethacrylic acid ester and a syndiotactic polymethacrylic acid ester.

As an acrylic resin production method, it is possible to use a commonly used polymerization method such as cast polymerization, bulk polymerization, suspension polymerization, solution polymerization, emulsion polymerization, or anionic polymerization, for example. However, for optical applications, it is preferable to minimize contamination with minute foreign matters, and, from this point of view, bulk polymerization and solution polymerization, in which no suspending agent or emulsifier is used, are preferable. In the case where solution polymerization is carried out, it is possible to use a solution prepared by dissolving a mixture of monomers in an aromatic hydrocarbon solvent such as toluene, ethylbenzene, or xylene. In the case of polymerization by bulk polymerization, as in the usual manner, polymerization can be initiated by free radicals formed upon heating or by exposure to ionizing radiation.

As an initiator for the polymerization reaction, any initiators commonly used in radical polymerization are usable. Examples thereof include azo compounds such as azobisisobutylnitrile and organic peroxides such as benzoyl peroxide, lauroyl peroxide, and tert-butylperoxy-2-ethylhexanoate. In particular, in the case where polymerization is carried out at a high temperature of 90°C or more, solution polymerization is commonly employed, and, therefore, a peroxide, an azobis initiator, or the like whose 10-hour half-life period temperature is 80°C or more and which is soluble in the used organic solvent is preferable. Specific examples thereof include 1,1-bis(tert-butylperoxy)3,3,5-trimethylcyclohexane, cyclohexane peroxide, 2,5-dimethyl-2,5-di(benzoylperoxy)hexane, 1,1-azobis(1-cyclohexanecarbonitrile), and 2-(carbamoylazo)isobutyronitrile. These initiators are used in an amount of 0.005 to 5 wt%.

As a molecular weight modifier optionally used in the polymerization reaction, any of those commonly used in radical polymerization is used. For example, mercaptan compounds such as butyl mercaptan, octyl mercaptan, dodecyl mercaptan, and 2-ethylhexyl thioglycolate are particularly preferable. Such a molecular weight modifier is added at a concentration that controls the polymerization degree within the above range.

In the above composition, the ratio between the aliphatic polyester resin and the acrylic resin may be suitably selected according to the specific components and the properties of the film to be obtained (optical properties, mechanical properties), and may usually be selected such that the weight ratio (aliphatic polyester resin/acrylic resin) is within a range of (99/1) to (1/99), preferably (99/1) to (50/50), more preferably (80/20) to (50/50), and still more preferably (70/30) to (50/50).

It is preferable that the stereocomplex crystallinity (S) of this composition measured by DSC is 80% or more. When the stereocomplex crystallinity is 80% or more, the thermal shrinkage rate of the resulting film at 90°C can be reduced. The stereocomplex crystallinity of the resin composition is more preferably 90% or more, and still more preferably 95% or more. It is particularly preferable that the stereocomplex crystallinity is 100%.

In this case, the proportion of the cyclic carbodiimide compound in the composition is preferably such that the cyclic carbodiimide compound is contained in an amount of 0.001 to 5 parts by weight per 100 parts by weight of the total amount of the aliphatic polyester resin and the acrylic resin. When the amount of the cyclic carbodiimide compound is within this range, the stability of the resin composition and a film made thereof to moisture and hydrolysis can be suitably increased.

The cyclic carbodiimide compound content is more preferably within a range of 0.01 to 5 parts by weight, still more preferably 0.1 to 4 parts by weight, per 100 parts by weight of the total amount of the aliphatic polyester resin and the acrylic resin. When the content is lower than this range, the effect of the cyclic carbodiimide compound may not be effectively observed, while even when a large amount exceeding this range is applied, no further improvement of stability to hydrolysis is expected.

In the case where the aliphatic polyester resin contains polylactic acid, the lactide content thereof is preferably within a range of 0 to 1,000 ppm, more preferably 0 to 200 ppm, and still more preferably 0 to 100 ppm based on the total amount of the aliphatic polyester resin and the acrylic resin. A lower lactide content is more desirable in terms of the physical properties of the resin composition, such as hue and stability. However, the application of excessive reduction is not expected to improve physical properties any further, and may be undesirable in terms of cost.

The carboxyl group concentration of the resin composition is, based on the total amount of the aliphatic polyester resin and the acrylic resin, preferably within a range of 0 to 30 eq/ton, more preferably 0 to 10 eq/ton, still more preferably 0 to 5 eq/ton, and particularly preferably 0 to 1 eq/ton. The carboxyl group concentration can be easily reduced by the use of a cyclic carbodiimide compound.

In addition, as long as the object of the invention is not impaired, the resin composition may contain other resin components in addition to the aliphatic polyester resin, the acrylic resin, and the cyclic carbodiimide compound.

Specific examples of other resin components include polyolefins such as polyethylene and polypropylene, styrene resins such as polystyrene and styrene-acrylonitrile copolymers, thermoplastic resins such as polyamides, polyphenylene sulfide resins, polyetheretherketone resins, polyesters, polysulfone, polyphenylene oxide, polyimides, polyetherimide, and polyacetal, and thermosetting resins such as phenolic resins, melamine resins, silicone resins, and epoxy resins. One or more kinds thereof may be added.

Further, as long as the effect of the invention is not significantly impaired, any additives may be incorporated into the resin composition of the invention according to each purpose. Kinds of additives are not particularly limited as long as they are additives generally incorporated into resins or rubber-like polymers.

Examples of additives include inorganic fillers and pigments such as iron oxide. Examples also include lubricants such as stearic acid, behenic acid, zinc stearate, calcium stearate, magnesium stearate, and ethylene bis stearamide; release agents; softeners and plasticizers such as paraffinic process oil, naphthenic process oil, aromatic process oil, paraffin, organic polysiloxane, and mineral oil; and antioxidants such as hindered phenol antioxidants and phosphorus heat stabilizers. Examples also include hindered amine light stabilizers, benzotriazole UV absorbers, benzophenone UV absorbers, cyclic iminoester UV absorbers, triazine UV absorbers, flame retardants, and antistatic agents.

Examples further include reinforcing agents such as organic fibers, glass fibers, carbon fibers, and metal whiskers, colorants, and electrostatic adhesion improvers. Mixtures thereof are also mentioned.

The resin composition can be produced by a known method. For example, an aliphatic polyester resin, an acrylic resin, a cyclic carbodiimide compound, and optionally other components mentioned above are added and melt-kneaded using a melt-kneader such as single-screw extruder, twin-screw extruder, Banbury mixer, Brabender, or like kneader, whereby the resin composition can be produced.

Incidentally, it is preferable to blend an aliphatic polyester resin and a cyclic carbodiimide compound first, and then blend the mixture and an acrylic resin. This is because the hydrolysis resistance of the aliphatic polyester resin can thereby be improved at an early stage.

In order to make the resin composition into a film, a molding technique such as extrusion molding or cast molding may be used to form a film. For example, a film can be formed using an extruder or the like equipped with a T-die, a circular die, or the like.

In the case where an unstretched film is obtained by extrusion molding, it is possible to use a material previously obtained by melt-kneading an aliphatic polyester resin, an acrylic resin, and a cyclic carbodiimide compound. It is also possible to perform molding through melt-kneading during extrusion molding.

An unstretched film can be produced by extruding a molten film onto a cooling drum, and then bringing the film into close contact with the rotating cooling drum for cooling. At this time, an electrostatic adhesion agent such as quaternary phosphonium sulfonate is incorporated into the molten film, and an electrical charge is easily applied to the molten surface of the film from an electrode in a non-contact manner, thereby bringing the film into close contact with the rotating cooling drum. As a result, an unstretched film having few surface defects can be obtained.

In addition, it is also possible to dissolve an aliphatic polyester resin, an acrylic resin, and a cyclic carbodiimide compound using a solvent common to the aliphatic polyester resin, the acrylic resin, and the cyclic carbodiimide compound, such as chloroform or methylene dichloride, followed by cast drying and solidification, thereby forming an unstretched film by cast molding.

The unstretched film may be uniaxially stretched in MD and may also be uniaxially stretched in TD. It is also possible to perform stretching by a successive biaxial stretching method using roll stretching and tenter stretching, a simultaneous biaxial stretching method using tenter stretching, a biaxial stretching method using tubular stretching, or the like, thereby forming a biaxially stretched film.

Here, it is preferable that the draw ratio is 0.1 to 1,000% or less in at least one direction, preferably 0.2 to 600%, and still more preferably 0.3 to 300%. When the draw ratio is within this range, it is possible to provide a stretched film that is preferable in terms of birefringence, heat resistance, and strength.

The draw ratio is, as the areal draw ratio (longitudinal ratio x transverse ratio), preferably 1 to 15, more preferably 1.01 to 10, still more preferably 1.1 to 5, and particularly preferably 1.1 to 3.

In the case where a heat treatment is performed to provide the film with a crystallinity of 10% or more, it is necessary that the longitudinal ratio and the transverse ratio are each more than 1, that is, the film is stretched. The transparency of an unstretched film (draw ratio: 1 or less) may be reduced by the evaluation of heat resistance described in *"Erekutoronikusu-yo Kogaku Firumu* (Optical Film for Electronics)" (2006) edited by Society for the Study of Electrical and Electronic Materials or the evaluation of heat resistance developed from such evaluation (heat treatment at 90°C

for 5 hours), for example; an unstretched film is thus undesirable as an optical film.

The stretching temperature is suitably selected within a range from the glass transition temperature (Tg) to crystallization temperature (Tc) of the resin composition. Further, in order to suppress Re and Rth, a temperature range which is higher than Tg and as close to Tc as possible and in which the crystallization of the aliphatic polyester resin is not promoted is more suitably employed.

At a temperature lower than Tg, the molecular chain is fixed, and it is thus difficult to suitably advance the stretching operation, and it is also difficult for both Re and Rth to be 20 nm or less. In addition, at a temperature equal to or higher than Tc, the crystallization of the aliphatic polyester resin is promoted. Also in such a case, it is difficult to smoothly advance the stretching process.

Accordingly, it is preferable that the stretching temperature is selected from a temperature range ranging from Tg to Tc, where the crystallization of the aliphatic polyester resin component is unlikely to be promoted, such as a range of Tg to Tc. In terms of achieving both the physical properties of the film and the stabilization of the stretching process, the stretching temperature is suitably selected within a temperature range of (Tg + 5)°C to Tc°C, more preferably (Tg + 10)°C to Tc°C, and still more preferably (Tg + 20)°C to Tc°C. With respect to the upper limit of the stretching temperature, because the physical properties of the film and the stabilization of the stretching process conflict each other, the upper limit may be suitably selected in consideration of the properties of the apparatus.

It is preferable that the stretched film is heat-treated. By this heat treatment, the thermal shrinkage rate of the stretched film can be suitably reduced. In particular, when the aliphatic polyester resin contains stereocomplex polylactic acid, the crystallization of stereocomplex-phase polylactic acid can be promoted. At the same time, the storage elastic modulus (E') determined by dynamic viscoelasticity (DMA) measurement does not show a local minimum at a temperature range from room temperature (25°C) to 150°C and can be maintained at a value of more than 50 MPa.

In the case where polylactic acid, which is a crystalline resin, is blended with an acrylic resin, which is an amorphous resin, the crystallization temperature Tc of the resulting resin composition shifts towards the higher-temperature side. Accordingly, in the case of homo-polylactic acid having a melting point near the crystallization temperature Tc of the resin composition, a stretched film starts melting at the crystallization temperature of the resin composition, making crystallization difficult. However, the melting point of stereocomplex polylactic acid is higher than the crystallization temperature of the resin composition. It is thus possible to heat-treat the obtained stretched film at high temperatures, and the stretched film can be easily crystallized; therefore, this is preferable.

The heat treatment temperature varies depending on the proportions of the aliphatic polyester resin and the acrylic resin and also on the specific composition of each resin. For example, in the case where stereocomplex polylactic acid is used as the aliphatic polyester resin, provided that the crystal melting temperature of stereocomplex-phase polylactic acid is Tm*, the heat treatment temperature is preferably 90 to Tm* (°C), more preferably 110 to (Tm* - 10) (°C), and still more preferably 120 to (Tm* - 20) (°C).

It is preferable that the heat treatment is performed for 1 second to 30 minutes. When the heat treatment temperature is high, the time is relatively short, while when the heat setting temperature is low, a heat treatment for relatively a long period of time is required. For example, in the case of a film having a Tc of 140°C, at 140°C, a heat treatment for at least 30 seconds is neccessary. Meanwhile, at 150°C, a heat treatment for 10 seconds can provide the film with a thermal shrinkage rate at 90°C for 5 hours of less than 5%.

If desired, the thus-obtained film may be subjected to a surface activation treatment by a conventionally known method, such as plasma treatment, amine treatment, or corona treatment.

The thickness of the film is preferably 1 to 300 μm, more preferably 10 to 300 μm, and still more preferably 20 to 150 μm. In terms of resistance to wrinkling during handling (wrinkle prevention), it is preferable that the thickness is 10 μm or more. In addition, in terms of transparency, it is preferable that the thickness is 200 μm or less.

The absolute value of the photoelastic coefficient of the film is preferably less than $10 \times 10^{-12}$/Pa, more preferably less than $8 \times 10^{-12}$/Pa, still more preferably less than $5 \times 10^{-12}$/Pa, and particularly preferably less than $3 \times 10^{-12}$/Pa.

Photoelastic coefficient (CR) herein is a value defined by the below equation. A photoelastic coefficient value closer to zero indicates that a change in birefringence caused by external forces is smaller, meaning that the birefringence change designed for each application is smaller.

$$CR = \Delta n / \sigma R$$

$$\Delta n = n_x - n_y$$

CR represents a photoelastic coefficient, σR represents an elongation stress, Δn represents a difference in birefringence, $n_x$ represents the refractive index in the elongation direction, and $n_y$ represents the refractive index in the

direction perpendicular to the elongation direction.

In addition, the retardation in the plane direction (Re) and the retardation in the thickness direction (Rth) of the film are each the product of a difference in birefringence Δn and the thickness d (nm). Re and Rth are each defined by the following equation.

$$Re = (n_x - n_y) \times d$$

$$Rth = ((n_x + n_y)/2 - n_z) \times d$$

$n_x$ represents the refractive index in the longitudinal direction, $n_y$ represents the refractive index in the width direction, $n_z$ represents the refractive index in the thickness direction, and d represents the thickness (nm).

Re and Rth of the film are each preferably 10 nm or less, more preferably 5 nm or less, and still more preferably 4 nm or less. A material having Re and Rth values within this range is preferable because the phase difference is unlikely to vary due to orientation caused by molding during extrusion molding or cast molding.

In addition, it is preferable that the film has a stereocomplex-phase polylactic acid crystal melting peak of 190°C or more as measured by DSC. Further, the stereocomplex crystallinity (S) is preferably 80% or more, more preferably 90 to 100%, still more preferably 97 to 100%, and particularly preferably 100%. That is, it is preferable that the stereocomplex phase is fully formed in polylactic acid.

Stereocomplex crystallinity (S) is a parameter indicating the proportion of the stereocomplex polylactic acid crystal eventually formed in the heat treatment process.

In the film, it is preferable that the shrinkage rate in the longitudinal direction (MD) and the shrinkage rate in the transverse direction (TD) after a treatment at 90°C for 5 hours are both 5% or less, and more preferably 4% or less, which can be achieved by selecting stereocomplex polylactic acid as the aliphatic polyester resin.

In the film, it is preferable that the storage elastic modulus (E') determined by dynamic viscoelasticity (DMA) measurement at a temperature range from room temperature (25°C) to 150°C does not show a local minimum and has a value of more than 50 MPa.

In such a film, the storage modulus (E') does not show a local minimum even when the film is heated to the temperature range around 150°C required in the polarizing film production process, for example; therefore, the dimensional stability is excellent. In addition, because the storage modulus (E') has a value of more than 50 MPa, the film is resistant to deformation due to external forces, and thus the phase difference is unlikely to vary. Further, in the polarizing film production process, excellent processability can be exhibited.

The optical film is useful as a polarizing plate protection film. A polarizing plate protection film is a film used as a component of a polarizing plate. The film is laminated to both sides or one side of a polarizing film (e.g., a film formed of a highly polymerized PVA base film impregnated with or having adsorbed therein a dichroic pigment or a dichroic dye, such as polyiodide), and used for the improvement of the strength of the polarizing film, protection from heat and moisture, prevention of crystalloid deterioration, etc.

As a component of a polarizing plate, the polarizing plate protection film may be used for displays such as liquid crystal displays, plasma displays, organic EL displays, field emission displays, and rear projection televisions. The polarizing plate protection film is optionally subjected to a surface functionalization treatment such as antireflection treatment, transparent conduction treatment, electromagnetic-wave shielding treatment, gas barrier treatment, or anti-stain treatment.

The optical film is also useful as a retardation film. In the retardation film, the blending ratio between the aliphatic polyester resin and the acrylic resin can be changed to control the expressed retardation. For example, when stereocomplex polylactic acid is used as the aliphatic polyester resin, in the case where the stereocomplex polylactic acid is more than 50 wt% and the acrylic resin is less than 50 wt%, strong birefringence can be obtained in the length direction (MD), while in the opposite case, strong birefringence can be obtained in the width direction (TD). Further, the blending ratio can be suitably changed according to the retardation required, and the retardation can be further controlled by stretching. The film can thus be suitably used as a retarder in a liquid crystal panel display.

<Multilayer Film>

The film of the invention may be configured, for example, as a multilayer film including at least one optically positive layer containing polylactic acid and a cyclic carbodiimide compound and at least one layer made of an optically negative resin, the polylactic acid being polylactic acid containing a poly(D-lactic acid) component and a poly(L-lactic acid) component and having a stereocomplex crystallinity (S) of 90% or more.

This configuration makes it possible to provide a multilayer film that has excellent transparency and small optical anisotropy and is environment-friendly and suitable for optical applications; and a polarizing plate using the same.

Incidentally, an optically positive or a negative resin layer herein is as follows. When each resin layer alone is formed and uniaxially stretched in the longitudinal direction, if the maximum refractive index direction in the layer plane is the stretching direction, such a film is defined as a positive resin layer, while if the maximum refractive index direction in the layer plane is perpendicular to the stretching direction, such a film is defined as a negative resin layer. Incidentally, the stretching conditions are such that the stretching is performed within a range from (the glass transition temperature of each resin layer (Tg) - 10)°C to (Tg + 20)°C, and the refractive index anisotropy is evaluated using an ellipsometer at a measurement wavelength of 550 nm.

This multilayer film includes at least one optically positive resin layer and at lease one optically positive or negative resin layer, and it is preferable that three or more layers are included. In terms of preventing the multilayer film from curling, it is more preferable that the multilayer film includes three layers and has a symmetrical structure such as optically negative resin layer/optically positive resin layer/optically negative resin layer or optically positive resin layer/optically negative resin layer/optically positive resin layer. When layers having opposite optical anisotropy properties are laminated, the optical anisotropy as the entire multilayer film is cancelled, making it possible to obtain a multilayer film with small anisotropy.

The optimal optical anisotropy depends on the intended use of the multilayer film. In the case where the retardation film function is not imparted to a polarizing plate protection film, it is preferable that the protection film is optically isotropic. In the case where the multilayer film of the invention is used for this application, the preferred optical anisotropy is represented by the following equations.

$$RO < 10\ nm \quad (40)$$

$$Rth < 70\ nm \quad (41)$$

(Here, RO and Rth are represented by

$$RO = (n_x - n_y) \times d \quad (42)$$

$$Rth = \{(n_x + n_y)/2 - n_z\} \times d \quad (43),$$

respectively, wherein d is the thickness of the multilayer film, and $n_x$, $n_y$, and $n_z$ are the three-dimensional refractive indices of the multilayer film and defined as follows: $n_x$ is a refractive index in the maximum refractive index direction in the film plane, $n_y$ is a refractive index in the direction perpendicular to $n_x$ in the film plane, and $n_z$ is a refractive index in the direction perpendicular to the film surface. RO and Rth can be evaluated by a known method such as an ellipsometer. In the invention, unless otherwise noted, the measurement wavelength is 550 nm.)

It is more preferable that

$$RO < 7\ nm \quad (44)$$

$$Rth < 50\ nm \quad (45),$$

and

it is still more preferable that

$$RO < 5\ nm (46)$$

$$Rth < 30\ nm \quad (47).$$

In terms of transparency, the haze is preferably 3% or less, more preferably 1% or less, and still more preferably 0.5% or less.

In order to obtain such a multilayer film, a known molding technique such as extrusion molding or cast molding may be used. For example, a film can be formed using an extruder or the like equipped with a T-die, an I-die, a circular die, or the like. Preferably, it is preferable to employ multilayer extrusion molding using a multi-manifold die or a T- or I-die having connected thereto a multi-layering system such as a feed block or a doubling system. An optimal method is selected from them depending on the number of layers, the physical properties of the resin, and the like.

In the case where the multilayer film is obtained by multilayer extrusion molding, for example, it is possible to use a material previously obtained by melt-kneading an optically positive resin and other components, and it is also possible to perform molding through melt-kneading during extrusion molding. An optically negative layer may also be molded in the same manner and at the same time, thereby forming a multilayer film. In order to suppress sharkskin or layer thickness variation, which is a problem in the molding of a multilayer film, it is preferable that resins used for respective layers have similar melt viscosities. Specifically, it is preferable that the difference in the melt flow rate of the resin between the optically positive resin layer and the optically negative resin layer at the same temperature is 20 (g/10 min) or less, and more preferably 10 or less. The melt flow rate is measured in accordance with the method of ISO 1133.

In addition, in terms of melt viscosity, it is also preferable that the melting points are similar. The difference in melting point temperature between the layers is preferably 30°C or less, more preferably 20°C or less, and still more preferably 10°C or less. In the invention, unless otherwise noted, Tg , Tm, and crystallization temperature (Tc) in the invention are values measured by a differential scanning calorimeter (DSC) at a temperature rise rate of 20°C/min and obtained in the first temperature rise.

The optically positive resin is a crystalline polymer, while the optically negative resin may be a crystalline polymer or an amorphous polymer. In the case where the optically negative resin is a crystalline polymer, it is preferable that the optically positive resin and the optically negative resin have similar glass transition temperatures (Tg) and melting points (Tm). The difference in Tg is preferably 30°C or less, more preferably 20°C or less, and still more preferably 10°C or less. Similarly, the difference in Tm is also preferably 30°C or less, more preferably 20°C or less, and still more preferably 10°C or less. In the case where the difference in Tm between the two is more than 30°C, problems such as variations in layer thickness may occur during the multilayer melt extrusion process. In addition, in the case where the difference in Tg is more than 30°C, problems such as uneven stretching may occur during the stretching process.

Meanwhile, in the case where the resin of the optically negative layer is an amorphous polymer, it is preferable that the crystallization temperature (Tc) of the optically positive resin is higher than the glass transition temperature (Tg) of the optically negative resin. Tc is preferably at least 5°C, still more preferably at least 10°C, higher than Tg. In the case where Tc is lower than Tg, stretching is performed at a temperature around or higher than Tg of each layer in the stretching process. As a result, the optically positive resin may crystallize during stretching, leading to the formation of crazes, etc., making it impossible to ensure transparency.

The multilayer film can be produced by extruding a molten film onto a cooling drum, and then bringing the film into close contact with the rotating cooling drum for cooling. At this time, it is possible that an electrostatic adhesion agent such as quaternary phosphonium sulfonate is incorporated into the molten film, and an electrical charge is easily applied to the molten surface of the film from an electrode in a non-contact manner, thereby bringing the film into close contact with a rotating cooling drum, so as to obtain a multilayer film having few surface defects. At that time, it is preferable that the ratio between the lip opening of the die for extrusion and the thickness of the sheet extruded onto the cooling drum (draft ratio) is 2 or more and 80 or less. When the draft ratio is less than 2, the rate of take-up from the extrusion die lips is too low. As a result, the rate of polymer release from the die lips is low, resulting in increased defects such as defective die-lip stripes; therefore, this may be undesirable. From this point of view, the draft ratio is preferably 3 or more, more preferably 5 or more, still more preferably 9 or more, and particularly preferably 15 or more. In addition, when the draft ratio is more than 80, probably because the deformation of the polymer upon release from the die lips is too large, the flow becomes unstable, resulting in greater variations in thickness (uneven thickness); therefore, this may be undesirable. From this point of view, the draft ratio is preferably 60 or less, more preferably 40 or less, and particularly preferable 30 or less.

In order to obtain a melt-extruded film, it is preferable that the resin in a molten state discharged through a die is rapidly cooled. Accordingly, the temperature of the cooling drum is preferably (the glass transition temperature of each resin + 20)°C or less, and more preferably (the glass transition temperature of the layer in the multilayer film that comes in contact with the cooling drum + 20)°C or less. In the case where the layer that comes in contact with a cooling drum is an optically positive resin layer, the cooling drum is preferably set at 10°C to 70°C, more preferably 20°C to 60°C, and most preferably 30°C to 50°C. When the temperature of the cooling drum is less than 10°C, the adhesion to the cooling drum may decrease, while in the case of a temperature of more than 70°C, a problem with transparency may occur due to crystallization caused by insufficient cooling, etc.

The multilayer film may be stretched by known longitudinal uniaxial stretching, transverse uniaxial stretching, simultaneous biaxial stretching, or the like. After stretching, the film may also be subjected to a heat set treatment in

order to increase crystallinity or suppress thermal shrinkability, etc.

The draw ratio is suitably determined according to the purpose, the kind of resin, and the like. In the multilayer film, the areal draw ratio (longitudinal ratio x transverse ratio) is preferably within a range of 6.0 or less, more preferably 4.0 or less, and still more preferably 3 or less and is also preferably within a range of 1.05 or more, and still more preferably 1.1 or more. In the case where the areal draw ratio is 6.0 or more, stretchability may deteriorate, resulting in problems such as an increase in the frequency of breakage during stretching. A ratio of less than 1.05 may result in insufficient mechanical strength.

The stretching temperature is suitably selected within a range from the glass transition temperature (Tg) to crystallization temperature (Tc) of the resins forming the multilayer film.

At a temperature lower than Tg, the molecular chain is fixed, and it is thus difficult to suitably advance the stretching processing, while at a temperature equal to or higher than Tc, crystallization is promoted during stretching. Also in such a case, it may be difficult to smoothly advance the stretching process.

Accordingly, the stretching temperature is, among the layer-forming resins, more preferably (Tg of the resin having the highest Tg - 10)°C or more, and still more preferably (Tg - 5)°C or more, and also more preferably (Tc of the resin having the lowest Tc + 10)°C or less, still more preferably (Tc + 5)°C or less, and most preferably Tc or less.

With respect to the heat set treatment, it is preferable to perform the heat set treatment at a temperature range from the crystallization temperature (Tc) of the crystalline resin having the highest Tc among the resins forming the multilayer film to the lowest melting point (Tm) among the layer-forming resins. Such a heat set treatment promotes the crystallization of the crystalline polymer of each layer containing stereocomplex polylactic acid, whereby the thermal shrinkage rate can be suitably reduced.

It is preferable that the heat set treatment is performed for 1 second to 30 minutes. When the heat treatment temperature is high, the time is relatively short, while when the heat setting temperature is low, a heat treatment for relatively a long period of time is required.

As an optically positive resin, for example, a resin containing polylactic acid and a cyclic carbodiimide compound can be mentioned, but other components may also be contained.

In this case, the polylactic acid component content of the optically positive resin is preferably 40 wt% or more, still more preferably 50 wt% or more, more preferably 60 wt% or more, particularly preferably 70wt% or more, and most preferably 75 wt% or more. When the polylactic acid content is less than 40 wt%, polylactic acid is unlikely to crystallize, and this may lead to problems with heat resistance, etc. In the case where resins other than polylactic acid are added, in terms of the moldability of the multilayer film, it is preferable to use thermoplastic resins.

Examples of thermoplastic resins other than polylactic acid include polyester resins other than polylactic acid resins, polyamide resins, polyacetal resins, polyolefin resins such as polyethylene resins and polypropylene resins, polystyrene resins, acrylic resins, polyurethane resins, chlorinated polyethylene resins, chlorinated polypropylene resins, aromatic polyketone resins, aliphatic polyketone resins, fluorocarbon resins, polyphenylene sulfide resins, polyetherketone resins, polyimide resins, thermoplastic starch resins, AS resins, ABS resins, AES resins, ACS resins, polyvinyl chloride resins, polyvinylidene chloride resins, vinyl ester resins, MS resins, polycarbonate resins, polyarylate resins, polysulfone resins, polyether sulfone resins, phenoxy resins, polyphenylene oxide resins, poly-4-methylpentene-1, polyetherimide resins, polyvinyl alcohol resins, and like thermoplastic resins.

In particular, acrylic resins, particularly polymethyl methacrylate (hereinafter sometimes abbreviated as PMMA), are preferable because they have high compatibility with polylactic acid together with a similar refractive index. The acrylic resin content of the optically positive layer of the multilayer film is preferably 50 wt% or less, more preferably 40 wt% or less, and still more preferably 30 wt% or less. In the case where the acrylic resin content is more than 50 wt%, it is difficult to crystallize polylactic acid, and this may lead to problems with heat resistance, etc. Incidentally, for acrylic resins, the subject matter described in the section <Optical Film> above may be directly applied.

Each layer of the multilayer film may contain at least one member selected from the group consisting of thermoplastic resins other than the components, stabilizers, UV absorbers, crystallization promoters, fillers, release agents, antistatic agents, plasticizers, and impact-resistance stabilizers.

As stabilizers, those used as stabilizers for ordinary thermoplastic resins are usable. Examples thereof include antioxidants and light stabilizers. By incorporating such agents, a multilayer film having excellent mechanical properties, moldability, heat resistance, and durability can be obtained.

Examples of antioxidants include hindered phenol compounds, hindered amine compounds, phosphite compounds, and thioether compounds.

Examples of light stabilizers include oxybenzophenone compounds, cyclic iminoester compounds, benzotriazole compounds, salicylic acid ester compounds, benzophenone compounds, cyanoacrylate compounds, hindered amine compounds, and nickel complex compounds. As a light stabilizer, it is also possible to use a combination of a UV absorber and one that scavenges radicals formed during photo-oxidation.

As UV absorbers, cyclic iminoester compounds, benzophenone compounds, and benzotriazole compounds are preferable because the absorption of visible light can thereby be minimized. In addition, in terms of preventing a

polarizing film or liquid crystals from deterioration, those having excellent absorption capability for UV light with a wavelength of 370 nm or less are preferable, and, in terms of the liquid crystal display performance, those having low absorption of visible light with a wavelength of 400 nm or more are preferable. In terms of preventing a UV absorber from bleeding out, it is preferable that the multilayer film has a three-layer structure of optically positive resin layer/optically negative resin layer/optically positive resin layer or optically negative resin layer/optically positive resin layer/optically negative resin layer, and that the middle layer (the optically negative resin layer in the former and the optically positive resin layer in the latter) contains the UV absorber.

An organic or inorganic crystallization promoter may be contained. When a crystallization promoter is contained, in the case where polylactic acid is used, the stereocomplex-crystal promoter function can be further enhanced, and a molded article with excellent mechanical properties, heat resistance, and moldability can be obtained.

As crystallization promoters, those generally used as crystal-nucleating agents for crystalline resins are usable. Both inorganic crystal-nucleating agents and organic crystal-nucleating agents may be used.

Examples of inorganic crystal-nucleating agents include talc, kaolin, silica, synthetic mica, clay, zeolite, graphite, carbon black, zinc oxide, magnesium oxide, titanium oxide, calcium carbonate, calcium sulfate, barium sulfate, calcium sulfide, boron nitride, montmorillonite, neodymium oxide, aluminum oxide, and phenylphosphonate metal salts.

In order to improve their dispersibility in the composition together with their effects, it is preferable that these inorganic crystal-nucleating agents are treated with various dispersion aids and thus in a highly dispersed state such that the primary particle size thereof is about 0.01 to 0.5 μm.

Examples of organic crystal-nucleating agents include organic carboxylic acid metal salts such as calcium benzoate, sodium benzoate, lithium benzoate, potassium benzoate, magnesium benzoate, barium benzoate, calcium oxalate, disodium terephthalate, dilithium terephthalate, dipotassium terephthalate, sodium laurate, potassium laurate, sodium myristate, potassium myristate, calcium myristate, barium myristate, sodium octanoate, calcium octanoate, sodium stearate, potassium stearate, lithium stearate, calcium stearate, magnesium stearate, barium stearate, sodium montanate, calcium montanate, sodium toluylate, sodium salicylate, potassium salicylate, zinc salicylate, aluminum dibenzoate, sodium β-naphthoate, potassium β-naphthoate, and sodium cyclohexanecarboxylate, and organic sulfonic acid metal salts such as sodium p-toluenesulfonate and sodium sulfoisophthalate.

Examples also include organic carboxylic acid amides such as stearic acid amide, ethylenebis lauric acid amide, palmitic acid amide, hydroxystearic acid amide, erucic acid amide, and trimesic acid tris(tert-butylamide), low-density polyethylene, high-density polyethylene, polyisopropylene, polybutene, poly-4-methylpentene, poly-3-methylbutene-1, polyvinyl cycloalkanes, polyvinyl trialkylsilanes, high-melting-point polylactic acid, sodium salts of ethylene-acrylic acid copolymers, sodium salts of styrene-maleic anhydride copolymers (so-called ionomers), and benzylidene sorbitols and derivatives thereof, such as dibenzylidene sorbitol.

Among these, talc and at least one member selected from organic carboxylic acid metal salts are preferable. The crystal-nucleating agents may be used alone, and it is also possible to use two or more kinds together.

The crystallization promoter content is preferably 0.01 to 30 parts by weight, more preferably 0.05 to 20 parts by weight, based on 100 parts by weight in the case of polylactic acid.

Examples of antistatic agents include quaternary ammonium salt compounds, sulfonic acid compounds, and alkyl phosphate compounds, such as (β-lauramidepropionyl) trimethylammonium sulfate and sodium dodecylbenzenesulfonate.

In the multilayer film, antistatic agents may be used alone, and it is also possible to use two or more kinds in combination. The antistatic agent content is preferably 0.05 to 5 parts by weight, more preferably 0.1 to 5 parts by weight, based on 100 parts by weight in the case of polylactic acid.

As plasticizers, commonly known plasticizers are usable. Examples thereof include polyester plasticizers, glycerin plasticizers, polycarboxylic acid ester plasticizers, phosphoric acid ester plasticizers, polyalkylene glycol plasticizers, and epoxy plasticizers.

Examples of polyester plasticizers include polyesters containing adipic acid, sebacic acid, terephthalic acid, isophthalic acid, naphthalenedicarboxylic acid, diphenyldicarboxylic acid, or the like as an acid component and ethylene glycol, propylene glycol, 1,3-butanediol, 1,4-butanediol, 1,6-hexanediol, diethylene glycol, or the like as a diol component, as well as polyesters of hydroxycarboxylic acids, such as polycaprolactone. These polyesters may be end-capped with a monofunctional carboxylic acid or a monofunctional alcohol.

Examples of glycerin plasticizers include glycerin monostearate, glycerin distearate, glycerin monoacetomonolaurate, glycerin monoacetomonostearate, glycerin diacetomonooleate, and glycerin monoacetomonomontanate.

Examples of polycarboxylic acid plasticizers include phthalic acid esters such as dimethyl phthalate, diethyl phthalate, dibutyl phthalate, diheptyl phthalate, dibenzyl phthalate, and butyl benzyl phthalate; trimellitic acid esters such as tributyl trimellitate, trioctyl trimellitate, and trihexyl trimellitate; adipic acid esters such as isodecyl adipate and n-decyl-n-octyl adipate; citric acid esters such as tributyl acetylcitrate; azelaic acid esters such as bis(2-ethylhexyl)azelate; and sebacic acid esters such as dibutyl sebacate and bis(2-ethylhexyl)sebacate.

Examples of phosphoric acid ester plasticizers include tributyl phosphate, tris(2-ethylhexyl) phosphate, trioctyl

phosphate, triphenyl phosphate, tricresyl phosphate, and diphenyl-2-ethylhexyl phosphate.

Examples of polyalkylene glycol plasticizers include polyalkylene glycols such as polyethylene glycol, polypropylene glycol, polytetramethylene glycol, poly(ethylene oxide-propylene oxide) block or random copolymers, ethylene oxide addition polymers of bisphenols, and tetrahydrofuran addition polymers of bisphenols, as well as end-capping agent compounds such as terminal-epoxy-modified compounds, terminal-ester-modified compounds, and terminal-ether-modified compounds thereof.

Examples of epoxy plasticizers include epoxy triglycerides containing an alkyl epoxystearate and soybean oil and also epoxy resins obtained from bisphenol A and epichlorohydrin as raw materials.

Other specific examples of plasticizers include benzoic acid esters of aliphatic polyols, such as neopentyl glycol dibenzoate, diethylene glycol dibenzoate, and triethylene glycol-bis(2-ethylbutyrate); fatty acid amides such as stearic acid amide; fatty acid esters such as butyl oleate; oxyacid esters such as methyl acetyl ricinoleate and butyl acetyl ricinoleate; pentaerythritol; various sorbitols; polyacrylic acid esters; silicone oil; and paraffins.

As the plasticizer, in particular, one containing at least one member selected from polyester plasticizers and polyalkylene plasticizers can be suitably used. They may be used alone, and it is also possible to use two or more kinds together.

The plasticizer content is preferably 0.01 to 30 parts by weight, more preferably 0.05 to 20 parts by weight, and still more preferably 0.1 to 10 parts by weight based on 100 parts by weight of each layer of the multilayer film. In the invention, a crystal-nucleating agent and a plasticizer may be used independently, but are still more preferably used in combination.

Hereinafter, polarizing plate protection film applications will be described in detail.

A polarizing plate is generally configured such that a polarizing film is sandwiched between a pair of protection films. As the protection film, a film having maximized optical isotropy so as not to affect the polarization properties of the polarizing film or, conversely, a film controlled to have retardation properties for improving the image quality of a liquid crystal display, so-called retardation film, may be used as the protection film. Unless otherwise noted, "protection film" herein includes both optically isotropic and optically anisotropic films.

As the polarizing plate, the multilayer film mentioned above may be used, and at least one multilayer film of the invention is used as the protection film.

In addition, the polarizing film can be produced by a known method. The polarizing film is formed mainly from a polyvinyl alcohol resin. As the polarizing film, one obtained by dying a polyvinyl alcohol resin film with a dichroic substance (typically iodine, dichroic dye), followed by uniaxial stretching, is used. The degree of polymerization of the polyvinyl alcohol resin forming the polyvinyl alcohol resin film is preferably 100 to 5,000, and still more preferably 1,400 to 4,000. When the degree of polymerization is too low, breakage due to stretching is likely to occur during predetermined stretching. When the degree of polymerization is too high, excessive tension is required for stretching, and it may be impossible to mechanically stretch the film.

The polyvinyl alcohol resin film forming the polarizing film can be molded by any suitable method (e.g., flow casting in which a solution prepared by dissolving a resin in water or an organic solvent is cast into a film, casting, or extrusion). The thickness of the polarizing film is suitably selected according to the purpose or intended use of the liquid crystal display in which the polarizing plate is to be used, and is usually about 5 to 80 $\mu$m.

As a method for producing the polarizing film, any suitable method is employed according to the purpose, used materials, conditions, and the like. For example, a technique in which the polyvinyl alcohol resin film is subjected to a series of production processes including swelling, dyeing, crosslinking, stretching, water washing, and drying is usually employed. In each of the treatment processes other than the drying process, the treatment is performed by immersing the polyvinyl alcohol resin film in a liquid containing a solution used for each process. The order of the swelling, dyeing, crosslinking, stretching, water washing, and drying treatments, the number of treatments, and whether to perform them are suitably selected according the purpose, used materials, conditions, etc. For example, it is possible to perform several treatments simultaneously in one process, and it is also possible to simultaneously perform the swelling treatment, dyeing treatment, and crosslinking treatment. In addition, for example, the crosslinking treatment may be suitably performed before and after the stretching treatment. In addition, for example, the water washing treatment may be performed after each treatment or may also be performed only after a specific treatment.

Typically, the swelling process is performed by immersing the polyvinyl alcohol resin film in a treatment bath filled with water. By this treatment, soils and anti-blocking agents on the surface of the polyvinyl alcohol resin film are washed away, and, at the same time, the polyvinyl alcohol resin film is swollen, whereby nonuniformities such as uneven dyeing can be prevented. Glycerol, potassium iodide, and the like are suitably added to the swelling bath. The temperature of the swelling bath is usually about 20 to 60°C, and the immersion time in the swelling bath is usually about 0.1 to 10 minutes.

The dyeing process is typically performed by immersing the polyvinyl alcohol resin film in a treatment bath containing a dichroic substance such as iodine. Water is generally used as a solvent for the dyeing bath solution, and an appropriate amount of a water-compatible organic solvent may also be added. The dichroic substance is usually

used in an amount of 0.1 to 1 part by weight per 100 parts by weight of the solvent. In the case where iodine is used as the dichroic substance, it is preferable that the dyeing bath solution further contains an auxiliary agent such as an iodide. This is because the dyeing efficiency is thereby improved. The auxiliary agent is used preferably in an amount of 0.02 to 20 parts by weight, still more preferably 2 to 10 parts by weight, per 100 parts by weight of the solvent. Specific examples of iodides include potassium iodide, lithium iodide, sodium iodide, zinc iodide, aluminum iodide, lead iodide, copper iodide, barium iodide, calcium iodide, tin iodide, and titanium iodide. The temperature of the dyeing bath is usually about 20 to 70°C, and the immersion time in the dyeing bath is usually about 1 to 20 minutes.

The crosslinking process is typically performed by immersing the dyed polyvinyl alcohol resin film in a treatment bath containing a crosslinking agent. As the crosslinking agent, any suitable crosslinking agent is employed. Specific examples of crosslinking agents include boron compounds such as boric acid and borax, glyoxal, and glutaraldehyde. They are used alone or in combination. Water is generally used as a solvent for the crosslinking bath solution, and an appropriate amount of a water-compatible organic solvent may also be added. The crosslinking agent is usually used in an amount of 1 to 10 parts by weight per 100 parts by weight of the solvent. In the case where the concentration of the crosslinking agent is less than 1 part by weight, sufficient optical properties cannot be obtained. In the case where the concentration of the crosslinking agent is more than 10 parts by weight, a large stress is generated on the film during stretching, whereby the resulting polarizing plate may shrink. It is preferable that the crosslinking bath solution further contains an auxiliary agent such as an iodide. This is because properties are likely to be uniform in the plane. The concentration of the auxiliary agent is preferably 0.05 to 15 wt%, and still more preferably 0.5 to 8 wt%. Specific examples of iodides are the same as in the case of the dyeing process. The temperature of the crosslinking bath is usually about 20 to 70°C, and preferably 40 to 60°C. The immersion time in the crosslinking bath is usually about 1 second to 15 minutes, and preferably 5 seconds to 10 minutes.

The polarizing film stretching process may be performed at any stage as mentioned above. Specifically, the process may be performed after the dyeing treatment, before the dyeing treatment, simultaneously with the swelling treatment, dyeing treatment, and crosslinking treatment, or after the crosslinking treatment. The accumulated draw ratio of the polyvinyl alcohol resin film is usually 5 or more. It is preferably 5 to 7, and still more preferably 5 to 6.5. In the case where the accumulated draw ratio is less than 5, it is difficult to obtain a polarizing plate having a high degree of polarization. In the case where the accumulated draw ratio is more than 7, the polyvinyl alcohol resin film may be prone to breakage. As a specific method for stretching, any suitable method is employed. For example, in the case where a wet stretching method is employed, the polyvinyl alcohol resin film is stretched at a predetermined ratio in a treatment bath. As the stretching bath solution, a solution obtained by adding any of various metal salts or an iodine, boron, or zinc compound to a solvent such as water or an organic solvent (e.g., ethanol) is suitably used.

The water washing process is typically performed by immersing the polyvinyl alcohol resin film, which has undergone the various treatments mentioned above, in a treatment bath. By the water washing process, unnecessary residues on the polyvinyl alcohol resin film can be washed away. The water washing bath may be pure water and may also be an aqueous solution of an iodide (e.g., potassium iodide, sodium iodide, etc.). The concentration of the aqueous iodide solution is preferably 0.1 to 10 wt%. The aqueous iodide solution may contain auxiliary agents such as zinc sulfate and zinc chloride. The temperature of the water washing bath is preferably 10 to 60°C, and still more preferably 30 to 40°C. The immersion time is 1 second to 1 minute. The water washing process may be performed only once and may also be performed several times as neccessary. In the case where the process is performed several times, the kinds and concentrations of additives contained in the water washing bath used for each treatment are suitably adjusted. For example, the water washing process includes a step of immersing the polyvinyl alcohol resin film, which has undergone the various treatments mentioned above, in an aqueous potassium iodide solution (0.1 to 10 wt%, 10 to 60°C) for 1 second to 1 minute and a step of rinsing with pure water. In addition, in the water washing process, for the surface modification of the polarizing film or for increasing the polarizing film drying efficiency, it is also possible to suitably add a water-compatible organic solvent (e.g., ethanol, etc.).

In the drying process, any suitable method (e.g., natural drying, air drying, drying by heating) may be employed. For example, in the case of drying by heating, the drying temperature is usually about 20 to 80°C, and the drying time is usually about 1 to 10 minutes. A polarizing film is thus obtained.

The moisture content of the polarizing film is preferably 15 wt% or less, more preferably 0 to 14 wt%, and still more preferably 1 to 14 wt%. When the moisture content is more than 15 wt%, the obtained polarizing plate undergoes large dimensional changes. This may lead to problems in that large dimensional changes occur at high temperatures or at high temperatures and humidity.

The moisture content of the polarizing film may be adjusted by any suitable method. An example thereof is a method in which the moisture content is controlled by adjusting the conditions of the drying process in the polarizing film production process.

For adhesion between the polarizing film and the protection film, a known method is used. As an adhesive, a radiation-curable adhesive, a water-soluble adhesive, an aqueous emulsion adhesive, or the like may be used, but it is preferable to use a radiation-curable adhesive composition.

The adhesive coating technique is suitably selected according to the viscosity of the adhesive and the desired thickness. Examples of coating techniques include reverse coaters, gravure coaters (direct, reverse, or offset), bar reverse coaters, roll coaters, die coaters, bar coaters, and rod coaters. In addition, dipping and like techniques may be suitably used for coating.

Via the thus-formed adhesive coating, the polarizing film and the multilayer film are laminated together. The lamination of the polarizing film and the multilayer film can be performed using a roll laminator or the like.

After the polarizing film and the multilayer film are laminated together, radiation may be applied to cure the adhesive. As the radiation, it is preferable to use UV light and/or an electron beam. UV light is preferable. The viscosity of the radiation-curable adhesive composition is preferably 0.1 to 5,000 mPa-s, more preferably 0.5 to 1,000 mPa-s, and still more preferably 1 to 500 mPa-s.

The thickness of the adhesive after curing is preferably 0.1 to 10 μm, more preferably 0.3 to 7 μm, and still more preferably 0.5 to 5 μm. In the case where the thickness of the adhesive is less than 0.1 μm, sufficient adhesion strength may not be obtained. In addition, in the case where it is more than 10 μm, homogeneous application is difficult, and the polarizing plate may have a poor appearance.

In the case where UV light is used, a known low-pressure mercury lamp, high-pressure mercury lamp, ultrahigh-pressure mercury lamp, xenon lamp, metal halide lamp, excimer lamp, LED, or the like is suitably used as the light source. Polylactic acid absorbs light at a wavelength of 250 nm or less; however, in the case where high-intensity light in this wavelength region is applied, decomposition may occur. Accordingly, when the radiation-curable adhesive composition is to be cured, it is preferable to filter out UV light up to 270 nm, more preferably up to 280 nm, still more preferably up to 280 nm, and most preferably up to 300 nm. UV light can be filtered out by a known method, for example, by selecting a suitable UV light source or using a UV filter.

The intensity of UV light is preferably 10 to 1,000 $mW/cm^2$, more preferably 20 to 700 $mW/cm^2$, and still more preferably 30 to 500 $mW/cm^2$. When the intensity is less than two 10 $mW/cm^2$, curing takes too much time, resulting in low productivity, while when it is more than 1,000 $mW/cm^2$, the polarization performance of the polarizing film may deteriorate due to heat. In addition, the accumulated light amount is preferably 100 to 10,000 $mJ/cm^2$, more preferably 200 to 5,000 $mJ/cm^2$, and still more preferably 300 to 3,000 $mJ/cm^2$. When the accumulated light amount is less than 100 $mJ/cm^2$, curing may be insufficient, while in the case where it is more than 10,000 $mJ/cm^2$, the polarization performance of the polarizing film may deteriorate due to heat. With respect to the direction of irradiation with UV light, the polarizing plate may be irradiated from one side or both sides.

In the case where the radiation-curable adhesive composition is cured by light such as UV light, when the multilayer film contains a UV absorber, and UV light is applied from the multilayer-film side, it is preferable to suitably select a photoinitiator for the radiation-curable adhesive composition such that a reaction is photoinitiated at a wavelength longer than the UV absorption wavelength region of the multilayer film. That is, it is preferable that the radiation-curable adhesive composition contains a photoinitiator that initiates a reaction by light of 380 nm or more. This is because, as described above, in the case where a UV absorber needs to be added to the multilayer film, the preferred light transmittance at a wavelength of 380 nm is 20% or less, while the light transmittance at a wavelength of 375 nm is 1% or less. For example, of the photoinitiators mentioned above, it is preferable to use one having an extinction coefficient (ml/g-cm) at a wavelength of 405 nm of 1 or more, preferably 10 or more, and still more preferably 100 or more. The extinction coefficient can be measured, for example, with a spectrometer from a solution of the photoinitiator in a methanol solvent, etc. Preferred examples of such photoinitiators include bis(2,4,6-trimethyzbenzoyl)-phenylphosphine oxide, bis (2,6-dimethoxybenzoyl)-2,4,4-trimethyl-pentyl phosphine oxide, 2,4,6-trimethylbenzoyl-diphenyl-phosphine oxide, a mixture of bis(2,6-dimethoxybenzoyl)-2,4,4-trimethyl-pentyl phosphine oxide and 1-hydroxycyclohexyl phenyl ketone, and a mixture of 2,4,6-trimethylbenzoyl-diphenyl-phosphine oxide and 2-hydroxy-2-methyl-1-phenylpropan-1-one.

In the case where an electron beam is used as the radiation, with respect to the direction of irradiation, an electron beam may be applied from any suitable direction. It is preferable that the electron beam is applied from the multilayer-film side. In the case where it is applied from the polarizing-film side, the polarizing film may deteriorate due to the electron beam.

As the conditions of electron beam irradiation, any suitable conditions may be employed as long as the adhesive can cure under such conditions. For example, in electron beam irradiation, the acceleration voltage is preferably 5 kV to 300 kV, and still more preferably 10 kV to 250 kV. In the case where the acceleration voltage is less than 5 kV, the electron beam may not reach the adhesive, resulting in insufficient curing. When the acceleration voltage is more than 300 kV, the power of penetration through the sample may be so strong that the electron beam is reflected back, damaging the multilayer film or the polarizing film. The irradiation dose is 5 to 100 kGy, and still more preferably 10 to 75 kGy. In the case where the irradiation dose is less than 5 kGy, the adhesive does not cure sufficiently. When it is more than 100 kGy, the multilayer film or the polarizing film is damaged, causing a decrease in mechanical strength or yellowing. As a result, predetermined optical properties cannot be obtained.

In the case where the production method is performed in a continuous line, the line speed depends on the curing time of the adhesive, but is preferably 1 to 500 m/min, more preferably 5 to 300 m/min, and still more preferably

10 to 100 m/min. In the case where the line speed is too low, productivity is poor.

In the case where the line speed is too high, the adhesive does not cure sufficiently, and the desired adhesion may not be obtained.

A heat treatment process may be established after the adhesion process. The heat treatment temperature is preferably 40 to 100°C, and more preferably 50 to 85°C. When the temperature is less than 40°C, the effect as a heat treatment process is low, while when it is more than 100°C, the polarizing film may deteriorate. The heat treatment time is preferably about 5 seconds to 10 minutes. When it is less than 5 seconds, the effect of the heat treatment cannot be expected, while when it is more than 10 minutes, a problem with productivity may occur.

It is preferable that the adhesion peel strength between the polarizing film and the multilayer film is 2 N/25 mm or more as measured by the peel test described in JIS K6854, more preferably 3 N/25 mm or more, still more preferably 4 N/25 mm or more, and most preferably 5 N/25 mm or more. When the peel strength is less than 2 N/25 mm, problems may occur during the actual use of the polarizing plate. In the invention, unless otherwise noted, peel strength was evaluated at a peel rate of 200 mm/min with a film width of 25 mm.

Incidentally, an adhesive layer may be present between the polarizing film and the protection film. In addition, the polarizing plate may have on the outermost surface thereof an antireflection film, a hard coating film, an anti-stain film, or the like. Further, for lamination to a liquid crystal display, a pressure-sensitive adhesive layer may be provided on one side of the polarizing plate.

<Transparent Conductive Laminate>

The film of the invention is applicable to a transparent conductive laminate for liquid crystal displays (LCD), transparent touch panels, organic electroluminescent devices, inorganic electroluminescent lamps, electromagnetic shielding materials, and the like, especially to a transparent conductive laminate for electrode substrates for transparent touch panels. In a transparent conductive laminate including a transparent conductive layer formed on at least one side of a transparent polymer substrate, the transparent polymer substrate is made of a resin composition containing a polymer compound having an acidic group and a cyclic carbodiimide compound. For example, a polyester resin can be used as the polymer compound having an acidic group. It is particularly preferable to use an aliphatic polyester resin that produces a great effect upon the addition of a cyclic carbodiimide compound.

Incidentally, in the transparent conductive laminate, a pressure-sensitive adhesive layer and a second transparent substrate may be successively laminated to the other side of the transparent polymer substrate (first substrate) opposite to the side on which the transparent conductive layer is formed.

According to the intended use, the transparent polymer substrate may be suitably selected from those having low optical birefringence, those with a controlled birefringence of $\lambda/4$ or $\lambda/2$, for example, and those having no control over the birefringence. Low optical birefringence means that the value of the in-plane retardation Re at a wavelength of 550 nm is 20 nm or less. In addition, to have birefringence means that the value of the in-plane retardation Re exceeds 20 nm by stretching or a like operation. The in-plane retardation Re is defined by the product of the thickness and the difference between the maximum refractive index in the film plane and the refractive index in the direction perpendicular to the direction that shows the maximum refractive index in the film plane.

An example of the case where a selection is suitably made according to the intended use herein is the case where the transparent conductive laminate is used as a display member that functions upon polarization such as linear polarization, elliptical polarization, circular polarization, or the like, such as a polarizing plate or a retardation film for use in liquid crystal displays or an inner touch panel.

It is preferable that the transparent polymer substrate herein contains an aliphatic polyester resin. In terms of required optical properties and mechanical properties, it is possible to blend, for example, polyamide resins, polyacetal resins, polyolefin resins such as polyethylene resins and polypropylene resins, polystyrene resins, acrylic resins, polyurethane resins, chlorinated polyethylene resins, chlorinated polypropylene resins, aromatic polyketone resins, aliphatic polyketone resins, fluorocarbon resins, polyphenylene sulfide resins, polyetherketone resins, polyimide resins, thermoplastic starch resins, AS resins, ABS resins, AES resins, ACS resins, polyvinyl chloride resins, polyvinylidene chloride resins, vinyl ester resins, MS resins, polycarbonate resins, polyarylate resins, polysulfone resins, polyether sulfone resins, phenoxy resins, polyphenylene oxide resins, poly-4-methylpentene-1, polyetherimide resins, polyvinyl alcohol resins, etc.

Among them, in the case where the aliphatic polyester resin is polylactic acid, acrylic resins, particularly polymethyl methacrylate, are preferable in terms of having high compatibility and a similar refractive index.

The aliphatic polyester resin content of the transparent polymer substrate is preferably 40 wt% or more, still more preferably 50 wt% or more, more preferably 60 wt% or more, particularly preferably 70 wt% or more, and most preferably 75 wt% or more. When the aliphatic polyester resin content is less than 40 wt%, the aliphatic polyester resin is unlikely to crystallize, and this may lead to problems with heat resistance, etc.

In addition to the aliphatic polyester resin and the cyclic carbodiimide compound, as long as the desired optical

properties and mechanical properties are not impaired, known organic materials and inorganic materials may be added.

Although the thickness of the transparent polymer substrate may be suitably determined, it is generally about 10 to 500 μm in terms of working properties such as strength and handleability. In particular, the thickness is preferably 20 to 300 μm, and more preferably 30 to 200 μm.

In addition, although this depends on the purpose, it is preferable that the transparent polymer substrate has excellent transparency. "Transparency" herein means that, for example, the total light transmittance is 80% or more, preferably 85% or more, still more preferably 90% or more, particularly preferably 91% or more, and most preferably 92% or more. In addition, the haze value is 20% or less, preferably 15% or less, still more preferably 10% or less, particularly preferably 5% or less, and most preferably 3% or less.

Examples of aliphatic polyester resins include polymers containing an aliphatic hydroxycarboxylic acid as a main component, polymers obtained by the polycondensation of an aliphatic polycarboxylic acid or an ester-forming derivative thereof and an aliphatic polyalcohol as main components, and copolymers thereof.

Examples of polymers containing an aliphatic hydroxycarboxylic acid as a main component inclucde polycondensates and copolymers of glycolic acid, lactic acid, hydroxypropionic acid, hydroxybutyric acid, hydroxyvaleric acid, hydroxycaproic acid, etc. Among them, polyglycolic acid, polylactic acid, poly(3-hydroxycarboxybutyric acid), poly (4-hydroxybutyric acid), poly(3-hydroxyhexanoic acid), polycaprolactone, copolymers thereof, and the like are preferable. Among them, polylactic acid resins are particularly preferable, examples thereof including poly(L-lactic acid), poly(D-lactic acid), stereocomplex polylactic acid that can form a stereocomplex crystal, racemic polylactic acid, and polylactic acid copolymers obtained by copolymerization with other ester-forming components. Examples of copolymerizable components include hydroxycarboxylic acids such as glycolic acid, 3-hydroxybutyric acid, 4-hydroxybutyric acid, 4-hydroxyvaleric acid, and 6-hydroxycaproic acid; compounds having a plurality of hydroxyl groups in the molecule, such as ethylene glycol, propylene glycol, butanediol, neopentyl glycol, polyethylene glycol, glycerin, and pentaerythritol, as well as derivatives thereof; and compounds having a plurality of carboxylic acid groups in the molecule, such as adipic acid, sebacic acid, and fumaric acid, as well as derivatives thereof. The amount of the copolymer component introduced may usually be less than 10 mol %. Among them, in terms of transparency and heat resistance, stereocomplex polylactic acid is most preferable.

Hereinafter, a polylactic acid resin (particularly stereocomplex polylactic acid) will be described in detail.

The stereocomplex crystallinity (S) is preferably within a range of 93% to 100%, and more preferably 95 to 100%. It is particularly preferable that the stereocomplex crystallinity (S) is 100%.

When a transparent polymer substrate having a stereocomplex crystallinity (S) of 90% or more is used, transparency can be maintained high. In addition, high heat resistance is also achieved.

Incidentally, stereocomplex crystallinity (S) indicates the proportion of stereocomplex crystal formation in polylactic acid under the differential scanning calorimeter (DSC) measurement conditions (190°C). Even when the stereocomplex crystallinity (S) is 100%, polylactic acid before DSC measurement may be in a crystalline state or an amorphous state, but it is preferable that the transparent polymer substrate is in a crystalline state.

"Crystalline state" herein means that the peak enthalpy of polylactic acid stereocomplex crystal ($\Delta Hc_{sc}$) in the first temperature rise measured by DSC (differential scanning calorimeter) at a temperature rise rate of 20°C/min is 10 J/g or less, preferably 5 J/g or less, and still more preferably 1 J/g or less. That is, this means that in the case where a stereocomplex crystal is already present, the peak enthalpy is not seen. Incidentally, in the case where the above formula is not satisfied, heat resistance deteriorates, and defects may occur at the time of processing a transparent conductive layer, a coating layer, etc.

In the transparent conductive laminate, a transparent conductive layer is placed on at least one side of the transparent polymer substrate.

Materials forming the conductive layer herein are not particularly limited. Examples thereof include conductive materials capable of forming a transparent conductive layer selected from metal layers, crystalline and amorphous metal compounds, conductive polymers such as polyacethylene, polyparaphenylene, polythiophene, polyethylene dioxythiophene, polypyrrole, polyaniline, polyacene, and polyphenylenevinylene, etc. Among them, for example, crystalline metal layers and crystalline metal compounds can be mentioned. Specific examples of components forming the transparent conductive layer include metal oxides such as silicon oxide, aluminum oxide, titanium oxide, magnesium oxide, zinc oxide, indium oxide, and tin oxide. Among them, a crystalline layer containing indium oxide as a main component is preferable, and it is particularly preferable to use a layer made of crystalline ITO (Indium Tin Oxide).

In addition, in the case where the transparent conductive layer is made of a crystalline material, although it is not neccessary to establish a particular upper limit, the crystal particle size is preferably 3,000 nm or less. A crystal particle size of more than 3,000 nm is undesirable because this results in poor writing durability. Crystal particle size herein is defined as the greatest diagonal or diameter of each polygonal or elliptical region observed under a transmission electron microscope (TEM).

In the case where the transparent conductive layer is not a crystalline film, sliding durability or environmental reliability required for a touch panel may decrease.

The transparent conductive layer can be formed by a known technique. For example, it is possible to use a physical forming method (physical vapor deposition (sometimes abbreviated as "PVD")) such as DC magnetron sputtering, RF magnetron sputtering, ion plating, vacuum deposition, or pulsed laser deposition. Focusing attention on industrial productivity for forming a metal compound layer with a uniform thickness over a large area, DC magnetron sputtering is preferable. Incidentally, in addition to the physical forming methods (PVD) mentioned above, it is also possible to use a chemical forming method such as chemical vapor deposition (sometimes abbreviated as "CVD") and sol-gel process. However, in terms of controlling the film thickness, sputtering is still preferable.

In terms of transparency and electrical conductivity, the thickness of the transparent conductive layer is preferably 5 to 50 nm, and still more preferably 5 to 30 nm. When the thickness of the transparent conductive layer is less than 5 nm, the time-dependent stability of resistance tends to decrease, while when it is more than 50 nm, the surface resistance decreases, which is undesirable as a touch panel.

In the case where the transparent conductive laminate is used as a touch panel, for reducing the power consumption of the touch panel and also for the necessity for circuit processing, etc., it is preferable to use a transparent conductive layer having, when its thickness is 10 to 30 nm, a surface resistance within a range of 100 to 2,000 Ω/sq., and more preferably 140 to 1,000 Ω/sq.

In the transparent conductive laminate, a coating layer may be formed between the transparent polymer substrate and the transparent conductive layer. As materials for forming the coating layer, inorganic materials and organic materials such as curable resins are mentioned. Examples of curable resins include polyfunctional acrylate radiation-curable resins such as polyol acrylate, polyester acrylate, urethane acrylate, and epoxy acrylate; polymers of silicon alkoxides such as methyltriethoxysilane and phenyltriethoxysilane; melamine thermosetting resins such as etherified methylolmelamine; phenoxy thermosetting resins; and epoxy thermosetting resins. Among these, when radiation-curable resins such as polyfunctional acrylate resins are used, by exposure to radiation, a highly crosslinked layer can be obtained as a coating layer within a relatively short period of time. Accordingly, the load on the production process is small, and also the layer is characterized by high strength. They are thus most preferably used.

A radiation-curable resin refers to a resin that polymerizes when exposed to radiation such as UV light or an electron beam. Examples thereof include acrylic resins containing, in the resin composition, a polyfunctional acrylate component having two or more acryloyl groups in the unit structure. For example, various acrylate monomers such as trimethylolpropane triacrylate, trimethylolpropane ethylene oxide-modified triacrylate, trimethylolpropane propylene oxide-modified triacrylate, ethylene oxide isocyanurate-modified triacrylate, pentaerythritol tetraacrylate, dipentaerythritol pentaacrylate, dipentaerythritol hexaacrylate, and dimethylol tricyclodecane diacrylate, polyfunctional acrylate oligomers such as polyester-modified acrylate, urethane-modified acrylate, and epoxy-modified acrylate, and the like are preferably used for this application. These resins may be used as a single composition and may also be used as a mixture of several compositions. In addition, in some cases, it is also preferable to add appropriate amounts of hydrolysis condensates of various silicon alkoxides to the composition.

Incidentally, in the case where the resin for forming a coating layer is polymerized by UV irradiation, appropriate amounts of known photoreaction initiators are added. Examples of photoreaction initiators include acetophenone compounds such as diethoxyacetophenone, 2-methyl-1-{4-(methylthio)phenyl}-2-morpholinopropane, 2-hydroxy-2-methyl-1-phenylpropan-1-one, and 1-hydroxycyclohexyl phenyl ketone; benzoin compounds such as benzoin and benzyl dimethyl ketal; benzophenone compounds such as benzophenone and benzoylbenzoic acid; and thioxanthone compounds such as thioxanthone and 2,4-dichlorothioxanthone.

In addition, it is also possible to add an appropriate amount of a known tertiary amine such as triethylenediamine or an organic tin compound such as dibutyltin dilaurate as a reaction promoter, thereby improving the crosslinking rate.

Incidentally, the coating layer is laminated onto the transparent polymer substrate directly or via an appropriate anchoring layer. Preferred examples of such anchoring layers include a layer that functions to improve the adhesion between the coating layer and the transparent polymer substrate, a layer that functions to prevent the permeation of moisture or air or functions to absorb moisture or air, a layer that functions to absorb UV or IR light, and a layer that functions to reduce the chargeability of the substrate.

Further, known particles, including inorganic and organic particles, may be added to the coating layer for the purpose of imparting antiglare properties, anti-Newton ring properties, high lubricity, antistatic properties, and the like.

In an actual method for forming a coating layer on the transparent polymer substrate, the above compounds and various additives (a curing agent, a catalyst, etc.) are dissolved in various organic solvents, and the resulting coating liquid at a controlled concentration or viscosity is applied onto the transparent polymer substrate, followed by radiation exposure or heating to cure the layer. Examples of coating techniques include various coating methods, such as microgravure coating, Mayer bar coating, direct gravure coating, reverse roll coating, curtain coating, spray coating, comma coating, die coating, knife coating, and spin coating.

Incidentally, with respect to the combination of a curable resin, an additive, and an organic solvent, several kinds can be suitably selected and adjusted according to the functions of the coating layer to be obtained.

Of course, such a coating layer may be formed not only between the transparent polymer substrate and the

transparent conductive layer, but also on the side opposite to the transparent conductive layer to provide the transparent conductive laminate with hard coating properties, antiglare properties, high lubricity, and the like.

<Brightness-Improving Sheet (Prism Lens Sheet)>

The film of the invention can be used as a base film of a brightness-improving sheet (generally also referred to as "prism lens sheet") used in a liquid crystal display, for example.

A base film used for this application is required to have excellent transparency, and further required to have excellently high adhesiveness to a prism lens layer, a hard coating layer, a pressure-sensitive adhesive layer, an antireflection layer, a sputtering layer, or the like to be formed on the base film.

In addition, in recent years, liquid crystal displays have been increasing in size and brightness. Thus, an increased amount of heat is emitted from the light source, and it is necessary to suppress the deformation of the film due to heat. In particular, in a display for use in vehicles, the temperature of the display itself mounted in a car increases to a considerably high temperature in the hot sun. In addition, due to the generation of heat from a lamp having increased brightness to increase the visibility of the display screen, the temperature of the display increases to a considerably high temperature. Therefore, members forming a liquid crystal display have been required to have even higher durability and reliability at high temperatures.

In particular, the heat deflection of a brightness-improving sheet has been a big problem. That is, although other members such as a diffusion sheet are produced through a heat treatment process including, for example, applying a solvent-based or aqueous coating agent and then drying the coating layer, in the case of a brightness-improving sheet, generally, UV light is applied to transfer the mold shape to a solvent-free curable resin on the sheet, thereby performing lens processing. That is, the sheet base material is produced without a heat treatment process, and this is believed to be the reason for increased susceptibility to heat deflection. However, the film of the invention can be suitably used as a base material film of an optical film such as a brightness-improving sheet. For example, in the case where an aliphatic polyester is selected as the polymer compound having an acidic group, the film may be configured as an aliphatic polyester film including a base material film, which is made of a resin composition obtained by mixing an aliphatic polyester resin with a cyclic carbodiimide compound, and a coating layer formed thereon, which contains at least one polymer binder selected from the group consisting of acrylic resins, polyester resins, and urethane resins. The aliphatic polyester film has a thermal shrinkage rate of 0.5 to 0.0% in the longitudinal direction after a heat treatment at 90°C for 30 minutes.

In the resin composition for forming a base material film, it is preferable that polylactic acid forming a stereocomplex-phase crystal is used as the aliphatic polyester resin. It is preferable that the stereocomplex crystallinity (S) of such a resin composition measured by DSC is 80% or more. When the stereocomplex crystallinity is 80% or more, the thermal shrinkage rate of the resulting film at 90°C can be further reduced.

In addition, the heat-deflection-suppressing effect can be improved. The stereocomplex crystallinity of the resin composition is more preferably 90% or more, and still more preferably 95% or more. It is particularly preferable that the stereocomplex crystallinity is 100%.

It is preferable that the cyclic carbodiimide compound content of the resin composition is 0.001 to 5 wt% based on the weight of the aliphatic polyester resin. When the amount of the cyclic carbodiimide compound is within this range, the stability of the resin composition and a film made thereof to moisture and hydrolysis can be suitably increased. In addition, heat resistance can be increased, and the heat-deflection-suppressing effect can be improved. From such a point of view, the cyclic carbodiimide compound content is more preferably within a range of 0.01 to 5 wt%, and still more preferably 0.01 to 4 wt%. When the content is lower than this range, the effect of the cyclic carbodiimide compound may not be effectively observed, while even when a large amount exceeding this range is applied, no further improvement of effects on stability to hydrolysis, etc., is expected.

In the case where the aliphatic polyester resin contains polylactic acid, the lactide content thereof is preferably within a range of 0 to 1,000 ppm, more preferably 0 to 200 ppm, and still more preferably 0 to 100 ppm based on the weight of the aliphatic polyester resin. A lower lactide content is more desirable in terms of the physical properties of the resin composition, such as hue and stability. However, the application of excessive reduction is not expected to improve physical properties any further, and may be undesirable in terms of cost.

In addition, the carboxyl group concentration of the resin composition is preferably within a range of 0 to 30 eq/ton, more preferably 0 to 10 eq/ton, still more preferably 0 to 5 eq/ton, and particularly preferably 0 to 1 eq/ton based on the weight of the aliphatic polyester resin. The carboxyl group concentration can be easily reduced by the use of a cyclic carbodiimide compound.

In addition, in the above configuration, as long as the object of the invention is not impaired, the resin composition may contain other resin components in addition to the aliphatic polyester resin and the cyclic carbodiimide compound.

Specific examples of other resin components include acrylic resins, polyolefins such as polyethylene and polypropylene, styrene resins such as polystyrene and styrene-acrylonitrile copolymers, thermoplastic resins such as

polyamides, polyphenylene sulfide resins, polyetheretherketone resins, polyesters, polysulfone, polyphenylene oxide, polyimides, polyetherimide, and polyacetal, and thermosetting resins such as phenolic resins, melamine resins, silicone resins, and epoxy resins. One or more kinds thereof may be added.

Among them, it is preferable to add an acrylic resin because transparency can thereby be maintained. For such acrylic resins, the subject matter described in the section <Optical Film> above may be directly applied.

In the case where an acrylic resin is added to the aliphatic polyester resin, the ratio between the aliphatic polyester resin and the acrylic resin may be suitably selected according to the specific components and the properties of the film to be obtained (optical properties, mechanical properties), and may usually be such that the weight ratio (aliphatic polyester resin/acrylic resin) is within a range of (99/1) to (1/99), preferably (99/1) to (50/50), more preferably (80/20) to (50/50), and still more preferably (70/30) to (50/50).

Further, as long as the effect of the invention can be achieved, any additives may be incorporated into the resin composition according to each purpose. Kinds of additives are not particularly limited as long as they are additives generally incorporated into resins or rubber-like polymers.

Examples of additives include inorganic fillers and pigments such as iron oxide. Examples also include lubricants such as stearic acid, behenic acid, zinc stearate, calcium stearate, magnesium stearate, and ethylene bis stearamide; release agents; softeners and plasticizers such as paraffinic process oil, naphthenic process oil, aromatic process oil, paraffin, organic polysiloxane, and mineral oil; and antioxidants such as hindered phenol antioxidants and phosphorus heat stabilizers. Examples also include hindered amine light stabilizers, benzotriazole UV absorbers, benzophenone UV absorbers, cyclic iminoester UV absorbers, triazine UV absorbers, flame retardants, and antistatic agents.

Examples further include reinforcing agents such as organic fibers, glass fibers, carbon fibers, and metal whiskers, colorants, and electrostatic adhesion improvers. Mixtures thereof are also mentioned.

The resin composition can be produced by a known method. For example, an aliphatic polyester resin, a cyclic carbodiimide compound, and optionally other components such as acrylic resins mentioned above are added and melt-kneaded using a melt-kneader such as single-screw extruder, twin-screw extruder, Banbury mixer, Brabender, or like kneader, whereby the resin composition can be produced.

In addition, in the case where polylactic acid is used as the aliphatic polyester resin, it is preferable that it has a stereocomplex-phase polylactic acid crystal melting peak of 190°C or more as measured by DSC. Further, it is preferable that the stereocomplex crystallinity (S) defined by the following equation using the crystal melting peak intensity measured by DSC is 80% or more, more preferably 90 to 100%, still more preferably 97 to 100%, and particularly preferably 100%. In this mode, heat resistance is improved, and the heat-deflection-suppressing effect can be improved. That is, in the film, it is preferable that the stereocomplex phase is fully formed in polylactic acid.

The aliphatic polyester film has a thermal shrinkage rate within a range of 0.5 to 0.0% in MD after a heat treatment at 90°C for 30 minutes. This mode leads to excellent heat deflection properties. When the thermal shrinkage rate in MD is more than 0.5%, this leads to poor heat deflection properties. Meanwhile, in the case of a negative thermal shrinkage rate of less than 0.0%, strain is likely to occur due to thermal expansion. From such a point of view, the upper limit of the thermal shrinkage rate in MD after a heat treatment at 90°C for 30 minutes is preferably 0.4%, still more preferably 0.3%; the closer to 0.0% the better.

In addition, in the aliphatic polyester film, the thermal shrinkage rate in TD after a heat treatment at 90°C for 30 minutes is preferably 1.0 to -0.5%, and still more preferably 0.5 to - 0.3%. In this mode, the heat-deflection-suppressing effect can be improved.

Such a thermal shrinkage rate can be achieved by suitably adjusting the stretching conditions, heat treatment (heat setting) conditions, and relaxation heat treatment conditions during film formation. For example, the thermal shrinkage rate tends decrease with a decrease in the draw ratio, an increase in the heat treatment temperature, or an increase in the amount of relaxation. In the case where the thermal shrinkage rates in MD and TD are to be achieved simultaneously, a relaxation heat treatment in the longitudinal direction and a relaxation heat treatment in the transverse direction can be combined to form a film having the desired shrinkage rate in the longitudinal and transverse directions.

In order to obtain the strength required for use as a base material film, the thickness of the aliphatic polyester film is preferably 25 to 350 μm, and still more preferably 50 to 250 μm.

The aliphatic polyester film has a breaking strength retention of 50% or more after a wet heat treatment in an environment of 85°C and 85% RH for 3,000 hours. This mode indicates that hydrolysis resistance is excellent. In optical applications, such a film is usable for a long period of time even in a wet heat environment and thus is preferable.

It is preferable that the film is a biaxially stretched film, whereby heat resistance can be improved, and the heat-deflection-suppressing effect can be improved. The biaxial stretching may be sequential biaxial stretching or simultaneous biaxial stretching.

In the case of sequential biaxial stretching, the resin composition mentioned above is melt-extruded to form a film and then cooled and solidified on a casting drum to form an unstretched film. The unstretched film is longitudinally stretched at a temperature from the glass transition temperature of the aliphatic polyester resin (Tg) to (Tg + 60)°C at once or in two or more stages to a total of 3 to 6 times its original length in the longitudinal direction, and then transversely

stretched at a temperature from Tg to (Tg + 60)°C to 3 to 5 times its original length in the transverse direction, thereby forming a sequentially biaxially stretched film. Further, the biaxially stretched film is then optionally subjected to a heat treatment in a tenter at 140 to 200°C for 1 to 60 seconds, and further to a relaxation heat treatment while shrinking the film 0 to 20% in the longitudinal and transverse directions at a temperature 10 to 20°C lower than the heat treatment temperature; the film can thus be obtained. At this time, when stereocomplex polylactic acid is selected as an aliphatic polyester resin, heat resistance can be improved.

In addition, in the case of simultaneous biaxial stretching, the resin composition mentioned above is melt-extruded to form a film and then cooled and solidified on a casting drum to form an unstretched film. The unstretched film is simultaneously biaxially stretched at a temperature from Tg to (Tg + 60)°C in the longitudinal and transverse directions simultaneously to 6 to 25 times, preferably 10 to 20 times, its original area. Further, the biaxially stretched film is then optionally subjected to a heat treatment at 140 to 200 for 1 to 60 seconds, and further, at a temperature 10 to 20°C lower than the heat treatment temperature, to a relaxation heat treatment between a tenter and a pair of subsequent take-up rolls while shrinking the film 0 to 20% in the longitudinal and transverse directions; the film can thus be obtained. In this method, the film has less contact with rolls. As a result, as compared with the method mentioned above, fine scratches and the like are less likely to be formed on the film surface, and this is advantageous for optical applications.

In the above, the relaxation heat treatment can be performed as follows. At a position downstream of the stretching zone of a tenter, a blade is inserted near both ends of the film to cut off the film from the clip holding part, and the speed of the take-up rolls is set 0 to 5% lower than the maximum clip speed in the tenter. In addition, in the case where a pantograph-type or linear-motor-type tenter is used as the tenter, the relaxation heat treatment can be performed by reducing the clip interval in the longitudinal direction.

In addition, a coating layer is present on the base material film. The coating layer contains at least one polymer binder selected from the group consisting of acrylic resins, polyester resins, and urethane resins. When such a coating layer is present, excellent adhesion can be obtained. The coating layer may be present on one side or both sides of the base material film. In a preferred mode, the coating layer is present on both sides. An acrylic resin, a polyester resin, a urethane resin, and modification products of these resins are optionally used together. In addition, in order to ensure windability, fine particles and the like may be added to the coating layer as long as optical properties are not impaired.

The acrylic resin used for the coating layer preferably has a glass transition temperature (Tg) of 20 to 80°C, and still more preferably 25 to 70°C. As a result, the adhesion-improving effect can be enhanced. When the glass transition temperature is less than 20°C, blocking properties tend to deteriorate; therefore, this is undesirable. Meanwhile, when it is more than 80°C, the film-forming properties deteriorate, whereby the oligomer deposition sealing properties decrease; therefore, this is undesirable. It is preferable that the acrylic resin is soluble or dispersible in water.

The acrylic resin used for the coating layer is obtained by copolymerizing the following monomers, for example: alkyl acrylates, alkyl methacrylates (examples of alkyl groups include a methyl group, an ethyl group, an n-propyl group, an isopropyl group, an n-butyl group, an isobutyl group, a tert-butyl group, a 2-ethylhexyl group, and a cyclohexyl group); hydroxy-containing monomers such as 2-hydroxyethyl acrylate, 2-hydroxyethyl methacrylate, 2-hydroxypropyl acrylate, and 2-hydroxypropyl methacrylate; epoxy-group-containing monomers such as glycidyl acrylate, glycidyl methacrylate, and allyl glycidyl ether; monomers containing a carboxy group or a salt thereof, such as acrylic acid, methacrylic acid, itaconic acid, maleic acid, fumaric acid, crotonic acid, styrene sulfonic acid, and salts thereof (sodium salt, potassium salt, ammonium salt, tertiary amine salt, etc.); amide-group-containing monomers such as acrylamide, methacrylamide, N-alkyl acrylamides, N-alkyl methacrylamides, N,N-dialkyl acrylamides, N,N-dialkyl methacrylates (examples of alkyl groups include a methyl group, an ethyl group, an n-propyl group, an isopropyl group, an n-butyl group, an isobutyl group, a tert-butyl group, a 2-ethylhexyl group, and a cyclohexyl group), N-alkoxy acrylamides, N-alkoxy methacrylamides, N,N-dialkoxy acrylamides, N,N-dialkoxy methacrylamides (examples of alkoxy groups include a methoxy group, an ethoxy group, a butoxy group, and an isobutoxy group); acryloylmorpholine, N-methylolacrylamide, N-methylolmethacrylamide, N-phenylacrylamide, and N-phenylmethacrylamide; anhydride monomers such as maleic anhydride and itaconic anhydride; oxazoline-group-containing monomers such as 2-vinyl-2-oxazoline, 2-vinyl-4-methyl-2-oxazoline, 2-vinyl-5-methyl-2-oxazoline, 2-isopropenyl-2-oxazoline, 2-isopropenyl-4-methyl-2-oxazoline, and 2-isopropenyl-5-methyl-2-oxazoline; methoxydiethylene glycol methacrylate, methoxypolyethylene glycol methacrylate, vinyl isocyanate, allyl isocyanate, styrene, $\alpha$-methyl styrene, vinyl methyl ether, vinyl ethyl ether, vinyl trialkoxysilanes, alkyl maleic acid monoesters, alkyl fumaric acid monoesters, alkyl itaconic acid monoesters, acrylonitrile, methacrylonitrile, vinylidene chloride, ethylene, propylene, vinyl chloride, vinyl acetate, and butadiene.

A polyester resin contains a polybasic acid or an ester-forming derivative thereof and a polyol or an ester-forming derivative thereof as follows. That is, examples of polybasic acid components include terephthalic acid, isophthalic acid, phthalic acid, phthalic anhydride, 2,6-naphthalenedicarboxylic acid, 1,4-cyclohexanedicarboxylic acid, adipic acid, sebacic acid, trimellitic acid, pyromellitic acid, dimer acid, and 5-sodium sulfoisophthalic acid. Using two or more kinds of these acid components, a copolyester polyester resin is synthesized. It is also possible to use small amounts of unsaturated polybasic acid components, such as maleic acid, itaconic acid, and hydroxycarboxylic acids such as p-hydroxybenzoic acid. Examples of polyol components include ethylene glycol, 1,4-butanediol, diethylene glycol, dipropylene glycol, 1,6-hexanediol, 1,4-cyclohexanedimethanol, xylylene glycol, dimethylolpropane, poly(ethylene oxide) glycol, and poly(tetramethylene oxide) glycol.

An urethane resin contains a polyol, a polyisocyanate, a chain extender, a crosslinking agent, etc. Examples of polyols include polyethers such as polyoxyethylene glycol, polyoxypropylene glycol, and polyoxytetramethylene glycol; polyesters produced by the dehydration of a glycol and a dicarboxylic acid, including polyethylene adipate, polyethylenebutylene adipate, polycaprolactone, etc.; polycarbonates having carbonate bonds; acrylic polyols; and castor oil. Example of polyisocyanates include tolylene diisocyanate, phenylene diisocyanate, 4,4'-diphenylmethane diisocyanate, hexamethylene diisocyanate, xylylene diisocyanate, 4,4'-dicyclohexylmethane diisocyanate, and isophorone diisocyanate. Examples of chain extenders or crosslinking agents include ethylene glycol, propylene glycol, diethylene glycol, trimethylolpropane, hydrazine, ethylenediamine, diethylenetriamine, triethylenetetramine, 4,4'-diaminodiphenylmethane, 4,4'-diaminodicyclohexylmethane, and water.

In consideration of the problem of coloring at the time of recycling, it is preferable that the polymer binder is made of at least one of polyester resins and acrylic resins. Further, it is preferable that the polymer binder is made of a mixture of polyester and acrylic resins. In addition, in terms of adjusting the refractive index and adhesion, it is preferable that an acrylic resin is used as the binder resin. In terms of suppressing interface reflection or variations in interference, the refractive index of the polymer binder is preferably 1.40 to 1.70, more preferably 1.45 to 1.55, and still more preferably 1.45 to 1.50.

It is preferable that the coating layer contains a crosslinking agent, whereby blocking resistance can be improved, and the adhesion-improving effect can be enhanced. As the crosslinking agent, at least one of epoxy, oxazoline, melamine, and isocyanate can be used. These may be used alone, and it is also possible to use two or more kinds.

Examples of epoxy crosslinking agents include polyepoxy compounds, diepoxy compounds, monoepoxy compounds, and glycidylamine compounds.

Examples of polyepoxy compounds include sorbitol, polyglycidyl ether, polyglycerol polyglycidyl ether, pentaerythritol polyglycidyl ether, diglycerol polyglycidyl ether, triglycidyl tris(2-hydroxyethyl)isocyanate, glycerol polyglycidyl ether, and trimethylolpropane polyglycidyl ether.

Examples of diepoxy compounds include neopentyl glycol diglycidyl ether, 1,6-hexanediol diglycidyl ether, resorcinol diglycidyl ether, ethylene glycol diglycidyl ether, polyethylene glycol diglycidyl ether, propylene glycol diglycidyl ether, polypropylene glycol diglycidyl ether, and polytetramethylene glycol diglycidyl ether.

Examples of monoepoxy compounds include allyl glycidyl ether, 2-ethylhexyl glycidyl ether, and phenyl glycidyl ether.

Examples of glycidylamine compounds include N,N,N',N'-tetraglycidyl-m-xylylenediamine and 1,3-bis(N,N-diglycidylamino)cyclohexane.

As an oxazoline crosslinking agent, it is preferable to use a polymer containing an oxazoline group, which can be produced by the polymerization of an addition polymerizable oxazoline-group-containing monomer alone or by copolymerization with other monomers.

Examples of addition polymerizable oxazoline-group-containing monomers include 2-vinyl-2-oxazoline, 2-vinyl-4-methyl-2-oxazoline, 2-vinyl-5-methyl-2-oxazoline, 2-isopropenyl-2-oxazoline, 2-isopropenyl-4-methyl-2-oxazoline, and 2-isopropenyl-5-ethyl-2-oxazoline. They may be used alone, and it is also possible to use two or more kinds. Among them, 2-isopropenyl-2-oxazoline is industrially easily available and thus preferable.

Other monomers used for the copolymerization of an oxazoline-group-containing copolymer may be any monomers copolymerizable with addition polymerizable oxazoline-group-containing monomers. Examples thereof include (meth)acrylic acid esters such as alkyl acrylates, alkyl methacrylates (examples of alkyl groups include a methyl group, an ethyl group, an n-propyl group, an isopropyl group, an n-butyl group, an isobutyl group, a tert-butyl group, a 2-ethylhexyl group, and a cyclohexyl group); unsaturated carboxylic acids such as acrylic acid, methacrylic acid, itaconic acid, maleic acid, fumaric acid, crotonic acid, and styrene sulfonic acid, as well as salts thereof (sodium salt, potassium salt, ammonium salt, tertiary amine salt, etc.); unsaturated nitriles such as acrylonitrile and methacrylonitrile; unsaturated amides such as acrylamide, methacrylamide, N-alkyl acrylamides, N-alkyl methacrylamides, N,N-dialkyl acrylamides, N,N-dialkyl methacrylates (examples of alkyl groups include a methyl group, an ethyl group, an n-propyl group, an isopropyl group, an n-butyl group, an isobutyl group, a tert-butyl group, a 2-ethylhexyl group, and a cyclohexyl group); vinyl esters such as vinyl acetate, vinyl propionate, and those obtained by adding a polyalkylene oxide to the ester moiety of acrylic acid or methacrylic acid; vinyl ethers such as methyl vinyl ether and ethyl vinyl ether; $\alpha$-olefins such as ethylene and propylene; halogen-containing $\alpha,\beta$-unsaturated monomers such as vinyl chloride, vinylidene chloride, and vinyl fluoride; and $\alpha,\beta$-unsaturated aromatic monomers such as styrene and $\alpha$-methyl styrene. These monomers may be used alone, and it is also possible to use two or more kinds together.

Preferred examples of melamine crosslinking agents include compounds etherified by the reaction of a lower alcohol with a methylolmelamine derivative obtained by condensing melamine and formaldehyde, as well as mixtures thereof. Examples of lower alcohols include methyl alcohol, ethyl alcohol, and isopropyl alcohol.

Examples of methylolmelamine derivatives include monomethylolmelamine, dimethylolmelamine, trimethylolmelamine, tetramethylolmelamine, pentamethylolmelamine, and hexamethylolmelamine.

Examples of isocyanate crosslinking agents include tolylene diisocyanate, diphenylmethane-4,4'-diisocyanate, metaxylylene diisocyanate, hexamethylene-1,6-diisocyanate, 1,6-diisocyanate hexane, adducts of tolylene diisocyanate and hexanetriol, adducts of tolylene diisocyanate and trimethylolpropane, polyol-modified diphenylmethane-4,4'-diisocyanate, carbodiimide-modified diphenylmethane-4,4'-diisocyanate, isophorone diisocyanate, 1,5-naphthalene diisocyanate, 3,3'-bitolylene-4,4'-diisocyanate, 3,3'-dimethyldiphenylmethane-4,4'-diisocyanate, and metaphenylene diisocyanate.

In the case where the coating layer contains a crosslinking agent, the crosslinking agent content is preferably 5 to 30 wt%, still more preferably 10 to 25 wt%, per 100 wt% of the solids content of the coating layer. When the content is less than 5 wt%, the blocking-resistance-improving effect is reduced. Meanwhile, when the content is more than 30 wt%, such a coating film is extremely hard and likely to whiten during the stretching process, resulting in poor transparency; therefore, this is undesirable.

In order to improve windability or improve blocking resistance during use at high temperatures, it is preferable that the coating layer contains fine particles. The average particle size of the fine particles contained in the coating layer is 20 to 400 nm, preferably 40 to 400 nm, and particularly preferably 200 to 400 nm, and the improving effects on windability and blocking resistance can thereby be enhanced. When the average particle size is less than 20 nm, the improving effects on lubricity and scratch resistance are low, and the blocking-resistance-improving effect is also low. Meanwhile, when it is more than 400 nm, the fine particles are likely to fall down. The fine particles are usually contained in the coating layer composition.

Examples of usable fine particles include inorganic fine particles such as calcium carbonate, magnesium carbonate, calcium oxide, zinc oxide, magnesium oxide, silicon oxide, sodium silicate, aluminum oxide, iron oxide, zirconium oxide, barium sulfate, titanium oxide, tin oxide, antimony trioxide, carbon black, and molybdenum disulfide; and organic fine particles such as crosslinked acrylic polymers, crosslinked styrene polymers, silicone resins, fluorocarbon resins, benzoguanamine resins, phenolic resins, and nylon resins. These may be used alone, and it is also possible to use two or more kinds.

The fine particle content of the coating layer is preferably 0.1 to 10 wt% per 100 wt% of the composition of the coating layer, and the improving effects on windability and blocking resistance can thereby be enhanced. When the content is less than 0.1 wt%, the improving effects on blocking resistance, lubricity, and scratch resistance are low. Meanwhile, when it is more than 10 wt%, the coating film has low cohesive strength, and the adhesion-improving effect tends to decrease.

It is preferable that a coating agent used for the application of the coating layer is used in the form of an aqueous coating liquid such as an aqueous solution, an aqueous dispersion, or an emulsion. In order to form the coating layer, components other than the above components are optionally incorporated, such as antistatic agents, colorants, surfactants, and UV absorbers.

The solids content of the coating agent is usually 20 wt% or less, and preferably 1 to 10 wt%. When the content is less than 1 wt%, the wetting of the aliphatic polyester film may be insufficient; therefore, this is undesirable. Meanwhile, when it is more than 20 wt%, the stability of the coating liquid or the appearance of the coating layer may deteriorate; therefore, this is undesirable.

The coating agent may be applied to the aliphatic polyester film at any stage, but is preferably applied during the production of the aliphatic polyester film. In such a case, it is preferable to apply the coating agent to the aliphatic polyester film before the completion of oriented crystallization.

The concept of an aliphatic polyester film before the completion of crystal orientation herein includes an unstretched film, a uniaxially oriented film obtained by orienting an unstretched film in either the longitudinal or transverse direction, a film oriented by stretching both in the longitudinal and transverse directions at low ratios (a biaxially stretched film before eventual restretching in the longitudinal or transverse direction to complete oriented crystallization), etc. Among them, it is preferable that the coating agent is applied to an unstretched film or a uniaxially stretched film oriented in one direction, and the film is then directly stretched longitudinally and/or transversely, followed by heat setting. It is also preferable that the coating agent is applied to an unstretched film, and the film is directly stretched simultaneously in the longitudinal and transverse directions, followed by heat setting.

When the coating agent is applied to the film, as a pretreatment for improving application properties, it is preferable that the film surface is subjected to a physical treatment such as a corona surface treatment, a flame treatment, a plasma treatment, etc., or that a surfactant is incorporated into the coating agent as a wetting agent. In the case where a surfactant is incorporated into the coating agent, it is preferable that the amount is 1 to 10 wt% per 100 wt% of the solids content of the coating agent.

A surfactant promotes the wetting of the film by the coating agent, particularly by an aqueous coating liquid, and improves the stability of the coating agent. Examples of surfactants include anionic and nonionic surfactants such as polyoxyethylene-fatty acid esters, sorbitan fatty acid esters, glycerine fatty acid esters, fatty acid metallic soaps, alkyl

sulfuric acid salts, alkyl sulfonic acid salts, and alkyl sulfosuccinic acid salts.

As an application method, any of known coating methods may be employed. For example, it is possible to employ roll coating, gravure coating, roll brushing, spray coating, air knife coating, impregnation, curtain coating, and the like. They may be used alone or in combination.

The thickness of the coating layer is preferably 20 to 150 nm, still more preferably 30 to 120 nm, and particularly preferably 40 to 90 nm. When the thickness is within this range, the adhesion-improving effect can be enhanced, and also excellent blocking resistance is achieved. When the thickness of the coating layer is more than 150 nm, blocking tends to occur, while when it is less than 20 nm, the adhesion-improving effect tends to decrease.

The refractive index of the coating layer is preferably 1.45 to 1.55, more preferably 1.45 to 1.50, and still more preferably 1.46 to 1.49. In the invention, the base material film has a refractive index within a range of 1.45 to 1.50. Therefore, when the coating layer has a refractive index within the above numerical range, the suppressing effects on interface reflection or variations in interference due to the refractive index difference can be enhanced, whereby the transparency-improving effect can be enhanced.

<Decorating Film (Use as Substrate Film)>

The film of the invention is useful as a film for a substrate of a decorating film (hereinafter sometimes simply abbreviated as a substrate film). A decorating film is used for decorating the surface of a molded body such as a resin molded body or a metal molded body formed by injection molding, or the like, including the exterior of electrical appliances such as mobile phones, personal computers, and televisions, the interior of automobiles, and the like. Specifically, the outermost surface of a molded body is decorated with a decorating film including a supporting substrate and, on the substrate, a design layer for creating a design, thereby forming a decorated molded article. This allows for higher design flexibility than a surface printing method that directly applies ink or the like to the molded body surface, and is advantageous in that, for example, even a molded body surface having three-dimensional irregularities can be easily decorated.

As methods for decorating a molded body using a decorating film, one of two typical techniques is a technique called "injection molding simultaneous lamination method", which is used only in the case where the molded body is a resin molded body. The injection molding simultaneous lamination method can be further divided into two methods. According to one method, a decorating film is inserted between male and female molds for injection molding, then a molten resin is injected from one side of the molds to form an injection-molded body, and simultaneously the above film is laminated to the molded body. This method is sometimes referred to as an in-mold process. According to the other method, a decorating film is preformed by vacuum forming, pressure forming, or the like and then inserted into an injection mold, and a molten resin is injected thereinto for integral molding with the decorating film. This method is sometimes referred to as an insert molding process. Another typical technique is a vacuum lamination method. This is a technique in which a decorating film is allowed to coat and adhere to a previously formed molded body in a vacuum.

When the film of the invention is applied to such a decorating film, it may be a film having, as a film for a substrate, for example, a film elongation at break (measured at 100°C) and a stress at 100% elongation (measured at 100°C) of 100 to 1,000% and 0.1 to 25 MPa, respectively, in MD and TD and further being in a substantially amorphous state.

Here, it is necessary that the film elongation at break (measured at 100°C) and the stress at 100% elongation (measured at 100°C) are 100 to 1,000% and 0.1 to 25 MPa, respectively, in MD and TD. Within such ranges, the resulting decorating film can be laminated to the surface of a molded article to be decorated in a high-quality fashion without causing wrinkling, film breakage, etc.

Considering the case where the film is laminated to a molded body deep drawn into a shape having a portion bent at an acute angle, it is preferable that the film elongation at break (measured at 100°C) and the stress at 100% elongation (measured at 100°C) are 200 to 700% and 0.5 to 20 MPa, respectively, in MD and TD. It is more preferable that the film elongation at break (measured at 100°C) and the stress at 100% elongation (measured at 100°C) are 250 to 600% and 1 to 15 MPa, respectively, in MD and TD. It is most preferable that the film elongation at break (measured at 100°C) and the stress at 100% elongation (measured at 100°C) are 300 to 500% and 2 to 10 MPa, respectively, in MD and TD.

Incidentally, in this section about a decorating film, the film elongation at break (measured at 100°C) and the stress at 100% elongation (measured at 100°C) in MD and TD are values measured as follows: using a tensile tester having a chuck portion covered with a heating chamber (a precision universal testing machine Autograph AG-X manufactured by Shimadzu) as a measuring apparatus, a sample film is cut to a width of 10 mm and a length of 100 mm, and the sample is placed between chucks at an interval of 50 mm and subjected to a tensile test in accordance with JIS-C2151 under conditions of a tensile rate of 50 mm/min. Incidentally, with respect to the sample cutting direction, provided that the film-travel direction is defined as MD, and the width direction perpendicular thereto is defined as TD, sampling was performed taking the directions parallel to MD and TD as respective length directions, and the tensile measurement values in MD and TD were evaluated.

At this time, the atmosphere where the sample was present was maintained at 100°C by the heating chamber at the chuck portion of the tensile tester. Measurement was performed 5 times, and the average was taken as the result.

The film elongation at break (measured at 100°C) was calculated as the percentage of the value obtained by subtracting the sample length before tensioning from the length at break, and dividing the difference by the sample length before tensioning. The stress at 100% elongation (measured at 100°C) was calculated by dividing the load at 100% elongation in the load-elongation curve by the sample cross-sectional area before tensioning (MPa).

Here, it is preferable that the substrate film contains an aliphatic polyester resin and a cyclic carbodiimide compound as components.

The aliphatic polyester component content of the substrate film is preferably 40 wt% or more, still more preferably 50 wt% or more, more preferably 60 wt% or more, particularly preferably 70 wt% or more, and most preferably 75 wt% or more. When the aliphatic polyester content is less than 40 wt%, the use of an aliphatic polyester is less meaningful. Incidentally, in the case where resins other than aliphatic polyesters are added, in terms of the moldability of the decorating film, it is preferable to use thermoplastic resins.

Examples of thermoplastic resins other than aliphatic polyesters include aromatic polyester resins, polyamide resins, polyacetal resins, polyolefin resins such as polyethylene resins and polypropylene resins, polystyrene resins, acrylic resins, polyurethane resins, chlorinated polyethylene resins, chlorinated polypropylene resins, aromatic polyketone resins, aliphatic polyketone resins, fluorocarbon resins, polyphenylene sulfide resins, polyetherketone resins, polyimide resins, thermoplastic starch resins, AS resins, ABS resins, AES resins, ACS resins, polyvinyl chloride resins, polyvinylidene chloride resins, vinyl ester resins, MS resins, polycarbonate resins, polyarylate resins, polysulfone resins, polyether sulfone resins, phenoxy resins, polyphenylene oxide resins, poly-4-methylpentene-1, polyetherimide resins, polyvinyl alcohol resins, and like thermoplastic resins.

Acrylic resins, especially polymethyl methacrylate, are particularly preferable because they have high compatibility with aliphatic polyesters together with a similar refractive index.

The acrylic resin content of the substrate film is preferably 50 wt% or less, more preferably 40 wt% or less, and still more preferably 30 wt% or less. In the case where the acrylic resin content is more than 50 wt%, the use of an aliphatic polyester is less meaningful.

Examples of aliphatic polyesters include polymers containing an aliphatic hydroxycarboxylic acid as a main component, polymers obtained by the polycondensation of an aliphatic polycarboxylic acid or an ester-forming derivative thereof and an aliphatic polyalcohol as main components, and copolymers thereof.

Examples of polymers containing an aliphatic hydroxycarboxylic acid as a main component inclucde polycondensates of glycolic acid, lactic acid, hydroxypropionic acid, hydroxybutyric acid, hydroxyvaleric acid, hydroxycaproic acid, and the like, as well as copolymers thereof. In particular, polyglycolic acid, polylactic acid, poly(3-hydroxycarboxybutyric acid), poly(4-polyhydroxybutyric acid), poly(3-hydroxyhexanoic acid), polycaprolactone, copolymers thereof, and the like are mentioned, and poly(L-lactic acid), poly(D-lactic acid), stereocomplex polylactic acid that forms a stereocomplex crystal, and racemic polylactic acid are particularly suitable.

As polylactic acid, one whose main repeating unit is L-lactic acid and/or D-lactic acid may be used, and it is particularly preferable to use polylactic acid having a melting point of 150°C or more ("main" herein means that the component occupies at least 50% of the total). In the case where the melting point is less than 150°C, it is impossible to provide a film with high dimensional stability, high-temperature mechanical properties, etc.

The melting point of polylactic acid is preferably 170°C or more, and still more preferably 200°C or more. Melting point herein means the peak temperature of the melting peak measured by DSC. In particular, in order to impart heat resistance, it is preferable that the polylactic acid forms a stereocomplex-phase crystal. Stereocomplex polylactic acid herein includes a eutectic crystal formed by a poly(L-lactic acid) segment and a poly(D-lactic acid) segment.

A stereocomplex-phase crystal usually has a higher melting point than a homo-crystal formed by poly(L-lactic acid) or poly(D-lactic acid) alone, and, therefore, the presence of even a small amount is expected to have a heat-resistance-improving effect. Such an effect is particularly prominent when the amount of stereocomplex-phase crystal is large relative to the total crystal amount. The stereocomplex crystallinity (S) is preferably 90% or more, and still more preferably 100%.

In a decorating film and a decorated molded article, when stereocomplex crystallinity (S) is 90% or more, surface transparency can be maintained high. In addition, the decorated molded article can be provided with a highly heat-resistant surface.

It is still more preferable that the substrate film is in a substantially amorphous state. "Substantially amorphous state" herein means that the peak enthalpy of stereocomplex polylactic acid crystal ($\Delta Hc_{sc}$) in the first temperature rise measured by DSC (differential scanning calorimeter) at a temperature rise rate of 20°C/min satisfies the following formula (30). Incidentally, in this application, unless otherwise noted, $\Delta Hc$ represents the peak enthalpy of polymer crystal, while $AHc_{sc}$ is $\Delta Hc$ in the case of stereocomplex polylactic acid.

$$\Delta Hc_{sc} > 1\ J/g\ (30)$$

When the above formula is not satisfied, in the case where the decorating film is laminated to a molded body having large three-dimensional irregularities, such as the case where the film is laminated to a molded body deep drawn into a shape having a portion bent at an acute angle, the decorating film breaks or suffers from poor molding.
It is preferable that

$$\Delta Hc_{sc} > 3\ J/g\ (31).$$

It is still more preferable that

$$\Delta Hc_{sc} > 5\ J/g\ (32).$$

It is most preferable that

$$\Delta Hc_{sc} > 10\ J/g\ (33).$$

In addition, "substantially crystalline state" means that the peak enthalpy of stereocomplex polylactic acid crystal ($\Delta Hc_{sc}$) in the first temperature rise measured by DSC (differential scanning calorimeter) at a temperature rise rate of 20°C/min does not satisfy the above formula (30).

In order to suitably satisfy the above stereocomplex crystallinity (S), in polylactic acid, it is preferable that the weight ratio between the poly(D-lactic acid) component and the poly(L-lactic acid) component is 90/10 to 10/90.

The weight ratio is more preferably within a range of 80/20 to 20/80, still more preferably 30/70 to 70/30, and particularly preferably 40/60 to 60/40. Theoretically, a ration closer to 1/1 is more suitably selected.

In addition, in order to achieve both the mechanical physical properties and moldability of the substrate film, the poly(L-lactic acid) component and the poly(D-lactic acid) component in the invention preferably have a weight average molecular weight of 100,000 to 500,000, more preferably 110,000 to 350,000, and still more preferably 120,000 to 250,000.

The weight average molecular weight of polylactic acid used in the invention can be selected considering the relation between shaping properties and the mechanical and thermal physical properties of the resulting composition. That is, in order for the composition to exhibit mechanical and thermal physical properties, such as strength, elongation, and heat resistance, the weight average molecular weight is preferably 80,000 or more, more preferably 100,000 or more, and still more preferably 130,000 or more.

However, the melt viscosity of polylactic acid increases exponentially with an increase in weight average molecular weight. When melt molding such as injection molding is performed, in order for the resin to have a viscosity within a moldable range, it is sometimes necessary to select a molding temperature equal to or higher than the maximum tolerable temperature of polylactic acid.

Specifically, when polylactic acid is subjected to molding at a temperature of more than 300°C, it is highly likely that the resin undergoes thermal decomposition, whereby the film product is colored, resulting in a low value as a commercial product.

Accordingly, the weight average molecular weight of the polylactic acid composition is preferably 500,000 or less, more preferably 400,000 or less, and still more preferably 300,000 or less. Accordingly, the weight average molecular weight of polylactic acid is preferably 80,000 to 500,000, more preferably 100,000 to 400,000, and still more preferably 130,000 to 300,000.

The ratio between weight average molecular weight (Mw) and number average molecular weight (Mn) is called molecular weight distribution (Mw/Mn). High molecular weight distribution indicates that the proportion of large molecules or small molecules is higher as compared with the average molecular weight.

That is, for example, in polylactic acid having a weight average molecular weight of about 250,000 and a molecular weight distribution of 3 or more, the proportion of molecules having a molecular weight of more than 250,000 may be high. In this case, the melt viscosity is high, which is undesirable for molding for the above reason. In addition, in a polylactic acid composition having a relatively small weight average molecular weight of about 80,000 with a high molecular weight distribution, the proportion of molecules having a molecular weight of less than 80,000 may be high. In this case, the durability of the substrate film, one of mechanical physical properties, is low, which is undesirable for use. From such a point of view, the molecular weight distribution is preferably within a range of 1.5 to 2.4, more preferably

1.6 to 2.4, and the still more preferably 1.6 to 2.3.

It is preferable that the aliphatic polyester has a carboxyl end group concentration of 0.01 to 10 eq/ton. The carboxyl end group concentration is suitably selected more preferably within a range of 0.02 to 2 eq/ton, and still more preferably 0.02 to 1 eq/ton.

A carboxyl end group concentration within this range allows for excellent melt stability and wet heat stability, and this can be achieved by adding a cyclic carbodiimide compound.

The substrate film of the invention may contain at least one member selected from the group consisting of thermoplastic resins other than the components mentioned above, stabilizers, UV absorbers, crystallization promoters, fillers, release agents, antistatic agents, plasticizers, and impact-resistance stabilizers. It is preferable that the polylactic acid used in the invention contains a stabilizer. As stabilizers, those used as stabilizers for ordinary thermoplastic resins are usable. Examples thereof include antioxidants and light stabilizers. By incorporating such agents, a film having excellent mechanical properties, moldability, heat resistance, and durability can be obtained.

Examples of antioxidants include hindered phenol compounds, hindered amine compounds, phosphite compounds, and thioether compounds.

Examples of light stabilizers include oxybenzophenone compounds, cyclic iminoester compounds, benzotriazole compounds, salicylic acid ester compounds, benzophenone compounds, cyanoacrylate compounds, hindered amine compounds, and nickel complex compounds. As a light stabilizer, it is also possible to use a combination of a UV absorber and one that scavenges radicals formed during photo-oxidation.

As UV absorbers, cyclic iminoester compounds, benzophenone compounds, and benzotriazole compounds are preferable because the absorption of visible light can thereby be minimized. In addition, in terms of preventing deterioration, those having excellent absorption capability for UV light with a wavelength of 370 nm or less are preferable, and, in terms of permeability, those having low absorption of visible light with a wavelength of 400 nm or more are preferable.

The substrate film may contain an organic or inorganic crystallization promoter. When a crystallization promoter is contained, a decorated molded article with excellent heat resistance can be obtained.

As crystallization promoters to be used, those generally used as crystal-nucleating agents for crystalline resins are usable. Both inorganic crystal-nucleating agents and organic crystal-nucleating agents may be used.

Examples of inorganic crystal-nucleating agents include talc, kaolin, silica, synthetic mica, clay, zeolite, graphite, carbon black, zinc oxide, magnesium oxide, titanium oxide, calcium carbonate, calcium sulfate, barium sulfate, calcium sulfide, boron nitride, montmorillonite, neodymium oxide, aluminum oxide, and phenylphosphonate metal salts.

In order to improve their dispersibility in the composition together with their effects, it is preferable that these inorganic crystal-nucleating agents are treated with various dispersion aids and thus in a highly dispersed state such that the primary particle size thereof is about 0.01 to 0.5 μm.

Examples of organic crystal-nucleating agents include organic carboxylic acid metal salts such as calcium benzoate, sodium benzoate, lithium benzoate, potassium benzoate, magnesium benzoate, barium benzoate, calcium oxalate, disodium terephthalate, dilithium terephthalate, dipotassium terephthalate, sodium laurate, potassium laurate, sodium myristate, potassium myristate, calcium myristate, barium myristate, sodium octanoate, calcium octanoate, sodium stearate, potassium stearate, lithium stearate, calcium stearate, magnesium stearate, barium stearate, sodium montanate, calcium montanate, sodium toluylate, sodium salicylate, potassium salicylate, zinc salicylate, aluminum dibenzoate, sodium β-naphthoate, potassium β-naphthoate, and sodium cyclohexanecarboxylate, and organic sulfonic acid metal salts such as sodium p-toluenesulfonate and sodium sulfoisophthalate.

Examples also include organic carboxylic acid amides such as stearic acid amide, ethylenebis lauric acid amide, palmitic acid amide, hydroxystearic acid amide, erucic acid amide, and trimesic acid tris(tert-butylamide), low-density polyethylene, high-density polyethylene, polyisopropylene, polybutene, poly-4-methylpentene, poly-3-methylbutene-1, polyvinyl cycloalkanes, polyvinyl trialkylsilanes, high-melting-point polylactic acid, sodium salts of ethylene-acrylic acid copolymers, sodium salts of styrene-maleic anhydride copolymers (so-called ionomers), and benzylidene sorbitols and derivatives thereof, such as dibenzylidene sorbitol.

Among these, it is preferable to use talc and at least one member selected from organic carboxylic acid metal salts. The crystal-nucleating agents may be used alone, and it is also possible to use two or more kinds together.

The crystallization promoter content is preferably 0.01 to 30 parts by weight, more preferably 0.05 to 20 parts by weight, based on 100 parts by weight of the aliphatic polyester.

Examples of antistatic agents to be used include quaternary ammonium salt compounds, sulfonic acid compounds, and alkyl phosphate compounds, such as (β-lauramidepropionyl) trimethylammonium sulfate and sodium dodecylbenzenesulfonate.

Antistatic agents may be used alone, and it is also possible to use two or more kinds in combination. The antistatic agent content is preferably 0.05 to 5 parts by weight, more preferably 0.1 to 5 parts by weight, based on 100 parts by weight of the aliphatic polyester.

As plasticizers, commonly known plasticizers are usable. Examples thereof include polyester plasticizers, glycerin plasticizers, polycarboxylic acid ester plasticizers, phosphoric acid ester plasticizers, polyalkylene glycol plasticizers, and epoxy plasticizers.

Examples of polyester plasticizers include polyesters containing adipic acid, sebacic acid, terephthalic acid, isophthalic acid, naphthalenedicarboxylic acid, diphenyldicarboxylic acid, or the like as an acid component and ethylene glycol, propylene glycol, 1,3-butanediol, 1,4-butanediol, 1,6-hexanediol, diethylene glycol, or the like as a diol component, as well as polyesters of hydroxycarboxylic acids, such as polycaprolactone. These polyesters may be end-capped with a monofunctional carboxylic acid or a monofunctional alcohol.

Examples of glycerin plasticizers include glycerin monostearate, glycerin distearate, glycerin monoacetomonolaurate, glycerin monoacetomonostearate, glycerin diacetomonooleate, and glycerin monoacetomonomontanate.

Examples of polycarboxylic acid plasticizers include phthalic acid esters such as dimethyl phthalate, diethyl phthalate, dibutyl phthalate, diheptyl phthalate, dibenzyl phthalate, and butyl benzyl phthalate; trimellitic acid esters such as tributyl trimellitate, trioctyl trimellitate, and trihexyl trimellitate; adipic acid esters such as isodecyl adipate and n-decyl-n-octyl adipate; citric acid esters such as tributyl acetylcitrate; azelaic acid esters such as bis(2-ethylhexyl)azelate; and sebacic acid esters such as dibutyl sebacate and bis(2-ethylhexyl)sebacate.

Examples of phosphoric acid ester plasticizers include tributyl phosphate, tris(2-ethylhexyl) phosphate, trioctyl phosphate, triphenyl phosphate, tricresyl phosphate, and diphenyl-2-ethylhexyl phosphate.

Examples of polyalkylene glycol plasticizers include polyalkylene glycols such as polyethylene glycol, polypropylene glycol, polytetramethylene glycol, poly(ethylene oxide-propylene oxide) block or random copolymers, ethylene oxide addition polymers of bisphenols, and tetrahydrofuran addition polymers of bisphenols, as well as end-capping agent compounds such as terminal-epoxy-modified compounds, terminal-ester-modified compounds, and terminal-ether-modified compounds thereof.

Examples of epoxy plasticizers include epoxy triglycerides containing an alkyl epoxystearate and soybean oil and also epoxy resins obtained from bisphenol A and epichlorohydrin as raw materials.

Other specific examples of plasticizers include benzoic acid esters of aliphatic polyols, such as neopentyl glycol dibenzoate, diethylene glycol dibenzoate, and triethylene glycol-bis(2-ethylbutyrate); fatty acid amides such as stearic acid amide; fatty acid esters such as butyl oleate; oxyacid esters such as methyl acetyl ricinoleate and butyl acetyl ricinoleate; pentaerythritol; various sorbitols; polyacrylic acid esters; silicone oil; and paraffins.

As the plasticizer, in particular, one containing at least one member selected from polyester plasticizers and polyalkylene plasticizers can be suitably used. They may be used alone, and it is also possible to use two or more kinds together.

The plasticizer content is preferably 0.01 to 30 parts by weight, more preferably 0.05 to 20 parts by weight, and still more preferably 0.1 to 10 parts by weight based on 100 parts by weight of the substrate film. In the invention, a crystal-nucleating agent and a plasticizer may be used independently, but are still more preferably used in combination.

In order to obtain the substrate film, a known molding technique such as extrusion molding or cast molding may be used. For example, a film can be formed using an extruder or the like equipped with a T-die, an I-die, a circular die, or the like.

In the case where a substrate film is obtained by extrusion molding, it is possible to use a material previously obtained by melt-kneading an aliphatic polyester and other components, and it is also possible to perform molding through melt-kneading during extrusion molding. The substrate film can be produced by extruding a molten film onto a cooling drum, and then bringing the film into close contact with the rotating cooling drum for cooling. At this time, it is possible that an electrostatic adhesion agent such as quaternary phosphonium sulfonate is incorporated into the molten film, and an electrical charge is easily applied to the molten surface of the film from an electrode in a non-contact manner, thereby bringing the film into close contact with a rotating cooling drum, so as to obtain a substrate film having few surface defects. At that time, it is preferable that the ratio between the lip opening of a die for extrusion and the thickness of a sheet extruded onto a cooling drum (draft ratio) is 2 or more and 80 or less. When the draft ratio is less than 2, the rate of take-up from the extrusion die lips is too low. As a result, the rate of polymer release from the die lips is low, resulting in increased defects such as defective die-lip stripes; therefore, this may be undesirable.

From this point of view, the draft ratio is preferably 3 or more, more preferably 5 or more, still more preferably 9 or more, and particularly preferably 15 or more. In addition, when the draft ratio is more than 80, probably because deformation upon the separation of the polymer from the die lips is too large, the flow becomes unstable, resulting in variations in thickness (uneven thickness); therefore, this may be undesirable. From this point of view, the draft ratio is preferably 60 or less, more preferably 40 or less, and particularly preferable 30 or less.

As mentioned above, it is preferable that after the completion of the molding of the desired decorated molded article, the substrate film that serves as a substrate in the decorating film has been crystallized. However, when the decorating film is to be laminated to fit the shape of a molded body having a complicated three-dimensional shape such as in deep drawing, it is preferable that the resin film is in a substantially amorphous state as mentioned above.

Here, in order to obtain a substrate film in a substantially amorphous state, it is preferable that the resin in a molten state discharged through a die is rapidly cooled. Accordingly, the temperature of the cooling drum is preferably

(the glass transition temperature of the resin (Tg) - 50)°C or more, more preferably (Tg - 40)°C or more, and still more preferably (Tg - 30)°C or more. In addition, the upper limit temperature of the cooling drum temperature is preferably (Tg + 20)°C or less, more preferably (Tg + 10) or less, and still more preferably Tg°C or less. Accordingly, in the case of polylactic acid, Tg is about 60°C, and the cooling drum temperature is thus preferably set at 10°C to 80°C, more preferably 20°C to 70°C, and most preferably 30°C to 60°C. When the temperature of the cooling drum is less than (Tg - 50)°C, the adhesion to the cooling drum may decrease, while in the case of a temperature of more than (Tg + 20)°C, it may be difficult to obtain a substantially amorphous state.

In addition, as long as the substantially amorphous state is maintained, the substrate film may be previously subjected to a stretching treatment or a subsequent heat set treatment. In the case where the film is laminated to a molded body having an uncomplicated three-dimensional shape, such a technique may be employed.

The substrate film may be stretched by known longitudinal uniaxial stretching, transverse uniaxial stretching, simultaneous biaxial stretching, or the like. After stretching, the film may be subjected to a heat set treatment in order to increase crystallinity or suppress thermal shrinkability, etc. In the invention, it is possible to use a substrate film that is in a substantially amorphous state after stretching. In terms of lamination properties, an unstretched film is more preferable.

The draw ratio is suitably determined according to the purpose. In the resin film, the areal draw ratio (longitudinal ratio x transverse ratio) is preferably within a range of 3.0 or less, more preferably 2.0 or less, and still more preferably 1.7 or less. In the case where the resin film is to be crystallized in the subsequent heat set process, the ratio is preferably within a range of 1.02 or more, and still more preferably 1.05 or more. In the case where the areal draw ratio is 3.0 or more, stretchability may deteriorate, causing a difficulty in lamination and molding.

The stretching temperature is suitably selected within a range from the glass transition temperature (Tg) to crystallization temperature (Tc) of the resin forming the resin film. Further, a temperature range which is higher than Tg and as close to Tc as possible and in which crystallization is not promoted is more suitably employed.

At a temperature lower than Tg, the molecular chain is fixed, and it is thus difficult to suitably advance the stretching operation, while at a temperature equal to or higher than Tc, crystallization is promoted. Also in such a case, it is difficult to smoothly advance the stretching process.

Therefore, the stretching temperature is more preferably (Tg - 10)°C or more, and still more preferably (Tg - 5) °C or more, and is also more preferably (Tc + 10)°C or less, and still more preferably (Tc + 5)°C or less.

Incidentally, as mentioned above, a decorating film is a film that includes a resin film as a substrate (substrate film) and a design layer on the substrate film. The "design layer" may be any layer capable of imparting a so-called design to a molded body, which is to be decorated with the decorating film. Examples thereof include a printing layer, a coloring layer, a metal thin film layer, an inorganic thin film layer, a shaped layer with surface irregularities, and a multilayer structure including them. When the substrate film itself can also serve as a design layer, a single-layer structure is also possible.

In addition to such a design layer, the outermost surface of the decorating film may also have provided thereon a hard coating layer for preventing scratches, an antistatic layer, an anti-stain layer, an antireflection layer, an adhesive layer, a pressure-sensitive adhesive layer, an antistatic layer, an antifouling layer, an anti-stain layer, etc. In addition, the design layer may be directly formed on the substrate surface, and may also be formed via another layer.

For forming a printing layer on the substrate film, a known printing method such as gravure printing, planographic printing, flexographic printing, dry offset printing, pat printing, or screen printing may be used according to the product shape or the purpose of printing. In particular, offset printing and gravure printing are suitable for multicolor printing or halftoning. In addition, in the case where the decorating film is molded into a complex shape, it is preferable to use a printing ink with excellent spreadability. An ink whose binder resin is made of a soft resin as a main component, such as a polyurethane resin, an acrylic resin, or a vinyl chloride resin, is preferable.

In addition, the design layer does not have to be a printing layer, and may also be a coloring layer, a thin film layer of a metal or a metal oxide, or a combination of a printing layer and a thin film layer of a metal (oxide). When a thin film layer of a metal or a metal oxide is formed, the permeation of water vapor or oxygen into the molded body inside the decorated molded article is suppressed, whereby the durability of the molded body, for example, can be improved.

Examples of methods for forming a thin film layer of a metal (oxide) include vapor deposition methods, spraying methods, and plating methods. As vapor deposition methods, both physical vapor deposition and chemical vapor deposition processes are usable. Examples of physical vapor deposition processes include vacuum deposition, sputtering, and ion plating.

Examples of chemical vapor deposition (CVD) processes include thermal CVD, plasma CVD, and optical CVD. Examples of spraying methods include atmospheric plasma spraying and vacuum plasma spraying. Examples of plating methods include electroless plating (chemical plating), hot-dip plating, and electroplating. In electroplating, laser plating and the like are also usable. Among them, vapor deposition methods and plating methods are preferable for forming a metal layer, and vapor deposition methods are preferable for forming a metal oxide layer. In addition, a vapor deposition method and a plating method can be used in combination.

The decorating film may have an adhesive layer or a pressure-sensitive adhesive layer in order to improve adhesion with a molded body. The adhesive layer or the pressure-sensitive adhesive layer is not particularly limited, but it is preferable to use a polyester resin layer, a urethane resin layer, an acrylic resin layer, a polypropylene chloride resin layer, or the like.

In addition, as long as the effect of the invention can be achieved, materials for the design layer, the adhesive layer, the pressure-sensitive adhesive layer, and the like and methods for forming them may be any of known ones used for decorating films.

In addition, in the decorating film, it is preferable that the substrate film is in a substantially amorphous state. When the substrate film is in a substantially amorphous state, in the case where the decorating film obtained from such a resin film is laminated to a molded body having large three-dimensional irregularities, such as the case where the film is laminated to a molded body with a shape having a portion bent at an acute angle, the decorating film is prevented from breakage or poor molding.

The method for producing a decorated molded article is not particularly limited, and it is preferable to use an injection molding simultaneous lamination method, a vacuum lamination method, or the like. In particular, it is more preferable to use an insert molding process, which is an injection molding simultaneous lamination method, or a vacuum lamination method.

According to the shape or the like of the molded body to be applied, substrate films that are in a substantially amorphous state or not in a substantially amorphous state before lamination are both usable. For example, in the case of covering a molded body having a complicated three-dimensional structure such as in deep drawing, in terms of improving the stretchability of the decorating film, it is preferable that the substrate of the decorating film before lamination to the molded body is in a substantially amorphous state, and heat is then applied after or during the lamination of the decorating film to the molded body to cause crystallization (turn it into a substantially crystalline state).

In the case where stereocomplex polylactic acid is used as a material for the substrate film, with respect to the degree of crystallization, it is preferable that the stereocomplex crystallinity index (Sc) defined by formula (II) using the diffraction peak intensity ratio measured by wide-angle X-ray diffraction (XRD) is 50% or more, preferably within a range of 50 to 100%, still more preferably 70 to 100%, and particularly preferably 90 to 100%.

That is, when polylactic acid has the above stereocomplex crystallinity index (Sc), the transparency, heat resistance, and wet heat resistance of the film can be more suitably satisfied. In particular, with respect to transparency, the haze can be significantly reduced as compared with polylactic acid having no stereocomplex crystal, and this is more preferable as a decorating film.

$$Sc(\%) = \{\Sigma I_{SCi}/(\Sigma I_{SCi} + I_{HM})\} \times 100 \quad (II)$$

[Here, $\Sigma Isci = I_{sc1} + I_{sc2} + I_{sc3}$; $I_{sci}$ (i = 1 to 3) represents the integrated intensities of diffraction peaks near 2θ = 12.0°, 20.7°, and 24.0°, respectively; and $I_{HM}$ represents the integrated intensity $I_{HM}$ of the diffraction peak near 2θ = 16.5° due to homo-crystal.]

Further, the melting point of a polylactic acid stereocomplex crystal is suitably selected within a range of 190 to 250°C, and more preferably 200 to 230°C. The crystal melting enthalpy measured by DSC is selected within a range of 20 J/g or more, preferably 20 to 80 J/g, and more preferably 30 to 80 J/g.

In an insert molding process, a decorating film is preformed by vacuum forming, pressure forming, or the like and then inserted into an injection mold, and a molten resin is injected thereinto for integral molding with the decorating film. In this method, it is preferable that the substrate film is in a substantially amorphous state at least before the preformation.

The lower limit of the film heating temperature during the preformation is preferably (Tg of the substrate film - 20°C) or more, more preferably (Tg - 10)°C or more, and still more preferably (Tg - 5)°C or more. The upper limit of the heating temperature is preferably (Tg + 20)°C or less, more preferably (Tg + 10)°C or less, and still more preferably (Tg + 5)°C or less. The glass transition temperature of polylactic acid is approximately 55 to 65°C. This also applies to polylactic acid containing a stereocomplex crystal.

The preformed decorating film is inserted into an injection mold, and a molten resin to form a molded body (resin) is injected thereinto, followed by integral molding. The temperature of injection molding is suitably selected according to the kind of resin. In addition, the temperature of the mold is selected considering the physical properties of the decorating film and the processes. In the case where the substrate film is to be not in a substantially amorphous state in the injection mold, the lower limit of the mold temperature is preferably (Tg - 5)°C or more, more preferably (Tg + 5)°C or more, and still more preferably (Tg + 10)°C or more. The upper limit of the mold temperature is preferably (Tc + 30)°C or less, more preferably (Tc + 20)°C or less, and still more preferably (Tc + 15)°C or less.

Meanwhile, in the case where a decorated molded article is taken out after the injection molding process so

as not to bring the substrate of the decorating film into a substantially amorphous state, the lower limit of the mold temperature is preferably (Tg - 10)°C or more, and more preferably (Tg - 5)°C or more. The upper limit of the mold temperature is preferably (Tg + 30)°C or less, more preferably (Tg + 20)°C or less, and still more preferably (Tg + 10) °C or less.

In a vacuum lamination method, a molded body is separately prepared by injection molding or the like, and a decorating film is allowed to coat and adhere to the molded body in a vacuum. It is preferable to use, for example, the three-dimension overlay method ("TOM technique") described in Japanese Patent No. 373356 or Journal of the Imaging Society of Japan Vol. 48, No. 4, pp. 277 to 284 (2009). In this method, it is preferable that the substrate film in a decorating film before lamination is in a substantially amorphous state.

A decorating film having an adhesive layer or a pressure-sensitive adhesive layer and a molded body are placed in a vacuum device, and the decorating film is then heated by infrared radiation and thereby laminated to the molded body. The upper limit of the heating temperature for the decorating film before lamination is preferably (Tg + 70)°C or less, more preferably (Tg + 60)°C or less, and still more preferably (Tg + 50)°C or less.

The lower limit is preferably (Tg - 10)°C or more, more preferably (Tg + 10)°C or more, and still more preferably (Tg + 20)°C or more. At a temperature of (Tg + 70)°C or more, the decorating film may become so soft that it breaks in the vacuum device during still standing before lamination. In addition, at a temperature of less than (Tg - 10)°C, it may be difficult to successfully laminate the film to the molded body.

As a molded body to which a decorating film is laminated to form a decorated molded article, either a metal molded body or a resin molded body may be employed. Resins used as resin molded bodies are not particularly limited. Examples thereof include polyester resins, polyamide resins, polyacetal resins, polyolefin resins such as polyethylene resins and polypropylene resins, polystyrene resins, acrylic resins, polyurethane resins, chlorinated polyethylene resins, chlorinated polypropylene resins, aromatic and aliphatic polyketone resins, fluorocarbon resins, polyphenylene sulfide resins, polyetherketone resins, polyimide resins, thermoplastic starch resins, AS resins, ABS resins, AES resins, ACS resins, polyvinyl chloride resins, polyvinylidene chloride resins, vinyl ester resins, MS resins, polycarbonate resins, polyarylate resins, polysulfone resins, polyether sulfone resins, phenoxy resins, polyphenylene oxide resins, poly-4-methylpentene-1, polyetherimide resins, polyvinyl alcohol resins, and like thermoplastic resins.

In particular, in terms of environment and adhesion with a decorating film, polylactic acid is suitably used. It is still more preferable to use stereocomplex polylactic acid having a higher crystallization rate and better moldability as compared with polylactic acid containing only a homo-crystal. In particular, in terms of material recycling, it is preferable that the material of the resin molded body is the same as the material used for the decorating film.

The method for producing a resin molded body to be applied is not particularly limited, and, according to the purpose, compression molding, injection molding, rotational molding, cast molding, reaction injection molding, or the like are selected. In terms of moldability and productivity, injection molding is preferable. It is also possible to use in-molding, insert molding, or the like, which is a method in which a decorating film is integrated simultaneously with the injection molding of a resin molded body.

<Wrapping Material>

The film of the invention can also be used for wrapping material applications. For example, the film may be configured as a multilayer film including at least one layer containing an aliphatic polyester and a cyclic carbodiimide compound (P-layer) and at least one layer made of a resin containing a polyolefin (N-layer).

The multilayer film at least includes one P-layer and one N-layer as mentioned above. For improving the adhesion between the P-layer and the N-layer, for example, another layer (Q-layer) may be provided between the N-layer and the P-layer.

Known materials may be used for the Q-layer for improving adhesion, and it is preferable to use (a) a polar-group-containing copolymer resin and (b) a modified resin modified with a polar-group-containing monomer or the like. As long as at least the copolymer resin (a) and/or the modified resin (b) is contained, unmodified resins and other resins may be also be contained. Examples of polar-group-containing copolymer resins (a) herein include acidic-group-containing copolymer resins such as ethylene-vinyl acetate copolymer resins (EVA), ethylene-ethyl acrylate copolymer resins, and ionomer resins. Further, specific examples of such resins include products commercially available from Du Pont-Mitsui Polychemicals under the trade name Evaflex, P-2807 (EV250); the trade name EVAFLEX-EEA, A-707; the trade name Himilan, 1555 and 1702; etc.

Another preferred example of a material in the layer to serve as an adhesive is (b) a thermoplastic elastomer and/or polyolefin resin modified with an unsaturated carboxylic acid or a derivative thereof. Further, it is preferable to use, for example, a polyolefin composition prepared by mixing a metal powder having a higher ionization tendency than hydrogen with a polyolefin obtained by grafting an unsaturated carboxylic acid or an anhydride thereof or with a polyolefin obtained by blending the grafted polyolefins. Further, as a specific example of such a resin, a product commercially available from Mitsui Chemicals under the trade name ADMER is mentioned.

In the case where the multilayer film of the invention is used as a wrapping material, it is sometimes desirable that the multilayer film has flexibility. The flexibility of the multilayer film is expressed as a tensile elastic modulus. The preferred elastic modulus of a wrapping material depends on the intended use, but is preferably 50 to 2,000 MPa, and more preferably 100 to 1,000 MPa. It is a value measured by the method described in JIS K7161 at a tensile rate of 100 mm/min.

It is preferable that the adhesion peel strength of the multilayer film is 0.2 N/25 mm or more as measured by the peel test described in JIS K6854. The adhesion peel strength is more preferably 1 N/25 mm or more, still more preferably 2 N/25 mm or more, and most preferably 3 N/25 mm or more. When the peel strength is less than 0.2 N/25 mm, problems may occur during the actual use. In the invention, unless otherwise noted, peel strength was evaluated at a peel rate of 200 mm/min with a film width of 25 mm.

In addition, in the multilayer film, a gas barrier layer, a light shielding layer, a water-vapor barrier layer, an oxygen barrier layer, or a gas permeation layer may also be laminated thereto.

In order to obtain such a multilayer film, a known molding technique such as extrusion molding or cast molding may be used. For example, a film can be formed using an extruder or the like equipped with a T-die, an I-die, a circular die, or the like. Preferably, it is preferable to employ multilayer extrusion molding using a multi-manifold die or a T-, I- or circular die having connected thereto a multi-layering system such as a feed block or a doubling system. An optimal method is selected from them depending on the number of layers, the physical properties of the resin, and the like.

In the case where the multilayer film is obtained by multilayer extrusion molding, for example, in the case of the P-layer, it is possible to use a material previously obtained by melt-kneading an aliphatic polyester and other components, and it is also possible to perform molding through melt-kneading during extrusion molding. The N-layer may also be molded in the same manner and at the same time, thereby forming a multilayer film. In order to suppress sharkskin or layer thickness variation, which is a problem in the molding of a multilayer film, it is preferable that resins used for respective layers have similar melt viscosities. Specifically, it is preferable that the difference in the melt flow rate of the resin between the P-layer and the N-layer at the same temperature is 20 (g/10 min) or less, and more preferably 10 or less. The melt flow rate is measured in accordance with the method of ISO 1133.

In addition, in order to obtain the multilayer film, instead of multilayer extrusion molding, it is also possible to separately form the film for each layer, and laminate them by lamination to form a multilayer film. Lamination may be performed by a known method, such as heat sealing or a method using an adhesive between layers.

In addition, the multilayer film may be stretched. As a stretching method, known longitudinal uniaxial stretching, transverse uniaxial stretching, simultaneous biaxial stretching, or the like may be employed. After stretching, the film may also be subjected to a heat set treatment in order to increase crystallinity or suppress thermal shrinkability, etc.

The draw ratio is suitably determined according to the purpose, the kind of resin, and the like. In the multilayer film, the areal draw ratio (longitudinal ratio x transverse ratio) is preferably within a range of 6.0 or less, more preferably 4.0 or less, and still more preferably 3 or less and is also preferably within a range of 1.05 or more, and still more preferably 1.1 or more. In the case where the areal draw ratio is 6.0 or more, stretchability may deteriorate, resulting in problems such as an increase in the frequency of breakage during stretching. A ratio of less than 1.05 may result in insufficient mechanical strength.

The stretching temperature is suitably selected within a range from the glass transition temperature (Tg) to crystallization temperature (Tc) of the resins forming the multilayer film.

With respect to the heat set treatment, it is preferable to perform the heat set treatment at a temperature range from the crystallization temperature (Tc) of the crystalline resin having the highest Tc among the resins forming the multilayer film to the lowest melting point (Tm) among the layer-forming resins. Such a heat set treatment promotes the crystallization of the crystalline polymer of each layer containing stereocomplex polylactic acid, whereby the thermal shrinkage rate can be suitably reduced.

It is preferable that the heat set treatment is performed for 1 second to 30 minutes. When the heat treatment temperature is high, the time is relatively short, while when the heat setting temperature is low, a heat treatment for relatively a long period of time is required.

In the above configuration, the resin of the P-layer contains an aliphatic polyester and a cyclic carbodiimide compound, and may also contain other components.

The aliphatic polyester content of the film is preferably 40 wt% or more, still more preferably 50 wt% or more, more preferably 60 wt% or more, particularly preferably 70 wt% or more, and most preferably 75 wt% or more. When the aliphatic polyester content is less than 40 wt%, the use of an aliphatic polyester is less meaningful. Incidentally, in the case where resins other than aliphatic polyesters are added, in terms of the moldability of the resin film, it is preferable to use thermoplastic resins.

Examples of thermoplastic resins other than aliphatic polyesters include aromatic polyester resins, polyamide resins, polyacetal resins, polyolefin resins such as polyethylene resins and polypropylene resins, polystyrene resins, acrylic resins, polyurethane resins, chlorinated polyethylene resins, chlorinated polypropylene resins, aromatic polyketone resins, aliphatic polyketone resins, fluorocarbon resins, polyphenylene sulfide resins, polyetherketone resins, polyimide resins, thermoplastic starch resins, AS resins, ABS resins, AES resins, ACS resins, polyvinyl chloride resins, polyvinylidene chloride resins, vinyl ester resins, MS resins, polycarbonate resins, polyarylate resins, polysulfone resins, polyether sulfone resins, phenoxy resins, polyphenylene oxide resins, poly-4-methylpentene-1, polyetherimide resins, polyvinyl alcohol resins, and like thermoplastic resins.

Acrylic resins, especially polymethyl methacrylate, are particularly preferable because they have high compatibility with aliphatic polyesters together with a similar refractive index.

The acrylic resin content of the film is preferably 50 wt% or less, more preferably 40 wt% or less, and still more preferably 30 wt% or less. In the case where the acrylic resin content is more than 50 wt%, the use of an aliphatic polyester is less meaningful.

Incidentally, in the multilayer film of the invention, it is preferable that the P-layer is in a substantially crystalline state. "Substantially crystalline state" herein means that the peak enthalpy of crystal ($\Delta Hc$) in the first temperature rise measured by DSC (differential scanning calorimeter) at a temperature rise rate of 20°C/min satisfies the following formula (50).

$$\Delta Hc < 1\ J/g \quad (50)$$

In the case where the above formula is satisfied, the multilayer film of the invention is even more suitable for use as a wrapping material. It is preferable that

$$\Delta Hc < 0.5\ J/g \quad (51).$$

It is still more preferable that

$$\Delta Hc < 0.2\ J/g \text{ It is } (52).$$

Meanwhile, when the N-layer is present, the water-vapor barrier properties of the film can be improved. The resin of the N-layer contains a polyolefin and may also contain other components.

Here, the polyolefin content of the film is preferably 10 wt% or more, still more preferably 30 wt% or more, more preferably 40 wt% or more, particularly preferably 50 wt% or more, and most preferably 60 wt% or more. In the case where resins other than polyolefins are added, in terms of the moldability of the resin film, it is preferable to use thermoplastic resins. This preferred weight percentage also applies to a blend or a copolymer.

Preferred examples of polyolefins include polyethylene and polypropylene. Copolymerization with other components is also possible. Copolymerization may be block, random, or graft polymerization. There are various kinds with different degrees of polymerization, and they can be used according to the intended use without particular limitation.

Examples of thermoplastic resins other than polyolefins include aromatic polyester resins, polyamide resins, polyacetal resins, polystyrene resins, acrylic resins, polyurethane resins, chlorinated polyethylene resins, chlorinated polypropylene resins, aromatic polyketone resins, aliphatic polyketone resins, fluorocarbon resins, polyphenylene sulfide resins, polyetherketone resins, polyimide resins, thermoplastic starch resins, AS resins, ABS resins, AES resins, ACS resins, polyvinyl chloride resins, polyvinylidene chloride resins, vinyl ester resins, MS resins, polycarbonate resins, polyarylate resins, polysulfone resins, polyether sulfone resins, phenoxy resins, polyphenylene oxide resins, poly-4-methylpentene-1, polyetherimide resins, polyvinyl alcohol resins, and like thermoplastic resins.

The P-layer and the N-layer of the invention may contain at least one member selected from the group consisting of thermoplastic resins other than the components mentioned above, stabilizers, UV absorbers, crystallization promoters, fillers, release agents, antistatic agents, plasticizers, and impact-resistance stabilizers. It is preferable that the polylactic acid used in the invention contains a stabilizer. As stabilizers, those used as stabilizers for ordinary thermoplastic resins are usable. Examples thereof include antioxidants and light stabilizers. By incorporating such agents, a multilayer film having excellent mechanical properties, moldability, heat resistance, and durability can be obtained.

Examples of antioxidants include hindered phenol compounds, hindered amine compounds, phosphite compounds, and thioether compounds.

Examples of light stabilizers include oxybenzophenone compounds, cyclic iminoester compounds, benzotriazole compounds, salicylic acid ester compounds, benzophenone compounds, cyanoacrylate compounds, hindered amine compounds, and nickel complex compounds. As a light stabilizer, it is also possible to use a combination of a UV absorber and one that scavenges radicals formed during photo-oxidation.

As UV absorbers, cyclic iminoester compounds, benzophenone compounds, and benzotriazole compounds

are preferable because the absorption of visible light can thereby be minimized.

In addition, an organic or inorganic crystallization promoter may be contained. When a crystallization promoter is contained, for example, the stereocomplex-crystal promoter function can be further enhanced, and a molded article with excellent mechanical properties, heat resistance, and moldability can be obtained.

As crystallization promoters, those generally used as crystal-nucleating agents for crystalline resins are usable. Both inorganic crystal-nucleating agents and organic crystal-nucleating agents may be used.

Examples of inorganic crystal-nucleating agents include talc, kaolin, silica, synthetic mica, clay, zeolite, graphite, carbon black, zinc oxide, magnesium oxide, titanium oxide, calcium carbonate, calcium sulfate, barium sulfate, calcium sulfide, boron nitride, montmorillonite, neodymium oxide, aluminum oxide, and phenylphosphonate metal salts.

In order to improve their dispersibility in the composition together with their effects, it is preferable that these inorganic crystal-nucleating agents are treated with various dispersion aids and thus in a highly dispersed state such that the primary particle size thereof is about 0.01 to 0.5 μm.

Examples of organic crystal-nucleating agents include organic carboxylic acid metal salts such as calcium benzoate, sodium benzoate, lithium benzoate, potassium benzoate, magnesium benzoate, barium benzoate, calcium oxalate, disodium terephthalate, dilithium terephthalate, dipotassium terephthalate, sodium laurate, potassium laurate, sodium myristate, potassium myristate, calcium myristate, barium myristate, sodium octanoate, calcium octanoate, sodium stearate, potassium stearate, lithium stearate, calcium stearate, magnesium stearate, barium stearate, sodium montanate, calcium montanate, sodium toluylate, sodium salicylate, potassium salicylate, zinc salicylate, aluminum dibenzoate, sodium β-naphthoate, potassium β-naphthoate, and sodium cyclohexanecarboxylate, and organic sulfonic acid metal salts such as sodium p-toluenesulfonate and sodium sulfoisophthalate.

Examples also include organic carboxylic acid amides such as stearic acid amide, ethylenebis lauric acid amide, palmitic acid amide, hydroxystearic acid amide, erucic acid amide, and trimesic acid tris(tert-butylamide), low-density polyethylene, high-density polyethylene, polyisopropylene, polybutene, poly-4-methylpentene, poly-3-methylbutene-1, polyvinyl cycloalkanes, polyvinyl trialkylsilanes, high-melting-point polylactic acid, sodium salts of ethylene-acrylic acid copolymers, sodium salts of styrene-maleic anhydride copolymers (so-called ionomers), and benzylidene sorbitols and derivatives thereof, such as dibenzylidene sorbitol.

Among these, talc and at least one member selected from organic carboxylic acid metal salts are preferable. The crystal-nucleating agents for the polylactic acid of the invention may be used alone, and it is also possible to use two or more kinds together.

The crystallization promoter content is preferably 0.01 to 30 parts by weight, more preferably 0.05 to 20 parts by weight, based on 100 parts by weight of the polylactic acid.

Examples of antistatic agents include quaternary ammonium salt compounds, sulfonic acid compounds, and alkyl phosphate compounds, such as (β-lauramidepropionyl) trimethylammonium sulfate and sodium dodecylbenzenesulfonate.

Antistatic agents may be used alone, and it is also possible to use two or more kinds in combination. The antistatic agent content is preferably 0.05 to 5 parts by weight, more preferably 0.1 to 5 parts by weight, based on 100 parts by weight of the aliphatic polyester resin.

As plasticizers, commonly known plasticizers are usable. Examples thereof include polyester plasticizers, glycerin plasticizers, polycarboxylic acid ester plasticizers, phosphoric acid ester plasticizers, polyalkylene glycol plasticizers, and epoxy plasticizers.

Examples of polyester plasticizers include polyesters containing adipic acid, sebacic acid, terephthalic acid, isophthalic acid, naphthalenedicarboxylic acid, diphenyldicarboxylic acid, or the like as an acid component and ethylene glycol, propylene glycol, 1,3-butanediol, 1,4-butanediol, 1,6-hexanediol, diethylene glycol, or the like as a diol component, as well as polyesters of hydroxycarboxylic acids, such as polycaprolactone. These polyesters may be end-capped with a monofunctional carboxylic acid or a monofunctional alcohol.

Examples of glycerin plasticizers include glycerin monostearate, glycerin distearate, glycerin monoacetomonolaurate, glycerin monoacetomonostearate, glycerin diacetomonooleate, and glycerin monoacetomonomontanate.

Examples of polycarboxylic acid plasticizers include phthalic acid esters such as dimethyl phthalate, diethyl phthalate, dibutyl phthalate, diheptyl phthalate, dibenzyl phthalate, and butyl benzyl phthalate; trimellitic acid esters such as tributyl trimellitate, trioctyl trimellitate, and trihexyl trimellitate; adipic acid esters such as isodecyl adipate and n-decyl-n-octyl adipate; citric acid esters such as tributyl acetylcitrate; azelaic acid esters such as bis(2-ethylhexyl)azelate; and sebacic acid esters such as dibutyl sebacate and bis(2-ethylhexyl)sebacate.

Examples of phosphoric acid ester plasticizers include tributyl phosphate, tris(2-ethylhexyl) phosphate, trioctyl phosphate, triphenyl phosphate, tricresyl phosphate, and diphenyl-2-ethylhexyl phosphate.

Examples of polyalkylene glycol plasticizers include polyalkylene glycols such as polyethylene glycol, polypropylene glycol, polytetramethylene glycol, poly(ethylene oxide-propylene oxide) block or random copolymers, ethylene oxide addition polymers of bisphenols, and tetrahydrofuran addition polymers of bisphenols, as well as end-capping agent compounds such as terminal-epoxy-modified compounds, terminal-ester-modified compounds, and terminal-ether-modified compounds thereof.

Examples of epoxy plasticizers include epoxy triglycerides containing an alkyl epoxystearate and soybean oil and also epoxy resins obtained from bisphenol A and epichlorohydrin as raw materials.

Other specific examples of plasticizers include benzoic acid esters of aliphatic polyols, such as neopentyl glycol dibenzoate, diethylene glycol dibenzoate, and triethylene glycol-bis(2-ethylbutyrate); fatty acid amides such as stearic acid amide; fatty acid esters such as butyl oleate; oxyacid esters such as methyl acetyl ricinoleate and butyl acetyl ricinoleate; pentaerythritol; various sorbitols; polyacrylic acid esters; silicone oil; and paraffins.

As the plasticizer, in particular, one containing at least one member selected from polyester plasticizers and polyalkylene plasticizers can be suitably used. They may be used alone, and it is also possible to use two or more kinds together.

The plasticizer content is preferably 0.01 to 30 parts by weight, more preferably 0.05 to 20 parts by weight, and still more preferably 0.1 to 10 parts by weight based on 100 parts by weight of each layer of the multilayer film. In the invention, a crystal-nucleating agent and a plasticizer may be used independently, but are still more preferably used in combination.

<Method for Producing Cyclic Carbodiimide Compound>

The cyclic carbodiimide compound can be produced by combining known methods. Examples of methods include production from an amine compound via an isocyanate compound, production from an amine compound via an isothiocyanate compound, production from an amine compound via a triphenylphosphine compound, production from an amine compound via a urea compound, production from an amine compound via a thiourea compound, production from a carboxylic acid compound via an isocyanate compound, and production by deriving a lactam compound.

The cyclic carbodiimide compound of the invention may be produced by combining and modifying the methods described in the following documents. A method appropriate for the compound to be produced can be employed.

Tetrahedron Letters, Vol. 34, No. 32, 515-5158, 1993.

Medium- and Large-Membered Rings from Bis(iminophosphoranes): An Efficient Preparation of Cyclic Carbodiimides, Pedro Molina et al.

Journal of Organic Chemistry, Vol. 61, No. 13, 4289-4299, 1996.

New Models for the Study of the Racemization Mechanism of Carbodiimides.

Synthesis and Structure (X-ray Crystallography and 1H NMR) of Cyclic Carbodiimides, Pedro Molina et al.

Journal of Organic Chemistry, Vol. 43, No. 8, 1944-1946, 1978.

Macrocyclic Ureas as Masked Isocyanates, Henri Ulrich et al.

Journal of Organic Chemistry, Vol. 48, No. 10, 1694-1700, 1983.

Synthesis and Reactions of Cyclic Carbodiimides, R. Richter et al.

Journal of Organic Chemistry, Vol. 59, No. 24, 7306-7315, 1994.

A New and Efficient Preparation of Cyclic Carbodiimides from Bis(iminophosphoranea) and the System Boc2O/DMAP, Pedro Molina et al.

A production method appropriate for the compound to be produced may be employed. For example, a compound produced through the following steps can be suitably used as a cyclic carbodiimide compound for use in the invention of the present application:

(1) a step in which a nitrophenol represented by the following formula (a-1), a nitrophenol represented by the following formula (a-2), and a compound represented by the following formula (b) are allowed to react to give a nitro compound represented by the following formula (c):

$$HO\text{-}Ar^1\text{-}NO_2 \qquad (a\text{-}1)$$

$$HO\text{-}Ar^2\text{-}NO_2 \qquad (a\text{-}2)$$

$$E^1\text{-}X\text{-}E^2 \qquad (b)$$

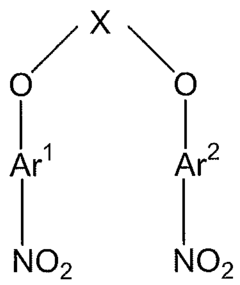

(c);

(2) a step in which the obtained nitro compound is reduced to give an amine compound represented by the following formula (d):

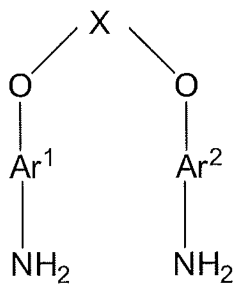

(d);

(3) a step in which the obtained amine compound is allowed to react with triphenylphosphine dibromide to give a triphenylphosphine compound represented by the following formula (e):

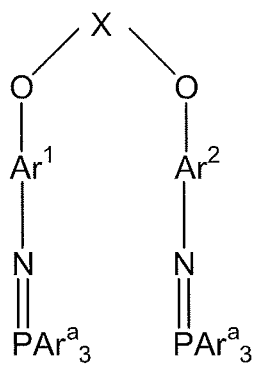

(e);

and

(4) the conversion of the obtained triphenylphosphine compound into an isocyanate in the reaction system, followed by direct decarboxylation.

In the above formulae, $Ar^1$ and $Ar^2$ are each independently an aromatic group optionally substituted with a $C_{1}$-$_{6}$ alkyl group, a phenyl group, or the like. $E^1$ and $E^2$ are each independently a group selected from the group consisting of a halogen atom, a toluenesulfonyloxy group, a methanesulfonyloxy group, a benzenesulfonyloxy group, and a p-bromobenzenesulfonyloxy group.

$Ar_a$ is a phenyl group. X is a linking group of the following formulae (i-1) to (i-3):

$$-\left( CH_2 \right)_n- \quad (i\text{-}1)$$

wherein n is an integer of 1 to 6;

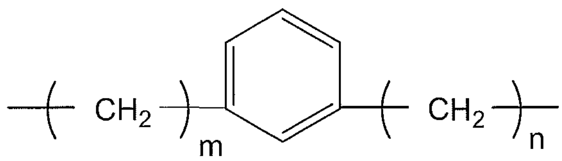

(i-2)

wherein m and n are each independently an integer of 0 to 3;

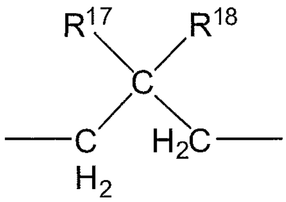

(i-3)

wherein $R^{17}$ and $R^{18}$ each independently represent a $C_{1-6}$ alkyl group or a phenyl group.

The structure of the synthesized cyclic carbodiimide compound can be identified by nuclear magnetic resonance (NMR) spectroscopy such as $^1$H-NMR or $^{13}$C-NMR using, for example, "JNR-EX270" (trade name) manufactured by JEOL using deuterated chloroform as a solvent. Incidentally, the amount in the composition can also be determined by NMR.

In addition, the presence of carbodiimide backbone in a cyclic carbodiimide compound can also be identified by infrared spectroscopy (IR). The presence of carbodiimide backbone in a synthesized cyclic carbodiimide compound can be confirmed by FT-IR at 2,100 to 2,200 $cm^{-1}$, which is characteristic to carbodiimide. For example, "Magna-750" (trade name) manufactured by Thermo Nicolet can be used for confirmation.

Incidentally, although the cyclic carbodiimide compound is capable of effectively capping acidic groups of a polymer compound, if desired, without departing from the gist of the invention, for example, a known carboxyl-group-capping agent for polymers can be used together. Examples of such known carboxyl-group-capping agents include agents described in JP-A-2005-2174, such as an epoxy compound, an oxazoline compound, and an oxazine compound.

Examples

Hereinafter, the invention will be described in further detail through examples. The property values were determined by the following methods.

A. Melting Point, Stereocomplex Crystallinity (S):

Measurement was performed using TA-2920 manufactured by TA Instruments at a temperature rise rate of 20°C/min. The peak temperature of the obtained melting peak was defined as the melting point.

Also, using TA-2920, a sample was heated in a nitrogen gas stream to 250°C at 10°C/min in the first cycle, and the glass transition temperature (Tg), stereocomplex-phase polylactic acid crystal melting temperature (Tm*), stereocomplex-phase polylactic acid crystal melting enthalpy ($\Delta Hm_s$), and homo-phase polylactic acid crystal melting enthalpy ($\Delta Hm_h$) were measured.

The measurement sample was rapidly cooled, and second-cycle measurement was performed under the same conditions to measure the crystallization onset temperature (Tc*) and crystallization temperature (Tc). From the stereocomplex-phase and homo-phase polylactic acid crystal melting enthalpies obtained in the above measurement, the stereocomplex crystallinity was determined using the following equation:

$$S = [\Delta Hm_s / (\Delta Hm_h + \Delta Hm_s)] \times 100$$

wherein $\Delta Hm_s$ is the melting enthalpy of stereocomplex-phase crystal, and $\Delta Hm_h$ is the melting enthalpy of homo-phase polylactic acid crystal.

B. Carboxyl Group End Concentration [COOH] (eq/ton):

A sample was dissolved in purified o-cresol in a nitrogen stream and titrated with an ethanol solution of 0.05 N potassium hydroxide using bromocresol blue as an indicator.

C. Isocyanate Gas Generation Test:

A sample was heated at 160°C for 5 minutes, and qualitative/quantitative determination was performed by pyrolysis-GC/MS analysis. Incidentally, the quantitative determination was performed using a calibration curve prepared with isocyanate. For GC/MS, GC/MS Jms Q1000GC K9 manufactured by JEOL was used.

D. Stability to Hydrolysis:

An obtained sample was treated in a thermo-hygrostat at 80°C and 95% RH for 100 hours, and the retention of reduced viscosity was then evaluated.
With respect to the stability of a sample to hydrolysis, when the retention of reduced viscosity was from 80 to less than 95%, the stability was rated as A (acceptable), and when it was from 95% to 100%, the stability was rated as AA (excellent).

E. Measurement of Reduced Viscosity ($\eta_{sp/c}$) :

A sample weighing 1.2 mg was dissolved in 100 ml of a [tetrachloroethane/phenol = (6/4) wt% mixed solvent], and measurement was performed at 35°C using an Ubbelohde viscosity tube. The retention of reduced viscosity was determined taking the reduced viscosity of the sample before treatment as 100%.

F. Molecular Weight:

The weight average molecular weight (Mw) and number average molecular weight (Mn) of a polymer were measured by gel permeation chromatography (GPC) and converted to standard polystyrene.
The following GPC instruments were used.

Detector: Differential refractometer RID-6A manufactured by Shimadzu Corporation
Column: TSK-gel G3000HXL, TSK-gel G4000HXL, TSK-gel G5000HXL, and TSK-guard column HXL-L manufactured by Tosoh Corporation connected in series or TSK-gel G2000HXL, TSK-gel G3000HXL, and TSK-guard column HXL-L manufactured by Tosoh Corporation connected in series

Using chloroform as the eluant, 10 μl of a sample having a concentration of 1 mg/ml (chloroform containing 1% hexafluoroisopropanol) was injected at a temperature of 40°C and a flow rate of 1.0 ml/min to perform the measurement.

G. Film Thickness:

Film thickness was measured using an electronic micrometer ("K-312A" manufactured by Anritsu) at a stylus pressure of 30 g.

H. Film Thermal Shrinkage Rate:

In accordance with ASTM D1204, a sample was treated at 90°C for 5 hours and then brought back to room temperature (25°C). The thermal shrinkage rate was determined from changes in length, and the haze value was further calculated.

I. Photoelastic Coefficient:

A birefringence measuring apparatus described in detail in Polymer Engineering and Science, 1999, 39, pp. 2349-2357, was used.
A film tensioning apparatus was placed in the path of a laser beam, and the birefringence was measured while applying an elongation stress at 23°C. In the measurement, the strain rate during elongation was 50 %/min (chuck distance: 10 mm, chuck travel rate: 5 mm/min), and the width of the sample was 8 mm. From the relationship between

birefringence difference (An) and elongation stress (σR), the inclination of the line was determined by least-square approximation to calculate the photoelastic coefficient (CR).

$$CR = \Delta n / \sigma R$$

$$\Delta n = n_x - n_y$$

(CR: photoelastic coefficient, σR: elongation stress, Δn: difference in birefringence, $n_x$: refractive index in the elongation direction, $n_y$: refractive index in the direction perpendicular to the elongation direction)

J. Total Light Transmittance:

Measurement was performed in accordance with ASTM D1003.
K. Polarizing Plate Durability:
A film was heat-treated at 90°C × 5 hours and then brought back to room temperature (25°C). The durability of the film was evaluated based on the following criteria.

A: The film does not break when bended 10 times.
B: The film does not break when bended twice.
F: The film breaks when bended.

L. Measurement of Haze:

Measurement was performed in accordance with JIS K7105-1981, 6.4, using Hazemeter MDH2000 manufactured by Nippon Denshoku Industries and a film having a thickness of 40 μm.
Transparency was rated as poor when the haze was more than 1.6%. When the haze was 0 to 1.6%, the film was rated as applicable for optical applications. When the haze was 1% or less, such transparency was rated as suitable for an optical film.

M. Glass Transition Temperature Measurement Method:

Measurement was performed using DSC (TA-2920 manufactured by TA Instruments) at a temperature rise rate of 20°C/min.

N. In-Plane Retardation (Re), Retardation in Thickness Direction (Rth):

The refractive index in the length direction ($n_x$) and the refractive index in the width direction ($n_y$) were measured with a spectral ellipsometer (M-150 manufactured by Jasco).
The retardation in the plane direction (Re) and retardation in the thickness direction (Rth) of the film were determined by the following formulae, respectively, using the refractive index in the length direction ($n_x$), refractive index in the width direction ($n_y$), refractive index in the direction perpendicular to the film surface (thickness direction) ($n_z$) , and thickness (d: nm).

$$Re = (n_x - n_y) \times d$$

$$Rth = ((n_x + n_y)/2 - n_z) \times d$$

O. Measurement of High-Temperature Mechanical Properties (DMA) :

A sample (strip-like, film width: 4 mm, chuck distance: 20 mm) was subjected to measurement using the following apparatus.
Measurement apparatus: RSA-III manufactured by TA Instruments
Measurement mode: Measurement under automatic tension, automatic strain control

Temperature range: 20 to 200°C
Temperature rise rate: 3°C/min
Measurement frequency: 1 Hz
DMA physical properties (presence/absence of local minimum)
Absent: A local minimum is not shown in a temperature range from room temperature (25°C) to 150°C.
Present: A local minimum is shown in a temperature range from room temperature (25°C) to 150°C.
In addition, the value of storage modulus (E') at 150°C was calculated.

P. Evaluation of Film Shape Stability:

A film with a size of 50 cm × 50 cm was allowed to stand on a stainless steel plate at 100°C for 30 minutes, and then the formation of surface irregularities was evaluated.

F: An irregularity of 1 mm or more is formed, and the surface can be visually recognized as apparently undulating.
B: An irregularity of not less than 0.2 and less than 1 mm is formed, and the surface can be visually recognized as undulating.
A: The film has an irregularity of less than 0.2 mm and can be visually recognized as almost flat.

Reference Example 1

0.005 parts by weight of tin octylate was added to 100 parts by weight of L-lactide (manufactured by Musashino Chemical Laboratory, optical purity: 100%), and the mixture was allowed to react in a nitrogen atmosphere in a reactor equipped with a stirring blade at 180°C for 2 hours. Phosphoric acid was added thereto as a catalyst deactivator in an amount of 1.2 equivalents of tin octylate, then the residual lactide was removed at 13.3 Pa, and the resulting product was formed into chips to give poly(L-lactic acid).
The obtained poly(L-lactic acid) had a weight average molecular weight of 152,000, a glass transition temperature (Tg) of 55°C, and a melting point of 175°C. The carboxyl group end concentration was 14 eq /ton, and the retention of reduced viscosity in hydrolysis was 9.5%.

Reference Example 2

Polymerization was performed under the same conditions as in Reference Example 1, except that L-lactide was replaced with D-lactide (manufactured by Musashino Chemical Laboratory, optical purity: 100%). Poly(D-lactic acid) was thus obtained.
The obtained poly(D-lactic acid) had a weight average molecular weight of 151,000, a glass transition temperature (Tg) of 55°C, and a melting point of 175°C. The carboxyl group concentration was 15 eq/ton, and the retention of reduced viscosity in hydrolysis was 9.1%.
The obtained poly(D-lactic acid) and the poly(L-lactic acid) obtained by the procedure of Reference Example 1 each in an amount of 50 parts by weight were mixed with 0.3 parts by weight of a phosphoric acid ester metal salt ("ADEKASTAB" NA-71 manufactured by ADEKA) in a blender, and vacuum-dried at 110°C for 5 hours. After that, the mixture was melt-kneaded while evacuating at a cylinder temperature of 230°C and a vent pressure of 13.3 Pa, then extruded into strands in a water bath, and formed into chips with a chip cutter to give a composition having a stereocomplex crystallinity (S) of 100% and a crystal melting temperature of 216°C.
The carboxyl group end concentration of the composition was 11 eq/ton, and the retention of reduced viscosity in hydrolysis was 10%.

Reference Example 3

The reduced viscosity and carboxyl group end concentration of polyethylene terephthalate "TR-8580" manufactured by Teijin Fibers Limited were measured. The reduced viscosity was 0.35 dl/g. The carboxyl group end concentration was 30 eq/ton.

Reference Example 4

Using 100 parts of dimethyl naphthalene-2,6-dicarboxylate, 60 parts of ethylene glycol, and 0.03 parts of manganese acetate tetrahydrate as a transesterification catalyst, an ester exchange reaction was carried out for 120 minutes while gradually raising the temperature from 150°C to 238°C.
When the reaction temperature reached 170°C, 0.024 parts of antimony trioxide was added. After the completion

of the ester exchange reaction, trimethyl phosphate (a solution heat-treated in ethylene glycol at 135°C for 5 hours under an applied pressure of 0.11 to 0.16 MPa: 0.023 parts of trimethyl phosphate) was added. Subsequently, the reaction product was transferred to a polymerization reactor, and the temperature was raised to 290°C. A polycondensation reaction was then carried out in a high vacuum of 27 Pa or less to give polyethylene-2,6-naphthalenedicarboxylate having an intrinsic viscosity of 0.61 dl/g and containing substantially no particles.

Reference Example 5

o-Nitrophenol (0.11 mol), 1,2-dibromoethane (0.05 mol), potassium carbonate (0.33 mol), and 200 ml of N,N-dimethylformamide (DMF) were charged to a reactor equipped with a stirrer and a heater in a $N_2$ atmosphere, and allowed to react at 130°C for 12 hours. DMF was then removed by reducing the pressure, and the resulting solid matter was dissolved in 200 ml of dichloromethane, followed by separation three times with 100 ml of water. The organic layer was dried over 5 g of sodium sulfate, and dichloromethane was removed by reducing the pressure to give an intermediate product A (nitro compound).

Next, the intermediate product A (0.1 mol), 5% palladium carbon (Pd/C) (1 g), and 200 ml of ethanol/dichloromethane (70/30) were charged to a reactor equipped with a stirrer, and the atmosphere was replaced with hydrogen five times. The mixture was allowed to react at 25°C under a constant supply of hydrogen. The reaction is terminated when hydrogen stops decreasing. Pd/C was recovered, and the mixed solvent was removed to give an intermediate product B (amine compound).

Next, in a $N_2$ atmosphere, triphenylphosphine dibromide (0.11 mol) and 150 ml of 1,2-dichloroethane are charged to a reactor equipped with a stirrer, a heater, and a dropping funnel, followed by stirring. Then, a solution of the intermediate product B (0.05 mol) and triethylamine (0.25 mol) dissolved in 50 ml of 1,2-dichloroethane is slowly added dropwise thereto at 25°C. After the completion of dropping, the mixture is allowed to react at 70°C for 5 hours. Subsequently, the reaction solution was filtered, and the filtrate was separated five times with 100 ml of water. The organic layer was dried over 5 g of sodium sulfate, and 1,2-dichloroethane was removed by reducing the pressure to give an intermediate product C (triphenylphosphine compound).

Next, in a $N_2$ atmosphere, di-tert-butyl dicarbonate (0.11 mol), N,N-dimethyl-4-aminopyridine (0.055 mol), and 150 ml of dichloromethane were charged to a reactor equipped with a stirrer and a dropping funnel, followed by stirring. Then, at 25°C, 100 ml of dichloromethane having dissolved therein the intermediate product C (0.05 mol) was slowly added dropwise thereto. After dropping, the mixture is allowed to react for 12 hours. Subsequently, dichloromethane was removed, and the resulting solid matter was purified to give a cyclic carbodiimide compound (1) (MW = 252) represented by the following structural formula. The structure was confirmed by NMR and IR.

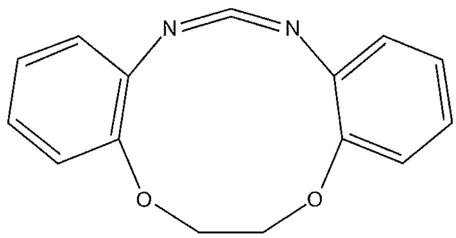

Reference Example 6

o-Nitrophenol (0.11 mol), pentaerythrityl tetrabromide (0.025 mol), potassium carbonate (0.33 mol), and 200 ml of N,N-dimethylformamide were charged to a reactor equipped with a stirrer and a heater in a $N_2$ atmosphere, and allowed to react at 130°C for 12 hours. DMF was then removed by reducing the pressure, and the resulting solid matter was dissolved in 200 ml of dichloromethane, followed by separation three times with 100 ml of water. The organic layer was dried over 5 g of sodium sulfate, and dichloromethane was removed by reducing the pressure to give an intermediate product D (nitro compound).

Next, the intermediate product D (0.1 mol), 5% palladium carbon (Pd/C) (2 g), and 400 ml of ethanol/dichloromethane (70/30) were charged to a reactor equipped with a stirrer, and the atmosphere was replaced with hydrogen five times. The mixture was allowed to react at 25°C under a constant supply of hydrogen. The reaction was terminated when hydrogen stopped decreasing. Pd/C was recovered, and the mixed solvent was removed to give an intermediate product E (amine compound).

Next, in a $N_2$ atmosphere, triphenylphosphine dibromide (0.11 mol) and 150 ml of 1,2-dichloroethane were charged to a reactor equipped with a stirrer, a heater, and a dropping funnel, followed by stirring. Then, a solution of the intermediate product E (0.025 mol) and triethylamine (0.25 mol) dissolved in 50 ml of 1,2-dichloroethane was slowly

added dropwise thereto at 25°C. After the completion of dropping, the mixture is allowed to react at 70°C for 5 hours. Subsequently, the reaction solution was filtered, and the filtrate was separated five times with 100 ml of water. The organic layer was dried over 5 g of sodium sulfate, and 1,2-dichloroethane was removed by reducing the pressure to give an intermediate product F (triphenylphosphine compound).

Next, in a $N_2$ atmosphere, di-tert-butyl dicarbonate (0.11 mol), N,N-dimethyl-4-aminopyridine (0.055 mol), and 150 ml of dichloromethane are charged to a reactor equipped with a stirrer and a dropping funnel, followed by stirring. Then, at 25°C, 100 ml of dichloromethane having dissolved therein the intermediate product F (0.025 mol) was slowly added dropwise thereto. After dropping, the mixture is allowed to react for 12 hours. Subsequently, dichloromethane was removed, and the resulting solid matter was purified to give a compound represented by the following structural formula, a cyclic carbodiimide compound (2) (MW = 516). The structure was confirmed by NMR and IR.

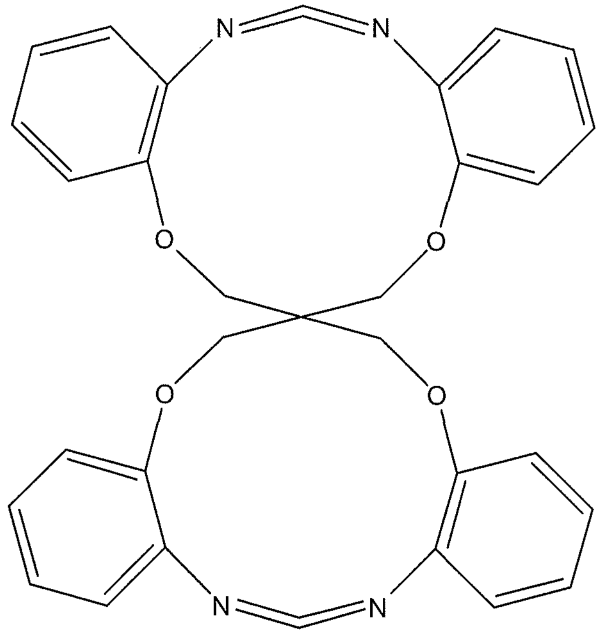

Reference Example 7

100 parts by weight of the poly(L-lactic acid) obtained by the procedure of Reference Example 1 was vacuum-dried at 110°C for 5 hours, then fed through a first feed port of a twin-screw kneader, and melt-kneaded while evacuating at a cylinder temperature of 210°C and a vent pressure of 13.3 Pa. After that, 1 part by weight of the cyclic carbodiimide compound (1) obtained by the procedure of Reference Example 5 was fed through a second feed port, melt-kneaded at a cylinder temperature of 210°C, extruded into strands in a water bath, and formed into chips with a chip cutter. During the production of the composition, the generation of isocyanate odor was not detected.

Reference Example 8

The same procedure as in Reference Example 7 was performed, except that the cyclic carbodiimide compound (2) obtained by the procedure of Reference Example 6 was used as the cyclic carbodiimide compound. During the production of the composition, the generation of isocyanate odor was not detected.

Reference Example 9

A composition was obtained by the same procedure as in Reference Example 7, except that after the poly(D-lactic acid) obtained by the procedure of Reference Example 2 and the poly(L-lactic acid) obtained by the procedure of Reference Example 1 each in an amount of 50 parts by weight were mixed with 0.3 parts by weight of a phosphoric acid ester metal salt ("ADEKASTAB" NA-11 manufactured by ADEKA) in a blender, and vacuum-dried at 110°C for 5 hours, the mixture was, through a first feed port of a kneader, melt-kneaded while evacuating at a cylinder temperature of 230°C and a vent pressure of 13.3 Pa, and then 1 part by weight of the cyclic carbodiimide compound (1) obtained by the procedure of Reference Example 5 was fed through a second feed port and melt-kneaded at a cylinder temperature of 230°C. During the production of the composition, the generation of isocyanate odor was not detected.

Reference Example 10

A composition was obtained by the same procedure as in Reference Example 9, except that the cyclic carbodiimide compound (2) obtained by the procedure of Reference Example 6 was used as the cyclic carbodiimide compound. During the production of the composition, the generation of isocyanate odor was not detected.

Reference Example 11

A composition was obtained by the same procedure as in Reference Example 7, except that polyethylene terephthalate described in Reference Example 3 was dried at 150°C for 3 hours and, through a first feed port of a kneader, melt-kneaded at a cylinder temperature of 270°C, and then 1 part by weight of the cyclic carbodiimide compound (2) obtained by the procedure of Reference Example 6 was fed through a second feed port and melt-kneaded at a cylinder temperature of 270°C. During the production of the composition, the generation of isocyanate odor was not detected.

Reference Example 12

A composition was obtained by the same procedure as in Reference Example 7, except that polyethylene-2,6-naphthalenedicarboxylate obtained by the procedure of Reference Example 4 was dried at 170°C for 3 hours and, through a first feed port of a kneader, melt-kneaded at a cylinder temperature of 290°C, and then 1 part by weight of the cyclic carbodiimide compound (2) obtained by the procedure of Reference Example 6 was fed through a second feed port and melt-kneaded at a cylinder temperature of 290°C. During the production of the composition, the generation of isocyanate odor was not detected.

Example 1

The chips of a composition having a melting point of 170°C and a carboxyl group end concentration of 0 eq/ton obtained by the procedure of Reference Example 7 were dried in a vacuum dryer set at 110°C for 12 hours. The dried chips were melt-extruded at a die temperature of 220°C to form a 210-μm film. By electrostatic casting using a platinum-coated linear electrode, the film was brought into close contact with a mirror-finished cooling drum surface and solidified.

Further, the unstretched film was stretched at 100°C to 1.1 to 1.5 times its original length in the longitudinal direction and 1.1 to 2.0 times its original length in the transverse direction, and further heat-set at 140 to 160°C to form a biaxially stretched film having a thickness of about 40 μm. In the course of film formation, stretching, and heat setting, the pungent odor due to isocyanate gas was not detected.

Example 2

The chips of a composition having a melting point of 170°C and a carboxyl group end concentration of 0 eq/ton obtained by the procedure of Reference Example 8 were dried in a vacuum dryer set at 110°C for 12 hours. The dried chips were subjected to the same procedure as in Example 1 to form a biaxially stretched film having a thickness of about 40 μm. In the course of film formation, stretching, and heat setting, the pungent odor due to isocyanate gas was not detected.

Example 3

The chips of a composition having a melting point of 213°C and a carboxyl group end concentration of 0 eq/ton obtained by the procedure of Reference Example 9 were dried in a vacuum dryer set at 110°C for 12 hours. The dried chips were subjected to the same procedure as in Example 1 to form a biaxially stretched film having a thickness of about 40 μm. In the course of film formation, stretching, and heat setting, the pungent odor due to isocyanate gas was not detected.

Example 4

The chips of a composition having a melting point of 213°C and a carboxyl group end concentration of 0 eq/ton obtained by the procedure of Reference Example 10 were dried in a vacuum dryer set at 110°C for 12 hours. The dried chips were subjected to the same procedure as in Example 1 to form a biaxially stretched film having a thickness of about 40 μm. In the course of film formation, stretching, and heat setting, the pungent odor due to isocyanate gas was not detected.

Example 5

The chips of polyethylene terephthalate having a melting point of 256°C and a carboxyl group end concentration of 5 eq/ton obtained by the procedure of Reference Example 11 were dried in a hot-air dryer set at 150°C for 3 hours. The dried chips were melt-extruded at a die temperature of 270°C to form a 210-μm film. By electrostatic casting using a platinum-coated linear electrode, the film was brought into close contact with a mirror-finished cooling drum surface and solidified. Further, the unstretched film was stretched at 100°C to 1.1 to 1.5 times its original length in the longitudinal direction and 1.1 to 2.0 times its original length in the transverse direction, and further heat-set at 140 to 210°C to form a biaxially stretched film having a thickness of about 40 μm. In the course of film formation, stretching, and heat setting, the pungent odor due to isocyanate gas was not detected.

Example 6

The chips of polyethylene-2,6-naphthalenedicarboxylate having a melting point of 260°C and a carboxyl group end concentration of 5 eq/ton obtained by the procedure of Reference Example 12 were dried in a hot-air dryer set at 170°C for 3 hours. The dried chips were melt-extruded at a die temperature of 290°C to form a 210-μm film. By electrostatic casting using a platinum-coated linear electrode, the film was brought into close contact with a mirror-finished cooling drum surface and solidified.

Further, the unstretched film was stretched at 120°C to 1.1 to 1.5 times its original length in the longitudinal direction and 1.1 to 2.0 times its original length in the transverse direction, and further heat-set at 140 to 210°C to form a biaxially stretched film having a thickness of about 40 μm. In the course of film formation, stretching, and heat setting, the pungent odor due to isocyanate gas was not detected.

Comparative Example 1

The resin produced in Reference Example 1 was kneaded with 1% of a commercially available linear polycarbodiimide compound ("CARBODILITE" LA-1 manufactured by Nisshinbo Chemical) using a twin-screw extruder at 210°C, and the resulting chips were formed into a biaxially stretched film having a thickness of about 40 μm in the same manner as in Example 1. In the course of film formation, the pungent odor due to isocyanate was detected. Further, as a result of an isocyanate gas generation test on the film, 10 ppm of isocyanate gas was generated.

Examples 6 to 9, Comparative Examples 2 to 4

The aliphatic polyester resin obtained by the procedure of Reference Example 2 and an acrylic resin "ACRYPET" VH001 manufactured by Mitsubishi Rayon were mixed in the ratio shown in Table 1. In a Henschel mixer, 0.5 parts by weight of tetrabutylphosphonium 3,5-dicarboxybenzenesulfonate was mixed with 100 parts by weight of the total of the aliphatic polyester resin and the acrylic resin.

Subsequently, the mixture was dried at 110°C for 5 hours, then melt-kneaded at a cylinder temperature of 230°C in a twin-screw extruder while mixing the cyclic carbodiimide compound (2) obtained by the procedure of Reference Example 6, and melt-extruded at a die temperature of 220°C to form a 210-μm film. By electrostatic casting using a platinum-coated linear electrode, the film was brought into close contact with a mirror-finished cooling drum surface and solidified to form an unstretched film.

The obtained unstretched film was stretched at 100°C to 1.1 to 2.0 times its original length in the longitudinal direction and 1.1 to 2.0 times its original length in the transverse direction. Next, the film was heat-set at 120 to 140°C to form a biaxially stretched film having a thickness of about 40 μm. Table 1 shows the resin composition and film production conditions together with the physical properties of the films.

Incidentally, in Comparative Example 4 a carbodiimide compound having a linear structure ("CARBODILITE" LA-1 manufactured by Nisshinbo Chemical) was used instead of the cyclic carbodiimide compound (2).

[Table 1]

| | | Example 6 | Example 7 | Example 8 | Example 9 | Comparative Example 2 | Comparative Example 3 | Comparative Example 4 |
|---|---|---|---|---|---|---|---|---|
| Composition of Resin Composition | | | | | | | | |
| Polyester Resin | part by weight | 90 | 80 | 70 | 60 | 100 | 80 | 90 |
| Acrylic Resin | part by weight | 10 | 20 | 30 | 40 | 0 | 20 | 10 |
| Cyclic Carbodiimide Compound | part by weight | 1.0 | 1.0 | 1.0 | 1.0 | 0 | 0 | 0 |
| Carbodiimide with Linear Structure | part by weight | - | - | - | - | - | - | 1.0 |
| Film Production Conditions | | | | | | | | |
| Longitudinal Draw Ratio | (times) | 1.1 | 1.1 | 1.1 | 2.0 | 11 | 11 | 11 |
| Transverse Draw Ratio | (times) | 1.1 | 1.1 | 1.1 | 2 0 | 1.1 | 1.1 | 11 |
| Stretching Temperature | (°C) | 70 | 72 | 75 | 80 | 70 | 72 | 70 |
| Heat Setting Temperature | (°C) | 120 | 120 | 120 | 150 | 120 | 120 | 120 |
| Heat Setting Time | (second) | 20 | 20 | 20 | 20 | 20 | 20 | 20 |
| Physical Properties of Film | | | | | | | | |
| Thickness | (μm) | 40 | 40 | 40 | 40 | 40 | 40 | 40 |
| 90°C Thermal Shrinkage Rate (MD/TD) | % | 0.1/0.1 | 0 1/0.1 | 0.1/0.1 | 0 3/0 3 | 0 1/0.1 | 0 1/0.1 | 0 1/0.1 |
| Stereocomplex Crystallinity (S) | (%) | 100 | 100 | 100 | 100 | 100 | 100 | 100 |

(continued)

| | | | | | | | | |
|---|---|---|---|---|---|---|---|---|
| Polarizing Plate Durability | | | | | | | | |
| High-Temperature Mechanical Properties (DMA) | Presence/ absence of local minimum | Absent | Absent | Absent | Absent | Absent | Absent | Absent |
| E'Value at 150°C | (MPa) | 200 | 100 | 80 | 50 | 300 | 100 | 200 |
| Shape Stability | | A | A | A | A | A | A | A |
| Carboxy Group Concentration | (eq./ton) | 0 | 0 | 0 | 0 | 15 | 12 | 0 |
| Hydrolysis Resistance | | AA | AA | AA | AA | F | F | A |
| Isocyanate Gas | Generated or not | Not generated | Not generated | Not generated | Not generated | Not generated | Not generated | Generated |
| Optical Properties of Film | | | | | | | | |
| Haze | (%) | 0.3 | 0.25 | 02 | 0.15 | 0.1 | 01 | 03 |
| In-Plane Retardation (Re) | (nm) | 2 | 2 | 2 | 0 | 5 | 2 | 2 |
| Thickness-Direction Retardation (Rth) | (nm) | 50 | 35 | 20 | 40 | 80 | 80 | 50 |
| Photoelastic Coefficient (Absolute Value) | $\times 10^{-12}$ Pa | 8.5 | 65 | 4.5 | 3 | 10 | 10 | 8.5 |
| Total Light Transmittance | (%) | 92 | 92 | 92 | 92 | 92 | 92 | 92 |
| Carbodiimide compound having a linear structure ("CARBODILITE" LA-1 manufactured by Nisshinbo Chemical) | | | | | | | | |

The below-mentioned numerical values in the following Examples 10 to 13, Comparative Examples 5 to 8, and Reference Example 13 were determined according to the following methods.

Q. Light Transmittance (Wavelength of Maximum Absorption of UV Absorber) :

Using a spectrophotometer UV-3101PC manufactured by Shimadzu, the transmittance of a sample film (film containing a UV absorber) at a wavelength of 200 nm to 800 nm was measured. From the obtained transmittance, the absorbance at each wavelength was determined to form an absorbance curve (As (λ)). Meanwhile, in the same manner, the transmittance of a film containing no UV absorber was measured to form an absorbance curve (Ar (λ)) . From these data, the absorbance curve of the UV absorber (Au (λ)) was determined using the following formula, and the maximum peak wavelength in the obtained absorbance curve (Au (λ)) was taken as the wavelength of the maximum absorption of the UV absorber (nm). In the case where a plurality of peak wavelengths were present, all those values were determined.

$$Au(\lambda) = As(\lambda) - Ar(\lambda)$$

The measurement conditions were as follows: scanning rate: 200 nm/sec, slit width: 20 nm, sampling pitch: 2.0 nm, standard white plate: barium sulfate.

R. Haze:

In accordance with JIS K6714-1958, the total light transmittance Tt (%) and the diffuse light transmittance Td (%) were determined to calculate the haze ((Td/Tt) x 100) (%).

S. Thermal Shrinkage Rate:

A sample 350 mm long and 50 mm wide was cut from a film, and gauge marks were given near both ends of the sample at an interval of 300 mm. The sample was allowed to stand in an oven at a controlled temperature of 90°C for 30 minutes, with one end being fixed and the other end being free. The sample was taken out and allowed to cool to room temperature (25°C), then the gauge distance (mm) was measured (this length is expressed as S), and the thermal shrinkage rate was determined using the following equation.

$$\text{Thermal shrinkage rate (\%)} = ((300 - S)/300) \times 100$$

T. Coating Layer Thickness:

A small film was cut out and embedded in an epoxy resin. The film cross-section was then sliced to a thickness of 50 nm using a microtome, followed by dyeing with 2% osmic acid at 60°C for 2 hours. The dyed cross-section of the film was observed under a transmission electron microscope (LEM-2000 manufactured by Topcon Corporation) to measure the coating layer thickness.

U. High Adhesiveness:

Under normal conditions (23°C, relative humidity: 65% RH), a film having a hard coating layer was cross-cut to form 100 1-$mm^2$ squares. A cellophane tape manufactured by Nichiban was laminated thereto, and pressed by passing a rubber roller thereover back and forth three times with a load of 19.6 N. The cellophane tape was then peeled in the direction of 90°. From the number of remaining squares of the hard coating layer, evaluation was performed based on the following criteria.
AA: 100
A: 80 to 99
B: 50 to 79
F: 0 to 49

V. Hydrolysis Resistance:

A film was aged in an environment with a temperature of 85°C and a humidity of 85% RH for 3,000 hours. After

that, the elongation at break of the film was measured in accordance with ASTM D61T, and its ratio relative to 100% of the elongation at break before aging (retention) was calculated and evaluated based on the following criteria.
AA: Retention is 70% or more.
A: Retention is not less than 50 and less than 70%.
B: Retention is not less than 30 and less than 50%.
F: Retention is less than 30%.

W. Resistance to Photo-Degradation (Evaluation of Strength Retention) :

Using a xenon weatherometer (ATLAS CPS+) manufactured by Toyo Seiki, a sample film was irradiated at a total irradiance of 765 W/$m^2$ within a wavelength range of 300 to 800 nm for 100 hours. The obtained sample was cut to a width of 15 mm, and tested using an MIT folding endurance tester manufactured by Yasuda Seiki (load: 250 gf, angle: 135°, rotational speed: 175 rpm). The number of revolutions until the film broke was evaluated based on the following criteria.
A: Breakage frequency is 200 or more.
F: Breakage frequency is less than 200.

X. Resistance to Photo-Coloring (Evaluation of Yellowing):

Using a xenon weatherometer (ATLAS CPS+) manufactured by Toyo Seiki, a sample film was irradiated at a total irradiance of 765 W/$m^2$ within a wavelength range of 300 to 800 nm for 100 hours. The L*a*b* (chromaticity coordinates) YI values before and after irradiation were measured using a color difference meter (SZS-∑90 manufactured by Nippon Denshoku Industries) and evaluated based on the following criteria.
A: ΔYI value (YI value after irradiation - YI value before irradiation) is less than 2.
F: ΔYI value (YI value after irradiation - YI value before irradiation) is 2 or more.

Example 10

100 parts by weight of the aliphatic polyester resin obtained by the procedure of Reference Example 2 was dried at 110°C for 5 hours. After that, a UV absorber "TINUVIN" 1577F manufactured by Ciba (wavelength of the maximum absorption: 275 nm) was added to a content of 0.5 wt% in the film, and 1 part by weight of the cyclic carbodiimide compound (2) obtained by the procedure of Reference Example 6 was added. While mixing, the mixture was melt-kneaded at a cylinder temperature of 230°C in a twin-screw extruder, melt-extruded at a die temperature of 220°C to form a film, and then cooled and solidified on a cooling drum in the usual manner to form an unstretched film. Then, the coating agent shown in Table 2 (an aqueous coating liquid having a solids content of 6 wt%) was uniformly applied to both sides of the obtained unstretched film using a roll coater. Subsequently, the coated film was guided to a tenter, simultaneously biaxially stretched at a temperature of 70°C to 2.8 times its original length in the longitudinal direction and 3.2 times its original length in the transverse direction, heat-set at 195°C, and then relaxed 1.0% in the transverse direction to form an aliphatic polyester film having a thickness of 125 μm with a coating layer thickness of 60 nm. Evaluation results of the obtained aliphatic polyester film are shown in Table 3.

Examples 11 to 13

Aliphatic polyester films having a thickness of 125 μm with a coating layer thickness of 60 nm were obtained in the same manner as in Example 10, except that the kind and content of UV absorber, the kind of coating agent, and the film production conditions were as in Table 3. Evaluation results of the obtained aliphatic polyester films are shown in Table 3.

Reference Example 13

An aliphatic polyester film having a thickness of 125 μm was obtained in the same manner as in Example 10, except that no UV absorber was added, no coating layer was formed, and the film production conditions were as in Table 3. Evaluation results of the obtained aliphatic polyester film are shown in Table 3.

Comparative Examples 5 to 7

Aliphatic polyester films having a thickness of 125 μm were obtained in the same manner as in Reference Example 13, except that the cyclic carbodiimide compound (2) obtained by the procedure of Reference Example 6 was

not used, and that the kind and content of UV absorber were changed as shown in Table 2. Evaluation results of the obtained aliphatic polyester films are shown in Table 3.

Comparative Example 8

An aliphatic polyester film having a thickness of 125 μm with a coating layer thickness of 60 nm was obtained in the same manner as in Example 10, except that a carbodiimide compound having a linear structure ("CARBODILITE" LA-1 manufactured by Nisshinbo Chemical) was used in place of the cyclic carbodiimide compound (2) obtained by the procedure of Reference Example 6, no UV absorber was added, and the film production conditions were as in Table 3. Evaluation results of the obtained aliphatic polyester film are shown in Table 3.

[Table 2]

| Composition of Coasting Layer | | | | |
|---|---|---|---|---|
| | Acrylic Resin | Polyester Resin | Crosslinking Agent | Wetting Agent |
| | (wt%) | (wt%) | (wt%) | (wt%) |
| Coating Agent A | 88 | | 4 | 8 |
| Coating Agent B | 40 | 48 | 4 | 8 |
| Coating Agent C | | 88 | 4 | 8 |

Incidentally, the components shown in Table 2 are as follows.
Acrylic resin: including 60 mol% methyl methacrylate/30 mol% ethyl acrylate/5 mol% 2-hydroxyethyl acrylate/5 mol% N-methylolacrylamide (Tg: 40°C).

Incidentally, the acrylic was produced as follows according to the method described in JP-A-63-37167, Production Examples 1 to 3. That is, 302 parts of ion exchange water was charged into a four-necked flask, and the temperature was raised to 60°C in a nitrogen gas stream. Then, 0.5 parts of ammonium persulfate and 0.2 parts of sodium hydrogen sulfite were added thereto as polymerization initiators. Further, a mixture of 46.7 parts of methyl methacrylate, 23.3 parts of ethyl acrylate, 4.5 parts of 2-hydroxyethyl acrylate, and 3.4 parts of N-methylolacrylamide as monomers was added dropwise thereto over 3 hours while adjusting the liquid temperature at 60 to 70°C. After the completion of dropping while maintaining the above temperature range for 2 hours, the reaction was allowed to continue with stirring. Cooling was then performed to give an aqueous acrylic resin dispersion having a solids concentration of 25 wt%.

Polyester resin: the acid component includes 75 mol% 2,6-naphthalenedicarboxylic acid/20 mol% isophthalic acid/5 mol% 5-sodium sulfoisophthalic acid, and the glycol component includes 90 mol% ethylene glycol/10 mol% diethylene glycol (Tg: 80°C, weight average molecular weight: 15,000).

Incidentally, the polyester resin was produced as follows. That is, 51 parts of dimethyl 2,6-naphthalenedicarboxylate, 11 parts of dimethyl isophthalate, 4 parts of dimethyl 5-sodium sulfoisophthalate, 31 parts of ethylene glycol, and 2 parts of diethylene glycol were charged into a reactor, and 0.05 parts of tetrabutoxytitanium was added thereto. The mixture was heated in a nitrogen atmosphere at a controlled temperature of 230°C to effect an ester exchange reaction while distilling off the formed methanol. Then, in a polymerization pot having a stirrer with a high motor torque, the temperature of the reaction system was gradually raised to 255°C, and the pressure in the system was reduced to 133.3 Pa (1 mmHg) to effect a polycondensation reaction, thereby giving a polyester 1 having an intrinsic viscosity of 0.56. 25 parts of the polyester was dissolved in 75 parts of tetrahydrofuran, and 75 parts of water was added dropwise to the obtained solution with high-speed stirring at 10,000 rpm to give a milky white dispersion. The dispersion was then distilled under a reduced pressure of 2.7 kPa (20 mmHg) and tetrahydrofuran was distilled off to give an aqueous polyester resin dispersion (solids content: 20 wt%) . Crosslinking agent: Glycerol polyglycidyl ether (trade name: Denacol EX-313, manufactured by Nagase ChemteX) Wetting agent: Polyoxyethylene (n= 7) lauryl ether (trade name: NAROACTY N-70, manufactured by Sanyo Chemical Industries)

[Table 3]

| | | | Example 10 | Example 11 | Example 12 | Example 13 | Reference Example 13 | Comparative Example 5 | Comparative Example 6 | Comparative Example 7 | Comparative Example 8 |
|---|---|---|---|---|---|---|---|---|---|---|---|
| Composition of Resin Composition | | | | | | | | | | | |
| Aliphatic Polyester Resin | | part by weight | 100 | 100 | 100 | 100 | 100 | 100 | 100 | 100 | 100 |
| UV absorber | Kind | Kind | UV absorber A | UV absorber B | UV absorber C | UV absorber D | - | UV absorber E | UV absorber F | UV absorber G | - |
| | Absorption Wavelength Peak | nm | 275 | 285 | 285 | 275 | - | 340 | 340 | 345 | - |
| | Content | wt% | 0.5 | 0.5 | 05 | 0.5 | - | 0.5 | 0.5 | 05 | - |
| Cyclic Carbodiimide Compound | | part by weight | 1.0 | 1.0 | 1.0 | 1.0 | 1.0 | 0 | 0 | 0 | 0 |
| LA-1 | | part by weight | 0 | 0 | 0 | 0 | 0 | 0 | 0 | 0 | 10 |
| Coating Agent | | Kind | Coating agent A | Coating agent A | Coating agent A | Coating agent C | - | - | - | - | Coating agent A |
| Film Production Conditions | | | | | | | | | | | |
| Draw Ratio | Longitudinal | times | 2.8 | 2.8 | 3.4 | 2 8 | 2.8 | 2.8 | 2.8 | 2.8 | 2.8 |
| | Transverse | times | 3.2 | 3 2 | 3.6 | 3.2 | 3.2 | 3.2 | 3 2 | 3.2 | 3.2 |
| Stretching Temperature | Longitudinal and Transverse | °C | 70 | 72 | 75 | 70 | 70 | 70 | 70 | 70 | 70 |
| Heat Setting Temperature | | °C | 195 | 195 | 195 | 195 | 195 | 195 | 195 | 195 | 195 |

(continued)

| | | | | | | | | | | | |
|---|---|---|---|---|---|---|---|---|---|---|---|
| Film Production Conditions | | | | | | | | | | | |
| Transversel Relaxation Rate | | % | 1.0 | 1.0 | 2.0 | 30 | 3.0 | 3.0 | 3.0 | 3.0 | 30 |
| Longitudina Relaxation Rate | | % | 0.0 | 0.0 | 00 | 1.5 | 0.0 | 00 | 0.0 | 00 | 0.0 |
| Physical Properties of Film | | | | | | | | | | | |
| Thickness | | µm | 125 | 125 | 125 | 125 | 125 | 125 | 125 | 125 | 125 |
| Thermal Shrinkage Rate at 90°C x 30 min | Longitudinal | % | 10 | 10 | 1.2 | 04 | 1.0 | 1.0 | 1.0 | 10 | 1.0 |
| | Transverse | % | 0.5 | 05 | 0.5 | 0.2 | 0.5 | 0.5 | 0.5 | 0.5 | 0.5 |
| Stereocomplex Crystallinity (S) | | % | 100 | 100 | 100 | 100 | 100 | 100 | 100 | 100 | 100 |
| Haze | | % | 04 | 0.4 | 0.4 | 04 | 0.4 | 0.4 | 0.4 | 0.4 | 0.4 |
| High Adhesiveness | | - | A | A | A | A | F | F | F | F | A |
| Carboxyl Group Concentration | | eq./ton | 0 | 0 | 0 | 0 | 0 | 20 | 20 | 20 | 5 |
| Hydrolysis Resistance | | - | AA | AA | AA | AA | AA | F | F | F | A |
| Isocyanate Gas | | Generated or not | Not generated | Not generated | Not generated | Not generated | Not generated | Not generated | Not generated | Not generated | Generated |
| Resistance to Photo-Degradation (Evaluation of Strength Retention) | | - | A | A | A | A | F | F | F | F | F |
| Resistance to Photo-Coloring (Evaluation of Yellowing) | | - | A | A | A | A | F | A | F | F | F |
| LA-1: Carbodiimide compound having a linear structure ("CARBODILITE" LA-1 manufactured by Nisshinbo Chemical) | | | | | | | | | | | |

Incidentally, the UV absorber components shown in Table 3 are as follows.
UV absorber (triazine): "TINUVIN" 1577F manufactured by Ciba (wavelength of the maximum absorption: 275 nm)
UV absorber (hydroxybenzophenone): "Uvinul" 3050 manufactured by BASF (wavelength of the maximum absorption: 285 nm)
UV absorber (hydroxybenzophenone): "Uvinul" 3049 manufactured by BASF (wavelength of the maximum absorption: 285 nm)
UV absorber (triazine): "ADEKASTAB" LA-46 manufactured by ADEKA (wavelength of the maximum absorption: 275 nm)
UV absorber (benzotriazole): "TINUVIN" 328 manufactured by Ciba (wavelength of the maximum absorption: 340 nm)
UV absorber (benzotriazole): "TINUVIN" 326 manufactured by Ciba (wavelength of the maximum absorption: 340 nm)
UV absorber (benzotriazole) G: TINUVIN" 360 manufactured by Ciba (wavelength of the maximum absorption: 345 nm)
Incidentally, a UV-curable composition of the following composition was uniformly applied to one side of each aliphatic polyester film obtained in the above Examples and Comparative Examples using a roll coater to form a film having a thickness after curing of 5 μm.

(Composition)

Pentaerythritol acrylate: 45 wt%
N-Methylolacrylamide: 40 wt%
N-Vinylpyrrolidone: 10 wt%
1-Hydroxycyclohexyl phenyl ketone: 5 wt%
Subsequently, using a high-pressure mercury lamp having an intensity of 80 W/cm, UV light was applied for 30 seconds to cause curing, thereby forming a hard coating layer. A hard coating layer was formed also on the other side in the same manner. Hard coating films were thus obtained and used for evaluation.
The below-mentioned numerical values in the following Examples 14 to 19, Comparative Examples 9 to 11, and Reference Example 14 were determined according to the following methods.

Y. Refractive Index of Particles:

Sample particles were suspended in various 25°C liquids having different refractive indices. The refractive index of the suspension that appeared most transparent was measured with an Abbe refractometer using the Na D-line.

Z. Haze:

In accordance with JIS K6714-1958, the total light transmittance Tt (%) and the diffuse light transmittance Td (%) were determined to calculate the haze ((Td/Tt) × 100) (%).

AA. Thermal Shrinkage Rate:

A sample 350 mm long and 50 mm wide was cut from a film, and gauge marks were given near both ends of the sample at an interval of 300 mm. The sample was allowed to stand in an oven at a controlled temperature of 90°C for 30 minutes, with one end being fixed and the other end being free. The sample was taken out and allowed to cool to room temperature, then the gauge distance (mm) was measured (this length is expressed as S), and the thermal shrinkage rate was determined using the following equation.

$$\text{Thermal shrinkage rate (\%)} = ((300 - S)/300) \times 100$$

AB. Coating Layer Thickness:

A small film was cut out and embedded in an epoxy resin. The film cross-section was then sliced to a thickness of 50 nm using a microtome, followed by dyeing with 2% osmic acid at 60°C for 2 hours. The dyed cross-section of the film was observed under a transmission electron microscope (LEM-2000 manufactured by Topcon Corporation) to measure the coating layer thickness.

AC. High Adhesiveness:

Under normal conditions (23°C, relative humidity: 65% RH), a film having a hard coating layer was cross-cut

to form 100 1-mm$^2$ squares. A cellophane tape manufactured by Nichiban was laminated thereto, and pressed by passing a rubber roller thereover back and forth three times with a load of 19.6 N. The cellophane tape was then peeled in the direction of 90°. From the number of remaining squares of the hard coating layer, evaluation was performed based on the following criteria.
AA: 100
A: 80 to 99
B: 50 to 79
F: 0 to 49

AD. Evaluation of Blocking Resistance:

Two films were stack together in such a manner that their surfaces having formed thereon a coating film were in contact with each other (arbitrary surfaces in the case where a coating layer was not present). A pressure of 0.059 MPa (0.6 kg/cm$^2$) was applied thereto in an atmosphere of 80°C and 80% RH for 17 hours, and the films then were peeled apart at a rate of 50 mm/min at a peel angle of 180°. From the peeling force at that time, the blocking resistance was evaluated based on the following criteria.
A (Excellent): peeling force < 98 mN/5 cm width
B (Slightly excellent): 98 mN/5 cm width ≤peeling force < 196 mN/5 cm width
F (Poor): 196 mN/5 cm width ≤ peeling force

AE. Hydrolysis Resistance:

A film was aged in an environment with a temperature of 85°C and a humidity of 85% RH for 3,000 hours. After that, the elongation at break of the film was measured in accordance with ASTM D61T, and its ratio relative to 100% of the elongation at break before aging (retention) was calculated and evaluated based on the following criteria.
AA: Retention is 70% or more
A: Retention is not less than 50 and less than 70%
B: Retention is not less than 30 and less than 50%
F: Retention is less than 30%

AF. Scratch Resistance:

A friction tester (SFT-1200S manufactured by HOYO ERECTRONICS CORP.) was used. Under a load T1 (g) applied at a load density 40 g/mm$^2$, a film slit to a width of 10 mm is brought into contact with a pin made of SUS304 having an outer diameter of $\phi$ 6 mm (surface roughness Ra = 20 nm) at an angle of 90° and run at a rate of 20 mm/sec. The surface of the film that was in contact with the metal pin is observed under an stereoscopic microscope using a halogen lamp as the light source. The number of scratches produced is counted over the entire width of the film, and evaluation is performed based on the following criteria.
AA: 10 or less scratches per 10 mm width
A: 11 to 30 scratches per 10 mm width
F: 31 or more scratches per 10 mm width

AG. Dynamic Friction Coefficient:

In accordance with JIS-K7125, films were stack together in such a manner that their surfaces having formed thereon a coating film were in contact with each other (arbitrary surfaces in the case where a coating layer was not present), and the dynamic friction coefficient $\mu k$ was measured. Measurement was performed 5 times, and the average was taken as the result.

Example 14

100 parts by weight of the aliphatic polyester resin obtained by the procedure of Reference Example 2 was dried at 110°C for 5 hours. After that, as lubricant particles, bulk silica particles having an average particle size of 2.3 $\mu$m (Sylysia 310P manufactured by Fuji Silysia Chemical) were added thereto to a content of 0.05 wt% in the film, and 1 part by weight of the cyclic carbodiimide compound (2) obtained by the procedure of Reference Example 6 was added. While mixing, the mixture was melt-kneaded at a cylinder temperature of 230°C in a twin-screw extruder, melt-extruded at a die temperature of 220°C to form a film, and then cooled and solidified on a cooling drum in the usual manner to form an unstretched film. Then, the coating agent A shown in Table 4 (an aqueous coating liquid having a solids content

of 6 wt%) was uniformly applied to both sides of the obtained unstretched film using a roll coater. Subsequently, the coated film was guided to a tenter, simultaneously biaxially stretched at a temperature of 70°C to 2.8 times its original length in the longitudinal direction and 3.2 times its original length in the transverse direction, and then heat-set at 195°C to form an aliphatic polyester film having a thickness of 125 μm with a coating layer thickness of 60 nm. Evaluation results of the obtained aliphatic polyester film are shown in Table 5.

[Table 4]

| Composition of Coating Layer | | | | |
|---|---|---|---|---|
| | Acrylic Resin | Polyester Resin | Crosslinking Agent | Wetting Agent |
| | (wt%) | (wt%) | (wt%) | (wt%) |
| Coating Agent A | 88 | | 4 | 8 |
| Coating Agent B | 40 | 48 | 4 | 8 |
| Coating Agent C | | 88 | 4 | 8 |

[Table 5]

| | | Example 14 | Example 15 | Example 16 | Example 17 | Example 18 | Example 19 | Reference Example 15 | Comparative Example 9 | Comparative Example 10 | Comparative Example 11 |
|---|---|---|---|---|---|---|---|---|---|---|---|
| Composition of Resin Composition | | | | | | | | | | | |
| Polyester | part by weight | 100 | 100 | 100 | 100 | 100 | 100 | 100 | 100 | 100 | 100 |
| Lubricant Particles | Kind | A | B | C | D | E | A | - | F | G | - |
| Average Particle Size | (μm) | 2.3 | 0.3 | 0.5 | 40 | 1.5 | 17 | - | 0.3 | 0.3 | - |
| Refractive Index of Particles | | 1 46 | 1.43 | 1.41 | 1.46 | 1.49 | 1.46 | - | 2.71 | 1.64 | - |
| Content | by weight | 0.05% | 0.10% | 0.10% | 0.50% | 002% | 0.05% | - | 0.05% | 0.05% | - |
| Cyclic carbodiimide | part by weight | 1.0 | 1.0 | 1.0 | 1.0 | 10 | 1.0 | 1.0 | 0.0 | 00 | LA-1 (1.0) |
| Coating agent | | Coating agent A | Coating agent A | Coating agent A | Coating agent B | Coating agent C | - | - | - | - | Coating agent A |
| Film Production Conditions | | | | | | | | | | | |
| Longitudinal Draw Ratio | (times) | 2 8 | 2.8 | 3.4 | 2 8 | 2.8 | 3.4 | 2.8 | 28 | 2.8 | 2.8 |
| Transverse Draw Ratio | (times) | 3 2 | 3.2 | 3.6 | 3.2 | 3 2 | 3.6 | 3.2 | 3.2 | 3 2 | 3.2 |
| Stretching Temperature | (°C) | 70 | 72 | 75 | 70 | 70 | 75 | 70 | 70 | 70 | 70 |

(continued)

| | | | | | | | | | | | |
|---|---|---|---|---|---|---|---|---|---|---|---|
| Film Production Conditions | | | | | | | | | | | |
| Heat Setting Temperature | (°C) | 195 | 195 | 195 | 195 | 195 | 195 | 195 | 195 | 195 | 195 |
| Transverse Relaxation Rate | (%) | 1.0 | 10 | 2 0 | 3.0 | 3.0 | 2.5 | 3.0 | 30 | 3.0 | 3.0 |
| Longitudinal Relaxation Rate | (%) | 00 | 0.0 | 0.0 | 1.5 | 1.5 | 2.5 | 0.0 | 00 | 0.0 | 0.0 |
| Physical Properties of Film | | | | | | | | | | | |
| Thickness | (μm) | 125 | 125 | 125 | 125 | 125 | 125 | 125 | 125 | 125 | 125 |
| 90°C Thermal Shrinkage Rate (MD/TD) | % | 1.0/0.5 | 1.0/0.5 | 1 2/0.5 | 04/0.2 | 0.4/0.2 | 1 0/0.5 | 1 0/0.5 | 1.0/0.5 | 1.0/0.5 | 1 0/0 5 |
| Stereocomplex Crystallinity (S) | (%) | 100 | 100 | 100 | 100 | 100 | 100 | 100 | 100 | 100 | 100 |
| Haze | | 05% | 0.8% | 0.9% | 3 0% | 1.0% | 05% | 05% | 10.0% | 8.0% | 0.5% |
| High Adhesiveness | | A | A | A | A | A | A | F | F | F | A |
| Carboxyl Group Concentration | (eq./ton) | 0 | 0 | 0 | 0 | 0 | 0 | 0 | 20 | 20 | 5 |
| Hydrolysis Resistance | | AA | AA | AA | AA | AA | AA | AA | F | F | A |
| Isocyanate Gas | Generated or not | Not generated | Not generated | Not generated | Not generated | Not generated | Not generated | Not generated | Not generated | Not generated | Generated |

(continued)

| Physical Properties of Film | | | | | | | | | | | |
|---|---|---|---|---|---|---|---|---|---|---|---|
| Scratch Resistance | | AA | A | A | AA | AA | AA | F | A | A | F |
| Dynamic Friction Coefficient | | 0.36 | 0.38 | 0.41 | 0.32 | 038 | 0.36 | N.D. | 0.36 | 0.36 | N.D. |
| Blocking Properties | | A | A | A | A | A | A | F | A | A | F |
| LA-1 Carbodiimide compound having a linear structure ("CARBODILITE" LA-1 manufactured by Nisshinbo Chemical) | | | | | | | | | | | |

Examples 15 to 18

Optical aliphatic polyester films having a thickness of 125 μm with a coating layer thickness of 60 nm were obtained in the same manner as in Example 14, except that the lubricant particles, the coating agent, and the film production conditions were as in Table 5. Evaluation results of the obtained aliphatic polyester films are shown in Table 5.

Example 19

An aliphatic polyester film having a thickness of 125 μm was obtained in the same manner as in Example 14, except that no coating layer was formed, and that the film production conditions were as in Table 5. Evaluation results of the obtained aliphatic polyester film are shown in Table 5.

Reference Example 14

An aliphatic polyester film having a thickness of 125 μm was obtained in the same manner as in Example 14, except that no lubricant particles were added, no coating layer was formed, and the film production conditions were as in Table 5. Evaluation results of the obtained aliphatic polyester film are shown in Table 5.

Comparative Examples 9 to 10

Aliphatic polyester films having a thickness of 125 μm were obtained in the same manner, except that the cyclic carbodiimide compound (2) obtained by the procedure of Reference Example 6 was not used, and that the lubricant particles were changed as shown in Table 5. Evaluation results of the obtained aliphatic polyester films are shown in Table 5.

Comparative Example 11

An aliphatic polyester film having a thickness of 125 μm with a coating layer thickness of 60 nm was obtained in the same manner as in Example 1, except that a carbodiimide compound having a linear structure ("CARBODILITE" LA-1 manufactured by Nisshinbo Chemical) was used in place of the cyclic carbodiimide compound (2) obtained by the procedure of Reference Example 6, no lubricant particles were added, and the film production conditions were as in Table 5. Evaluation results of the obtained aliphatic polyester film are shown in Table 5.

Incidentally, the components shown in Table 5 are as follows.

Acrylic resin: including 60 mol% methyl methacrylate/30 mol% ethyl acrylate/5 mol% 2-hydroxyethyl acrylate/5 mol% N-methylolacrylamide (Tg: 40°C). Incidentally, the acrylic was produced as follows according to the method described in JP-A-63-37167, Production Examples 1 to 3. That is, 302 parts of ion exchange water was charged into a four-necked flask, and the temperature was raised to 60°C in a nitrogen gas stream. Then, 0.5 parts of ammonium persulfate and 0.2parts of sodium hydrogen sulfite were added thereto as polymerization initiators. Further, a mixture of 46.7 parts of methyl methacrylate, 23.3 parts of ethyl acrylate, 4.5 parts of 2-hydroxyethyl acrylate, and 3.4 parts of N-methylolacrylamide as monomers was added dropwise thereto over 3 hours while adjusting the liquid temperature at 60 to 70°C. After the completion of dropping while maintaining the above temperature range for 2 hours, the reaction was allowed to continue with stirring. Cooling was then performed to give an aqueous acrylic resin dispersion having a solids concentration of 25 wt%.

Polyester resin: the acid component includes 75 mol% 2,6-naphthalenedicarboxylic acid/20 mol% isophthalic acid/5 mol% 5-sodium sulfoisophthalic acid, and the glycol component includes 90 mol% ethylene glycol/10 mol% diethylene glycol (Tg: 80°C, weight average molecular weight: 15,000). Incidentally, the polyester resin was produced as follows. That is, 51 parts of dimethyl 2,6-naphthalenedicarboxylate, 11 parts of dimethyl isophthalate, 4 parts of dimethyl 5-sodium sulfoisophthalate, 31 parts of ethylene glycol, and 2 parts of diethylene glycol were charged into a reactor, and 0.05 parts of tetrabutoxytitanium was added thereto. The mixture was heated in a nitrogen atmosphere at a controlled temperature of 230°C to effect an ester exchange reaction while distilling off the formed methanol. Then, in a polymerization pot having a stirrer with a high motor torque, the temperature of the reaction system was gradually raised to 255°C, and the pressure in the system was reduced to 133.3 Pa (1 mmHg) to effect a polycondensation reaction, thereby giving a polyester 1 having an intrinsic viscosity of 0.56. 25 parts of the polyester was dissolved in 75 parts of tetrahydrofuran, and 75 parts of water was added dropwise to the obtained solution with high-speed stirring at 10,000 rpm to give a milky white dispersion. The dispersion was then distilled under a reduced pressure of 2.7 kPa (20 mmHg) and tetrahydrofuran was distilled off to give an aqueous polyester resin dispersion (solids content: 20 wt%) . Crosslinking agent: Glycerol polyglycidyl ether (trade name: Denacol EX-313, manufactured by Nagase ChemteX) Wetting agent: Polyoxyethylene (n= 7) lauryl ether (trade name: NAROACTY N-70, manufactured by Sanyo Chemical Industries)

Incidentally, the lubricant components shown in Table 5 are as follows.
Lubricant particles A: Bulk silica particles having an average particle size of 2.3 μm (refractive index: 1.46, ratio of major-axis size/minor-axis size: 1.4, relative standard deviation in particle size: 0.25, Sylysia 310P manufactured by Fuji Silysia Chemical
Lubricant particles B: Spherical silica particles having an average particle size of 0.3 μm (refractive index: 1.43, ratio of major-axis size/minor-axis size: 1.02, relative standard deviation in particle size: 0.1, "SEAHOSTAR" KE-P30 manufactured by Nippon Shokubai)
Lubricant particles C: Spherical silicone particles having an average particle size of 0.5 μm (refractive index: 1.41, ratio of major-axis size/minor-axis size: 1.1, the relative standard deviation in particle size: 0.30, "Tospearl" 105 manufactured by Momentive Performance Materials)
Lubricant particles D: Bulk silica particles having an average particle size of 4.0 μm (refractive index: 1.46, ratio of major-axis size/minor-axis size: 1.4, relative standard deviation in particle size: 0.25, Sylysia 730 manufactured by Fuji Silysia Chemical)
Lubricant particles E: Spherical acrylic crosslinked particles having an average particle size of 1.5 μm (refractive index: 1.49, ratio of major-axis size/minor-axis size: 1.1, relative standard deviation in particle size: 0.20, "Chemisnow" MX150 manufactured by Soken Chemical & Engineering)
Lubricant particles F: Rutile-type titanium dioxide particles having an average particle size of 0.3 μm (refractive index: 2.71, ratio of major-axis size/minor-axis size: 1.6, relative standard deviation in particle size: 0.40, SR-1 manufactured by Sakai Chemical Industry) Lubricant particles G: Barium sulfate particles having an average particle size of 0.3 μm (refractive index: 1.64, ratio of major-axis size/minor-axis size: 1.4, relative standard deviation in particle size: 0.45, B-30 manufactured by Sakai Chemical Industry)
A UV-curable composition of the following composition was uniformly applied to one side of each aliphatic polyester film obtained in the above Examples and Comparative Examples using a roll coater to form a film having a thickness after curing of 5 μm.

(Composition)

Pentaerythritol acrylate: 45 wt%
N-Methylolacrylamide: 40 wt%
N-Vinylpyrrolidone: 10 wt%
1-Hydroxycyclohexyl phenyl ketone: 5 wt%
Subsequently, using a high-pressure mercury lamp having an intensity of 80 W/cm, UV light was applied for 30 seconds to cause curing, thereby forming a hard coating layer. A hard coating layer was formed also on the other side in the same manner. Hard coating films were thus obtained and used for evaluation.
The below-mentioned numerical values in the following Examples 20 to 22 and Comparative Examples 12 to 14 were determined according to the following methods.

AH. Intrinsic Viscosity:

After dissolution in o-chlorophenol, it was calculated from the viscosity of the solution measured at a temperature of 35°C.

AI. Glass Transition Temperature, Melting Point, Sub-Peak Temperature:

Measurement was performed using a differential scanning calorimeter MDSC Q100 manufactured by TA Instruments at a temperature rise rate 20°C/min. In the course of raising the temperature from room temperature to 280°C, the glass transition temperature was determined, and also the temperature of endothermic peak due to crystal melting and the sub-endothermic peak due to a heat treatment were determined as the melting point and the heat setting temperature, respectively. Incidentally, the amount of the sample was 10 mg in the case of measurement on a polyester raw material, and was 20 mg in the case of measurement on a polyester film.

AJ. Heat Resistance:

The heat resistance of a film was evaluated based on the elongation-at-break retention determined from the elongation at break before and after a heat treatment as follows. High elongation-at-break retention indicates excellent heat resistance.
First, the elongation at break of a film before a heat treatment was determined. A sample film was cut in the longitudinal direction to a length of 150 mm and a width of 10 mm. The sample was mounted on a tensile tester having

a chuck distance of 100 mm and subjected to a tensile test in accordance with JIS-C2151 under conditions of a tensile rate of 100 mm/min, and the load and elongation at break were read from the load-elongation curve. Measurement was performed 5 times, and the average was taken as the result in each case. Breaking strength (MPa) was calculated by dividing the load by the cross-sectional area of the sample before tensioning. Elongation at break (%) was calculated as the percentage of the amount of elongation relative to the sample length before tensioning as 100. Measurement was performed in a room controlled to a temperature of 23±2°C and a humidity of 50±50%.

The sample was then subjected to a dry heat treatment at 180°C for 500 hours, and the elongation at break in the film longitudinal direction was calculated in the same manner as above to determine the elongation at break after a heat treatment. The thus-obtained elongation at break after a heat treatment was divided by the elongation at break before a heat treatment, and the obtained value was taken as the elongation-at-break retention after a heat treatment (%). Heat resistance was evaluated based on the following criteria.
A: Elongation-at-break retention after a heat treatment is 50% or more.
F: Elongation-at-break retention after a heat treatment is less than 50%.

AK. Hydrolysis Resistance:

With respect to a sample before and after a wet heat treatment in an environment with a temperature of 85°C and a humidity of 85% RH for 3,000 hours, the elongation at break in the film longitudinal direction was measured in the same manner as in (AJ) above, and the percentage of the elongation at break after a wet heat treatment relative to the elongation at break before a wet heat treatment was calculated to determine the elongation-at-break retention after a wet heat treatment (%). Evaluation was performed based on the following criteria.
AA: Elongation-at-break retention after a wet heat treatment is 70% or more.
A: Elongation-at-break retention after a wet heat treatment is 50% or more and less than 70%.
B: Elongation-at-break retention after a wet heat treatment is 30% or more and less than 50%.
F: Elongation-at-break retention after a wet heat treatment is less than 30%.

AL. Film Thickness:

The thickness of a film sample was measured at 10 points using an electric micrometer (K-402B manufactured by Anritsu), and the average was taken as the thickness of the film.

AM. Plane Orientation Coefficient:

Using an Abbe refractometer, the refractive index was measured using the sodium D-line (589 nm) as the light source, and calculation was performed using the following equation:

Plane orientation coefficient $\Delta P = (n_{MD} + n_{TD}) /2 - n_z$ wherein $n_{MD}$ represents the refractive index in the direction of the mechanical axis of a biaxially stretched film (longitudinal direction), $n_{TD}$ represents the refractive index in the direction perpendicular to the direction of the mechanical axis of the biaxially stretched film (transverse direction), and $n_z$ represents the refractive index in the thickness direction of the film.

Example 20

A polyester composition containing 100 parts by weight of polyethylene terephthalate (intrinsic viscosity: 0.85), 1.0 part by weight of the cyclic carbodiimide compound (2) obtained by the procedure of Reference Example 6, and bulk silicon oxide particles having an average particle size of 2.5 μm as a lubricant in an amount of 800 ppm based on the weight of the resulting polyester composition was melt-extruded onto a rotating cooling drum maintained at 20°C to form an unstretched film. The unstretched film was then stretched at 100°C to 3.5 times its original length in the longitudinal direction, then stretched at 110°C to 3.8 times its original length in the transverse direction, and heat-set at 225°C to form a biaxially oriented polyester film having a thickness of 50 μm. Evaluation results of the obtained biaxially oriented polyester film are shown in Table 6.

Example 21

A biaxially oriented polyester film having a thickness of 50 μm was obtained in the same manner as in Example 20, except that the amount of the cyclic carbodiimide compound (2) added was changed as in Table 6. Evaluation results of the obtained biaxially oriented polyester film are shown in Table 6.

Example 22

A polyester composition containing 100 parts by weight of polyethylene-2,6-naphthalenedicarboxylate (intrinsic viscosity: 0.62), 1.0 part by weight of the cyclic carbodiimide compound (2) obtained by the procedure of Reference Example 6, and bulk silicon oxide particles having an average particle size of 2.5 μm as a lubricant in an amount of 800 ppm based on the weight of the resulting polyester composition was melt-extruded onto a rotating cooling drum maintained at 60°C to form an unstretched film. The unstretched film was then stretched at 135°C to 3.5 times its original length in the longitudinal direction, then stretched at 145°C to 3.8 times its original length in the transverse direction, and heat-set at 240°C to form a biaxially oriented polyester film having a thickness of 50 μm. Evaluation results of the obtained biaxially oriented polyester film are shown in Table 6.

Comparative Example 12

A biaxially oriented polyester film having a thickness of 50 μm was obtained in the same manner as in Example 20, except that the cyclic carbodiimide compound (2) was not added. Evaluation results of the obtained biaxially oriented polyester film are shown in Table 6.

Comparative Example 13

A biaxially oriented polyester film having a thickness of 50 μm was obtained in the same manner as in Example 22, except that a carbodiimide compound having a linear structure ("CARBODILITE" LA-1 manufactured by Nisshinbo Chemical) was used in place of the cyclic carbodiimide compound (2). Evaluation results of the obtained biaxially oriented polyester film are shown in Table 6.

Comparative Example 14

A biaxially oriented polyester film having a thickness of 50 μm was obtained in the same manner as in Example 20, except that a carbodiimide compound having a linear structure ("CARBODILITE" LA-1 manufactured by Nisshinbo Chemical) was used in place of the cyclic carbodiimide compound (2). Evaluation results of the obtained biaxially oriented polyester film are shown in Table 6.

[Table 6 ]

| | | Example 20 | Example 21 | Example 22 | Comparative Example 12 | Comparative Example 13 | Comparative Example 14 |
|---|---|---|---|---|---|---|---|
| Composition of Polyester Composition | | | | | | | |
| Polyester Composition | | PET | PET | PEN | PET | PEN | PET |
| Intrinsic Viscosity | | 0.85 | 0.85 | 0.62 | 0.59 | 0.57 | 0.59 |
| Cyclic Carbodiimide Compound | part by weight | 1.0 | 1.5 | 1.0 | 0 | 0 | 0 |
| LA-1 | part by weight | 0 | 0 | 0 | 0 | 1 | 1 |
| Film Production Conditions | | | | | | | |
| Longitudinal Draw Ratio | (times) | 3.5 | 3.5 | 3.5 | 3.5 | 3.5 | 3.5 |
| Transverse Draw Ratio | (times) | 3.8 | 3.8 | 3.8 | 3.8 | 3.8 | 3.8 |
| Longitudinal Stretching Temperature | (°C) | 100 | 100 | 135 | 100 | 135 | 100 |
| Transverse Stretching Temperature | (°C) | 110 | 110 | 145 | 110 | 145 | 110 |
| Heat Setting Temperature | (°C) | 225 | 225 | 240 | 210 | 240 | 225 |
| Physical Properties of Film | | | | | | | |
| Thickness | (μm) | 50 | 50 | 50 | 50 | 50 | 50 |
| Plane Orientation Coefficient | (-) | 0.18 | 0.18 | 0.24 | 0.18 | 0.24 | 0.18 |

(continued)

| Physical Properties of Film | | | | | | | |
|---|---|---|---|---|---|---|---|
| Carboxy Group Concentration | (eq./ton) | 0 | 0 | 0 | 30 | 20 | 5 |
| Hydrolysis Resistance | | AA | AA | AA | F | A | A |
| Heat Resistance | | A | A | A | F | A | F |
| Isocyanate Gas | Generated or not | Not generated | Not generated | Not generated | Not generated | Generated | Generated |
| LA-1: Carbodiimide compound having a linear structure ("CARBODILITE" LA-1 manufactured by Nisshinbo Chemical) | | | | | | | |

The below-mentioned numerical values in the following Examples 23 to 30 and Comparative Examples 15 to 20 were determined according to the following methods.

AN. Average Particle Size:

Using a powder specific surface area analyzer (permeation method), Model "SS-100", manufactured by Shimadzu, a sample tube having a cross-sectional area of 2 $cm^2$ and a height of 1 cm was filled with 3 g of a sample, and calculation was performed from the time of permeation of 20 cc of air in a 500-mm water column.

AO. Film Thermal Shrinkage Rate:

In accordance with ASTM D1204, each sample was treated at 90°C for 30 minutes for the 90°C thermal shrinkage rate or at 120°C for 5 minutes for the 120°C thermal shrinkage rate. The temperature of the sample was then brought back to room temperature (25°C), and the thermal shrinkage rate (%) was determined from changes in length.

AP. Heat Resistance:

The heat resistance of a film was evaluated based on the elongation-at-break retention determined from the elongation at break before and after a heat treatment as follows. High elongation-at-break retention indicates excellent heat resistance.

First, the elongation at break of a film before a heat treatment was determined. A sample film was cut in the longitudinal direction to a length of 150 mm and a width of 10 mm. The sample was mounted on a tensile tester having a chuck distance of 100 mm and subjected to a tensile test in accordance with JIS-C2151 under conditions of a tensile rate of 100 mm/min, and the load and elongation at break were read from the load-elongation curve. Measurement was performed 5 times, and the average was taken as the result in each case. Breaking strength (MPa) was calculated by dividing the load by the cross-sectional area of the sample before tensioning. Elongation at break (%) was calculated as the percentage of the amount of elongation relative to the sample length before tensioning as 100. Measurement was performed in a room controlled to a temperature of 23±2°C and a humidity of 50±5%.

The sample was then subjected to a dry heat treatment at 85°C for 500 hours, and the elongation at break in the film longitudinal direction was calculated in the same manner as above to determine the elongation at break after a heat treatment. The thus-obtained elongation at break after a heat treatment was divided by the elongation at break before a heat treatment, and the obtained value was taken as the elongation-at-break retention after a heat treatment (%). Heat resistance was evaluated based on the following criteria.
A: Elongation-at-break retention after a heat treatment is 50% or more.
F: Elongation-at-break retention after a heat treatment is less than 50%.

AQ. Average Reflectance:

A spectrophotometer ("U-4000" manufactured by Hitachi Instruments Service) was equipped with an integrating sphere to measure reflectance over wavelengths of 400 to 700 nm. From the obtained chart, the reflectance was read at intervals of a 2-nm wavelength, and the average was taken as the average reflectance (%). As the standard, a barium sulfate white plate was taken as 100%.

AR. Hydrolysis Resistance:

With respect to a sample before and after a wet heat treatment in an environment with a temperature of 60°C and a humidity of 85% RH for 500 hours, the elongation at break in the film longitudinal direction was measured in the same manner as in (AP) above, and the percentage of the elongation at break after a wet heat treatment relative to the elongation at break before a wet heat treatment was calculated to determine the elongation-at-break retention after a wet heat treatment (%) . Evaluation was performed based on the following criteria.
AA: Elongation-at-break retention after a wet heat treatment is 65% or more.
A: Elongation-at-break retention after a wet heat treatment is 50% or more and less than 65%.
B: Elongation-at-break retention after a wet heat treatment is 30% or more and less than 50%.
F: Elongation-at-break retention after a wet heat treatment is less than 30%.

AS. Film Thickness:

The thickness of a film sample was measured at 10 points using an electric micrometer (K-402B manufactured

by Anritsu), and the average was taken as the thickness of the film.

AT. Evaluation Test for Practical Use of Reflection Film:

A fixing frame for a reflective sheet incorporated into the back light of a 21-inch liquid crystal television manufactured by Hitachi was used. A film was attached to the fixing frame in the same manner as the actual attachment to a liquid crystal television, and heated at 80°C for 3 hours assuming exposure to the light source. After that, the appearance of the sheet was visually observed, and evaluation was performed based on the following criteria.

Evaluation Criteria:

AA: No changes are seen in the appearance of a film after heating.
A: Changes are visually recognized in a film after heating, but immeasurable irregularities having a height of less than 0.5 mm are seen.
B: Irregularities having a height of 0.5 mm or more and less than 1 mm are seen in a film after heating.
F: Irregularities having a height of 1 mm or more are seen in a film after heating.

Example 23

The aliphatic polyester resin obtained by the procedure of Reference Example 2 and, as a filler, barium sulfate having an average particle size of 0.7 μm were mixed in a ratio of 50 wt%/50 wt%, and the formed mixture was pelletized using a twin-screw extruder to produce a masterbatch. The masterbatch and aliphatic polyester resin chips were mixed such that the filler content of the resin composition was as shown in Table 7, followed by drying at 110°C for 5 hours. After that, the cyclic carbodiimide compound (2) obtained by the procedure of Reference Example 6 was added such that the amount added relative to the weight of the aliphatic polyester resin was as shown in Table 7. While mixing, the mixture was melt-kneaded in a twin-screw extruder at a cylinder temperature of 230°C, then melt-extruded through a T-die at a die temperature of 220°C to form a film having a thickness of about 2,300 μm, and cooled and solidified on a casting drum to form an unstretched film. The obtained unstretched film was biaxially stretched at a temperature of 70°C to 2.8 times its original length in MD and to 3.2 times its original length in TD, and then heat-treated at 195°C to form a white film having a thickness of 250 μm. The physical properties of the obtained white film are shown in Table 7.

Examples 24 to 26

White films having a thickness of 250 μm were obtained in the same manner as in Example 23, except that the production conditions and the kind and content of filler were changed as shown in Table 7. The physical properties of the obtained white films are shown in Table 7.

Comparative Example 15

A white film having a thickness of 250 μm was obtained in the same manner as in Example 26, except that the production conditions were changed as shown in Table 7, and that the cyclic carbodiimide compound (2) obtained by the procedure of Reference Example 6 was not used. The physical properties of the obtained white film are shown in Table 1.

Comparative Example 16

A white film having a thickness of 250 μm was obtained in the same manner as in Example 26, except that the production conditions were changed as shown in Table 7, and that the cyclic carbodiimide compound (2) obtained by the procedure of Reference Example 6 was changed to a carbodiimide compound having a linear structure ("CARBODILITE" LA-1 manufactured by Nisshinbo Chemical). The physical properties of the obtained white film are shown in Table 7.

Comparative Example 17

The poly(L-lactic acid) obtained by the procedure of Reference Example 1 and barium sulfate having an average particle size of 0.7 μm were mixed in a ratio of 50 wt%/50 wt%, and the formed mixture was pelletized using a twin-screw extruder to produce a masterbatch. The masterbatch and a poly(L-lactic acid) resin were mixed in a ratio of 50 wt%/50 wt% followed by drying at 110°C for 5 hours. After that, the mixture was melt-kneaded in a single-screw extruder

at a cylinder temperature of 220°C, then melt-extruded through a T-die at a die temperature of 230°C to form a film having a thickness of about 2,300 μm, and cooled and solidified on a casting drum to form an unstretched film. The obtained unstretched film was biaxially stretched at a temperature of 70°C to 2.8 times its original length in MD and to 3.2 times its original length in TD as shown in Table 7, and then heat-treated at 140°C to form a white film having a thickness of 250 μm. The physical properties of the obtained white film are shown in Table 7.

[Table 7]

| | | Example 23 | Example 24 | Example 25 | Example 26 | Comparative Example 15 | Comparative Example 16 | Comparative Example 17 |
|---|---|---|---|---|---|---|---|---|
| Composition of Resin Composition | | | | | | | | |
| Resin Composition | | scPLA | scPLA | scPLA | scPLA | scPLA | scPLA | PLLA |
| Filler | Kind | A | A | A | B | B | B | B |
| | wt% | 30 | 30 | 30 | 20 | 20 | 20 | 20 |
| Cyclic Carbodiimide Compound | part by weight | 1.0 | 1.0 | 1.0 | 1.0 | 0 | 0 | 0 |
| LA-1 | part by weight | 0 | 0 | 0 | 0 | 0 | 1.0 | 0 |
| Film Production Conditions | | | | | | | | |
| Longitudinal Draw Ratio | (times) | 2.8 | 2.8 | 2.8 | 2.8 | 2.8 | 2.8 | 2.8 |
| Transverse Draw Ratio | (times) | 3.2 | 3.2 | 3.2 | 3.2 | 3.2 | 3.2 | 3.2 |
| Longitudinal Stretching Temperature | (°C) | 70 | 70 | 70 | 70 | 70 | 70 | 70 |
| Transverse Stretching Temperature | (°C) | 70 | 70 | 70 | 70 | 70 | 70 | 70 |
| Heat Setting Temperature | (°C) | 195 | 195 | 195 | 195 | 195 | 195 | 140 |
| Transverse Relaxation Rate | (%) | 0.0 | 0.0 | 1.5 | 0.0 | 0.0 | 0.0 | 0.0 |
| Longitudinal Relaxation Rate | (%) | 0.0 | 3.0 | 3.0 | 0.0 | 3.0 | 3.0 | 0.0 |

(continued)

| Physical Properties of Film | | | | | | | | |
|---|---|---|---|---|---|---|---|---|
| Thickness | (μm) | 250 | 250 | 250 | 250 | 250 | 250 | 250 |
| Thermal Shrinkage Rate after Heat Treatment at 90°C × 30 min | Longitudinal (%) | 1.7 | 1.8 | 0.8 | 1.8 | 1.8 | 1.8 | 2.2 |
| | Transverse (%) | 1.2 | 0.3 | 0.1 | 0.3 | 0.3 | 0.3 | 1.8 |
| Thermal Shrinkage Rate after Heat Treatment at 120°C × 5 min | Longitudinal (%) | 2.8 | 2.5 | 1.8 | 2.5 | 2.5 | 2.5 | 3.2 |
| | Transverse (%) | 1.8 | 0.8 | 0.0 | 0.8 | 0.8 | 0.8 | 2.2 |
| Average Reflectance (400-700 nm) | (%) | 98 | 98 | 98 | 95 | 95 | 95 | 95 |
| Carboxy Group Concentration | (eq./ton) | 0 | 0 | 0 | 0 | 15 | 5 | 20 |
| Hydrolysis Resistance | | AA | AA | AA | AA | F | B | F |
| Heat Resistance | | A | A | A | A | F | A | F |
| Isocyanate Gas | Generated or not | Not generated | Not generated | Not generated | Not generated | Not generated | Generated | Not generated |
| Evaluation of Practical Use | | A | A | AA | A | A | A | B |
| LA-1: Carbodiimide compound having a linear structure ("CARBODILITE" LA-1 manufactured by Nisshinbo Chemical) | | | | | | | | |

(Preparation of Reflection Plate)

The white films obtained by the procedures of Examples 23 to 26 were cut to a size of 730 mm × 420 mm to form reflection plates for 32-inch liquid crystal televisions. Liquid crystal displays made using the obtained reflection plates had high brightness and excellent visibility.

The below-mentioned numerical values in the following Examples 27 to 30 and Comparative Examples 18 to 20 were determined according to the following methods.

AU. Glass Transition Temperature:

A resin sample weighing about 20 mg was enclosed in an aluminum pan for measurement and then mounted on a differential calorimeter (TA-2920 manufactured by TA instruments). The temperature was raised from 25°C to 290°C at a rate of 20°C /min, and the glass transition temperature Tg (unit: °C) was measured.

Example 27

The resin obtained by the procedure of Reference Example 2 and, as an incompatible thermoplastic resin, polyethylene terephthalate copolymerized with 12 mol% of 2,6-naphthalenedicarboxylic acid per 100 mol% of the acid component (weight average molecular weight: 35,000, glass transition temperature: 82°C) were mixed in a ratio of 50 wet%/50 wt%, and the formed mixture was pelletized using a twin-screw extruder to produce a masterbatch. The masterbatch and aliphatic polyester resin chips were mixed such that the incompatible thermoplastic resin content of the resin composition was as shown in Table 8, followed by drying at 110°C for 5 hours. After that, the cyclic carbodiimide compound (2) obtained by the procedure of Reference Example 6 was added such that the amount added relative to the weight of the aliphatic polyester resin was as shown in Table 8. While mixing, the mixture was melt-kneaded in a twin-screw extruder at a cylinder temperature of 230°C, then melt-extruded through a T-die at a die temperature of 220°C to form a film having a thickness of about 2,300 μm, and cooled and solidified on a casting drum to form an unstretched film. The obtained unstretched film was biaxially stretched at a temperature of 70°C to 2.8 times its original length in MD and to 3.2 times its original length in TD, and then heat-treated at 195°C to form a white film having a thickness of 250 μm. The physical properties of the obtained white film are shown in Table 8.

Examples 28 to 30

White films having a thickness of 250 μm were obtained in the same manner as in Example 27, except that the production conditions and the kind and content of incompatible thermoplastic resin were changed as shown in Table 8. The physical properties of the obtained white films are shown in Table 8.

Incidentally, the incompatible thermoplastic resin in Example 30 is a polycarbonate (weight average molecular weight: 21,000, glass transition temperature:142°C).

Comparative Example 18

A white film having a thickness of 250 μm was obtained in the same manner as in Example 27, except that the production conditions and the incompatible thermoplastic resin content were changed as shown in Table 8, and that the cyclic carbodiimide compound (2) obtained by the procedure of Reference Example 6 was not used. The physical properties of the obtained white film are shown in Table 8.

Comparative Example 19

A white film having a thickness of 250 μm was obtained in the same manner as in Example 27, except that the production conditions and the incompatible thermoplastic resin content were changed as shown in Table 8, and that the cyclic carbodiimide compound (2) obtained by the procedure of Reference Example 6 was changed to a carbodiimide compound having a linear structure ("CARBODILITE" LA-1 manufactured by Nisshinbo Chemical). The physical properties of the obtained white film are shown in Table 8.

Comparative Example 20

The poly(L-lactic acid) resin obtained by the procedure of Reference Example 1 and, as an incompatible thermoplastic resin, a polycarbonate (resin B, weight average molecular weight: 21,000, glass transition temperature: 142°C) were mixed in a ratio of 50 wt%/50 wt%, and the formed mixture was pelletized using a twin-screw extruder to

produce a masterbatch. The masterbatch and L-lactic acid resin chips were mixed such that the incompatible thermoplastic resin content of the resin composition was as shown in Table 8, followed by drying at 110°C for 5 hours. After that, the mixture was melt-kneaded in a single-screw extruder at a cylinder temperature of 220°C, then melt-extruded through a T-die at a die temperature of 230°C to form a film having a thickness of about 2,300 μm, and cooled and solidified on a casting drum to form an unstretched film. The obtained unstretched film was biaxially stretched at a temperature of 70°C to 2.8 times its original length in MD and to 3.2 times its original length in TD as shown in Table 8, and then heat-treated at 140°C to form a white film having a thickness of 250 μm. The physical properties of the obtained white film are shown in Table 8.

[Table 8]

| | | | Example 27 | Example 28 | Example 29 | Example 30 | Comparative Example 18 | Comparative Example 19 | Comparative Example 20 |
|---|---|---|---|---|---|---|---|---|---|
| Resin Composition | | | | | | | | | |
| Aliphatic Polyester | Kind | - | scPLA | scPLA | scPLA | scPLA | scPLA | scPLA | PLLA |
| | Glass Transition Temperature | °C | 55 | 55 | 55 | 55 | 55 | 55 | 55 |
| Incompatible Thermoplastic Resin | Kind | - | Resin A | Resin A | Resin A | Resin B | Resin A | Resin A | Resin B |
| | Glass Transition Temperature | °C | 82 | 82 | 82 | 142 | 82 | 82 | 142 |
| | Content | wt% | 40 | 40 | 40 | 35 | 20 | 20 | 20 |
| Cyclic Carbodiimide Compound | Content | part by weight | 1.0 | 1.0 | 10 | 1.0 | 0 | 0 | 0 |
| LA-1 | Added Amount | part by weight | 0 | 0 | 0 | 0 | 0 | 10 | 0 |
| Film Production Conditions | | | | | | | | | |
| Draw Ratio | Longitudinal | times | 2 8 | 2.8 | 2.8 | 2.8 | 2.8 | 2 8 | 2.8 |
| | Transverse | times | 3.2 | 3.2 | 3.2 | 3.2 | 32 | 3.2 | 3.2 |
| Stretching Temperature | Longitudinal | °C | 70 | 70 | 70 | 70 | 70 | 70 | 70 |
| | Transverse | °C | 70 | 70 | 70 | 70 | 70 | 70 | 70 |
| Heat Setting Temperature | | °C | 195 | 195 | 195 | 195 | 195 | 195 | 140 |
| Longitudinal Relaxation Rate | | % | 0.0 | 0.0 | 1.5 | 0.0 | 0.0 | 0.0 | 0.0 |
| Transverse Relaxation Rate | | % | 0.0 | 3.0 | 3.0 | 0.0 | 3.0 | 3.0 | 0.0 |

(continued)

| Physical Properties of Film | | | | | | | | | |
|---|---|---|---|---|---|---|---|---|---|
| Thickness | | µm | 250 | 250 | 250 | 250 | 250 | 250 | 250 |
| Thermal Shrinkage Rate at 90°C × 30 min | Longitudinal | % | 1.7 | 1.8 | 0.8 | 1 8 | 1.8 | 1.8 | 2.2 |
| | Transverse | % | 1.2 | 0.3 | 0.1 | 0.3 | 03 | 0.3 | 1.8 |
| Thermal Shrinkage Rate at 120°C × 5 min | Longitudinal | % | 2.8 | 2.5 | 1.8 | 2 5 | 2.5 | 2.5 | 3.2 |
| | Transverse | % | 1.8 | 0.8 | 0.0 | 0.8 | 0.8 | 0.8 | 2.2 |
| Average Reflectance (400-700 nm) | | % | 98 | 98 | 97 | 95 | 95 | 95 | 94 |
| Carboxy Group Concentration | | eq./ton | 0 | 0 | 0 | 0 | 15 | 5 | 20 |
| Hydrolysis Resistance | | - | AA | AA | AA | AA | F | B | F |
| Heat Resistance | | - | A | A | A | A | F | A | F |
| Isocyanate Gas | | Generated or not | Not generated | Not generated | Not generated | Not generated | Not generated | Generated | Not generated |
| Evaluation of Practical Use | | | A | A | AA | A | A | A | B |

scPLA: Stereocomplex polylactic acid
PLLA: Poly(L-lactic acid)
Resin A. Polyethylene terephthalate copolymerized with 12 mol% naphthalenedicarboxylic acid
Resin B: Polycarbonate
LA-1: Carbodiimide compound having a linear structure ("CARBODILITE" LA-1 manufactured by Nisshinbo Chemical)

(Preparation of Reflection Plate)

The white films obtained in Examples 27 to 30 were cut to a size of 730 mm x 420 mm to form reflection plates for 32-inch liquid crystal televisions. Liquid crystal displays made using the obtained reflection plates had high brightness and excellent visibility.

The below-mentioned numerical values in the following Examples 31 to 35 and Comparative Example 21 were determined according to the following methods.

AV. Haze Evaluation:

The haze value (%) was evaluated using "COH-300A" (trade name) manufactured by Nippon Denshoku Industries.

AW. Retardation Measurement:

The retardation values RO and Rth, which are each the product of the birefringence An and the film thickness d, were measured using a spectral ellipsometer manufactured by Jasco under the trade name "M150". The RO value was measured in a state where the incident light is perpendicular to the film surface. In addition, with respect to the Rth value (nm), the angle between the incident light and the film surface was varied to measure the retardation value at each angle, and curve fitting was performed using a known index ellipsoid equation, whereby the three-dimensional refractive indices $n_x$, $n_y$, and $n_z$ were determined. The measurement wavelength was 550 nm.

AX. Measurement of Polarization Degree and Total Light Transmittance of Polarizing Plate:

Two polarizing plates (3 cm x 4 cm) were cut out. The parallel transmittance Y// and perpendicular transmittance Y⊥ of the two polarizing plates were measured with a spectrometer manufactured by Hitachi under the trade name "U-4000", and the degree of polarization (P (%)) was determined using the following equation (60). Incidentally, transmittance herein is parallel light transmittance, and the Y value in the CIE-XYZ colorimetric system using Illuminant C at an observer angle of 2° was employed.

$$P(\%) = \sqrt{\frac{Y_{//} - Y_{\perp}}{Y_{//} + Y_{\perp}}} \times 100 \qquad (60)$$

In addition, the total light transmittance of the polarizing plate alone was measured using the same apparatus.

AY. Film Mechanical Strength:

Using an Instron tensile tester as the measuring apparatus, a sample film was cut to a width of 10 mm and a length of 100 mm, then the sample was placed between chucks at a distance of 50 mm, and a tensile test was performed in accordance with JIS-C2151 under conditions of a tensile rate of 50 mm/min and room temperature (25°C). Incidentally, with respect to the sample cutting direction, provided that the film-travel direction is defined as the MD direction, and the width direction perpendicular thereto is defined as the TD direction, sampling was performed taking the directions parallel to MD and TD as respective length directions, and the tensile measurement values in the MD and TD directions were evaluated. In this evaluation, the elongation at break and the breaking strength were measured before and after a durability test to check changes in the physical properties.

Reference Example 15

(Production of Materials for Multilayer Film)

(A) Optically Positive Resin:

100 parts by weight of the resin obtained by the procedure of Reference Example 2, 1.0 part by weight of the

cyclic carbodiimide compound (2) obtained by the procedure of Reference Example 6, and 2.5 parts by weight of a UV absorber 2,2'-dihydroxy-4,4'-dimethoxybenzophenone manufactured by Shipro Kasei Kaisha under the trade name "SEESORB107" were mixed in a blender, vacuum-dried at 110°C for 5 hours, and then fed through a first feed port of a kneader. The mixture was melt-kneaded while evacuating at a cylinder temperature of 230°C and a vent pressure of 13.3 Pa, then extruded into strands in a water bath, and cut into chips with a chip cutter to form a composition.

The glass transition temperature (Tg) was 56°C, the crystallization temperature was 115°C, and the melting point was 215°C.

(B) Optically Positive Resin:

70 parts by weight of the resin obtained in Reference Example 2, 30 parts by weight of polymethyl methacrylate manufactured by Mitsubishi Rayon under the trade name "ACRYPET VH001", and 1.0 part by weight of the cyclic carbodiimide compound (2) obtained by the procedure of Reference Example 6 were mixed in a blender, vacuum-dried at 110°C for 5 hours, and then fed through a first feed port of a kneader. The mixture was melt-kneaded while evacuating at a cylinder temperature of 230°C and a vent pressure of 13.3 Pa, then extruded into strands in a water bath, and cut into chips with a chip cutter to form a composition containing an optically negative resin. The glass transition temperature (Tg) was 65°C, the crystallization temperature was 127°C, and the melting point was 216°C.

(C) Optically Positive Resin

70 parts by weight of the resin obtained by the procedure of Reference Example 2, 30 parts by weight of polymethyl methacrylate manufactured by Mitsubishi Rayon under the trade name "ACRYPET VH001", 1.0 part by weight of the cyclic carbodiimide compound (2) obtained by the procedure of Reference Example 6, and 3 parts by weight of "SEESORB107" (trade name) were mixed in a blender, vacuum-dried at 110°C for 5 hours, and then fed through a first feed port of a kneader. The mixture was melt-kneaded while evacuating at a cylinder temperature of 230°C and a vent pressure of 13.3 Pa, then extruded into strands in a water bath, and cut into chips with a chip cutter to form a composition containing an optically negative resin. The glass transition temperature (Tg) was 64°C, the crystallization temperature was 129°C, and the melting point was 211°C.

(D) Optically Positive Resin

100 parts by weight of the resin obtained by the procedure of Reference Example 2 and 1.0 part by weight of "CARBODILITE" LA-1 manufactured by Nisshinbo Chemical were mixed in a blender, vacuum-dried at 110°C for 5 hours, and then fed through a first feed port of a kneader. The mixture was melt-kneaded while evacuating at a cylinder temperature of 230°C and a vent pressure of 13.3 Pa and then extruded into strands in a water bath, and a composition was obtained using a chip cutter. The glass transition temperature (Tg) was 56°C, the crystallization temperature was 135°C, and the melting point was 168°C.

(E) Optically Negative Resin:

"PARAPET" GF manufactured by KURARAY was dried at 80°C for 5 hours and used. The glass transition temperature was 105°C.

(F) Optically Negative Resin:

"DENKA ACRYSTAR KT-80" manufactured by Denki Kagaku Kogyo, a copolymer resin of PMMA and polystyrene (MS resin), was dried at 80°C for 5 hours and used. The glass transition temperature was 110°C.

Incidentally, with respect to the above resins, the following was confirmed. When each resin was melt-extruded to form a film and longitudinally uniaxially stretched at (Tg + 10)°C, the refractive index increases in the stretching direction in the cases of (A) to (D). Meanwhile, in the cases of (E) and (F), as a result of evaluation under the same conditions, the in-plane refractive index increases in the direction perpendicular to the stretching direction. Accordingly, the resins (A) to (D) are optically positive, while the resins (E) and (F) are optically negative.

Example 31

The resin (A) obtained by the procedure of Reference Example 15 was dried at 100°C for 5 hours, then placed in a hopper of an extruder B of a two-kind three-layer extruder (including two extruders: an extruder A and an extruder B), and melt-extruded at 225°C. Meanwhile, the resin (E) obtained by the procedure of Reference Example 15 was

placed in a hopper of the extruder A, melt-extruded at 230°C, melt-extruded through a T-die at a die temperature of 225°C to form a film, and then brought into close contact with a cooling drum surface at 60°C and thereby solidified to form an unstretched film. In the melt-extrusion process, the offensive odor due to isocyanate was not generated, and the working environment was excellent. The two-kind three-layer extruder is configured such that the extruder A provides two outer layers, while the extruder B provides one inner layer. The film thickness was 100 μm. The thickness ratio of the three layers was nearly 1:1:1. Subsequently, the unstretched film was stretched at 105°C to 1.3 times its original length using a longitudinal uniaxial stretching apparatus, and then stretched at a stretching temperature of 107°C to 1.2 times its original length using a tenter transverse uniaxial stretching apparatus, followed by heat setting at 120°C in the same system to substantially complete the crystallization of the resin (A). A multilayer film having a thickness of 70 μm was thus formed. Incidentally, the completion of the crystallization of the resin (A) was confirmed by the disappearance of the crystallization peak using DSC. The stereocomplex crystallinity (S) of the resin (A) was 100%.

This film has the following three-layer structure: optically positive layer/optically negative layer/optically positive layer. The layer structure and the initial optical properties are shown in Table 9.

The film was subjected to a durability test at 80°C for 1,000 hours and also at 60°C and 90% RH for 1,000 hours, and changes in the retardation value, haze, and mechanical strength were evaluated. As a result, almost no changes were observed.

Example 32

The resin (B) obtained by the procedure of Reference Example 15 was dried at 90°C for 5 hours, then placed in a hopper of an extruder B of a two-kind three-layer extruder, and melt-extruded at 225°C. Meanwhile, the resin (E) obtained by the procedure of Reference Example 15 was placed in a hopper of an extruder A, melt-extruded at 230°C, melt-extruded through a T-die at a die temperature of 225°C to form a film, and then brought into close contact with a cooling drum surface at 60°C and thereby solidified to form an unstretched film. In the melt-extrusion process, the offensive odor due to isocyanate was not generated, and the working environment was excellent. The two-kind three-layer extruder is configured such that the extruder A provides two outer layers, while the extruder B provides one inner layer. The film thickness was 100 μm. The thickness ratio of the three layers was nearly 0.7:1:0.7. Subsequently, the unstretched film was stretched at 105°C to 1.3 times its original length using a longitudinal uniaxial stretching apparatus, and then stretched at a stretching temperature of 107°C to 1.2 times its original length using a tenter transverse uniaxial stretching apparatus, followed by heat setting at 130°C in the same system to substantially complete the crystallization of the resin (B). A multilayer film having a thickness of 70 μm was thus formed. The stereocomplex crystallinity (S) of the resin (B) was 100%. In this film, the resin (B) is optically positive, and the resin (E) is optically negative. The film has the following three-layer structure: optically negative layer/optically positive layer/optically negative layer. The layer structure and the initial optical properties are shown in Table 9.

The film was subjected to a durability test at 80°C for 1,000 hours and also at 60°C and 90% RH for 1,000 hours, and changes in the retardation value, haze, and mechanical strength were evaluated. As a result, almost no changes were observed.

Example 33

The resin (C) obtained by the procedure of Reference Example 15 was dried at 90°C for 5 hours, then placed in a hopper of an extruder B of a two-kind three-layer extruder, and melt-extruded at 225°C. Meanwhile, the resin (E) was placed in a hopper of an extruder A, melt-extruded at 230°C, melt-extruded through a T-die at a die temperature of 225°C to form a film, and then brought into close contact with a cooling drum surface at 60°C and thereby solidified to form an unstretched film. In the melt-extrusion process, the offensive odor due to isocyanate was not generated, and the working environment was excellent. The two-kind three-layer extruder is configured such that the extruder A provides two outer layers, while the extruder B provides one inner layer. The film thickness was 100 μm. The thickness ratio of the three layers was nearly 0.7:1:0.7. Subsequently, the unstretched film was stretched at 105°C to 1.3 times its original length using a longitudinal uniaxial stretching apparatus, and then stretched at a stretching temperature of 107°C to 1.2 times its original length using a tenter transverse uniaxial stretching apparatus, followed by heat setting at 130°C in the same system to substantially complete the crystallization of the resin (C). A multilayer film having a thickness of 70 μm was thus formed. The stereocomplex crystallinity (S) of the resin (C) was 100%. In this film, the resin (C) is optically positive, and the resin (E) is optically negative. The film has the following three-layer structure: optically negative layer/optically positive layer/optically negative layer. The layer structure and the initial optical properties are shown in Table 9.

The film was subjected to a durability test at 80°C for 1,000 hours and also at 60°C and 90% RH for 1,000 hours, and changes in the retardation value, haze, and mechanical strength were evaluated. As a result, almost no changes were observed. In addition, the bleeding out of the UV absorber was also checked after the durability test. As a result, no bleeding out was observed.

Example 34

The resin (B) obtained by the procedure of Reference Example 15 was dried at 90°C for 5 hours, then placed in a hopper of an extruder A of a two-kind three-layer extruder, and melt-extruded at 225°C. Meanwhile, the resin (E) obtained by the procedure of Reference Example 15 was placed in a hopper of an extruder B, melt-extruded at 230°C, melt-extruded through a T-die at a die temperature of 225°C to form a film, and then brought into close contact with a cooling drum surface at 45°C and thereby solidified to form an unstretched film. In the melt-extrusion process, the offensive odor due to isocyanate was not generated, and the working environment was excellent. The two-kind three-layer extruder is configured such that the extruder A provides two outer layers, while the extruder B provides one inner layer. The film thickness was 100 μm. The thickness ratio of the three layers was nearly 0.3:1:0.3. Subsequently, the unstretched film was stretched at 105°C to 1.3 times its original length using a longitudinal uniaxial stretching apparatus, and then stretched at a stretching temperature of 107°C to 1.2 times its original length using a tenter transverse uniaxial stretching apparatus, followed by heat setting at 130°C in the same system to substantially complete the crystallization of the resin (B). A film having a thickness of 70 μm was thus formed. The stereocomplex crystallinity (S) of the resin (B) was 100%. In this film, the resin (B) is optically positive, and the resin (E) is optically negative. The film has the following three-layer structure: optically positive layer/optically negative layer/optically positive layer. The layer structure and the initial optical properties are shown in Table 9.

The film was subjected to a durability test at 80°C for 1,000 hours and also at 60°C and 90% RH for 1,000 hours, and changes in the retardation value, haze, and mechanical strength were evaluated. As a result, almost no changes were observed.

Example 35

The resin (B) obtained by the procedure of Reference Example 15 was dried at 90°C for 5 hours, then placed in a hopper of an extruder B of a two-kind two-layer extruder, and melt-extruded at 225°C. Meanwhile, the resin (F) obtained by the procedure of Reference Example 15 was placed in a hopper of an extruder A, melt-extruded at 230°C, melt-extruded through a T-die at a die temperature of 225°C to form a film, and then brought into close contact with a cooling drum surface at 60°C and thereby solidified to form an unstretched film. In the melt-extrusion process, the offensive odor due to isocyanate was not generated, and the working environment was excellent. The two-kind two-layer extruder is configured such that the extruder A provides one layer on the cooling-drum side, while the extruder B provides one layer on the opposite side. The film thickness was 100 μm. The thickness ratio of the two layers was nearly 1:1. Subsequently, the unstretched film was stretched at 110°C to 1.3 times its original length using a longitudinal uniaxial stretching apparatus, and then stretched at a stretching temperature of 111°C to 1.2 times its original length using a tenter transverse uniaxial stretching apparatus, followed by heat setting at 130°C in the same system to substantially complete the crystallization of the resin (B). A film having a thickness of 70 μm was thus formed. The stereocomplex crystallinity (S) of the resin (B) was 100%. In this film, the resin (B) is optically positive, and the resin (F) is optically negative. The film has a two-layer structure made up of an optically positive layer and an optically negative layer. The layer structure and the initial optical properties are shown in Table 9.

The film was subjected to a durability test at 80°C for 1,000 hours and also at 60°C and 90% RH for 1,000 hours, and changes in the retardation value, haze, and mechanical strength were evaluated. As a result, almost no changes were observed.

Example 36

A polyvinyl alcohol film having a thickness of 80 μm was dyed in a 5 wt% iodine solution (weight ratio: iodine/potassium iodide = 1/10) at 30°C for 1 minute. The film was then immersed in an aqueous solution containing 3 wt% boric acid and 2 wt% potassium iodide at 30°C for 1 minute, and further immersed in an aqueous solution containing 4 wt% boric acid and 3 wt% potassium iodide at 60°C for 1 minute while stretching the film was up to 6 times its original length. The film was then immersed in a 5 wt% aqueous potassium iodide solution at 30°C for 1 minute. Subsequently, the film was dried in an oven at 80°C for 3 minutes to form a polarizing film having a thickness of 30 μm.

Next, one surface of the multilayer film produced in Example 32 was subjected to a UV-ozone treatment so as to use it as a protection film for a polarizing plate. The UV-ozone treatment was performed for 30 seconds using "Eye Ozone Cleaner OC-2506" (trade name) manufactured by Eye Graphics.

For adhesion between the polarizing film and the protection film, a UV-curable adhesive that is liquid before curing was used. The UV-curable adhesive was applied to the UV-ozone-treated surface of the protection film using a bar coater, and the polarizing film was laminated thereto. After that, UV curing was performed using a low-pressure mercury lamp from the protection-film side, thereby causing adhesion. As the UV-curable adhesive, a mixture of 100 parts by weight of "Light Ester HOP-A" (trade name) manufactured by Kyoeisha Chemical, which contains 2-hydroxypropyl

acrylate as a main component, and 1 part by weight of "IRGACURE 184" (trade name) manufactured by Ciba-Geigy as a photoinitiator was used.

The obtained polarizing plate had a total light transmittance of 42% and a polarization degree of 99.9%.

Comparative Example 21

The resin (D) obtained by the procedure of Reference Example 15 was dried at 90°C for 5 hours, then placed in a hopper of an extruder A of a two-kind three-layer extruder, and melt-extruded at 225°C. Meanwhile, the resin (E) obtained by the procedure of Reference Example 15 was placed in a hopper of an extruder B, melt-extruded at 229°C, melt-extruded through a T-die at a die temperature of 225°C to form a film, and then brought into close contact with a cooling drum surface at 45°C and thereby solidified to form an unstretched film. The two-kind three-layer extruder is configured such that the extruder A provides two outer layers, while the extruder B provides one inner layer. In the melt-extrusion process, the offensive odor due to isocyanate was generated, and the working environment deteriorated. Therefore, no further test was conducted.

[Table 9]

| | | Example 31 | Example 32 | Example 33 | Example 34 | Example 35 | Comparative Example 22 |
|---|---|---|---|---|---|---|---|
| Optical Properties | RO (nm) | 3 | 2 | 1 | 4 | 5 | - |
| | Rth (nm) | 5 | 4 | 4 | 8 | 10 | - |
| | Haze (%) | 0.3 | 0.2 | 0.3 | 0.3 | 0.3 | - |

The below-mentioned numerical values in the following Examples 37 to 38 and Comparative Examples 22 and 23 were determined according to the following methods.

AZ. Haze:

Measurement was performed using a hazemeter "MDH2000" manufactured by Nippon Denshoku Industries.

BA. Hydrolysis Resistance:

A sample was allowed to stand in an environment with a temperature of 85°C and a humidity of 85% RH for 24 hours. A sample free of abnormalities including poor appearance, separation at the ends, etc., was rated as A, while a sample having a problem was rated as F.

Reference Example 16

<Preparation of Material for Transparent Polymer Substrate>

(1) Material for Transparent Polymer Substrate (A)

100 parts by weight of the stereocomplex polylactic acid obtained by the procedure of Reference Example 2 and 1 part by weight of the cyclic carbodiimide compound (2) obtained by the procedure of Reference Example 6 were mixed in a blender, vacuum-dried at 110°C for 5 hours, and then fed through a first feed port of a kneader. The mixture was melt-kneaded while evacuating at a cylinder temperature of 230°C and a vent pressure of 13.3 Pa, then extruded into strands in a water bath, and cut into chips with a chip cutter to give a material for a transparent polymer substrate (A).

(2) Material for Transparent Polymer Substrate (B)

80 parts by weight of the stereocomplex polylactic acid obtained by the procedure of Reference Example 2, 20 parts by weight of polymethyl methacrylate manufactured by Mitsubishi Rayon under the trade name "ACRYPET VH001", and 1 part by weight of the cyclic carbodiimide compound (2) obtained by the procedure of Reference Example

6 were mixed in a blender, vacuum-dried at 100°C for 5 hours, and then fed through a first feed port of a kneader. The mixture was melt-kneaded while evacuating at a cylinder temperature of 230°C and a vent pressure of 13.3 Pa, then extruded into strands in a water bath, and cut into chips with a chip cutter to give a material for a transparent polymer substrate (B).

(3) Material for Transparent Polymer Substrate (C)

100 parts by weight of the stereocomplex polylactic acid obtained by the procedure of Reference Example 2 and 1 part by weight of "CARBODILITE" LA-1 manufactured by Nisshinbo Chemical were mixed in a blender, vacuum-dried at 110°C for 5 hours, and then fed through a first feed port of a kneader. The mixture was melt-kneaded while evacuating at a cylinder temperature of 230°C and a vent pressure of 13.3 Pa, then extruded into strands in a water bath, and cut into chips with a chip cutter to give a material for a transparent polymer substrate (C).

<Preparation of Transparent Polymer Substrate>

(1) Production of Transparent Polymer Substrate (A):

The material for a transparent polymer substrate (A) was dried at 110°C for 5 hours, melt-kneaded at 230°C in an extruder, melt-extruded through a T-die at a die temperature of 230°C to form a film, and then brought into close contact with a cooling drum surface at 40°C and thereby solidified to form an unstretched film. The thickness was 110 μm. Subsequently, the unstretched film was transversely stretched at a temperature of 70°C to 1.1 times its original length and then heat-set at 115°C in the same system to form a transparent polymer substrate (A) having a thickness of 100 μm and a haze of 0.18%. The stereocomplex crystallinity (S) was 100%, and the peak enthalpy of polylactic acid stereocomplex crystal ($\Delta Hc_{sc}$) was not observed, confirming that stereocomplex polylactic acid was contained. The Re value was 8 nm. During the production of the substrate, the generation of isocyanate odor was not detected, and it was possible to form the film in a good working environment.

(2) Production of Transparent Polymer Substrate (B):

The material for a transparent polymer substrate (B) was dried at 105°C for 5 hours, melt-kneaded at 230°C in an extruder, melt-extruded through a T-die at a die temperature of 230°C to form a film, and then brought into close contact with a cooling drum surface at 40°C and thereby solidified to form an unstretched film. The thickness was 250 μm. Subsequently, the unstretched film was stretched at a temperature of 75°C longitudinally to 2.0 times its original length and transversely to 1.8 times its original length, and then heat-set at 115°C in the same system to form a transparent polymer substrate (B) having a thickness of 100 μm and a haze of 0.11%. The stereocomplex crystallinity (S) was 100%, and the peak enthalpy of polylactic acid stereocomplex crystal ($\Delta Hc_{sc}$) was not observed, confirming that stereocomplex polylactic acid was contained. The Re value was 3 nm. During the production of the substrate, the generation of isocyanate odor was not detected, and it was possible to form the film in a good working environment.

(4) Production of Transparent Polymer Substrate (C):

The material for a transparent polymer substrate (C) was dried at 110°C for 5 hours, melt-kneaded at 230°C in an extruder, melt-extruded through a T-die at a die temperature of 230°C to form a film, and then brought into close contact with a cooling drum surface at 40°C and thereby solidified to form an unstretched film. The thickness was 190 μm. Subsequently, the unstretched film was stretched at a temperature of 70°C longitudinally to 1.6 times its original length and transversely to 1.5 times its original length, and then heat-set at 115°C in the same system to form a transparent polymer substrate (C) having a thickness of 100 μm and a haze of 0.19%. During the production of the substrate, isocyanate odor was detected.

(3) Production of Transparent Polymer Substrate (D):

The stereocomplex polylactic acid obtained by the procedure of Reference Example 2 was dried at 110°C for 5 hours, then melt-kneaded at 230°C in an extruder, and melt-extruded through a T-die at a die temperature of 230°C to form a film. The film was brought into close contact with a cooling drum surface at 40°C and thereby solidified to form an unstretched film. The film thickness was 190 μm. Subsequently, the unstretched film was stretched at a temperature of 70°C longitudinally to 1.6 times its original length and transversely to 1.5 times its original length, and then heat-set at 115°C in the same system to form a transparent polymer substrate (D) having a thickness of 100 μm and a haze of 0.10%. The Re value was 12 nm. During the production of the substrate, the generation of isocyanate odor was not

detected, and it was possible to form the film in a good working environment.

Example 37

A coating liquid containing the following components and having a viscosity suitably adjusted with isobutyl alcohol was applied onto the transparent polymer substrate (A) using an wire bar: 100 parts by weight of "Aronix" M-215 manufactured by Toagosei; 15 parts by weight (in terms of solids content) of a 10 wt% isopropyl alcohol dispersion of $SiO_2$ ultrafine particles having an average primary particle size of about 30 nm manufactured by C.I. Kasei; and 5 parts by weight of "IRGACURE 184" manufactured by Ciba Specialty Chemicals. The applied coating liquid was dried by heating at 80°C for 1 minute and then irradiated with UV light of 120 $mW/cm^2$ and 400 mJ/cm2 using a UV lamp to form a coating layer having a thickness of about 3 μm.

A transparent conductive layer was formed on this coating layer by sputtering using an indium oxide-tin oxide target having a pack density of 98% with the weight ratio between indium oxide and tin oxide being 95:5. The formed transparent conductive layer had a thickness of about 20 nm. Further, a heat treatment was performed at 120°C for 60 minutes to crystallize the transparent conductive layer, thereby forming a transparent conductive laminate.

No isocyanate gas was generated, and the rating of hydrolysis resistance was also A. Thus, an excellent transparent conductive laminate was obtained.

Example 38

A transparent conductive laminate was obtained in the same manner as in Example 37, except that the transparent polymer substrate (A) was replaced with the transparent polymer substrate (B), and the coating layer was formed on each side.

No isocyanate gas was generated, and the rating of hydrolysis resistance was also A. Thus, an excellent transparent conductive laminate was obtained.

Comparative Example 22

A transparent conductive laminate was obtained in the same manner as in Example 37, except that the transparent polymer substrate (A) was replaced with the transparent polymer substrate (D).

Although no isocyanate gas was generated, the rating of hydrolysis resistance was F.

Comparative Example 23

A transparent conductive laminate was obtained in the same manner as in Example 37, except that the transparent polymer substrate (A) was replaced with the transparent polymer substrate (C).

Although the rating of hydrolysis resistance was A, isocyanate gas was generated.

The results of Examples 37 and 38 and Comparative Examples 22 and 23 show that a transparent conductive laminate whose base material is made of a resin containing a cyclic carbodiimide compound does not generate isocyanate gas and has excellent hydrolysis resistance.

The below-mentioned numerical values in the following Examples 39 to 47, Comparative Examples 24 to 27, and Reference Example 17 were determined according to the following methods.

BB. Refractive Index of Coating Layer:

Using a spectrophotometer (UV-3101PC manufactured by Shimadzu), the spectral reflectance at a wavelength of 633 nm was determined under the following conditions: scanning rate: 200 mm/min, slit width: 20 nm, sampling pitch: 1.0 nm. The average refractive index in the plane direction of the film was determined using an Abbe refractometer (sodium D-line), and also the coating layer thickness was determined by the below-mentioned method. Using the obtained data, the refractive index of the coating film was determined by the following equation.

$$R = 1 - \frac{4n_1^2 n_0}{n_1^2(1+n_0)^2 + (1-n_1^2)(n_0^2 - n_1^2)\sin^2(2\pi n_1 d_1 / \lambda)}$$

R: Spectral reflectance of the film at 633 nm

λ: Wavelength (633 nm)
no: Average refractive index in the plane direction of the film
$n_1$: Refractive index of the coating film
$d_1$: Thickness of the coating film

BC. Thermal Shrinkage Rate:

In the longitudinal direction and in the width direction of the film, a sample with a size of 350 mm in length and 50 mm in width was cut from a film, and gauge marks were given near both ends of the sample at an interval of 300 mm. The sample was allowed to stand in an oven at a controlled temperature of 90°C for 30 minutes, with one end being fixed and the other end being free. The sample was taken out and allowed to cool to room temperature (25°C), then the gauge distance (mm) was measured (this length is expressed as S), and the thermal shrinkage rate was determined using the following equation.

$$\text{Thermal shrinkage rate (\%)} = ((300 - S)/300) \times 100$$

BD. Coating Layer Thickness:

A small film was cut out and embedded in an epoxy resin. The film cross-section was then sliced to a thickness of 50 nm using a microtome, followed by dyeing with 2% osmic acid at 60°C for 2 hours. The dyed cross-section of the film was observed under a transmission electron microscope (LEM-2000 manufactured by Topcon Corporation) to measure the coating layer thickness.

BE. High Adhesiveness:

46 wt% of a UV-curable acrylic resin (composition: ethylene-oxide-modified bisphenol A dimethacrylate ("FANCRYL" FA-321M manufactured by Hitachi Chemical), 25 wet% of neopentyl-glycol-modified trimethylolpropane diacrylate (R-604 manufactured by Nippon Kayaku), 27 wt% of phenoxyethyl acrylate ("BISCOAT" 192 manufactured by Osaka Organic Chemical Industry), and 2 wt% of 2-hydroxy-2-methyl-1-phenylpropan-1-one ("Darocur"1173 manufactured by Merck) were poured into a mold with a prism lens pattern. An obtained polyester film was placed thereon in close contact, with the coated-surface side thereof facing the acrylic resin. Using a UV lamp, UV light (irradiation intensity: 300 mJ/$cm^2$) was applied thereto from the polyester-film side at a distance of 30 cm to cure the resin, forming a prism lens layer having a vertical angle of 90°, a pitch of 50 μm, and a height of 30 μm. The prism lens layer was cross-cut in a grid pattern (100 1-$mm^2$ squares). A cellophane tape having a width of 24 mm (manufactured by Nichiban) was then laminated thereto, and rapidly peeled at a peel angle of 180°. After that, the peeled surface was observed and evaluated based on the following criteria.
A (Extremely excellent adhesion): Peeled area is less than 20%.
B (Excellent adhesion): Peeled area is 20% or more and less than 40%.
F (Poor adhesion): Peeled area is more than 40%

BF. Evaluation of Blocking Resistance:

Two films were stack together in such a manner that their surfaces having formed thereon a coating film were in contact with each other (arbitrary surfaces in the case where a coating layer was not present). A pressure of 0.059 MPa (0.6 kg/$cm^2$) was applied thereto in an atmosphere of 80°C and 80% RH for 17 hours, and the films then were peeled apart at a rate of 50 mm/min at a peel angle of 180°. From the peeling force at that time, the blocking resistance was evaluated based on the following criteria.
A (Excellent): peeling force < 98 mN/5 cm width
B (Slightly excellent): 98 mN/5 cm width ≤ peeling force < 196 mN/5 cm width
F (Poor): 196 mN/5 cm width ≤ peeling force

BG. Hydrolysis Resistance:

After aging in an environment with a temperature of 85°C and a humidity of 85% RH for 3,000 hours, the elongation at break of the film was measured in accordance with ASTM D61T, and its ratio relative to 100% of the elongation at break before aging (retention) was calculated and evaluated based on the following criteria.

AA: Retention is 70% or more.
A: Retention is not less than 50 and less than 70%.
B: Retention is not less than 30 and less than 50%.
F: Retention is less than 30%.

BH. Heat Deflection:

A UV-curable acrylic resin of the following composition was poured into a mold with a prism lens pattern, and an obtained polyester film was placed thereon in close contact, with the coated-surface side thereof facing the acrylic resin. The resin was then cured by irradiation for 30 seconds from the polyester-film side at a distance of 30 cm using a UV lamp (irradiation intensity: 80 W/cm, 6.4 KW), forming a prism lens layer having a vertical angle of 90°, a pitch of 50 μm, and a height of 30 μm; a brightness-improving sheet was thus formed. From the obtained brightness-improving sheet, a sheet with a diagonal length of 30 inch (39 cm long/64 cm wide) was cut out. With the four sides thereof being fixed to a metal frame, the sheet was treated in an oven heated to 95°C for 30 minutes. After that, deformation (heat deflection of the film) was visually observed and evaluated based on the following criteria.
A: No deflection is observed.
B: Slight deflection is partially observed.
F: A deflected portion is present, and the irregularity due to deflection is observed as a protrusion of 5 mm or more.

BI. Film Thickness:

Film thickness was measured using an electronic micrometer (K-312A manufactured by Anritsu) at a stylus pressure of 30 g.

Example 39

100 parts by weight of the resin obtained by the procedure of Reference Example 2 was dried at 110°C for 5 hours, and then 1 part by weight of the cyclic carbodiimide compound (2) obtained by the procedure of Reference Example 6 was added thereto. While mixing, the mixture was melt-kneaded at a cylinder temperature of 230°C in a twin-screw extruder, melt-extruded at a die temperature of 220°C to form a film, and then cooled and solidified on a cooling drum in the usual manner to form an unstretched film. The obtained unstretched film was stretched at a temperature of 70°C to 2.8 times its original length in the longitudinal direction, and cooled on a cooling roll at 20 to 25°C to form a longitudinal uniaxial stretching film. Then, the coating agent A shown in Table 10 (an aqueous coating liquid having a solids content of 6 wet%) was uniformly applied to both sides of the longitudinally uniaxially stretched film using a roll coater. Subsequently, the coated film was guided to a tenter, preheated while drying the coating film at a temperature of 95°C, stretched at a temperature of 70°C to 3.2 times its original length in the transverse direction, and then heat-set at 195°C. While gradually cooling the film from 180°C to 90°C, a 3% relaxation heat treatment in the transverse direction was performed in the tenter. Also, a longitudinal relaxation heat treatment was performed by taking up the film with the speed of take-up rolls downstream of the tenter exit being 1.5% lower than the clip speed in the tenter, thereby forming an aliphatic polyester film having a thickness of 125 μm with a coating layer thickness of 60 nm. Evaluation results of the obtained aliphatic polyester film are shown in Table 11.

Example 40

An aliphatic polyester film having a thickness of 125 μm with a coating layer thickness of 60 nm was obtained in the same manner as in Example 39, except that the stretching temperature was as shown in Table 11, and that after heat setting at 195°C, a blade was inserted near both ends of the film in a tenter to cut off the film from the clip holding part, followed by a relaxation heat treatment at 185°C with the speed of take-up rolls being 2.5% lower than the clip speed in the tenter. Evaluation results of the obtained aliphatic polyester film are shown in Table 11.

Example 41

100 parts by weight of the resin obtained by the procedure of Reference Example 2 was dried at 110°C for 5 hours, and then 1 part by weight of the cyclic carbodiimide compound (2) obtained by the procedure of Reference Example 6 was added thereto. While mixing, the mixture was melt-kneaded at a cylinder temperature of 230°C in a twin-screw extruder, melt-extruded at a die temperature of 220°C to form a film, and then cooled and solidified on a cooling drum in the usual manner to form an unstretched film. Then, the coating agent A shown in Table 10 (an aqueous coating liquid having a solids content of 6 wt%) was uniformly applied to both sides of the obtained unstretched film using a roll

coater. Subsequently, the coated film was guided to a tenter, preheated while drying at a temperature of 95°C, and then simultaneously stretched at a temperature of 75°C longitudinally to 3.4 times its original length and transversely to 3.6 times its original length, followed by heat setting at 195°C. After that, a 2.5% heat set treatment was performed at 185°C in each of the longitudinal and transverse directions to form an aliphatic polyester film having a thickness of 100 μm with a coating layer thickness of 60 nm. Evaluation results of the obtained aliphatic polyester film are shown in Table 11.

Examples 42, 45 to 47

Films having a thickness of 125 μm with a coating layer thickness of 60 nm were obtained in the same manner as in Example 39, except that the coating agents B, E, F, and G shown in Table 10 (each is an aqueous coating liquid having a solids content of 6 wt%) were used as shown in Table 11 in place of the coating agent A in Example 39. Evaluation results of the obtained aliphatic polyester films are shown in Table 11.

Example 43

A film having a thickness of 125 μm with a coating layer thickness of 60 nm was obtained in the same manner as in Example 39, except that a resin composition obtained by mixing, in the ratio shown in Table 11, the resin obtained by the procedure of Reference Example 2, an acrylic resin "ACRYPET" VH001 manufactured by Mitsubishi Rayon, and the cyclic carbodiimide compound (2) obtained by the procedure of Reference Example 6 was used, and that the coating agent C shown in Table 10 (aqueous coating liquid having an solids content of 6 wt%) was used in place of the coating agent A. Evaluation results of the obtained film are shown in Table 11.

Example 44

A film having a thickness of 188 μm with a coating layer thickness of 60 nm was obtained in the same manner as in Example 41, except that the coating agent D shown in Table 10 (an aqueous coating liquids having a solids content of 6 wt%) was used in place of the coating agent A, and that the film production conditions were as in Table 11. Evaluation results of the obtained film are shown in Table 11.

Reference Example 17

An aliphatic polyester film having a thickness of 125 μm was obtained in the same manner as in Example 39, except that no coating layer was formed; after heat-setting at 195°C, a 3% relaxation heat treatment was performed in the transverse direction in a tenter while gradually cooling the film from 180°C to 90°C; and longitudinal relaxation was not performed. Evaluation results of the obtained aliphatic polyester film are shown in Table 11.

Comparative Examples 24 to 25

An aliphatic polyester film having a thickness of 125 μm with a coating layer thickness of 60 nm was obtained in the same manner as in Reference Example 17, except that the cyclic carbodiimide compound (2) obtained by the procedure of Reference Example 6 was not used, and that the coating agent A shown in Table 10 (an aqueous coating liquid having a solids content of 6 wt%) was used as a coating agent. Evaluation results of the obtained aliphatic polyester film are shown in Table 11.

Comparative Example 26

A film having a thickness of 125 μm with a coating layer thickness of 60 nm was obtained in the same manner as in Reference Example 17, except that a carbodiimide compound having a linear structure ("CARBODILITE" LA-1 manufactured by Nisshinbo Chemical) was used in place of the cyclic carbodiimide compound (2) obtained by the procedure of Reference Example 6, and that the coating agent A shown in Table 10 (an aqueous coating liquid having a solids content of 6 wt%) was used as a coating agent. Evaluation results of the obtained film are shown in Table 11.

A prism lens layer was formed on each of the films obtained in Examples 39 to 44 to form a prism sheet to serve as a brightness-improving sheet. As a result, all of the sheets exhibited excellent optical properties.

[Table 10]

| Composition of Coating Layer | | | | | | | | |
|---|---|---|---|---|---|---|---|---|
| | Acrylic Resin | Polyester Resin | Crosslinking Agent | Fine Particles 1 | Fine Particles 2 | Fine Particles 3 | Fine Particles 4 | Fine Particles 5 |
| | (wt%) | (wt%) | (wt%) | (wt%) | (wt%) | (wt%) | (wt%) | (wt%) |
| Coating Agent A | 87 | | 4 | 1 | | | | 8 |
| Coating Agent B | 86 | | 4 | | 2 | | | 8 |
| Coating Agent C | 86 | | 4 | | | 2 | | 8 |
| Coating Agent D | 83 | | 4 | | | | 5 | 8 |
| Coating Agent E | 40 | 47 | 4 | 1 | | | | 8 |
| Coating Agent F | | 87 | 4 | 1 | | | | 8 |
| Coating Agent G | 88 | | 4 | | | | | 8 |

[Table 11]

| | | unit | Example 39 | Example 40 | Example 41 | Example 42 | Example 43 | Example 44 | Example 45 | Example 46 | Examples 47 | Reference Example 17 | Comparative Example 24 | Comparative Example 25 | Comparative Example 26 |
|---|---|---|---|---|---|---|---|---|---|---|---|---|---|---|---|
| Composition of Resin Composition | | | | | | | | | | | | | | | |
| Aliphatic Polyester | | part by weight | 100 | 100 | 100 | 100 | 70 | 100 | 100 | 100 | 100 | 100 | 100 | 100 | 100 |
| Acrylic Resin | | part by | - | - | - | - | 30 | - | - | - | - | - | - | - | - |
| Cyclic CarbodiimideCompound | | part by weight | 10 | 10 | 10 | 10 | 10 | 10 | 10 | 10 | 10 | 10 | 0 | 0 | 0 |
| LA-1 | | part by weight | 0 | 0 | 0 | 0 | 0 | 0 | 0 | 0 | 0 | 0 | 0 | 0 | 10 |
| Coating Agent | | Kind | Coating agent A | Coating agent A | Coating agent A | Coating agent B | Coating agent C | Coating aqent D | Coating agent E | Coating agent F | Coating agent G | None | Coating agent A | Coating agent A | Coating agent A |
| Film Production Conditions | | | | | | | | | | | | | | | |
| Draw Ratio | Longitudinal | times | 28 | 28 | 34 | 28 | 28 | 34 | 28 | 28 | 28 | 28 | 28 | 28 | 28 |
| | Transverse | times | 32 | 32 | 36 | 32 | 32 | 36 | 32 | 32 | 32 | 32 | 32 | 32 | 32 |
| Stretching Temperature | Longitudinal and Transverse | °C | 70 | 72 | 75 | 70 | 70 | 75 | 70 | 70 | 70 | 70 | 70 | 70 | 70 |
| Heat Setting Temperature | | °C | 195 | 195 | 195 | 195 | 195 | 195 | 195 | 195 | 195 | 195 | 195 | 195 | 195 |
| Transverse Relaxation Rate | | % | 30 | - | 25 | 30 | 30 | 25 | 30 | 30 | 30 | 30 | 30 | 30 | 30 |
| Longitudinal Relaxation Rate | | % | 15 | 25 | 25 | 15 | 15 | 25 | 15 | 15 | 15 | 00 | 00 | 00 | 00 |

(continued)

| Physical Properties of Film | | | | | | | | | | | | | | |
|---|---|---|---|---|---|---|---|---|---|---|---|---|---|---|
| Thickness | | μm | 125 | 125 | 100 | 125 | 125 | 188 | 125 | 125 | 125 | 125 | 125 | 125 | 125 |
| Thermal Shrinkage Rate at 90°C x 30min | Longitudinal | % | 04 | 02 | 00 | 04 | 04 | 03 | 04 | 04 | 04 | 07 | 07 | 07 | 07 |
| | Transverse | % | 02 | -01 | 00 | 02 | 02 | 01 | 02 | 02 | 02 | 03 | 03 | 03 | 03 |
| Stereocomplex Crystallinity (S) | | % | 100 | 100 | 100 | 100 | 100 | 100 | 100 | 100 | 100 | 100 | 100 | 100 | 100 |
| Refractive Index of Coating Layer | | - | 150 | 150 | 150 | 149 | 149 | 149 | 153 | 155 | 150 | - | 150 | 150 | 150 |
| High Adhesiveness | | - | A | A | A | A | A | A | B | B | A | F | A | A | A |
| Carboxyl Group Concentration | | eq /ton | 0 | 0 | 0 | 0 | 0 | 0 | 0 | 0 | 0 | 0 | 20 | 20 | 5 |
| Hydrolysis Resistance | | - | AA | AA | AA | AA | AA | AA | AA | AA | AA | AA | F | F | A |
| Isocyanate Gas | | Generated or not | Not generated | Not generated | Not generated | Not generated | Not generated | Not generated | Not generated | Not generated | Not generated | Not generated | Not generated | Not generated | Generated |
| Heat Deflection Properties | | - | A | A | A | A | A | A | A | A | A | F | F | F | F |
| Blocking Resistance | | - | A | A | A | A | A | A | A | A | F | A | A | A | A |
| LA-1 Carbodiimide compound having a linear structure ("CARBODILITE" LA-1 manufactured by Nisshinbo Chemical) | | | | | | | | | | | | | | | |

Incidentally, the components shown in Table 10 are as follows.

Acrylic resin: including 60 mol% methyl methacrylate/30 mol% ethyl acrylate/5 mol% 2-hydroxyethyl acrylate/5 mol% N-methylolacrylamide (Tg: 40°C). Incidentally, the acrylic was produced as follows according to the method described in JP-A-63-37167, Production Examples 1 to 3. That is, 302 parts of ion exchange water was charged into a four-necked flask, and the temperature was raised to 60°C in a nitrogen gas stream. Then, 0.5 parts of ammonium persulfate and 0.2 parts of sodium hydrogen sulfite were added thereto as polymerization initiators. Further, a mixture of 46.7 parts of methyl methacrylate, 23.3 parts of ethyl acrylate, 4.5 parts of 2-hydroxyethyl acrylate, and 3.4 parts of N-methylolacrylamide as monomers was added dropwise thereto over 3 hours while adjusting the liquid temperature at 60 to 70°C. After the completion of dropping while maintaining the above temperature range for 2 hours, the reaction was allowed to continue with stirring. Cooling was then performed to give an aqueous acrylic resin dispersion having a solids concentration of 25 wt%.

Polyester resin: the acid component includes 75 mol% 2,6-naphthalenedicarboxylic acid/20 mol% isophthalic acid/5 mol% 5-sodium sulfoisophthalic acid, and the glycol component includes 90 mol% ethylene glycol/10 mol% diethylene glycol (Tg: 80°C, weight average molecular weight: 15,000). Incidentally, the polyester resin was produced as follows. That is, 51 parts of dimethyl 2,6-naphthalenedicarboxylate, 11 parts of dimethyl isophthalate, 4 parts of dimethyl 5-sodium sulfoisophthalate, 31 parts of ethylene glycol, and 2 parts of diethylene glycol were charged into a reactor, and 0.05 parts of tetrabutoxytitanium was added thereto. The mixture was heated in a nitrogen atmosphere at a controlled temperature of 230°C to effect an ester exchange reaction while distilling off the formed methanol. Then, in a polymerization pot having a stirrer with a high motor torque, the temperature of the reaction system was gradually raised to 255°C, and the pressure in the system was reduced to 133.3 Pa (1 mmHg) to effect a polycondensation reaction, thereby giving a polyester 1 having an intrinsic viscosity of 0.56. 25 parts of the polyester was dissolved in 75 parts of tetrahydrofuran, and 75 parts of water was added dropwise to the obtained solution with high-speed stirring at 10,000 rpm to give a milky white dispersion. The dispersion was then distilled under a reduced pressure of 2.7 kPa (20 mmHg) and tetrahydrofuran was distilled off to give an aqueous polyester resin dispersion (solids content: 20 wt%).

Crosslinking agent: Glycerol polyglycidyl ether (trade name: Denacol EX-313, manufactured by Nagase ChemteX)

Fine particles 1: Acrylic filler (average particle size: 220 nm) (trade name: MX-200W, manufactured by Nippon Shokubai)

Fine particles 2: PTFE filler (average particle size: 300 nm) (trade name: AD936, manufactured by Asahi Glass)

Fine particles 3: Acrylic filler (average particle size: 130 nm) (trade name: MX-100W, manufactured by Nippon Shokubai)

Fine particles 4: Silica filler (average particle size: 40 nm) ("SNOWTEX" OL manufactured by Nissan Chemical Industries)

Wetting agent: Polyoxyethylene (n= 7) lauryl ether (trade name: NAROACTY N-70, manufactured by Sanyo Chemical Industries)

The above Examples show that the films are not prone to heat deflection and have excellent adhesion, and thus can be suitably used as optical members such as brightness-improving sheets.

The below-mentioned numerical values in the following Examples 48 to 56, Comparative Examples 27 to 29, and Reference Example 18 to 20 were determined according to the following methods.

BJ. Film Elongation at Break (Measured at 100°C) and Stress at 100% Elongation (Measured at 100°C) in MD and TD Directions

Using a tensile tester having a chuck portion covered with a heating chamber (a precision universal testing machine Autograph AG-X manufactured by Shimadzu) as a measuring apparatus, a sample film was cut to a width of 10 mm and a length of 100 mm, then sample was placed between chucks at a distance of 50 mm, and a tensile test was performed in accordance with JIS-C2151 under conditions of a tensile rate of 50 mm/min. Incidentally, with respect to the sample cutting direction, provided that the film-travel direction is defined as the MD direction, and the width direction perpendicular thereto is defined as the TD direction, sampling was performed taking the directions parallel to the MD and TD directions as respective length directions, and the tensile measurement values in the MD and TD directions were evaluated.

At this time, the atmosphere where the sample was present was maintained at 100°C by the heating chamber at the chuck portion of the tensile tester. Measurement was performed 5 times, and the average was taken as the result.

The film elongation at break (measured at 100°C) was calculated as the percentage of the value obtained by subtracting the sample length before tensioning from the length at break, and dividing the difference by the sample length before tensioning. The stress at 100% elongation (measured at 100°C) was calculated by dividing the load at 100% elongation in the load-elongation curve by the sample cross-sectional area before tensioning (MPa).

BK. Determination of the Presence of "Substantially Amorphous State":

In the case where the peak enthalpy of stereocomplex crystal ($\Delta Hc_{sc}$) in the first temperature rise measured using DSC (differential scanning calorimeter) at a temperature rise rate of 20°C/min satisfied the following equation, the

state was determined to be substantially amorphous. In the case where the equation was not satisfied, the state was determined to be substantially crystalline.

$$\Delta Hc_{sc} > 1\ J/g$$

BL. Haze Evaluation:

The haze was measured to evaluate the transparency of a resin film laminated to a resin molded body and that of a resin film before lamination. Incidentally, in a resin molded body, a haze measurement point in the center of the resin molded body (reference numeral 32 or reference numeral 42) shown in Fig. 3 and Fig. 4 was subjected to the haze measurement in such a position that a decorating film was perpendicular to a light beam from the hazemeter. Incidentally, when only a resin molded body PC-A or a resin molded body PC-B produced by the above method is subjected to measurement by this method, the haze is 0.4% in each case, which indicates a transparent state having almost no light scattering. Therefore, the haze of a resin film after lamination to a resin molded body can be evaluated by this method. The haze value (%) was evaluated using "COH-300A" (trade name) manufactured by Nippon Denshoku Industries. In addition, polymethyl methacrylate available under the trade name "ACRYPET VH" was dried at 80°C for 6 hours and then injected using an injection molding machine at a cylinder temperature of 240°C and a mold temperature of 70°C to form a resin molded body having the shape shown Fig. 4, and the haze was measured in the same manner. As a result, it was shown that the haze value was 0.3%, indicating the transparency of the resin molded body alone is high.

Reference Example 18

<Production of Material for Resin Film>

(1) Film Material (A)

Polylactic acid resin obtained by the procedure of Reference Example 1.

(2) Film Material (B)

80 parts by weight of the poly(L-lactic acid) obtained by the procedure of Reference Example 1 and 20 parts by weight of polymethyl methacrylate (PMMA) manufactured by Mitsubishi Rayon under the trade name "ACRYPET VH001" were mixed in a blender and vacuum-dried at 110°C for 5 hours. After that, through a first feed port of a kneader, the mixture was melt-kneaded while evacuating at a cylinder temperature of 230°C and a vent pressure of 13.3 Pa, then extruded into strands in a water bath, and cut into chips with a chip cutter to give a film material (B), a composition containing PLLA and PMMA. The glass transition temperature (Tg) was 59°C, and the melting point was 215°C.

(3) Film Material (C)

100 parts by weight of the poly(L-lactic acid) obtained by the procedure of Reference Example 1 and 1.0 part by weight of the cyclic carbodiimide compound (2) obtained by the procedure of Reference Example 6 were mixed in a blender, vacuum-dried at 110°C for 5 hours, and then fed through a first feed port of a kneader. The mixture was melt-kneaded while evacuating at a cylinder temperature of 230°C and a vent pressure of 13.3 Pa, then extruded into strands in a water bath, and cut into chips with a chip cutter to give a film material (C) as a composition. The glass transition temperature (Tg) was 56°C, and the melting point was 214°C.

(4) Film Material (D)

80 parts by weight of the poly(L-lactic acid) obtained by the procedure of Reference Example 1, 20 parts by weight of polymethyl methacrylate manufactured by Mitsubishi Rayon under the trade name "ACRYPET VH001", and 1 part by weight of the cyclic carbodiimide compound (2) obtained by the procedure of Reference Example 6 were mixed in a blender, vacuum-dried at 110°C for 5 hours, and then fed through a first feed port of a kneader. The mixture was melt-kneaded while evacuating at a cylinder temperature of 230°C and a vent pressure of 13.3 Pa, then extruded into strands in a water bath, and cut into chips with a chip cutter to give a film material (D) as a composition. The glass transition temperature (Tg) was 59°C, and the melting point was 215°C.

(5) Film Material (E)

100 parts by weight of the poly(L-lactic acid) obtained by the procedure of Reference Example 1 and 1.0 part by weight of "CARBODILITE" LA-1 manufactured by Nisshinbo Chemical were mixed in a blender, vacuum-dried at 110°C for 5 hours, and then fed through a first feed port of a kneader. The mixture was melt-kneaded while evacuating at a cylinder temperature of 230°C and a vent pressure of 13.3 Pa, then extruded into strands in a water bath, and cut into chips with a chip cutter to give a film material (E) as a composition. The glass transition temperature (Tg) was 56°C, and the melting point was 214°C.

(6) Film Material (F)

100 parts by weight of the stereocomplex polylactic acid obtained by the procedure of Reference Example 2 and 1.0 part by weight of the cyclic carbodiimide compound (2) obtained by the procedure of Reference Example 6 were mixed in a blender, vacuum-dried at 110°C for 5 hours, and then fed through a first feed port of a kneader. The mixture was melt-kneaded while evacuating at a cylinder temperature of 230°C and a vent pressure of 13.3 Pa, then extruded into strands in a water bath, and cut into chips with a chip cutter to give a film material (F) as a blend composition. The glass transition temperature (Tg) was 56°C, and the melting point was 215°C.

Example 48

The film material (C) obtained by the procedure of Reference Example 18 was dried at 100°C for 5 hours, then melt-kneaded at 195°C in an extruder, and melt-extruded through a T-die at a die temperature of 195°C to form a film. The film was brought into close contact with a cooling drum surface at 40°C and thereby solidified to form an unstretched film (C). The film thickness was 100 μm.

Evaluation results of the obtained film are shown in Table 12. Incidentally, during the production of the film, the generation of isocyanate odor was not detected, and it was possible to form the film in a good working environment. In addition, the carboxyl end group concentration was 0.05 eq/ton.

Example 49

The film material (D) obtained by the procedure of Reference Example 18 was dried at 100°C for 5 hours, then melt-kneaded at 215°C in an extruder, and melt-extruded through a T-die at a die temperature of 215°C to form a film. The film was brought into close contact with a cooling drum surface at 40°C and thereby solidified to form an unstretched film (D). The film thickness was 100 μm.

Evaluation results of the obtained film are shown in Table 12. Incidentally, during the production of the film, the generation of isocyanate odor was not detected, and it was possible to form the film in a good working environment. In addition, the carboxyl end group concentration was 0.04 eq/ton.

Example 50

The film material (E) obtained by the procedure of Reference Example 18 was dried at 100°C for 5 hours, then melt-kneaded at 230°C in an extruder, and melt-extruded through a T-die at a die temperature of 230°C to form a film. The film was brought into close contact with a cooling drum surface at 40°C and thereby solidified to form an unstretched film (E). The film thickness was 120 μm.

Evaluation results of the obtained film are shown in Table 12. Incidentally, during the production of the film, the generation of isocyanate odor was not detected, and it was possible to form the film in a good working environment. In addition, the carboxyl end group concentration was 0.03 eq/ton.

Reference Example 19

Using a successive, longitudinal and transverse biaxial stretching apparatus, the unstretched film (C) obtained by the procedure of Example 48 was longitudinally stretched to twice its original length at a stretching temperature of 75°C and transversely stretched to twice its original length at a stretching temperature of 80°C, followed by heat setting at 145°C in the same system. A stretched, heat-set film (C) having a thickness of 40 μm was thus formed. Evaluation results of the obtained film are shown in Table 12. In addition, the carboxyl end group concentration was 0.03 eq/ton.

Reference Example 20

Using a successive, longitudinal and transverse biaxial stretching apparatus, the unstretched film (D) obtained by the procedure of Example 49 was longitudinally stretched to twice its original length at a stretching temperature of 75°C and transversely stretched to twice its original length at a stretching temperature of 80°C, followed by heat setting at 145°C in the same system. A stretched, heat-set film (D) having a thickness of 41 μm was thus formed. Evaluation results of the obtained film are shown in Table 12. In addition, the carboxyl end group concentration was 0.05 eq/ton.

Comparative Example 27

The film material (A) obtained by the procedure of Reference Example 18 was dried at 100°C for 5 hours, then melt-kneaded at 195°C in an extruder, and melt-extruded through a T-die at a die temperature of 195°C to form a film. The film was brought into close contact with a cooling drum surface at 40°C and thereby solidified to form an unstretched film (A). The film thickness was 120 μm.
Evaluation results of the obtained film are shown in Table 12. In addition, the carboxyl end group concentration was 0.3 eq/ton.

Comparative Example 28

Using a successive, longitudinal and transverse biaxial stretching apparatus, the unstretched film (A) obtained by the procedure of Comparative Example 27 was longitudinally stretched to twice its original length at a stretching temperature of 75°C and transversely stretched to 2.5 times its original length at a stretching temperature of 80°C, followed by heat setting at 148°C in the same system. A stretched, heat-set film (A) having a thickness of 50 μm was thus formed.
Evaluation results of the obtained film are shown in Table 12. In addition, the carboxyl end group concentration was 0.2 eq/ton.

Comparative Example 29

The film material (E) obtained by the procedure of Reference Example 18 was dried at 100°C for 5 hours, then melt-kneaded at 195°C in an extruder, and melt-extruded through a T-die at a die temperature of 195°C to form a film. The film was brought into close contact with a cooling drum surface at 40°C and thereby solidified to form an unstretched film (E). The film thickness was 100 μm. Evaluation results of the obtained resin film are shown in Table 12.
However, isocyanate odor was generated during the production of the film, and film formation in a good working environment was impossible. Accordingly, the resin film obtained in Comparative Example 29 was not subjected to any further procedure. In addition, the carboxyl end group concentration was 0.11 eq/ton.

[Table 12]

| | Tc (°C) | ΔHc (J/g) | Stereocomplex Crystallinity (S) (%) | MD Characteristics | | TD Characteristics | |
|---|---|---|---|---|---|---|---|
| | | | | Elongation at Break (measured at 100°C) | Stress at 100% Elongation (measured at 100°C) (MPa) | Elongation at Break (measured at 100°C) (%) | Stress at 100% Elongation (measured at 100°C) (MPa) |
| Example 48 | 135 | 11 | 0 | 450 | 6.9 | 430 | 6.8 |
| Example 49 | 145 | 13 | 0 | 490 | 7.5 | 480 | 8.4 |
| Example 50 | 115 | 15 | 100 | 500 | 6.5 | 490 | 5.9 |
| Reference Example 19 | - | 0 | 0 | 300 | 30.1 | 280 | 40.1 |
| Reference Example 20 | - | 0 | 0 | 300 | 29.8 | 240 | 42.4 |
| Comparative Example 27 | 143 | 8 | 0 | 400 | 7.9 | 400 | 10.4 |

(continued)

| | Tc (°C) | ΔHc (J/g) | Stereocomplex Crystallinity (S) (%) | MD Characteristics | | TD Characteristics | |
|---|---|---|---|---|---|---|---|
| | | | | Elongation at Break (measured at 100°C) | Stress at 100% Elongation (measured at 100°C) (MPa) | Elongation at Break (measured at 100°C) (%) | Stress at 100% Elongation (measured at 100°C) (MPa) |
| Comparative Example 28 | - | 0 | 0 | 290 | 35.8 | 220 | 49.9 |
| Comparative Example 29 | 146 | 12 | 0 | 410 | 8.4 | 420 | 7.9 |
| *) In Comparative Example 29, isocyanate odor was generated during film formation. | | | | | | | |

Example 51

The following describes the production of a decorating film and the decorated molded bodies shown in Fig. 1 and Fig. 2.

A design layer and a printing layer were formed using a white ink by screen printing on the films obtained by the procedures of Examples 48 to 50, Comparative Examples 27 and 28, and Reference Examples 19 and 20. In addition, in each decorating film for vacuum forming (corresponding to the below-described Production of Decorated Molded Article 1 and 2), a pressure-sensitive adhesive layer having a layer thickness of about 25 μm was formed on one side of the substrate of the decorating film (the side opposite to the side having a printing layer formed thereon) (the layer structure of this decorating film is as follows: design layer (printing layer)//substrate (resin film)//pressure-sensitive adhesive layer).

Incidentally, the pressure-sensitive adhesive layer was formed by transferring a pressure-sensitive adhesive layer using a commercially available, highly transparent pressure-sensitive adhesive sheet sandwiched between peelable polyester films.

(Production of Resin Molded Body for Vacuum Lamination)

Polycarbonate (PC) manufactured by Teijin Chemicals under the trade name "Panlite AD5503" was dried at 120°C for 6 hours, and then, using an injection molding machine, formed into a resin molded body PC-A having the shape shown in Fig. 3 at a cylinder temperature of 280°C and a mold temperature of 110°C. A resin molded body PC-B having the shape shown in Fig. 4 was also produced under the same conditions. In each case, the schematic plan view has a 15-cm-long long side and a 10-cm-long short side with a thickness of about 2 mm.

Incidentally, the reference numerals in the figures have the following meanings: (1) substrate (resin film), (2) decorating film, (3) design layer, (4) adhesive layer or pressure-sensitive adhesive layer, (5) molded body, (6) decorated molded article, (7) outermost surface of a decorated molded article, (11) substrate (resin film), (12) design layer, (13) decorating film, (14) decorated molded article, (15) molded body, (31) resin molded body PC-A, (32) haze measurement point, (33) portion bent at an acute angle, (41) resin molded body PC-B, and (42) haze measurement point.

Further, the resin obtained in Reference Example 6 above was dried at 110°C for 5 hours, and then, using an injection molding machine, formed into a resin molded body scPLA-A having the shape shown in Fig. 4 at a cylinder temperature of 280°C and a mold temperature of 110°C.

(Production of Decorated Molded Article 1)

The resin molded body PC-A and the decorating film having a pressure-sensitive adhesive layer obtained by the above procedure were placed in a vacuum chamber, which is a vacuum lamination apparatus manufactured by Fu-Se Vacuum Forming under the trade name "NGF-0709", with the pressure-sensitive-adhesive-layer side facing the resin molded body. The vacuum chamber was closed and evacuated, and then the decorating film was heated by IR radiation to 100°C. Subsequently, the decorating film was laminated to the resin molded body. After the lamination, the air pressure in the vacuum chamber was brought back to atmospheric pressure, and the product was taken out as a decorated molded article. Subsequently, the decorated molded article was placed in a thermostat at 140°C for 3 minutes to promote the crystallization of the substrate of the decorating film, thereby performing the procedure to bring the substrate into a substantially crystalline state.

When the resin films obtained by the procedures of the Examples were used as the substrate of a decorating film, such decorated molded articles all had a beautiful appearance.
Next, in order to study their wet heat resistance, the decorated molded articles were stored in an environment of 80°C and 85% RH for 100 hours. It was shown that in decorated molded articles made using the resin films obtained by the procedures of Comparative Examples 27 and 28 as the substrate of a decorating film, because of the low hydrolysis resistance of the decorating films integrated therewith, cracks and the like were formed, causing problems with durability.
Meanwhile, it was confirmed that in the decorated molded articles made using the resin films obtained by the procedures of the Examples as the substrate of a decorating film, no problem occurred in the appearance even after the completion of the wet heat resistance test.
Incidentally, in decorated molded articles made using the resin films obtained by the procedures of Reference Examples 19 and 20 and Comparative Example 28 as substrates of the decorating films, uneven lamination was observed in a portion having a particularly high curvature. For example, wrinkles and cracks were formed on the surface.

(Production of Decorated Molded Article 2)

The same procedure as in Production of Decorated Molded Article 1 was performed, except that the resin described in Reference Example 2 was used as a resin molded body. When the resin films obtained by the procedures of the Examples were used as the substrate of a decorating film, such decorated molded articles all had a beautiful appearance. In addition, as a result of the same wet heat resistance test as in Production of Decorated Molded Article 1, no changes were observed in the appearance.

(Production of Decorated Molded Article 3)

Using a vacuum forming machine, the shape of a decorating film was preformed into the same shape as the resin molded body of Fig. 4 so that it could be covered. The decorating film was then inserted into an injection molding machine, and a molten resin was inserted and integrated, thereby forming a resin molded body by an insert molding process.
As the resin for injection molding, polymethyl methacrylate (PMMA) available under the trade name "ACRYPET VH" was dried at 80°C for 6 hours and then injected using an injection molding machine at a cylinder temperature of 240°C and a mold temperature of 70°C. A decorated molded article including a decorating film integrally laminated with a resin molded body having the shape shown in Fig. 4 was thus produced.
Each decorated molded article made using the resin film obtained by the procedure of Example 48 as the substrate of a decorating film had a beautiful appearance. In addition, as a result of the same wet heat resistance test as in Production of Decorated Molded Article 1, no changes were observed in the appearance.

Example 52

The film material (F) described in Reference Example 18 was dried at 100°C for 5 hours, then melt-kneaded at 226°C in an extruder, and melt-extruded through a T-die at a die temperature of 228°C to form a film. The film was brought into close contact with a cooling drum surface at 40°C and thereby solidified to form an unstretched film (F). The film thickness was 120 μm. During film formation, no isocyanate gas odor was detected at all. Subsequently, the unstretched film was stretched using a tenter transverse uniaxial stretching apparatus at a stretching temperature of 75°C to 1.2 times its original length and then heat-set at 125°C in the same system to form a stretched, heat-set film (F) having a thickness of 100 μm was thus formed.

Example 53

80 parts by weight of the resin obtained by the procedure of Reference Example 2, 20 parts by weight of polymethyl methacrylate manufactured by Mitsubishi Rayon under the trade name "ACRYPET VH001", and 1 part by weight of the cyclic carbodiimide compound (2) obtained by the procedure of Reference Example 6 were mixed in a blender, vacuum-dried at 110°C for 5 hours, and then fed through a first feed port of a kneader. The mixture was melt-kneaded while evacuating at a cylinder temperature of 230°C and a vent pressure of 13.3 Pa, then extruded into strands in a water bath, and cut into chips with a chip cutter to give a film material (G) as a composition. The glass transition temperature (Tg) was 59°C, and the melting point was 219°C.
The obtained film material (G) was dried at 100°C for 5 hours, then melt-kneaded at 226°C in an extruder, and melt-extruded through a T-die at a die temperature of 228°C to form a film. The film was brought into close contact with a cooling drum surface at 40°C and thereby solidified to form an unstretched film (G). The film thickness was 130 μm. During film formation, no isocyanate gas odor was detected at all. Subsequently, the unstretched film was stretched

using a tenter transverse uniaxial stretching apparatus at a stretching temperature of 78°C to 1.3 times its original length and then heat-set at 125°C in the same system to form a stretched, heat-set film (G) having a thickness of 105 μm was thus formed.

The properties of these films are shown in Table 13.

[Table 13]

| Resin Film | Haze (%) | Tc (°C) | ΔHc (J/g) | (S) (%) | MD Characteristics | | TD Characteristics | |
|---|---|---|---|---|---|---|---|---|
| | | | | | Elongation at Break (measured at 100°C) (%) | Stress at 100% Elongation (measured at 100°C) (MPa) | Elongation at Break (measured at 100°C) (%) | Stress at 100% Elongation (measured at 100°C) (MPa) |
| Unstretched Film (F) | 0.1 | 115 | 11 | 100 | 440 | 6.9 | 440 | 5.4 |
| Stretched, Heat-Set Film (F) | 0.1 | 116 | 10 | 100 | 480 | 5.4 | 470 | 6.5 |
| Unstretched Film (G) | 1.3 | - | 0 | 100 | 380 | 9.8 | 390 | 10.6 |
| Stretched, Heat-Set Film (G) | 1.2 | - | 0 | 100 | 350 | 9.9 | 330 | 11.1 |
| (S): Stereocomplex crystallinity (S) | | | | | | | | |

Example 54

(Production of Decorating Film and Production of Decorated Molded Body)

In each decorating film for vacuum forming, a pressure-sensitive adhesive layer having a layer thickness of about 25 μm was formed on one side of a resin film to serve as a substrate (unstretched film (F), stretched, heat-set film (F), unstretched film (G), stretched, heat-set film (G)). Incidentally, the pressure-sensitive adhesive layer was formed by transferring a pressure-sensitive adhesive layer using a commercially available, highly transparent pressure-sensitive adhesive sheet sandwiched between peelable polyester films.

The resin molded body PC-A and a decorating film including a resin film (unstretched film (F), unstretched film (G)) provided with a pressure-sensitive adhesive layer were placed in a vacuum chamber, which is a vacuum lamination apparatus manufactured by Fu-Se Vacuum Forming under the trade name "NGF-0709", with the pressure-sensitive-adhesive-layer side facing the resin molded body. The vacuum chamber was closed and evacuated, and then the decorating film was heated by IR radiation to 100°C. Subsequently, the decorating film was laminated to the resin molded body. After the lamination, the air pressure in the vacuum chamber was brought back to atmospheric pressure, and the resin molded body was taken out. Subsequently, the resin molded body was placed in a thermostat at 120°C for 3 minutes to promote the crystallization of the resin film. A desired resin molded body was thus obtained. The initial haze of this resin molded body is shown in Table 14 as initial haze. In addition, the resin film was peeled from the resin molded body with a cutter, and the crystallization heat $\Delta Hc_{sc}$ was measured by DSC; the result is shown in Table 14. The results were all 0, indicating that crystallization had sufficiently proceeded. In addition, the stereocomplex crystallinity (S) was 100%, indicating that the crystal was a stereocomplex crystal.

Further, the resin molded body was subjected to a 500-hour test for heat resistance at 80°C DRY and for wet heat resistance at 60°C, 90% RH. The haze then measured is also shown in Table 14.

Both in the heat resistance test and the wet heat resistance test, the transparency of the resin films in the resin molded bodies was ensured, and also uneven lamination was not observed.

[Table 14]

| | Resin Film | Resin Molded Article (Constituent Material) | Resin Molded Article (Shape) | Lamination/ Molding Method | Lamination Condition | Initial Haze (%) | Initial $\Delta Hc$ (J/g) | Initial Stereocomplex Crystallinity (S) (%) | Haze after 500-hour Endurance at 80°C DRY (%) | Haze after 500-hour Endurance at 60°C 90%RH (%) |
|---|---|---|---|---|---|---|---|---|---|---|
| Example 54 | Unstretched Film (F) | PC | A | Vacuum lamination | Good | 0.8 | 0 | 100 | 1.0 | 1.0 |
| | Unstretched Film (G) | PC | A | Vacuum lamination | Good | 0.8 | 0 | 100 | 1.1 | 1.1 |
| Example 55 | Stretched, Heat-Set Film (F) | PC | B | Vacuum lamination | Good | 0.9 | 0 | 100 | 0.9 | 1.1 |
| | Stretched, Heat-Set Film (G) | PC | B | Vacuum lamination | Good | 0.8 | 0 | 100 | 1.0 | 1.2 |
| Example 56 | Unstretched Film (F) | PMMA | B | Insert molding | Good | 1.3 | 0 | 100 | 1.3 | 1.4 |
| | Unstretched Film (G) | PMMA | B | Insert molding | Good | 1.3 | 0 | 100 | 1.4 | 1.6 |

Example 55

A molded body was produced and evaluated in the same manner as in Example 54, except that PC-B was used as a resin molded body to be decorated, and that the stretched, heat-set film (F) and the stretched, heat-set film (G) were used as resin films. The results are shown in Table 14.

Both in the heat resistance test and the wet heat resistance test, the transparency of the resin films in the resin molded bodies was ensured, and also uneven lamination was not observed.

It was thus shown that even in the case of a stretched, heat-set film, when stereocomplex polylactic acid is selected as a resin to serve as a base material, and also the film elongation at break is controlled within a constant range, high-quality lamination to the surface of a molded article to be decorated can be achieved, preventing wrinkling or film breakage.

Example 56

Using a vacuum forming machine, the shape of a resin film (unstretched film (F), unstretched film (G)) was preformed into the same shape as the resin molded body of Fig. 4 so that it could be covered. The resin film was then inserted into an injection molding machine, and a molten resin was inserted and integrated, thereby forming a resin molded body by an insert molding process.

As the resin for injection molding, polymethyl methacrylate (PMMA) available under the trade name "ACRYPET VH" was dried at 80°C for 6 hours and then injected using an injection molding machine at a cylinder temperature of 240°C and a mold temperature of 70°C. A resin molded body including a resin film integrally laminated with a resin molded body having the shape shown in Fig. 4 was thus produced. Evaluation was performed in the same manner, and the results are shown in Table 14.

Both in the heat resistance test and the wet heat resistance test, the transparency of the resin films in the resin molded bodies was ensured, and also uneven lamination was not observed.

Reference Example 21

<Production of Material for Multilayer Film>

(1) Film Material (A)

100 parts by weight of the poly(L-lactic acid) obtained by the procedure of Reference Example 1 and 1.0 part by weight of the cyclic carbodiimide compound (2) obtained by the procedure of Reference Example 6 were mixed in a blender, vacuum-dried at 110°C for 5 hours, and then fed through a first feed port of a kneader. The mixture was melt-kneaded while evacuating at a cylinder temperature of 230°C and a vent pressure of 13.3 Pa, then extruded into strands in a water bath, and cut into chips with a chip cutter to give a film material (A) as a composition. The glass transition temperature (Tg) was 56°C, the crystallization temperature was 135°C, and the melting point was 175°C.

(2) Film Material (B)

70 parts by weight of the poly(L-lactic acid) obtained by the procedure of Reference Example 1, 30 parts by weight of polymethyl methacrylate manufactured by Mitsubishi Rayon under the trade name "ACRYPET VH001", and 1.0 part by weight of the cyclic carbodiimide compound (2) obtained by the procedure of Reference Example 6 were mixed in a blender, vacuum-dried at 110°C for 5 hours, and then fed through a first feed port of a kneader. The mixture was melt-kneaded while evacuating at a cylinder temperature of 230°C and a vent pressure of 13.3 Pa, then extruded into strands in a water bath, and cut into chips with a chip cutter to give a film material (B) as a blend composition. The glass transition temperature (Tg) was 61°C, the crystallization temperature was 140°C, and the melting point was 190°C.

(3) Film Material (C)

100 parts by weight of the resin obtained by the procedure of Reference Example 2 and 1.0 part by weight of the cyclic carbodiimide compound (2) obtained by the procedure of Reference Example 6 were mixed in a blender, vacuum-dried at 110°C for 5 hours, and then fed through a first feed port of a kneader. The mixture was melt-kneaded while evacuating at a cylinder temperature of 230°C and a vent pressure of 13.3 Pa, then extruded into strands in a water bath, and cut into chips with a chip cutter to give a film material (C) as a blend composition. The glass transition temperature (Tg) was 58°C, the crystallization temperature was 114°C, and the melting point was 211°C.

(4) Film Material (D)

Poly(L-lactic acid) obtained by the procedure of Reference Example 1.

(5) Film Material (E)

Soft polypropylene (trade name: "PRIME TPO M142E", manufactured by Prime Polymer)

(6) Film Material (F)

Polyethylene (trade name: "Novatec HD HF313", manufactured by Japan Polyethylene)

(7) Film Material (G)

Adhesive polyolefin (trade name: "ADMER SF600", manufactured by Mitsui Chemicals)

Example 57

The film material (A) obtained by the procedure of Reference Example 21 was dried at 100°C for 5 hours, then placed in a hopper of a single-strew extruder, melt-extruded at 195°C, and melt-extruded through a T-die at a die temperature of 195°C to form a film. The film was brought into close contact with a cooling drum surface at 60°C and thereby solidified to form an unstretched film. Subsequently, by a sequential biaxial stretching method, the unstretched film was stretched longitudinally to twice its original length and transversely to twice its original length, thereby forming a film having a thickness of 30 μm. In the melt-extrusion process, the offensive odor due to isocyanate was not generated, and the working environment was excellent. Next, the film material (E) obtained by the procedure of Reference Example 21 was melt-kneaded at 170°C, and then melt-extruded through a T-die at a die temperature of 165°C to form a film. The film was brought into close contact with a cooling drum surface at 30°C and thereby solidified to form a film having a thickness of 30 μm. These films were laminated using an acrylic pressure-sensitive adhesive as an adhesive to form a laminate film having a thickness of 70 μm.

This film has a three-layer structure including a film material (A) layer, a film material (E) layer, and an adhesive layer therebetween. This multilayer film was subjected to a durability test at 60°C and 90% RH for 1,000 hours to check embrittlement. As a result, the shape was maintained, and almost no changes in mechanical strength were observed as compared with the initial value. In addition, water was poured into a beverage glass to a depth of 1 cm. The opening of the glass was sealed with the multilayer film, and allowed to stand at a temperature of 40°C for 48 hours. As a result, water hardly evaporated, showing that this film has excellent water-vapor barrier properties and is suitable as a wrapping material.

Example 58

The film material (A) obtained by the procedure of Reference Example 21 was dried at 90°C for 5 hours, then placed in a hopper of an extruder A of a three-kind three-layer extruder (including an extruder A, an extruder B, and an extruder C), and melt-extruded at 187°C. Meanwhile, the film material (F) obtained by the procedure of Reference Example 21 was placed in a hopper of the extruder B, and melt-extruded at 180°C. Further, the film material (G) obtained by the procedure of Reference Example 21 was placed in a hopper of the extruder C, and melt-extruded at 180°C. These resins are formed into a multilayer in a die. The multilayered resin was melt-extruded through a T-die at a die temperature of 185°C to form a film, and then brought into close contact with a cooling drum surface at 60°C and thereby solidified to form an unstretched film. In the melt-extrusion process, the offensive odor due to isocyanate was not generated, and the working environment was excellent. The three-kind three-layer extruder is configured such that the extruder A provides one outer layer, the extruder B provides one outer layer, and the extruder C provides one inner layer. The film thickness was 100 μm. The ratio of a thickness of three layers was nearly 1:0.2:1. Subsequently, the unstretched film was stretched at 105°C to twice its original length using a longitudinal uniaxial stretching apparatus, and then stretched at a stretching temperature of 107°C to 2.5 times its original length using a tenter transverse uniaxial stretching apparatus, followed by heat setting at 150°C in the same system to bring the resin (A) layer into a substantially crystalline state. A film having a thickness of 30 μm was thus obtained.

This multilayer film was subjected to a durability test at 60°C and 90% RH for 1,000 hours to check embrittlement. As a result, the shape was maintained, and almost no changes in mechanical strength were observed as compared with the initial value.

In addition, water was poured into a beverage glass to a depth of 1 cm. The opening of the glass was sealed

with the multilayer film, and allowed to stand at a temperature of 40°C for 48 hours. As a result, water hardly evaporated, showing that this film has excellent water-vapor barrier properties and is suitable as a wrapping material.

Example 59

The film material (B) obtained by the procedure of Reference Example 21 was dried at 95°C for 5 hours, then placed in a hopper of a single-strew extruder, melt-extruded at 210°C, and melt-extruded through a T-die at a die temperature of 209°C to form a film. The film was brought into close contact with a cooling drum surface at 60°C and thereby solidified to form an unstretched film. Subsequently, by a sequential biaxial stretching method, the unstretched film was stretched longitudinally to twice its original length and transversely to twice its original length, thereby forming a film having a thickness of 30 μm. In the melt-extrusion process, the offensive odor due to isocyanate was not generated, and the working environment was excellent. Next, the film material (E) obtained by the procedure of Reference Example 21 was melt-kneaded at 170°C, and then melt-extruded through a T-die at a die temperature of 165°C to form a film. The film was brought into close contact with a cooling drum surface at 30°C and thereby solidified to form a film having a thickness of 30 μm. These films were laminated using an acrylic pressure-sensitive adhesive as an adhesive to form a laminate film having a thickness of 70 μm.

This film has a three-layer structure including a film material (B) layer, a film material (E) layer, and an adhesive layer therebetween. This laminate film was subjected to a durability test at 60°C and 90% RH for 1,000 hours to check embrittlement. As a result, the shape was maintained, and almost no changes in mechanical strength were observed as compared with the initial value.

In addition, water was poured into a beverage glass to a depth of 1 cm. The opening of the glass was sealed with the multilayer film, and allowed to stand at a temperature of 40°C for 48 hours. As a result, water hardly evaporated, showing that this film has excellent water-vapor barrier properties and is suitable for use as a wrapping material.

Example 60

The film material (C) obtained by the procedure of Reference Example 21 was dried at 100°C for 5 hours, then placed in a hopper of a single-strew extruder, melt-extruded at 225°C, and melt-extruded through a T-die at a die temperature of 220°C to form a film. The film was brought into close contact with a cooling drum surface at 60°C and thereby solidified to form an unstretched film. Subsequently, by a sequential biaxial stretching method, the unstretched film was stretched longitudinally to twice its original length and transversely to twice its original length, thereby forming a film having a thickness of 30 μm. In the melt-extrusion process, the offensive odor due to isocyanate was not generated, and the working environment was excellent. Next, the film material (E) obtained by the procedure of Reference Example 21 was melt-kneaded at 170°C, and then melt-extruded through a T-die at a die temperature of 165°C to form a film. The film was brought into close contact with a cooling drum surface at 30°C and thereby solidified to form a film having a thickness of 30 μm. These films were laminated using an acrylic pressure-sensitive adhesive as an adhesive to form a laminate film having a thickness of 70 μm.

This film has a three-layer structure including a film material (C) layer, a film material (E) layer, and an adhesive layer therebetween. This laminate film was subjected to a durability test at 60°C and 90% RH for 1,000 hours to check embrittlement. As a result, the shape was maintained, and almost no changes in mechanical strength were observed as compared with the initial value.

In addition, water was poured into a beverage glass to a depth of 1 cm. The opening of the glass was sealed with the multilayer film, and allowed to stand at a temperature of 40°C for 48 hours. As a result, water hardly evaporated, showing that this film has excellent water-vapor barrier properties and is suitable as a wrapping material.

Comparative Example 30

The film material (D) obtained by the procedure of Reference Example 21 was dried at 100°C for 5 hours, then placed in a hopper of a single-strew extruder, melt-extruded at 195°C, and melt-extruded through a T-die at a die temperature of 190°C to form a film. The film was brought into close contact with a cooling drum surface at 60°C and thereby solidified to form an unstretched film. Subsequently, by a sequential biaxial stretching method, the unstretched film was stretched longitudinally to twice its original length and transversely to twice its original length, thereby forming a film having a thickness of 30 μm. In the melt-extrusion process, the offensive odor due to isocyanate was not generated, and the working environment was excellent. Next, the film material (F) obtained by the procedure of Reference Example 21 was melt-kneaded at 170°C, and then melt-extruded through a T-die at a die temperature of 165°C to form a film. The film was brought into close contact with a cooling drum surface at 30°C and thereby solidified to form a film having a thickness of 30 μm. These films were laminated using an acrylic pressure-sensitive adhesive as an adhesive to form a laminate film having a thickness of 70 μm.

This film has a three-layer structure including a film material (D) layer, a film material (F) layer, and an adhesive layer therebetween. This laminate film was subjected to a durability test at 60°C and 90% RH for 1,000 hours to check embrittlement. As a result, it was confirmed that the film material (D) layer was significantly embrittled due to cracks formed therein, and also that the film material (D) layer was significantly hydrolyzed.

Reference Example 32

The film material (A) described in Reference Example 21 was dried at 100°C for 5 hours, then placed in a hopper of a single-strew extruder, melt-extruded at 195°C, and melt-extruded through a T-die at a die temperature of 195°C to form a film. The film was brought into close contact with a cooling drum surface at 60°C and thereby solidified to form an unstretched film. Subsequently, by a sequential biaxial stretching method, the unstretched film was stretched longitudinally to twice its original length and transversely to twice its original length, thereby forming a film having a thickness of 30 μm. In the melt-extrusion process, the offensive odor due to isocyanate was not generated, and the working environment was excellent.
Water was poured into a beverage glass to a depth of 1 cm. The opening of the glass was sealed with the film, and allowed to stand at a temperature of 40°C for 48 hours. As a result, water almost completely disappeared, showing that this film does not have excellent water-vapor barrier properties, and its application as a wrapping material is limited.

Industrial Applicability

According to the invention, it is possible to provide a film which has improved hydrolysis resistance and from which no free isocyanate compounds are produced.
Further, acidic groups of a polymer can be capped with a carbodiimide compound without the release of an isocyanate compound. As a result, the generation of an offensive odor from a free isocyanate compound can be suppressed, whereby the working environment can be improved.
In addition, when polymer chain ends are capped with a cyclic carbodiimide compound, isocyanate groups are produced at the polymer chain ends. The reaction of such isocyanate groups allows the molecular weight of the polymer to be further increased. A cyclic carbodiimide compound also has the function of capturing free monomers or other acidic-group-containing compounds in the polymer. Further, according to the invention, because of its ring structure, the cyclic carbodiimide compound has an advantage in that ends can be capped under milder conditions as compared with commonly used linear carbodiimide compounds.
The difference in end-capping reaction mechanism between a linear carbodiimide compound and a cyclic carbodiimide compound is as follows.
When a linear carbodiimide compound ($R_1$-N=C=N-$R_2$) is used as a carboxyl-end-capping agent for a polymer, for example, polylactic acid, the reaction is as shown in the formula below. Through a reaction of a linear carbodiimide compound with a carboxyl group, an amide group is formed at the end of polylactic acid, and an isocyanate compound ($R_1NCO$) is released.

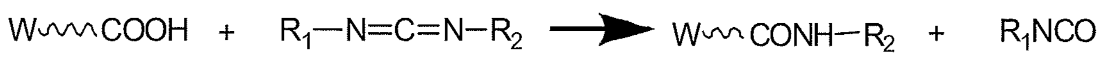

(In the formula, W is the main chain of polylactic acid.)
Meanwhile, when a cyclic carbodiimide compound is used as a carboxyl-end-capping agent for a polymer, for example, polylactic acid, the reaction is as shown in the formula below. Through a reaction of a cyclic carbodiimide compound with a carboxyl group, an isocyanate group (-NCO) is formed at the end of polylactic acid via an amide group. It will be understood that no isocyanate compound is released.

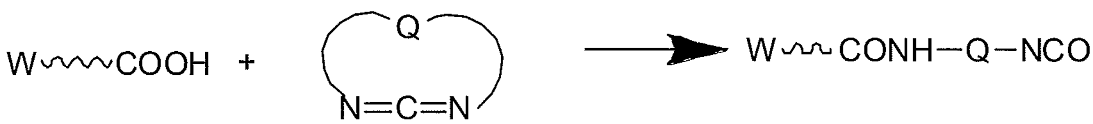

(In the formula, W is the main chain of polylactic acid, and Q is a divalent to tetravalent linking group that is an aliphatic group, an alicyclic group, an aromatic group, or a combination thereof.)

## Claims

1. A film comprising a composition obtained by mixing:

   a compound at least having a ring structure containing one carbodiimide group, with the first nitrogen and second nitrogen thereof being linked together through a linking group; with
   a polymer compound having an acidic group.

2. The film according to claim 1, wherein in the compound at least having a ring structure, the number of atoms forming the ring structure is 8 to 50.

3. The film according to claim 1, wherein the ring structure is represented by the following formula (1):

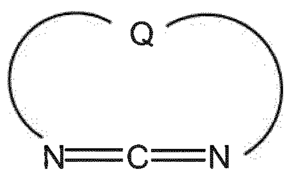

(1)

wherein Q is a divalent to tetravalent linking group that is an aliphatic group, an alicyclic group, an aromatic group, or a combination thereof and optionally contains a heteroatom.

4. The film according to claim 3, wherein Q is a divalent to tetravalent linking group represented by the following formula (1-1), (1-2), or (1-3):

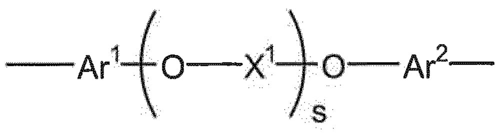

(1-1)

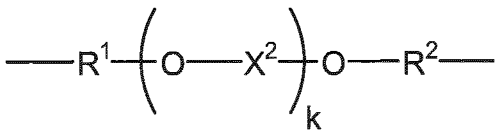

(1-2)

$-X^3-$ (1-3)

wherein

$Ar^1$ and $Ar^2$ are each independently a divalent to tetravalent aromatic group having 5 to 15 carbon atoms,
$R^1$ and $R^2$ are each independently a divalent to tetravalent aliphatic group having 1 to 20 carbon atoms, a divalent to tetravalent alicyclic group having 3 to 20 carbon atoms, a combination thereof, or a combination of the aliphatic or alicyclic group with a divalent to tetravalent aromatic group having 5 to 15 carbon atoms,
$X^1$ and $X^2$ are each independently a divalent to tetravalent aliphatic group having 1 to 20 carbon atoms, a divalent to tetravalent alicyclic group having 3 to 20 carbon atoms, a divalent to tetravalent aromatic group having 5 to 15 carbon atoms, or a combination thereof,
s is an integer of 0 to 10 and k is an integer of 0 to 10, with the proviso that when s or k is 2 or more, $X^1$ or $X^2$ as a repeating unit may be different from the other $X^1$ or $X^2$, and
$X^3$ is a divalent to tetravalent aliphatic group having 1 to 20 carbon atoms, a divalent to tetravalent alicyclic group having 3 to 20 carbon atoms, a divalent to tetravalent aromatic group having 5 to 15 carbon atoms, or a combination thereof,
with the proviso that
$Ar^1$, $Ar^2$, $R^1$, $R^2$, $X^1$, $X^2$, and $X^3$ optionally contain a heteroatom,
when Q is a divalent linking group, $Ar^1$, $Ar^2$, $R^1$, $R^2$, $X^1$, $X^2$, and $X^3$ are all divalent groups,

when Q is a trivalent linking group, one of $Ar^1$, $Ar^2$, $R^1$, $R^2$, $X^1$, $X^2$, and $X^3$ is a trivalent group, and
when Q is a tetravalent linking group, one of $Ar^1$, $Ar^2$, $R^1$, $R^2$, $X^1$, $X^2$, and $X^3$ is a tetravalent group or two of $Ar^1$, $Ar^2$ , $R^1$, $R^2$, $X^1$, $X^2$, and $X^3$ are trivalent groups.

**5.** The film according to claim 4, wherein the compound having a ring structure is represented by the following formula (2):

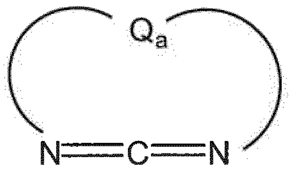

(2)

wherein $Q_a$ is a divalent linking group that is an aliphatic group, an alicyclic group, an aromatic group, or a combination thereof and optionally contains a heteroatom.

**6.** The film according to claim 5, wherein Qa is a divalent linking group represented by the following formula (2-1), (2-2), or (2-3):

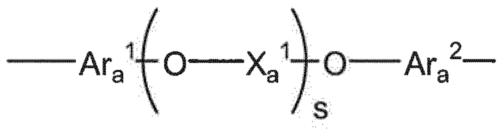

(2-1)

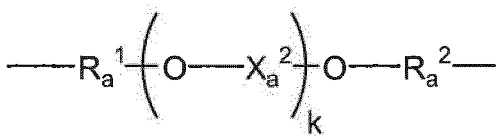

(2-2)

$-X_a^3$ (2-3)

wherein $Ar_a^1$, $Ar_a^2$, $R_a^1$, $R_a^2$, $X_a^1$, $X_a^2$, $X_a^3$, s , and k are as defined for $Ar^1$, $Ar^2$, $R^1$, $R^2$, $X^1$, $X^2$, $X^3$, s, and k of formulae (1-1) to (1-3), respectively.

**7.** The film according to claim 1, wherein the compound having a ring structure is represented by the following formula (3):

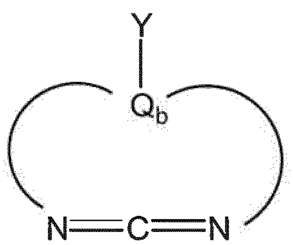

(3)

wherein

$Q_b$ is a trivalent linking group that is an aliphatic group, an alicyclic group, an aromatic group, or a combination thereof and optionally contains a heteroatom, and
Y is a carrier that supports the ring structure.

**8.** The film according to claim 7, wherein $Q_b$ is a trivalent linking group represented by the following formula (3-1), (3-2), or (3-3):

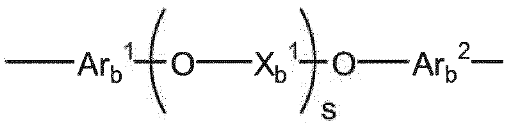

(3-1)

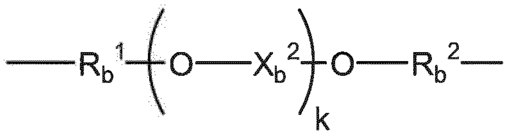

(3-2)

$-X_{b}-^{3}$ (3-3)

wherein $Ar_b^1$, $Ar_b^2$, $R_b^1$, $R_b^2$, $X_b^1$, $X_b^2$, $X_b^3$, s, and k are as defined for $Ar^1$, $Ar^2$, $R^1$, $R^2$, $X^1$, $X^2$, $X^3$, s, and k of formulae (1-1) to (1-3), respectively, with the proviso that one of the groups is a trivalent group.

**9.** The film according to claim 7, wherein Y is a single bond, a double bond, an atom, an atomic group, or a polymer.

**10.** The film according to claim 1, wherein the compound having a ring structure is represented by the following formula (4):

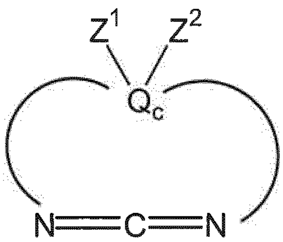

(4)

wherein

$Q_c$ is a tetravalent linking group that is an aliphatic group, an aromatic group, an alicyclic group, or a combination thereof and optionally contains a heteroatom, and
$Z^1$ and $Z^2$ are carriers that support the ring structure.

**11.** The film according to claim 10, wherein Qc is a tetravalent linking group represented by the following formula (4-1), (4-2), or (4-3):

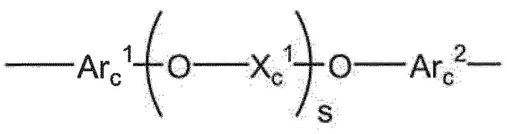

(4-1)

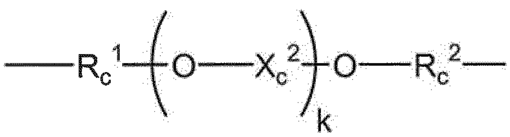

(4-2)

$-X_c^3-$ (4-3)

wherein $Ar_c^1$, $Ar_c^2$, $R_c^1$, $R_c^2$, $X_c^1$, $X_c^2$, $X_c^3$, s, and k are as defined for $Ar^1$, $Ar^2$, $R^1$, $R^2$, $X^1$, $X^2$, $X^3$, s, and k of formulae (1-1) to (1-3), respectively, with the proviso that one of the groups is a tetravalent group or two of the groups are trivalent groups.

**12.** The film according to claim 10, wherein $Z^1$ and $Z^2$ are each independently a single bond, a double bond, an atom, an atomic group, or a polymer.

**13.** The film according to claim 1, wherein the polymer compound having an acidic group is at least one member selected from the group consisting of aromatic polyesters, aliphatic polyesters, polyamides, polyamide polyimides, and polyester amides.

**14.** The film according to claim 13, wherein the aromatic polyester contains as a main repeating unit at least one member selected from the group consisting of butylene terephthalate, ethylene terephthalate, trimethylene terephthalate, ethylene naphthalene dicarboxylate, and butylene naphthalene dicarboxylate.

**15.** The film according to claim 13, wherein the aliphatic polyester is polylactic acid.

**16.** The film according to claim 15, wherein the polylactic acid forms a stereocomplex crystal.

Fig. 1

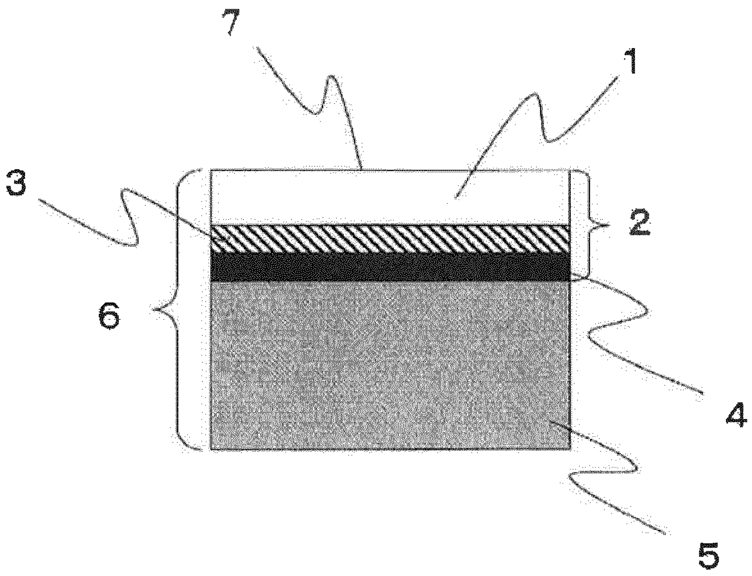


Fig. 2

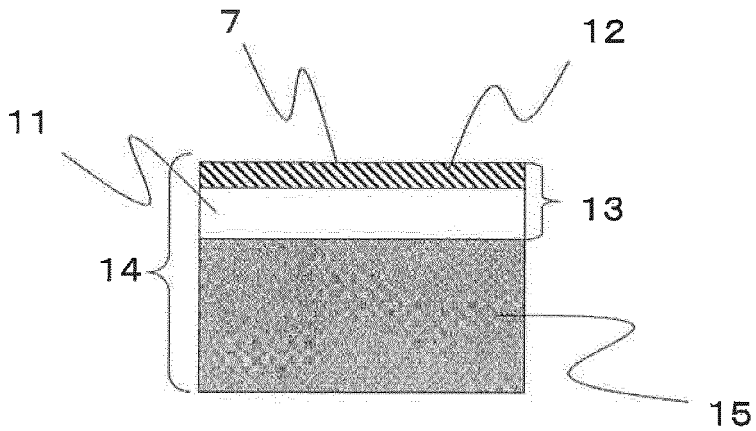

Fig. 3

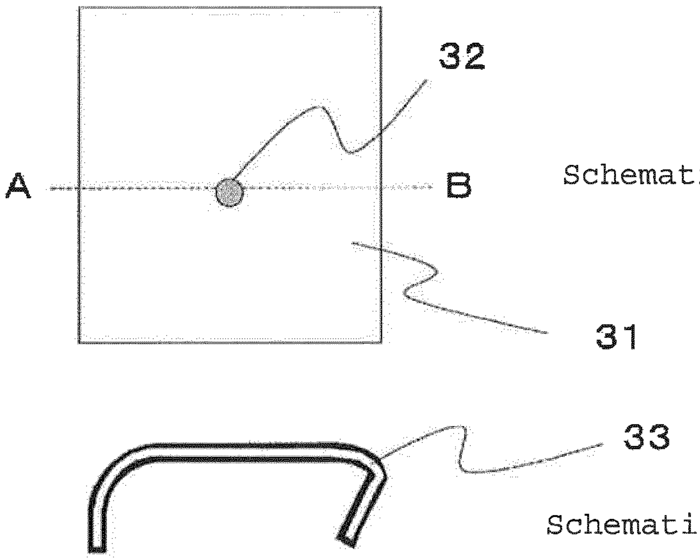


Schematic plan view

Schematic cross-section A-B

Fig. 4

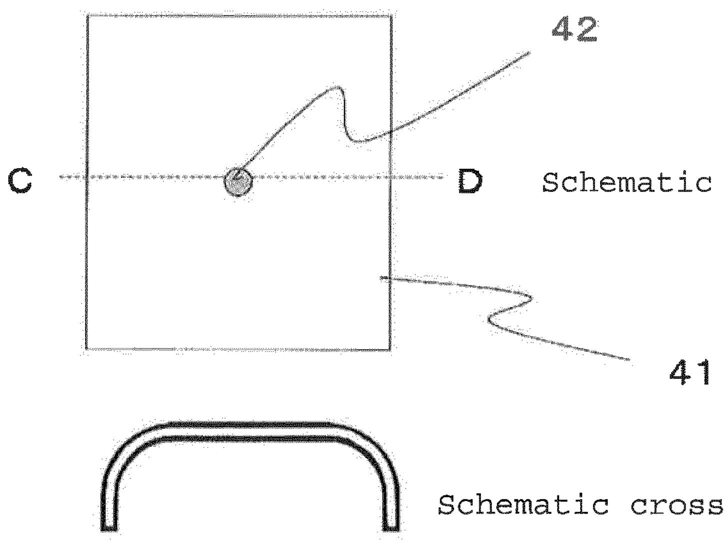


Schematic plan view

Schematic cross-section C-D

**INTERNATIONAL SEARCH REPORT**

International application No. PCT/JP2011/051843

A. CLASSIFICATION OF SUBJECT MATTER
*C08J5/18*(2006.01)i

According to International Patent Classification (IPC) or to both national classification and IPC

B. FIELDS SEARCHED

Minimum documentation searched (classification system followed by classification symbols)
C08J5/00-5/02, C08J5/12-5/22, C08K3/00-13/08, C08L1/00-101/14, C08G63/00-64/42, C07D261/00-273/08

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)
CA/REGISTRY(STN)

C. DOCUMENTS CONSIDERED TO BE RELEVANT

| Category* | Citation of document, with indication, where appropriate, of the relevant passages | Relevant to claim No. |
|---|---|---|
| X<br>A | WO 2008/010355 A1 (NEC Corp.), 24 January 2008 (24.01.2008), claims; paragraphs [0026] to [0039], [0053] & US 2009/0318628 A1 & CN 101490127 A | 1-6,13-16<br>7-12 |
| A | JP 2008-248028 A (Teijin Ltd.), 16 October 2008 (16.10.2008), entire text (Family: none) | 1-16 |
| P,X | JP 2010-285554 A (Teijin Ltd.), 24 December 2010 (24.12.2010), entire text (Family: none) | 1-16 |

☒ Further documents are listed in the continuation of Box C.  ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>10 February, 2011 (10.02.11) | Date of mailing of the international search report<br>22 February, 2011 (22.02.11) |
| Name and mailing address of the ISA/<br>Japanese Patent Office<br>Facsimile No. | Authorized officer<br><br>Telephone No. |

**INTERNATIONAL SEARCH REPORT**

International application No.
PCT/JP2011/051843

C (Continuation). DOCUMENTS CONSIDERED TO BE RELEVANT

| Category* | Citation of document, with indication, where appropriate, of the relevant passages | Relevant to claim No. |
|---|---|---|
| P,X | JP 2010-285557 A (Teijin Ltd.), 24 December 2010 (24.12.2010), entire text (Family: none) | 1-16 |
| P,X | WO 2010/071213 A1 (Teijin Ltd.), 24 June 2010 (24.06.2010), entire text (Family: none) | 1-16 |
| P,X | WO 2010/071212 A1 (Teijin Ltd.), 24 June 2010 (24.06.2010), entire text (Family: none) | 1-16 |
| P,X | WO 2010/071211 A1 (Teijin Ltd.), 24 June 2010 (24.06.2010), entire text (Family: none) | 1-6,10-16 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2008050584 A
- JP 2005002174 A
- JP 11092636 A
- WO 03035735 A
- JP 62031027 B
- JP 57057628 A
- JP 1275031 A
- JP 373356 A
- JP 63037167 A

### Non-patent literature cited in the description


- *Journal of the Imaging Society of Japan,* 2009, vol. 48 (4), 277-284
- *Tetrahedron Letters,* 1993, vol. 34 (32), 515-5158
- **PEDRO MOLINA.** *Medium- and Large-Membered Rings from Bis(iminophosphoranes): An Efficient Preparation of Cyclic Carbodiimides*
- *Journal of Organic Chemistry,* 1996, vol. 61 (13), 4289-4299
- **PEDRO MOLINA.** *Synthesis and Structure (X-ray Crystallography and H NMR) of Cyclic Carbodiimides*
- *Journal of Organic Chemistry,* 1978, vol. 43 (8), 1944-1946
- **HENRI ULRICH.** *Macrocyclic Ureas as Masked Isocyanates*
- *Journal of Organic Chemistry,* 1983, vol. 48 (10), 1694-1700
- **R. RICHTER.** *Synthesis and Reactions of Cyclic Carbodiimides*
- *Journal of Organic Chemistry,* 1994, vol. 59 (24), 7306-7315
- **PEDRO MOLINA.** *A New and Efficient Preparation of Cyclic Carbodiimides from Bis(iminophosphoranea) and the System Boc2O/DMAP*
- *Polymer Engineering and Science,* 1999, vol. 39, 2349-2357